(19) Europäisches Patentamt
European Patent Office
Office européen des brevets

(11) **EP 3 753 766 A1**

(12) **EUROPEAN PATENT APPLICATION**
published in accordance with Art. 153(4) EPC

(43) Date of publication:
**23.12.2020 Bulletin 2020/52**

(51) Int Cl.:
***B60J 3/02*** *(2006.01)*     ***B60Q 1/14*** *(2006.01)*
***B60R 1/08*** *(2006.01)*

(21) Application number: **17868724.0**

(22) Date of filing: **19.07.2017**

(86) International application number:
**PCT/IB2017/054350**

(87) International publication number:
**WO 2018/087608 (17.05.2018 Gazette 2018/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2016  US 201662419667 P**

(71) Applicants:
• **Correa Sánchez, Carlos Alberto**
  **San Juan 5407 (AR)**
• **Hoesé, Eduardo Carlos**
  **San Juan 5400 (AR)**

(72) Inventors:
• **Correa Sánchez, Carlos Alberto**
  **San Juan 5407 (AR)**
• **Hoesé, Eduardo Carlos**
  **San Juan 5400 (AR)**

(74) Representative: **Espiell Gomez, Ignacio**
  **R. Volart Pons y Cia., S.L.**
  **Pau Claris, 77 2o 1a**
  **08010 Barcelona (ES)**

(54) **METHODS AND SYSTEMS FOR PREVENTING THE PROBLEM OF NIGHTTIME DAZZLING ON THE ROAD**

(57)    The invention relates to optoelectronic methods and systems for preventing a driver from being dazzled at night by the headlights of other vehicles. The preferred embodiment comprises: (a) intermittent illumination to illuminate the road, at least in the moments in which dazzling must be avoided, instead of the conventional continuous illumination produced by headlights, the intermittent illumination being periodic and phase-adjustable and having a gap between pulses shorter than the retention time of the human retina and a duration for the light pulses less than or equal to the gap between pulses; (b) synchronisation of said intermittent illumination so that vehicles travelling in the same direction display the same phase of intermittent illumination and vehicles travelling in opposite directions display opposite phases of intermittent illumination; (c) protection of the driver's vision, preventing or reducing, at regular intervals of time, the arrival of light to his or her eyes, such that said protection includes the intermittent light pulses received from synchronised vehicles travelling in the opposite direction; and (d) protection of the driver's vision, preventing or reducing, at regular intervals of time, the arrival of light reflected in the rearview mirrors to his or her eyes, such that said protection includes the intermittent light pulses received from synchronised vehicles travelling in the opposite direction.

FIGURE 1

**Description**

FIELD OF THE INVENTION

The present invention relates in general to an apparatus, method and system to reduce night-time vehicle operation vision dazzling, and specifically to an optoelectronic apparatus, methods and systems to avoid driver's vision glare from the lights of vehicles traveling on both oncoming and same direction of travel.

DESCRIPTION OF THE RELATED ART

As is well known, people driving vehicles on roads are subjected to greater stress at night, because the lack of natural light adds to the glare, dazzling or temporary blindness caused by the light coming from the headlamps of vehicles moving in both the same and opposite direction of travel. In every encounter with another vehicle, the driver's field of vision is reduced significantly by that glare, causing insecurity in driving as well as fatigue, increasing the risk of accidents.

The problem of vision glare or dazzling has yet to be completely solved. Solutions tested to date include those dependent on road infrastructure, e.g. expressway lanes separated by a living enclosure, which are costly both from the point of view of their implementation and maintenance, and are not feasible for all roads due to topographic, climatic, economic factors, and others. Other solutions tested are, for example, devices that provide indirect vision on a screen that the driver can use at such moments of reduced vision, with the limitation of having to give up the natural perception of distance and depth conferred by direct vision. Other partial solutions include the use of pixel headlights based on the Digital Micromirror Devices (DMD) technology which allows the system to direct the light through micro-mirrors.

SUMMARY OF THE INVENTION

This section is for the purpose of summarizing some aspects of the present invention and to briefly introduce some preferred embodiments. Simplifications or omissions may be made to avoid obscuring the purpose of the section. Such simplifications or omissions are not intended to limit the scope of the present invention.

One of the objects of this invention is to provide an apparatus, system and method for avoiding the dazzle experienced by vehicle drivers at night time which is caused by the intense light coming from the front headlamps of vehicles moving in the opposite direction, as well as those going in the same direction.

In the present invention, the term "Nocturnal Vehicular Encounter" (NVE) will be used to refer to a group of two or more vehicles that, going along the same road, are near each other during the night, or similar low light condition, having approached each other sufficiently to be involved in a scenario that begins when one or more of these vehicles receives light coming from the front headlamps (or similar light source) of one or more other vehicles of said group, with said light having enough intensity/nearness to disturb the driver's vision.

The basic principles and ideas to solve the glare or light dazzling problem are described below. First, it is well known that the retina of the human eye is capable of maintaining an image for a short time after light stimulus has ceased. This retention time is in the order of milliseconds, so that when the eye is stimulated with flashing light whose space between pulses is less than the retention time of the retina, continuous images are formed on it. Thus, an environment illuminated with this type of light will be perceived by an observer as if it were permanently illuminated.

To illustrate this, perform the following experiment: two observers are placed in a dark room and a first intermittent light source, of the above-mentioned characteristics, is located next to them. Obviously, the atmosphere will now be alternately illuminated and dark, so that the observers, according to what has been said, will not notice. Then, if by some means or device, the eyes of one of the observers are covered at the moments in which this first light source is turned off and uncovered at the times in which the same light remains on, that observer will perceive the light as constantly on. Obviously for both observers the result remains exactly the same, since only the eyes of the observer in question were covered in the moments in which there was no light arriving to them.

Now a second source of flashing light is placed in the room in front of the observers, but with the condition that this source emits light only in the times when the first one does not and vice versa, and interrogates both observers about what they see. The observer with the vision protection device will say that this second source of flashing light they see is permanently off, since their vision is protected at times when it emits light. On the contrary, the other observer will say that the lights are permanently on. By increasing the intensity of this second light source, there will come a time when the observer who does not have said vision protection device will appear dazzled or blinded, while the other will continue to hold that said light source remains off and perceives the environment as before.

Keeping the location of the light sources flashing, the experiment is repeated but relocating the observer who has no vision protection device next to the second light source and also equipping it with a vision protection device that acts as that of the other observer but relative to this second source of light. With this, both observers face each other as well as the intermittent light sources at their side and their vision protection devices synchronized so that when one of the observers has their eyes covered, the other will have them uncovered and vice versa.

The intermittent light sources, located and synchronized as already indicated, are now operated and observers are again interrogated. Both will say that they see the environment perfectly illuminated by the light source that they have at their side, and that the one in front of them does not cause them any discomfort because they perceive it turned off. In short, the light placed next to an observer stays on while his vision protection device allows him to see. When this happens, the light source located next to the other observer stays off and the corresponding vision protection device activated to protect the latter from the light in front.

This experience produces on both observers two effects: perception of the environment as if it were permanently illuminated, and the sensation that only the source of light that has at its side illuminates the environment. In accordance with the experience described and transferring it to the field of application of the present invention, said method for avoiding the dazzling of vehicle drivers during night hours, which we call "Anti-dazzling Method", comprises:

(a) Emission of pulses of intermittent light by vehicles over the area of the road that each one of them needs to illuminate in the moments that the dazzling must be avoided. The intermittent illumination on said area of the road is achieved by the use in the vehicles of front headlamps where the light generated by said headlamps is suspended or significantly attenuated or deviated from said area of the road during the appropriate time intervals, i.e. the space between said pulses of flashing light.

Such intermittent light pulse emission must be periodic, of adjustable phase, and must have a gap between pulses less than the retention time of the retina of the human eye, plus a duration for said pulses of light less or at most equal to said space between pulses.

(b) Synchronization of intermittent light pulses of vehicles passing through the same road by adjusting in each vehicle the phase of said intermittent pulses of light to ensure that, at times when glare is to be avoided, all those vehicles which circulate in the same direction with respect to the road exhibit, within a predetermined tolerance range, the same phase of emission of pulses of intermittent light and that all those vehicles which run in opposite directions with respect to the road exhibit, within said predetermined tolerance range, opposite phases of intermittent light pulses.

(c) protection of the vision of the driver of a vehicle, involved in a Nocturnal Vehicular Encounter (NVE) by preventing or significantly attenuating at regular intervals of time ("$T_p$"), the arrival of light into the eyes of that driver, coming from the front headlamps of vehicles approaching in the opposite direction with respect to the road. Said interval of time ("$T_p$") takes place within each space between pulses ("$T_{off}$") corresponding to the intermittent pulses of light emitted by said vehicle, so each of said interval of time ($T_p$) includes intermittent light pulses received from the already synchronized vehicles of said NVE circulating in the opposite direction with respect to the road.

Another object of this invention is to provide a method for avoiding the dazzle experienced by vehicle drivers during night hours caused by the intense light reaching their eyes, either directly or reflected in the rear-view mirror(s) (including both the central one as well as any side mirrors) of their respective vehicles, coming from the headlights of one or more vehicle(s) that circulate on the same road. Said method, which will be called "Anti-dazzling method with rear-view protection", comprises the same steps (a), (b) and (c) (above) of the anti-dazzling method above further comprising:

(d) protecting the vision of the driver of a vehicle from the intense light coming from the front headlamps of vehicles driving behind it on the way to avoid the dazzle that these lights cause when reflected in the rear-view mirrors of said vehicle. Such vision protection, referred to as rear-view protection, consists in attenuating or preventing the arrival of reflected light in the eyes of said driver at regular intervals of time encompassing pulses of intermittent light received from vehicles already synchronized with said vehicle circulating in the same direction and behind said vehicle.

Another aim of this invention is to provide a procedure for establishing synchronization required by the first and second target methods. In this procedure, which is referred to as an "external synchronization procedure", the vehicles, which transit the same path, receive signals transmitted by sources external to them, using predetermined communication means/mechanisms, from which said vehicles acquire a phase signal for intermittent pulses of light that has been pre-assigned to its direction of circulation on the road. The phase pre-assigned to a direction of traffic on the road will be 180° out of phase with respect to the pre-assigned phase to the opposite direction of traffic on the road, so vehicles that transit the road in opposite directions will acquire opposite phases of emission of pulses of intermittent light and obviously, vehicles that circulate in the same direction with respect to the road will acquire a same phase of emission of pulses of intermittent light. In this procedure, alternatives will be presented to transmit these signals using both Omni-directional and directional external sources. The communication medium to be employed for transmitting said signals is included among those based on the transmission/reception of electronic, magnetic, optical, acoustic signals or a combination thereof.

Another object of this invention is to provide another procedure for establishing synchronization required by the first and second target methods. This procedure, which is referred to as "external synchronization procedure with vehicular assistance", is a variant of the external synchronization procedure which introduces some improvements thereto. These improvements are manifested when, within an NVE, the case of a vehicle that does not possess the corresponding phase of emission of pulses of intermittent light transmitted by external sources is presented. This may happen in particular situations which will be described later, and are solved by having the vehicle acquire the correct phase of intermittent light pulse emission from a "Synchronization signal" transmitted by the first vehicle which it is on the road if it possesses the correct phase for the emission of intermittent pulses of light. The communication medium to be employed by a vehicle for transmitting the "Synchronization signal" to another vehicle may be from the own emission of pulses of intermittent light to those based on the transmission/reception of electronic, magnetic, optical, acoustic signals or a combination of them. Another object of this invention is to provide another procedure for establishing the synchronization required by the first and second target methods. In this procedure, which is referred to as an "Inter-vehicular synchronization procedure with external assistance", the vehicles receive a "Phase adjustment" signal transmitted by sources external to them, using a predetermined communication means/mechanism, so that from said "Phase adjustment" signal, the possible phases of emission of pulses of intermittent light of said vehicles are reduced to two alternatives: a certain phase and its counter-phase. Unlike the "external synchronization" and "external synchronization with vehicular assistance" procedures (above), the two alternative phases are not pre-assigned to a given direction of vehicle travel with respect to the road. This allocation is resolved for each non-synchronized NVE through the exchange of information between the vehicles belonging to said NVE.

During said information exchange each of said vehicles, using a predetermined algorithm, competes with the other vehicles of said NVE for the right to transmit a "Synchronization signal" to indicate to them which phase of emission of intermittent light pulses to take. When a vehicle has not yet participated in any NVE it will initially adopt, according to a predetermined criterion, one of said two alternative phases for the emission of pulses of intermittent light. The winning vehicle of said competition transmits said "Synchronization signal" to impose its intermittent light pulse emission phase on all the participating vehicles of that competition that cross the road in the same direction as this winning vehicle, and the corresponding counter-phase to the emission of intermittent pulses of light to all those vehicles participating in that competition that cross the road in the opposite direction to said winning vehicle.

The exchange of information between vehicles and therefore the transmission of synchronization signals is performed using a predetermined communication means. The means of communication to be employed in this procedure are included among those based on the transmission/reception of electronic, magnetic, optical, acoustic signals or a combination thereof.

As for the exchange of information between vehicles facing each other, the same emission of pulses of light from each vehicle, if properly controlled, provides the most natural and economical means of communication for performing such an exchange.

Another object of this invention is to provide another procedure for establishing the synchronization required by the first and second target methods. In this procedure, which is called the "inter-vehicular synchronization procedure", no transmission sources external to the vehicles are used, hence the phase of intermittent light pulses initially acquired by a vehicle, that is when it has not yet participated in any NVE, is generated by the vehicle itself in pseudorandom form. When vehicles participate in a single NVE, if they are not properly synchronized with each other, they exchange information so that each one, using a predetermined algorithm, competes with the others for the right to transmit a synchronization signal to the rest of the vehicles of said NVE, to indicate which phase of intermittent light pulses should be adopted. The winning vehicle of this competition imposes its intermittent light pulse emission phase on all vehicles participating in that NVE which cross the road in the same direction as this winning vehicle, and the corresponding counter-phase to all vehicles participating in said NVE that cross the road in the opposite direction to said winning vehicle.

The exchange of information between vehicles and therefore the transmission of synchronization signals is performed using a predetermined communication means which is included among those based on the transmission/reception of electronic, magnetic, optical, acoustic signals or a combination thereof. From the indicated means of communication, the use of the same emission of pulses of light of each vehicle, if properly controlled, provides the most natural and economic means of communication to realize said exchange. An anti-dazzling system that applies this synchronization procedure will be autonomous, as it will not depend on any type of infrastructure in the road or devices external to the vehicles. Another object of this invention is to provide two systems for avoiding dazzling based on the methods "Anti-dazzling Method" and "Anti-dazzling Method with rear-view protection" respectively, and using both systems the "External Synchronization Procedure". Another object of this invention is to provide two other systems for avoiding dazzling based on the methods "Anti-dazzling Method" and "Anti-dazzling Method with rear-view protection" respectively, and using both systems the "External Synchronization Procedure with Vehicular Assistance ". Another object of this invention is to provide two other systems for avoiding dazzling based on the methods "Anti-dazzling Method" and "Anti-dazzling Method with rear-view protection" respectively, and using both systems the "Inter-vehicular synchronization procedure with external assistance". Another object of this invention is to provide two other systems for avoiding dazzling based on the methods "Anti-dazzling Method" and "Anti-dazzling Method with rear-view protection" respectively, and using both systems the "inter-vehicular synchronization procedure".

Other features and advantages of the present invention will become apparent upon examining the following detailed description of an embodiment thereof, taken in conjunction with the attached drawings.

BRIEF DESCRIPTION OF THE DRAWINGS

FIG. 1 shows an illustration of vehicles travelling on the same road in different directions, according to an exemplary embodiment of the invention.

FIG. 2 shows an illustration of how when applying the Anti-Dazzling method with rear view protection, a vehicle (V2) may be involved in two Nocturnal Vehicular Encounter (NVE) at the same time, according to an exemplary embodiment of the invention.

FIG. 3 shows an illustration of the Intermittent Light Pulses Emission (ILPE) waveform for a single vehicle, according to an exemplary embodiment of the invention.

FIG. 4 shows an illustration of the timing of the ILPE for two synchronized vehicles travelling in opposite directions, according to an exemplary embodiment of the invention.

FIG. 5 shows an illustration of a NVE in which three vehicles (V1, V2, V3) are synchronized, according to an exemplary embodiment of the invention.

FIGS. 6A - 6F show illustrations of the timing for the ILPE and for the Vision Protection corresponding to the vehicles V1, V2, V3 (from FIG. 5), according to exemplary embodiments of the invention.

FIGS. 7A - 7B show an illustration of an NVE for vehicles V1, V2, including the timing for the ILPE of vehicle V2 and the timing for the rear-view protection of vehicle V1, according to an exemplary embodiment of the invention.

FIGS. 8A - 8G show illustrations of the timing for the ILPE and for the Vision Protection corresponding to the vehicles V1, V2, V3 (from FIG. 5), including the timing for the rear-view protection corresponding to vehicle V2, according to an exemplary embodiment of the invention.

FIG. 9A shows a "Phase adjustment" signal waveform which has (for example) been given double the period of the ILPE waveform, according to an exemplary embodiment of the invention.

FIG. 9B shows an ILPE waveform whose phase is pre-assigned to one of the directions of travel on the road, according to an exemplary embodiment of the invention.

FIG. 9C shows an ILPE waveform whose phase is pre-assigned to the opposite direction of travel to that of FIG. 9B on the same road, according to an exemplary embodiment of the invention.

FIG. 10 shows vehicle V1 receiving the "course signal A", while at a different location of the same road and while travelling in the same direction, vehicle V2 receives the "course signal B", according to an exemplary embodiment of the invention.

FIGS. 11A - 11B show two "Phase adjustment" signals at 180° phase-shift whose periods (as an example) correspond to 3X (as an odd multiple) of the period of the ILPE waveform, according to an exemplary embodiment of the invention.

FIG. 11C shows waveform for the ILPE whose phase corresponds to the "alternative phase" which may be directly derived from the "Phase adjustment" signal to FIG. 11A, according to an exemplary embodiment of the invention.

FIG. 11D shows waveform for the ILPE whose phase corresponds to the "alternative phase" which may be directly derived from the "Phase adjustment" signal to FIG. 11B, according to an exemplary embodiment of the invention.

FIG. 12A shows the waveform for the "Phase adjustment" signal (as an example) which has double the period of the ILPE waveform, according to an exemplary embodiment of the invention.

FIG. 12B shows the waveform for the ILPE whose phase corresponds to the "alternative phase" which may be directly derived from the "Phase adjustment" signal to FIG. 12A, according to an exemplary embodiment of the invention.

FIG. 12C shows the waveform for the ILPE whose phase corresponds to the other "alternative phase", which is 180° out of phase with respect to the signal in FIG. 12B, according to an exemplary embodiment of the invention.

FIG. 13A shows the waveform for a "Phase adjustment" signal whose period is an exact multiple of the ILPE period, according to an exemplary embodiment of the invention.

FIG. 13B shows the waveform for the ILPE whose phase corresponds to the "alternative phase" which may be directly derived from the "Phase adjustment" signal to FIG. 13A, according to an exemplary embodiment of the invention.

FIG. 13C shows the waveform for the ILPE whose phase is 1800 out of phase with respect to the signal in FIG. 13B, according to an exemplary embodiment of the invention.

FIG. 13D shows the waveform for the "Starting" signal whose period is an exact multiple of the ILPE period, according to an exemplary embodiment of the invention.

FIG. 13E is an example scheme of an unsynchronized NVE generated by the incorporation of V4 to the synchronized NVE in which V1, V2 and V3 are participating, according to an exemplary embodiment of the invention.

FIG. 13F is an example scheme of an unsynchronized NVE resulting from the encounter of two synchronized NVEs (Encounters E1, E2), according to an exemplary embodiment of the invention.

FIG. 13G is an example scheme of an unsynchronized NVE resulting from the encounter of two synchronized NVEs (Encounters E1, E2) integrated by vehicles that may be front involved as well as rear involved in the NVE, according to an exemplary embodiment of the invention.

FIG. 13H is an example scheme of the predetermined phases distribution A and the corresponding predetermined phases distribution B, in both pre-determined distributions, a high hierarchy has been assigned to the NW and SE quadrants, according to an exemplary embodiment of the invention.

FIG. 14 is a diagram showing three vehicles V1, V2 and V3 that do not have rear-view protection and whose intermittent lights do not exceed in intensity and reach their conventional lights, according to an exemplary embodiment of the invention.

FIG. 15 shows a schematic diagram of how to perform the detection and analysis of the received light by the front of the vehicle, according to an exemplary embodiment of the invention.

FIG. 16 shows a possible circuit for the filter 7 of FIG. 15, according to an exemplary embodiment of the invention.

FIG. 17A shows the waveform of the output of the light sensing module 1 of the FIG. 15 when receiving both intermittent and continuous light simultaneously, according to an exemplary embodiment of the invention.

FIG. 17B shows the FIG. 16 filter 7 response to inputs pulses with the characteristics corresponding to intermittent lights, according to an exemplary embodiment of the invention.

FIG. 17C shows the waveform of the output of the comparator 5 of FIG. 15 in response to the waveform of FIG. 17B, according to an exemplary embodiment of the invention.

FIG. 18 shows a schematic diagram for a light sensing circuit, according to an exemplary embodiment of the invention.

FIGS. 19A - 19D show the "Intermittence Control Signal" (ICS) and ILPE waveforms corresponding to two "perfectly" synchronized vehicles V1 and V2 circulating in opposite directions, according to an exemplary embodiment of the invention

FIG. 20 shows a simplified diagram of a circuit for the generation of the ICS signal, according to an exemplary embodiment of the invention.

FIG. 21 shows the behavior of the outputs Qn and $\overline{Qn}$ from the circuit of FIG. 20 when a pulse is present at the "phase reset" input, according to an exemplary embodiment of the invention.

FIG. 22 shows the timing of the outputs of the counter/divider 11 of FIG. 20 and of the clock signal which supplies it, according to an exemplary embodiment of the invention.

FIG. 23A shows the ICS of a vehicle V1 on which the conflict-free zone (CFZ) has been indicated, according to an exemplary embodiment of the invention.

FIG. 23B shows the ILPE waveform of vehicle V2 perfectly synchronized with vehicle V1 circulating in the opposite direction to V2, according to an exemplary embodiment of the invention.

FIGS. 23C- 23D show the ILPEs of vehicles V3 and V4 circulating in the opposite direction of V1 and which represent the extreme cases of vehicles considered synchronized with V1, according to an exemplary embodiment of the invention.

FIG. 23E shows the CFZ waveform of V1, according to an exemplary embodiment of the invention.

FIG. 23F shows the Conflict Zone (CZ) waveform of V1, according to an exemplary embodiment of the invention.

FIG. 23G shows the Vision Protection Zone (VPZ) waveform of V1, according to an exemplary embodiment of the invention.

FIG. 24 is a table showing the extension of period T as a function of the different outputs $Q_n$, $Q_{n-1}$, ..., $Q_1$, $Q_0$ of the counter/divider 11 and its clock signal, according to an exemplary embodiment of the invention.

FIG. 25 is a table showing the extension of the period T according to the different outputs ICS, $O_{n-1}$, ..., $Q_1$, Q0 and the clock signal which supplies the counter/divider 11 of FIG. 20, according to an exemplary embodiment of the invention.

FIG. 26 shows two hypothetical zones A and B whose start and end times have been defined using the time period $Q_i$ of counter/divider 11 for a value of i = n-5 as the time base, according to an exemplary embodiment of the invention.

FIG. 27 shows the simplified diagram of a circuit that, for any time base $Q_i$, generates the zone signals to be used in the different systems, according to an exemplary embodiment of the invention.

FIGS. 28A - 28F show six hypothetical zone signals (A, B, C, D, E, and F) that differ by their location and extent with respect to the ICS, according to an exemplary embodiment of the invention.

FIG. 29 shows a schematic diagram of the power supply of the system 30 and of the switching circuit which controls the activation/deactivation of said system, according to an exemplary embodiment of the invention.

FIG. 30 shows a simplified diagram of the "switch control" circuit corresponding to block 31 of FIG. 29, according to an exemplary embodiment of the invention.

FIG. 31 shows a simplified circuit diagram of the system power supply, according to an exemplary embodiment of the invention.

FIG. 32 shows the schematic diagram of a device for controlling the headlights of a vehicle for continuous/intermittent light generation, said light being generated according to alternative 1, according to an exemplary embodiment of the invention.

FIG. 33 shows the schematic diagram of a device for controlling the headlights of a vehicle for continuous/intermittent light generation, said light being generated according to alternative 2, according to an exemplary embodiment of the invention.

FIG. 34 shows the block diagram of the "Externally synchronized anti-dazzling system", according to an exemplary embodiment of the invention.

FIG. 35 shows a schematic diagram of the contents of the "External Synchronization" block of FIG. 34 according to "alternative A" described in the external synchronization procedure, according to an exemplary embodiment of the invention.

FIG. 36 shows a schematic diagram of the contents of the "External Synchronization" block of FIG. 34 according to "alternative B" described in the external synchronization procedure, according to an exemplary embodiment of the invention.

FIG. 37 shows the timing of the Conflict Free Zone (CFZ), Restricted-Conflict Free Zone (RCFZ) and VPZ signals corresponding to a vehicle V1 in relation to its ICS and to the time base Qi, in addition, figure also shows the ILPE waveform corresponding to a vehicle V2 perfectly synchronized with said V1 and running in the opposite direction thereto, according to an exemplary embodiment of the invention.

FIG. 38 shows a flowchart corresponding to the "Synchronized Light Detection block" of FIG. 34, according to an exemplary embodiment of the invention.

FIG. 39 shows a simplified circuit diagram to implement the "Synchronized Light Detection" block of FIG. 34, according to an exemplary embodiment of the invention.

FIG. 40 shows a flowchart corresponding to the "Not Synchronized Intense Light Detection" block of FIG. 34, according to an exemplary embodiment of the invention.

FIG. 41 shows a circuit diagram to implement the "Not Synchronized Intense Light Detection" block of FIG. 34, according to an exemplary embodiment of the invention.

FIG. 42 shows a simplified version of a flowchart for the "Continuous/ intermittent light emission control" block of FIG. 34, according to an exemplary embodiment of the invention.

FIG. 43 shows an expanded version of the flowchart for the "Continuous/ intermittent light emission control" block of FIG. 34, according to an exemplary embodiment of the invention.

FIG. 44 shows a circuit diagram to implement the "Continuous/intermittent light emission control" block of FIG. 34, according to an exemplary embodiment of the invention.

FIG. 45 shows a flowchart corresponding to the "High beam/low beam automatic control" block of FIG. 34, according to an exemplary embodiment of the invention.

FIG. 46 shows a circuit diagram to implement the "High beam/low beam automatic control" block of FIG. 34, according to an exemplary embodiment of the invention.

FIG. 47 shows a flowchart corresponding to the "Vision protection" block of FIG. 34, according to an exemplary embodiment of the invention.

FIG. 48 shows a circuit diagram corresponding to the "Vision protection" block of FIG. 34, according to an exemplary embodiment of the invention.

FIG. 49 shows a flowchart corresponding to the "Light pulses emission control" block of FIG. 34, according to an exemplary embodiment of the invention.

FIG. 50 shows a circuit diagram to implement the "Light pulses emission control" block of FIG. 34, according to an exemplary embodiment of the invention.

FIG. 51 shows the block diagram of the "Externally Synchronized Anti-Dazzling System with Vehicular Assistance", according to an exemplary embodiment of the invention.

FIG. 52 shows the block diagram of the "External synchronization with vehicular assistance" composite block of FIG. 51, according to an exemplary embodiment of the invention.

FIG. 53 shows the timing of the signals Qi, ICS, RCFZ, RCZ, $\overline{ICS}$, and the timing of the signals RCFZ and RCZ corresponding to said $\overline{ICS}$ of a vehicle, according to an exemplary embodiment of the invention.

FIG. 54 shows a flowchart corresponding to the "Phase selection for particular cases" block of FIG. 52, according to an exemplary embodiment of the invention.

FIG. 55 shows a flowchart corresponding to the "Phase adjustment for particular cases" block of FIG. 52, according to an exemplary embodiment of the invention.

FIG. 56 shows the Block diagram of the "Intervehicular Synchronized Anti-dazzling System with External Assistance", according to an exemplary embodiment of the invention.

FIG. 57 shows, by way of example, the zone signals DRCFZ and DRCZ together with the other signals produced

EP 3 753 766 A1

by the "Zones generation" block, according to an exemplary embodiment of the invention.

FIG. 58 shows a flowchart corresponding to the "Propagator vehicle detection" block of FIG. 56, according to an exemplary embodiment of the invention.

FIG. 59 shows a flowchart corresponding to the "Not synchronized intermittent light detection" block of FIG. 56, according to an exemplary embodiment of the invention.

FIG. 60 shows a flowchart corresponding to the "Vision protection" block of FIG. 56, according to an exemplary embodiment of the invention.

FIG. 61 shows a flowchart corresponding to the "Light pulses emission control" block of FIG. 56, according to an exemplary embodiment of the invention.

FIG. 62 is a simplified block diagram showing the contents of a version of the composite block "Inter-vehicular synchronization with external assistance" of FIG. 56, which makes use of "Synchronization with pseudorandom hierarchy", according to an exemplary embodiment of the invention.

FIG. 63 is a simplified block diagram showing the contents of a version of the composite block "Inter-vehicular synchronization with external assistance" of FIG. 56, which makes use of "synchronization with hierarchization by means of magnetic course", according to an exemplary embodiment of the invention.

FIG. 64 shows a flowchart corresponding to the "Beginner Flag Generation" block of FIGS. 62 - 63, according to an exemplary embodiment of the invention.

FIGS. 65A - 65F show two flowchart corresponding to the "Inter-vehicular phase selection" block of FIG. 62, according to exemplary embodiments of the invention.

FIGS. 66A - 66B show a flowchart corresponding to the "Inter-vehicular phase selection" block of FIG. 63, according to an exemplary embodiment of the invention.

FIG. 67 shows the block diagram of the "Inter-vehicular Synchronized Anti-dazzling System", according to an exemplary embodiment of the invention.

FIG. 68 shows a flowchart corresponding to the "Propagator vehicle detection" block of FIG. 67, according to an exemplary embodiment of the invention.

FIG. 69 shows a flowchart corresponding to the "Not synchronized intermittent light detection" block of FIG. 67, according to an exemplary embodiment of the invention.

FIG. 70 is a block diagram showing the contents of the composite block "Inter-vehicular synchronization" of FIG. 67, according to an exemplary embodiment of the invention.

FIGS. 71A - 71B show a flowchart corresponding to the "Phase adjustment control" block of FIG. 70, according to an exemplary embodiment of the invention.

FIG. 72 shows a flowchart corresponding to the "Phase adjustment and phase selection signals generation" block of FIG. 70, according to an exemplary embodiment of the invention.

FIG. 73A shows an example of a non-synchronized NVE composed of the vehicles V1, V2, V3 and V4, wherein V3 is synchronized with V1 and V2, without V1 and V2 being synchronized with each other, while V4 represents an "isolated" vehicle, according to an exemplary embodiment of the invention.

FIG. 73B shows the timing of the ICSs of the vehicles of FIG. 73A, on which the corresponding RCFZ has been shaded, according to an exemplary embodiment of the invention.

FIGS 74A - 74E illustrate when a vehicle, coming from a synchronized NVE, needs small corrections in its ICS phase, when it is involved in an unsynchronized NVE, according to an exemplary embodiment of the invention.

FIGS. 75A - 75B show a flowchart corresponding to the "Phase adjustment for particular cases" block of FIG. 70, according to an exemplary embodiment of the invention.

FIG. 76 shows modifications of the "Front received light detection" block of FIG. 34 for detecting both visible and not visible light received by the front of the vehicle, according to an exemplary embodiment of the invention.

FIG. 77 shows a simplified version of the "rear received light detection" block of the "Rear subsystem" of a vehicle, according to an exemplary embodiment of the invention.

FIGS. 78A - 78B show the block diagram of a first version of the "Externally Synchronized Anti-dazzling System with rearview protection", according to an exemplary embodiment of the invention.

FIGS. 79A - 79B show the block diagram of a second version of the "Externally Synchronized Anti-dazzling System with Rearview Protection", according to an exemplary embodiment of the invention.

FIGS. 80A - 80B show the block diagram of a first version of the "Externally Synchronized Anti-dazzling System with Vehicular Assistance and Rearview Protection", according to an exemplary embodiment of the invention.

FIG. 81 shows the contents of the composite block "External synchronization with vehicular assistance" of FIG. 80A (front subsystem) and the contents of its homonymous composite block of FIG. 80B (rear subsystem), according to an exemplary embodiment of the invention.

FIGS. 82A - 82B show the block diagram of a second version of the "Externally Synchronized Anti-dazzling System with Vehicular Assistance and Rearview Protection", according to an exemplary embodiment of the invention.

FIGS. 83A - 83B show the block diagram of a first version of the "Intervehicular Synchronized Anti-dazzling System with External Assistance and Rearview Protection", according to an exemplary embodiment of the invention.

FIG. 84A shows the contents of the composite block "Intervehicular synchronization with external assistance" of FIG. 83A (front subsystem), according to an exemplary embodiment of the invention.

FIG. 84B shows the contents of the composite block "Intervehicular synchronization with external assistance" of FIG. 83B (rear subsystem), according to an exemplary embodiment of the invention.

FIGS. 85A - 85B show the block diagram of a second version of the "Intervehicular Synchronized Anti-dazzling System with External Assistance and Rearview Protection", according to an exemplary embodiment of the invention.

FIGS. 86A - 86B show the block diagram of a first version of the "Intervehicular Synchronized Anti-dazzling System with Rearview Protection", according to an exemplary embodiment of the invention.

FIG. 87A shows the contents of the composite block "Intervehicular synchronization" of FIG. 86A (front subsystem), according to an exemplary embodiment of the invention.

FIG. 87B shows the contents of the composite block "Intervehicular synchronization" of FIG. 86B (rear subsystem), according to an exemplary embodiment of the invention.

FIGS. 88A - 88B show the block diagram of a second version of the "Intervehicular Synchronized Anti-dazzling System with Rearview Protection", according to an exemplary embodiment of the invention.

The above-described and other features will be appreciated and understood by those skilled in the art from the following detailed description, drawings, and appended claims.

## DETAILED DESCRIPTION OF THE PREFERRED EMBODIMENT

This section is for the purpose of summarizing some aspects of the present invention and to briefly introduce some preferred embodiments. Simplifications or omissions may be made to avoid obscuring the purpose of the section. Such simplifications or omissions are not intended to limit the scope of the present invention.

To provide an overall understanding of the invention, certain illustrative embodiments and examples will now be described. However, it will be understood by one of ordinary skill in the art that the same or equivalent functions and sequences may be accomplished by different embodiments that are also intended to be encompassed within the spirit and scope of the disclosure. The compositions, apparatuses, systems and/or methods described herein may be adapted and modified as is appropriate for the application being addressed and that those described herein may be employed in other suitable applications, and that such other additions and modifications will not depart from the scope hereof.

Simplifications or omissions may be made to avoid obscuring the purpose of the section. Such simplifications or omissions are not intended to limit the scope of the present invention. All references, including any patents or patent applications cited in this specification are hereby incorporated by reference. No admission is made that any reference constitutes prior art. The discussion of the references states what their authors assert, and the applicants reserve the right to challenge the accuracy and pertinence of the cited documents. It will be clearly understood that, although several prior art publications are referred to herein, this reference does not constitute an admission that any of these documents form part of the common general knowledge in the art.

As used in the specification and claims, the singular forms "a", "an" and "the" include plural references unless the context clearly dictates otherwise. For example, the term "a transaction" may include a plurality of transaction unless the context clearly dictates otherwise. As used in the specification and claims, singular names or types referenced include variations within the family of said name unless the context clearly dictates otherwise.

Certain terminology is used in the following description for convenience only and is not limiting. The words "lower," "upper," "bottom," "top," "front," "back," "left," "right" and "sides" designate directions in the drawings to which reference is made, but are not limiting with respect to the orientation in which the modules or any assembly of them may be used.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning-i.e. that it will be taken to mean an inclusion of not only the listed components it directly references, but also other non-specified components or elements. This rationale will also be used when the term 'comprised' or 'comprising' is used in relation to one or more steps in a method or process.

The present invention comprises: two main methods for avoiding the glare or dazzling of vehicle drivers in the evening hours, referred to as: "Anti-dazzling method" and "Anti-dazzling method with Rear-View Protection". Within these, we have established four different procedures for establishing the synchronization required by both anti-dazzling methods, referred to as: "External Synchronization Procedure", "External Synchronization Procedure with Vehicular Assistance", "Inter-vehicular Synchronization Procedure with External Assistance" and "Inter-vehicular Synchronization Procedure". There are two anti-dazzling systems based respectively on the methods: "Anti-dazzling method" and "Anti-dazzling Method with Rear-View Protection", and using both systems the "External Synchronization Procedure".

There are other two anti-dazzling systems based respectively on the methods: "Anti-dazzling method" and "Anti-dazzling Method with Rear-View Protection", and using both systems the "External Synchronization Procedure with Vehicular Assistance".

There are other two anti-dazzling systems based respectively on the methods: "Anti-dazzling method" and "Anti-dazzling Method with Rear-View Protection", and using both systems the "Inter-vehicular Synchronization Procedure with External Assistance".

There are other two anti-dazzling systems based respectively on the methods: "Anti-dazzling method" and "Anti-dazzling Method with Rear-View Protection", and using both systems the "Inter-vehicular Synchronization Procedure".

Before proceeding with a detailed description of the preferred formulations of the present invention, we will give some concepts, examples and definitions relating thereto.

Persistence of the retina: The human eye retains an image for a fraction of a second after being visualized. This property, on which all technologies of visual screens are based, is called persistence of vision. The persistence of the vision is of the order of 1/10 of a second, for that reason the films of cinema originally ran at a rate of 16 frames per second. This was then found to be unacceptable and the exposure frequency increased to 24 frames per second. But the greater the brightness or luminous intensity of the image that is observed the less is the persistence of vision. For this reason, large film projectors avoid the problem of image flicker by projecting three times each frame to achieve an exposure frequency of 72 times per second. Computer monitors also prevent this flicker with an exposure frequency of 75 times per second. Another example is given by many of the lights we commonly use in our homes.

Since they are powered by alternating current, many of these lights, which appear to be continuous, actually flash at twice the line frequency of 50 Hz, i.e. 100 times per second (or 120 times/second for 60 Hz systems). Note that between the pulses of light there is nothing, that is darkness, but the persistence of vision allows us to see light continuously. This property of the retina is also basic to our invention since the use of intermittent illumination is one of the basic requirements of such anti-dazzling methods.

Definition of "Nocturnal Vehicular Encounter: In the present invention we will use the term "nocturnal vehicular encounter" (NVE) to refer to a group of two or more vehicles that, having been traveling overnight in the same road, path, roadway, highway or similar route have approached each other sufficiently to be involved in a situation that begins when one or more of these vehicles receive light from another vehicle or vehicles of that group with an intensity close to that which can disturb the human vision. Thus, an NVE may be started when there is one or more vehicles receiving such light intensity from the front of the vehicles, as well as when the "anti-dazzling method with rear-view protection" is applied when there is one or more vehicles receiving that light intensity from behind. An NVE will come to an end when the dynamics of vehicular traffic put an end to the situation posed.

Accordingly, we focus not only on vehicles that are receiving a certain intensity of light, which could affect the vision of their drivers, but also those vehicles from which such a light will emerge will form part of an NVE. Although the following will be discussed in detail later, we can see that vehicles must interact with each other, exchanging some kind of signal(s), to engage each other in an NVE. Obviously the most natural means or mechanism for a vehicle to transmit a signal to other vehicles by the front aspect of the vehicle, is given using the vehicle's own headlights. However, for a vehicle to be able to engage an NVE with another vehicle or other vehicles coming behind it (which will be necessary for the anti-dazzling method with rear-view protection), said vehicle must have the appropriate means to transmit a signal backwards, which may require, for example, the ability to emit backwards any light not visible to trailing drivers.

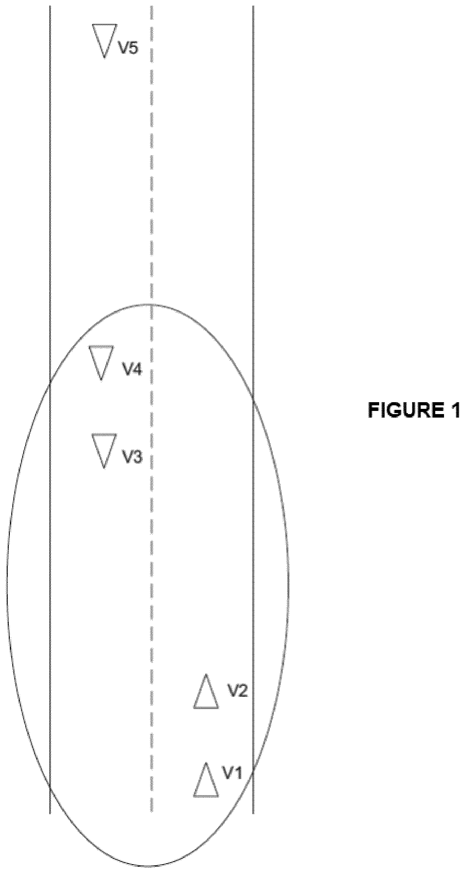

Referring to FIG. 1 we see a diagram showing a plurality of vehicles transiting the same path or roadway. In this figure, as in the rest of the present detailed description, each vehicle is represented by an isosceles triangle whose most acute vertex corresponds to the front of the vehicle. The encircling of FIG. 1 shows a group of vehicles (V1 through V5) participating in the same NVE. In this NVE, if a solution to the dazzle problem were not met, the conventional lights of vehicles V1 and V2 would start to cause discomfort to the vision of the drivers of vehicles V3 and V4 and vice versa. On the other hand, the front lights of V1 would cause discomfort to the vision of the driver of V2 as reflected in the rearview mirrors of V2. Likewise, the front lights of V4 would cause discomfort to the vision of the driver of V3 as reflected in the rearview mirrors of V3. The V5 vehicle does not participate in this NVE because it is at a distance such that its lights cannot affect the vision of the drivers of NVE vehicles and vice versa (the encircling of FIG. 1 shows only one example of the multiple configurations that can become NVEs).

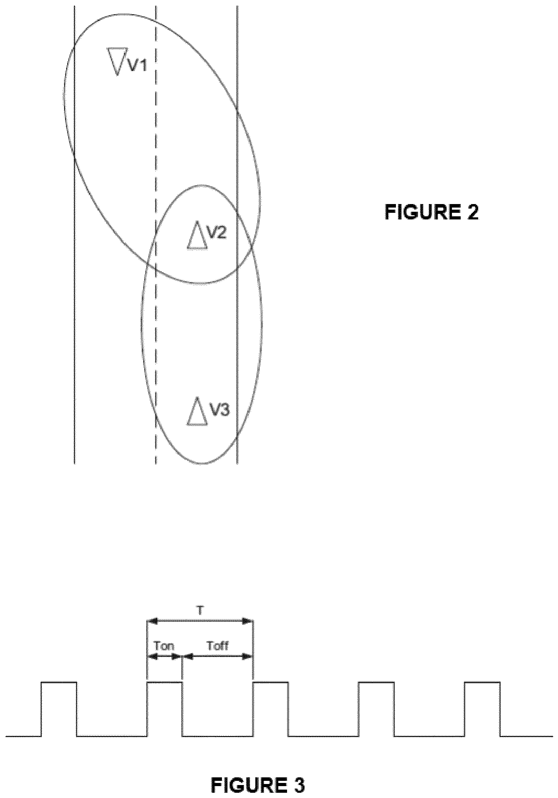

It is to be noted that when applying the anti-dazzling method with rear-view protection, a vehicle may be involved in two NVEs at the same time. As can be seen in FIG. 2, V2 is "involved from the front" in an NVE with V1, and in turn is involved from behind" in another NVE with V3. This is because in this example it has been assumed that vehicles V1 and V3 do not participate in the same NVE because they are at such a distance that their lights cannot affect the vision of their respective drivers. Otherwise the vehicles V1, V2 and V3 would be involved in the same NVE.

Formulation of the Anti-Dazzling Method: A method for avoiding a vehicle driver's glare or dazzling which could affect to said driver if he/she receives light directly from the headlights of one or more other vehicles involved in the same NVE. Said method comprises:

(a) Emission of pulses of intermittent light performed by said vehicles on the area of the road which each of them needs to illuminate, replacing the conventional continuous illumination produced by the headlamps of said vehicles on said area of the roadway, at least in the moments in which the glare or dazzling must be avoided.
(b) Synchronization of said intermittent light pulse emissions.
(c) Protection of the vision of said driver of said vehicle.

The aspects above will be described in connection with FIGS. 3 - 6. The Intermittent Light Pulses Emission (ILPE), is carried out with the frequency and phase of a periodic signal that we will call "Intermittent Control Signal" (ICS), whose frequency must have a standard value common in all vehicles and whose phase must be adjustable. FIG. 3 shows the waveform of said ILPE, which must be periodic, have an adjustable phase, and must have a space between pulses of light, referred to as "$T_{off}$", which must be less than the retention time of the retina of the human eye, and a duration of the pulses of light, which we refer to as "Ton", which should be less or at most equal to the "$T_{off}$" time. We refer to the period of said emission as "T", where $T = T_{on} + T_{off}$. These "$T_{on}$" and "$T_{off}$" times must have values chosen in such a way that the flickering of the lamps is minimized in the eyes of the drivers.
This intermittent illumination can be obtained by using in the vehicles front headlamps in which the light generated by said headlamps is suspended or significantly attenuated or deviated from said area of the road during the time intervals "$T_{off}$" corresponding to the space between said pulses of flashing light. Some of the techniques that can be used to generate the ILPE required by this method include:

1. Using LED headlamps, or gaseous discharge lamps or the like, operated by means of a control circuit which fixes the width and frequency of the light pulses.
2. Completely or partially blocking the continuous light beam of conventional lamps used in vehicles, at the rate of the intermittency that is desired. This can be done by optoelectronic or electromechanical means.
3. Employing pixel headlights based on DMD (digital micromirrors device) technology that allows directing light through micro-mirrors. These micro-mirrors can be electronically controlled at the frequency of the intermittency to be achieved to divert the continuous light out of the area of the road that the vehicle must illuminate intermittently.

If a vehicle transits at night on a deserted road using intermittent illumination of the characteristics already mentioned, two assertions can be made. First, the driver will perceive the road as if it were illuminated by continuous light due to the characteristics of the human retina, and second the vision of the driver obviously will not be disturbed since being alone on the road the light that reaches his eyes is the light emitted by his own vehicle.
The objective of the driver's vision protection, mentioned in point (c) above, is to ensure that the second of these two assertions is fulfilled even when the vehicle is on a fully-traveled road. In order to do this, the arrival in the eyes of said driver of the light emitted in the form of pulses by vehicles driving in the opposite direction with respect to the road within a same NVE must be prevented or significantly attenuated. Note that for the first assertion to continue to be fulfilled this vision protection should not be applied to the driver at the times when his own vehicle illuminates the road, that is during the "$T_{on}$" times of the ILPE of his own vehicle.
From the foregoing, it is concluded that the overlapping of intermittent light pulses emitted by vehicles driving in opposite directions to the road within an NVE should be avoided. To achieve this, it is required that the duration of each "$T_{on}$" light pulse be less than or equal to the space between "$T_{off}$" pulses, and that an ordering or synchronization of the ILPEs of the vehicles be established within said NVE, adjusting in each vehicle the phase of said ILPE to cause those vehicles that circulate in the same direction with respect to the road to exhibit, within a predetermined tolerance range, a same ILPE phase and that vehicles moving in opposite directions with respect to the road, exhibit, within said predetermined tolerance range, opposite phases of ILPE. This synchronization then consists in causing the vehicles of said NVE that circulate in a direction with respect to the road to emit their pulses of intermittent light centered, with a certain margin of tolerance, within the space between pulses "$T_{off}$" of the vehicles circulating in the opposite direction with respect to the road. Therefore, in an synchronized NVE, the vision protection of the driver of a vehicle of the already synchronized ILPEs of other vehicle(s) that run in the opposite direction with respect to the road , is carried out by preventing or significantly attenuating at regular intervals of time the arrival of said light into the eyes of said driver within each space between pulses "$T_{off}$" corresponding to the ILPE of said driver's vehicle, during a time-of-vision protection ("$T_p$") interval whose location and extent within "$T_{off}$" is such as to include pulses of intermittent light received from said vehicles that circulate in the opposite direction.
Accordingly, we will call "Synchronized vehicles" at two or more vehicles which, when traveling a road in the same direction, exhibit within a predetermined tolerance range, the same ILPE phase. We will also call "Synchronized vehicles" those that, when traveling in opposite directions, exhibit, within said predetermined tolerance range, opposite phases of ILPE. Similarly, we will call "Synchronized NVE" to an NVE in which all the vehicles are synchronized to each other and therefore "Not synchronized NVE" those NVEs in which the previous condition is not fulfilled.

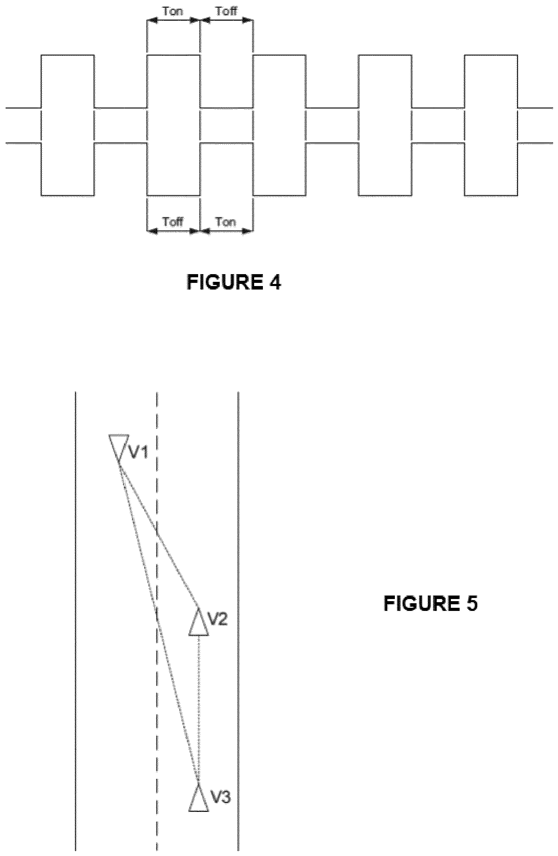

FIG. 4 shows the timing corresponding to ILPEs of two synchronized vehicles circulating in opposite directions.

For this example, a waveform has been chosen for the ILPE in which $T_{on} = T_{off}$. Since there should be no overlap between the light pulses of vehicles traveling in opposite directions, in this particular example, the tolerance range that can be applied to the synchronization of these ILPEs becomes zero and the vision protection in each vehicle must be extended to the entire "$T_{off}$" time interval to be able to cover the width of the pulses of light emitted by the other vehicle.

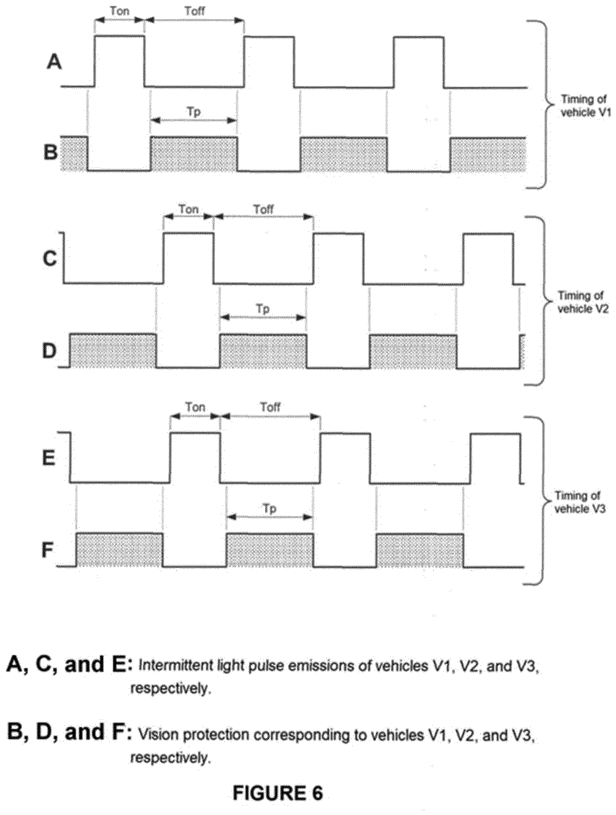

If this tolerance is to be increased, the $T_{on}/T_{off}$ ratio must be decreased and a vision protection whose duration is greater than or equal to the sum of the "$T_{on}$" time and the time corresponding to the tolerance range chosen should be set. With the aid of FIGS. 5 - 6, an example of NVE integrated by vehicles whose ILPEs have a $T_{on}/T_{off}$ ratio smaller than one (1) and whose tolerance range for synchronization is greater than zero is shown. FIG. 5 shows a diagram of an NVE in which three vehicles (V1, V2, V3) participate whose ILPEs are already synchronized, which is represented in the figure by means of straight lines that link each vehicle with the rest of the vehicles of said NVE that are within reach of its lights. FIGS. 6A - 6F show the timing corresponding to the ILPEs of the vehicles of FIG. 5 and the timing of the protection of the vision of their respective drivers. FIGS. 6B, 6D and 6F show the time intervals during which operates the protection of the vision of the drivers of V1, V2, and V3, respectively; said time intervals of vision protection "$T_p$" are located within the "$T_{off}$" time intervals of the ILPEs of FIGS. 6A, 6C and 6E respectively. Thus, the vision protection does not prevent the driver from continuing to perceive as continuous light the intermittent lighting provided by his vehicle, given that during "$T_{on}$" times the vision protection remains inactive.

In the above example, the choice of a tolerance range greater than zero for synchronization is reflected in the admission of a shift between ILPE phases of V2 and V3, shown in FIGS. 6C and 6E respectively. However, as seen in FIG. 6, the pulses of light emitted by V2 and V3 fall within the vision protection time interval "$T_p$" of the driver of V1 and vice versa, as corresponds to synchronized vehicles.

Some other alternatives to carry out the protection of the vision of the driver of a vehicle include:
Using optical materials which are electronically controlled to block or allow the passage of light, or else which allow the passage of light or attenuate it significantly. An example of such materials is given by the liquid crystal shutters currently employed in Liquid Crystal Shutter Glasses used in stereoscopic viewing. Such optical materials may be used to implement such vision protection in special glasses for the driver, or to implement said vision protection on the vehicle windshield or part thereof, or to implement said vision protection in a kind of Sun visor for the driver. Additionally, using electromechanical light shutters in, for example, special eyeglasses for the driver or some special type of sun visor.

It should be noted that the vision protection will cause the driver of a vehicle participating in a synchronized NVE to perceive vehicles coming in front of, and participating in said synchronized NVE, with their front lights significantly attenuated or off, depending on the alternative chosen to implement such vision protection, but that the position lights on said vehicles are on because these lights do not flash.

Formulation of the Anti-dazzling Method with Rear-view Protection:
The following is a method for avoiding the glare or dazzle that can affect the driver of a vehicle when the eyes receive intense light, either directly or reflected by the mirrors of his vehicle, from the headlights of other or other vehicles involved next to the first in an NVE. Said method comprises steps (a), (b), and (c) of the anti-dazzling method described above, further comprising shielding the vision of said driver from the intense light coming from the front headlamps of another vehicle on the road, to avoid the dazzle that said lights would cause when reflected in the rear-view mirrors (both central and/or side mirrors) of said vehicle. This vision protection, which we call "rear-view protection", consists in attenuating or preventing the arrival of said reflected light in the eyes of said driver at regular intervals of time "$T_p$" that cover the "$T_{on}$" of the-ILPEs received from the already synchronized vehicles that circulate in the same direction and behind said driver's vehicle.

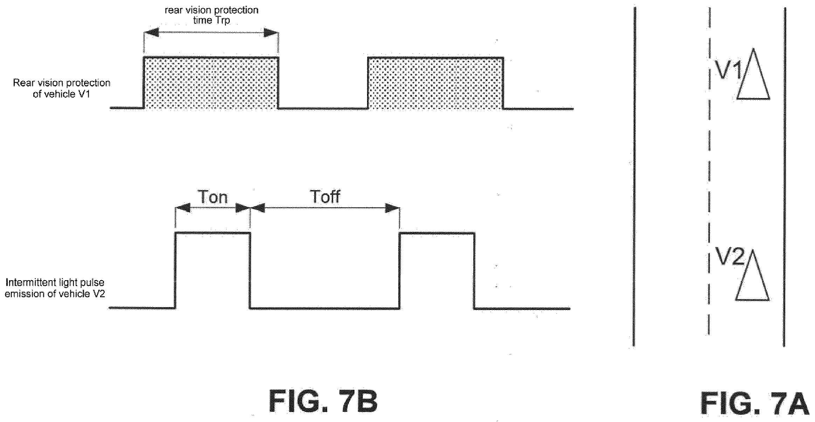

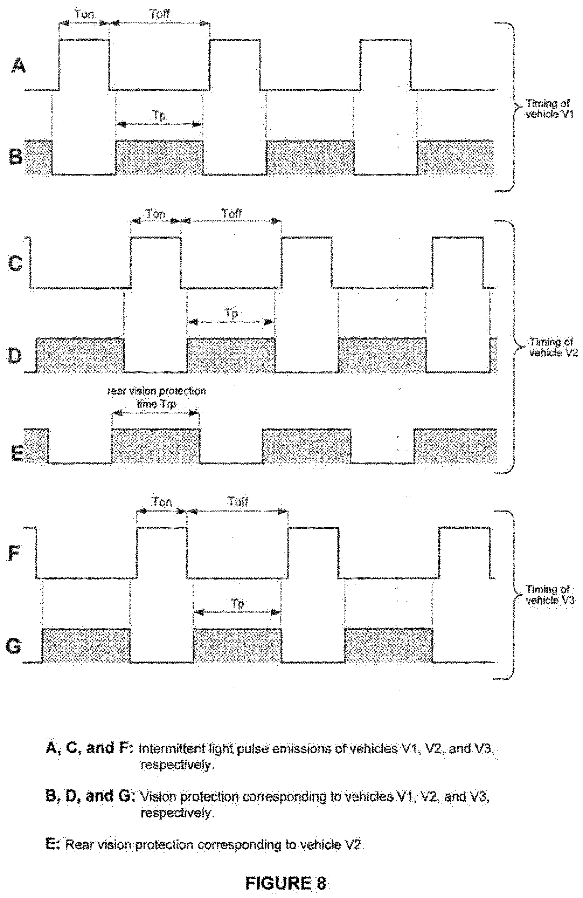

The scheme of FIG. 7A is an example of an NVE in which two synchronized vehicles V1 and V2 that circulate in the same direction participate. The timing corresponding to the rear-view protection of V1 and the timing corresponding to the ILPE of V2 is shown in FIG. 7B. If the application of the anti-dazzling method with rear-view protection to V1, V2 and V3 involved in the NVE schematized in FIG. 5 is analyzed, the driver of V2 is the only one that needs, in addition to the vision protection, rear-view protection to protect against intense light from V3. In FIG. 8, the timing of FIG. 6 is then repeated, so that the waveform of the rear-view protection corresponding to V2 is added. Note that if there is another synchronized vehicle in the NVE behind V3, the driver of V3 would also need rear-view protection.

The rear-view protection will cause the driver of a vehicle participating in a synchronized NVE to perceive, through the rear-view mirrors, the vehicles coming behind and participating in that NVE, with its front lights significantly attenuated or Off, depending on the alternative that is chosen to implement such rear-view protection, but with the position lights on because these lights do not flash.

Here are some alternatives for carrying out such rear-view protection:
Using electronically controlled optical materials, whether they permit the passage of light, or significantly attenuates it. Such optical materials could be used to implement such rear-view protection in the following ways.

Using them in the rear-view mirrors to attenuate or prevent the emission of reflected light during the time intervals in which the rear-view protection acts.

In the front windows of the vehicle to attenuate or prevent the entry of the light reflected by the side-view mirrors into the vehicle and therefore into the eyes of the driver during the time intervals in which the rear-view protection acts.

In special glasses for the driver. It should be mentioned that before being able to opt for this alternative will find it necessary to consider that such eyeglasses should provide both, rear-view protection and vision protection, therefore said eyeglasses will have to be, for example, of the type which envelopes the eyes, with its front or central part electronically controlled to provide vision protection, and with its side parts electronically controlled to provide rear-view protection.

Formulation of the External Synchronization Procedure:

A procedure for establishing the synchronization required by the anti-dazzling methods already described is described below. This procedure, which is called the "external synchronization procedure", is based on the reception and processing by the vehicles passing the same path of signals transmitted by transmission sources external to them, using a predetermined communication means, so that such vehicles obtain:

1. A "Phase adjustment" signal so that in said vehicles, by said "Phase adjustment" signal, the possible ILPE phases are reduced to two alternatives, a certain phase and its counter-phase. Each of these two alternative phases will be pre-assigned to a given direction of circulation with respect to the path or roadway. Once a vehicle has acquired these alternative phases, the "Phase adjustment" signal will serve to readjust these phases to maintain the synchronization between the ILPEs of the different vehicles that circulate along the way; since without said readjust a vehicle could not maintain indefinitely a certain phase (we cannot build absolutely stable oscillators).

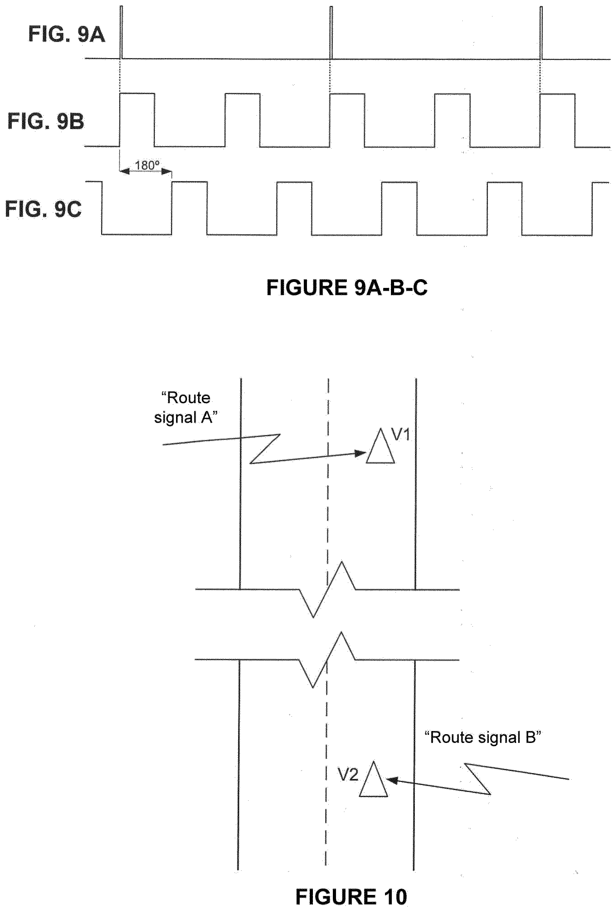

It is desirable that the "Phase adjustment" signal be a periodic signal of narrow pulses whose frequency is an exact sub-multiple of the frequency predicted for the ILPE. FIG. 9A shows the waveform of a "Phase adjustment" signal to which, for example, a period corresponding to twice the ILPE period has been given. FIG. 9B shows the waveform of an ILPE whose phase is pre-assigned to one of the directions of circulation in the path. FIG. 9C shows the waveform of an ILPE whose phase is pre-assigned to the other direction of circulation with respect to the path. By way of reference we will say that one of the two alternative phases for the ILPE is extracted in a "direct form" from the "Phase adjustment" signal by causing each rising edge of said "Phase adjustment" signal to indicate the start of a rising edge of the ILPE that is performed with said alternative phase (see FIGS. 9A - 9B). The ILPE performed with the other alternative phase will be offset 180° from the previous one (see FIGS. 9B - 9C).

2. A "Phase selection" signal, which will adopt, in each of said vehicles, one of two possible values so that by means of said "Phase selection" signal, and said "Phase adjustment" signal, each one of said vehicles may adopt, for the ILPE, the pre-assigned alternative phase corresponding to its direction of movement with respect to the road. Thus, all vehicles having the same direction of movement relative to the road will adopt the same ILPE phase and all vehicles having opposite directions of movement relative to the road will adopt opposite phases of ILPE.

The communication medium to be employed by said transmission sources external to the vehicles is included among those based on the transmission/reception of electronic, magnetic, optical, acoustic signals or a combination thereof. Some alternatives for causing the vehicles to obtain the "Phase adjustment" signal and the "Phase selection" signal from the signals transmitted by said external transmission sources are presented, alternatives that to some extent depend on the media used.

Alternative A:

The "Phase adjustment" signal will be transmitted using one or more Omni-directional transmission sources attempting to provide coverage all the way, so that the vehicles can readjust their ILPE phase at regular intervals of time given by the period of the "Phase adjustment signal". The value of this period should be less than the time that the vehicle is able to maintain the correct phase for the ILPE, which will be related to the stability of the oscillators used in the vehicles to control the ILPE since the lower the stability of these oscillators, the minor the time elapsed before the ILPE phase undergoes a shift that exceeds the allowed tolerance range. However, it should be noted that the stability of such oscillators should be adequate so that a vehicle can maintain the correct phase of ILPE while driving through some areas of the road where it is difficult to receive the "Phase adjustment" signal. For example, when crossing a tunnel. If more than one Omni-directional transmission source is used, they must be synchronized with each other to transmit a same "Phase adjustment" signal. Such synchronization could be performed, for example, by a satellite signal. Alternatively, a single source of Omni-directional transmission could be used to the extent that it provides adequate coverage. An example of this can be the satellite transmission of the "Phase adjustment" signal to vehicles.

On the other hand, the "Phase selection" signal will be obtained in each vehicle according to its direction of movement with respect to the road from the reception of a "course signal" transmitted by directional transmission sources located in certain "Key points" along the way. Therefore, the vehicles must have means for receiving the "Phase adjustment" signal and means for the directional reception of said "course signal". The latter means will be arranged in such a way that it is possible to discern whether the received course signal comes from the left or from the right with respect to the direction of movement of the vehicle. At a given instant the "course signal" will be received only from one side of the vehicle (the one exposed to the directional transmission source), which allows to determine the direction of movement of the vehicle with respect to the road and therefore give a value to the "Phase selection" signal.

If all sources of directional transmission are to transmit the same course signal, then said directional transmission sources shall be located on the same side of the road, so that if a vehicle receives said "course signal" from the left assumes that it has a certain direction of circulation with respect to the road and if it receives said "course signal" from the right assumes that it has the opposite direction of circulation. In case of having to install one of these directional transmission sources on a winding road, this installation must be done in such a way that every time a vehicle receives the "course signal" from that source it always does it on the same side of the vehicle (if it maintains its direction of movement with respect to the road). This is achieved by causing the signal emitted by said directional transmission source to go through the path only once. To distribute the directional transmission sources on both sides of the road, two different course signals must be transmitted depending on the side of the road from which each of these signals is transmitted. Thus, all sources of transmission located on one side of the road will transmit a course signal to which we will call, for example, "course signal A" and all sources of transmission located on the other side of the road will transmit a signal to which we will call, for example, "course signal B".

In this case, the vehicle will assume that it has a certain direction of movement with respect to the road whether it has received the "course signal A" from the left or if it received the "course signal B" from the right. Similarly, the vehicle will assume that it has the direction of movement opposite to the previous one whether it received the "course signal A" from the right or if it has received the "course signal B" from the left. In the scheme of FIG. 10, for example, V1 is shown receiving the "course signal A" from the left and, at another point in the way, to V2 that circulates in the same direction as the one above, receiving the "course signal B" from the right. Accordingly, both vehicles will assume that they have the same direction of travel with respect to the road and therefore give the same value to the "Phase selection" signal. Thus, having to install a source of directional transmission at a certain point in the way will have the freedom to do so on either side of it. The key points in which the sources of directional transmission will be located must include at least the points of entry to the road and those points of the road in which a vehicle can reverse its direction of movement with respect to it; in this way a vehicle will be able to update its "Phase selection" signal when necessary. It should be mentioned that if a vehicle which has changed its direction of movement with respect to the road has no means for updating its "Phase selection" signal, will maintain an incorrect phase for the ILPE until it passes through the next directional transmission source.

Alternative B:

Another alternative for the vehicle to obtain the "Phase adjustment" signal and the "Phase selection" signal may be: Distributing along the road or path directional transmission sources which transmit to the vehicles a "Phase adjustment" signal, so that from said "Phase adjustment" signal in each vehicle, in addition to the two alternative phases of ILPE, the "Phase selection" signal is obtained, allowing the ILPE phase to be adopted which corresponds to its direction of movement with respect to the path.

If said directional transmission sources are all located on the same side of the road, the value of the "Phase selection" signal that a vehicle obtains will depend on its direction of movement with respect to said road. Each vehicle shall have means for the directional reception of the "Phase adjustment" signal transmitted by the directional transmission source whose coverage area is traversing said vehicle. These receiving means will be arranged in such a way that it will be possible to discern whether the "Phase adjustment" signal comes from the left or from the right with respect to the direction of movement of the vehicle. This allows a value to be assigned to the "Phase selection" signal, since the "Phase adjustment" signal will be received only by one side of the vehicle (that which is exposed to said transmission source).

In this way, the vehicle can adopt the ILPE phase that corresponds to its direction of travel with respect to the road. A convention will then be established for the vehicles to adopt for the ILPE the alternative phase which is directly obtained from the "Phase adjustment" signal when said "Phase adjustment" signal is received by a certain side of the vehicle (for example, the left side). And to adopt the opposite alternative phase for the ILPE if said "Phase adjustment" signal is received by the other side of the vehicle (for example, the right side). In this way vehicles that circulate in opposite directions will be automatically synchronized. In case of having to install one of said directional transmission sources in a sinuous way, said installation must be done in such a way that each time a vehicle receives the "Phase adjustment" signal from said source it remains on the same side of the vehicle (if it maintains its direction of movement with respect to the road). This is achieved making the signal emitted by said directional transmission source to traverse the road only once. If said directional transmission sources are located on both sides of the road, it is necessary that said sources transmit different "Phase adjustment" signals from opposite sides of the road, so that opposite alternative phases may be obtained (in a direct form) from each side of the road. It is then necessary for the "Phase adjustment" signal to be transmitted from one side of the path to be phase-shifted by 180° with respect to the "Phase adjustment" signal transmitted from the opposite side, and further that the "Phase adjustment" signal has a period which is an odd multiple of the ILPE period. A convention will then be established for the vehicles to adopt one of two possible values for said "Phase selection" signal when the "Phase adjustment" signal is received by a certain side of the vehicle (for example, the left side), and to adopt the other of said possible values for the "Phase selection" signal when the Phase adjustment signal is received by the other side of the vehicle (for example, the right side).

Thus, since when the vehicle receives the "Phase adjustment" signal on one of its sides it will adopt either the phase directly obtained from said "Phase adjustment" signal or the opposite phase depending on the side of the vehicle that is (Left or Right), it is necessary that, from opposite sides of the road, signals be transmitted out of phase by 180 degrees so that, from each of said "Phase adjustment" signals, a vehicle that advances in a certain direction with respect to the road obtains the same ILPE phase regardless of the side of the vehicle by which it receives said "Phase adjustment" signal.

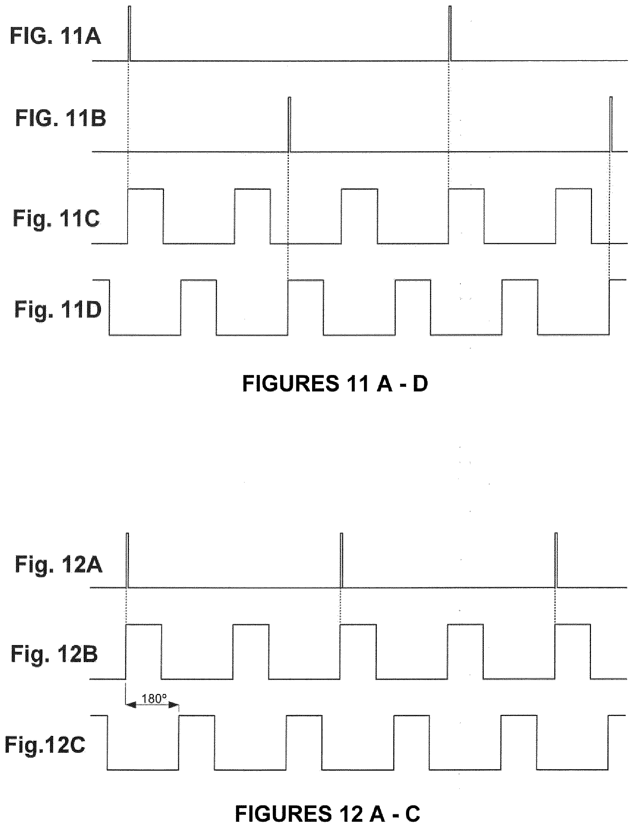

In FIGS. 11A - 11B two "Phase adjustment" signals out of phase by 180° are shown, the periods of which, by way of example only, correspond to the triple (odd multiple) period of the ILPE. FIG. 11C shows the waveform for the ILPE whose phase corresponds to the "alternative phase" which is obtained directly from the "Phase adjustment" signal of FIG. 11A.

FIG. 11D shows the waveform for the ILPE whose phase corresponds to the "alternative phase" which is obtained directly from the "Phase adjustment" signal of FIG. 11B. Obviously, all directional transmission sources located on the same side of the road must be synchronized with each other to transmit the same "Phase adjustment" signal. Such synchronization could be performed, for example, by a satellite signal. The greater the stability of the oscillators used in vehicles to control the ILPE, the longer the time elapses before a vehicle needs to readjust the phase of said ILPE so that it does not suffer a shift greater than a tolerated margin of tolerance. This time must be longer than the time it takes for a vehicle, traveling at a reasonable minimum speed, to traverse the distance separating two consecutive directional transmission sources, from which it follows that the separation between said transmission sources should be uniform. Thus, by adjusting the separation distance between said directional transmission sources as a function of the stability of said oscillators, we minimize the possibility that non-synchronized NVEs may occur along the path due to the ILPE phase shift of the vehicles. However, there may be very particular cases in which a vehicle may have an incorrect phase for ILPE. These cases are as follows:

1. When a vehicle has stopped on the road for a while, it may happen that when it starts moving again, its ILPE phase may have suffered a greater than permissible shift.

2. When a vehicle changes its direction of movement with respect to the road. The occurrence of these cases can be reduced by installing directional transmission sources in the vicinity of those places where the driver of a vehicle is more likely to be able to make a stop or reverse the direction of movement of his vehicle with respect to the road.

In the anti-dazzling methods already described above, it has been established that the vehicles must interact with one another to engage each other in an NVE. Vehicles must therefore be able to directionally transmit signals both at the front and at the rear of their chassis if they have the capability to provide vision protection and rear-view protection, and only at the front if the vehicles provide only vision protection. To explain the characteristics that vehicle interaction must have if vehicles provide vision protection and rearview protection, we will consider the front and rear part of vehicles as separate entities. The front of a vehicle can interact with the front or rear part of another vehicle, while the rear part of a vehicle does not interact with the rear part of another vehicle (vehicles proceeding in opposite directions that have already crossed do not interact between them). Thus, the vehicle must have means for receiving on the front both the signals that a vehicle can transmit by the front as well as those that another can transmit by the rear, as well as means in said vehicle for receiving on the rear part the signals that a vehicle can transmit by the front. Making a vehicle interact with other vehicles backwards makes it possible the rear-view protection even in a synchronized NVE integrated by vehicles that all circulate in the same direction with respect to the road.

Concepts, definitions and general characteristics common to Anti-Dazzling Systems.

Communication between vehicles

In those systems which require the vehicle to transmit signals to other vehicles forward, it has been chosen to use as the transmission medium the same vehicle ILPE which, when necessary, will be suitably controlled for this purpose. In those systems that require the vehicle to transmit signals to other vehicles backwards, it has been chosen to do so also by the emission of pulses of light. But for such a light not to affect the vision of the drivers of other vehicles, light will be used in the non-visible spectrum or pulses of visible light while the vehicle remains within a synchronized NVE.

Formation of an NVE

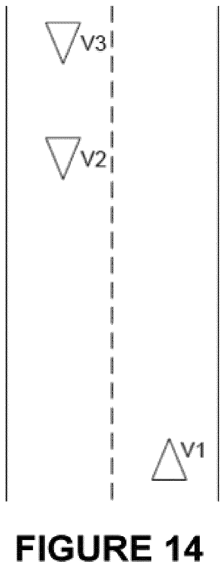

In one embodiment, the vehicles will have one or more light sensors arranged in such a way as to detect the light emitted by other vehicles arriving at them from the front. By analyzing the signals from these sensors, the system will determine when the vehicle has been involved from the front in an NVE (and later, for systems with rearview protection, how a vehicle is involved from behind in an NVE). Prior to being involved in an NVE, vehicles will have activated their conventional continuous lighting. When the intensity of the light received by the front of a vehicle exceeds a certain threshold that we will call "continuous light threshold", then the system assumes that the vehicle has been involved in an NVE and therefore activates the ILPE. This ILPE, upon being detected by a vehicle that still has its conventional continuous light active, will be interpreted by the system of said vehicle as a "warning" that its lights are close to upset the driver's vision of the vehicle(s) from which the ILPE comes from. Therefore, when said vehicle receives intermittent light pulses with an intensity such that it exceeds a certain threshold that we will call "intermittent light threshold", then that vehicle will be incorporated to the NVE and will also activate its ILPE. The continuous light threshold corresponds to a light intensity lower than that which can disturb the vision of a driver. The intermittent light threshold will be assigned a value lower than the continuous light threshold for two reasons: first to accelerate the formation of the NVE and, second, in systems that do not have rear-view protection, to incorporate to said NVE those vehicles which are close to the initiators of the NVE. FIG. 14 shows the diagram corresponding to three vehicles V1, V2 and V3 that do not have rear-view protection and whose intermittent lights do not exceed in intensity and reach their conventional lights. It is assumed that such vehicles are about to become involved in an NVE and, according to what has already been said, these vehicles will have active their conventional continuous illumination. For the example, it has been assumed that the light sensor of V1 is the one which is detecting continuous light with greater intensity; therefore V1 will be the first to detect light above the continuous light threshold and consequently the first in switching to intermittent lights. However, if we chose to have the intermittent light threshold have the same value as the continuous light threshold, V2 would not detect the intermittent light of V1 until both vehicles were closer together, which would result in delaying the formation of NVE. This delay can be avoided by making the threshold for intermittent light detection less than the threshold used for continuous light detection. In addition, as the intermittent light threshold is lower than the continuous light threshold, it also achieves that V3 enters the NVE - upon detecting the flashing light coming from V1- earlier than it would if those thresholds had the same value.

It should be noted that the delay mentioned in the above example could also be avoided by causing the intermittent light to exceed in intensity and reach the level of the conventional lights of the vehicle. It should also be noted that if the vehicles in the previous example had rear-view protection, V3 would already be using intermittent light to enable rear-view protection on V2. Systems providing rear-view protection require the vehicle to have, in addition to sensors for the detection of light arriving from the front, one or more sensors arranged in such a way as to enable the vehicle to detect the light it receives from behind. By analyzing the signals delivered by these sensors, the system can determine when the vehicle has been involved from behind in an NVE. When the intensity of the light detected exceeds a certain threshold that we call "continuous light threshold received from behind" then the system will assume that the vehicle has entered an NVE and must issue a signal backwards so that the vehicle or vehicles that follow it also enter said NVE, and activate their intermittent illumination.

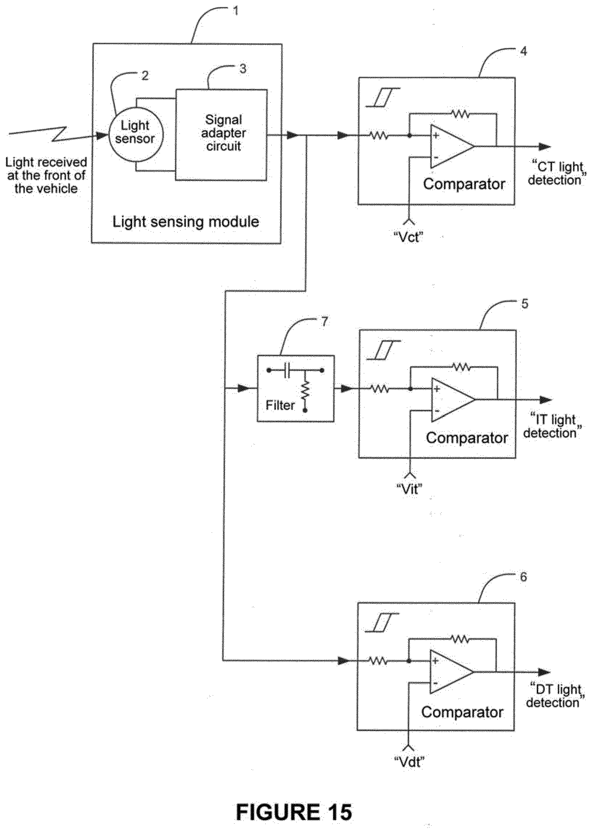

A schematic diagram of how the detection and analysis of the light received by the front of the vehicle is shown in FIG. 15. The output of the light sensing module 1, which is composed of a light sensor 2 and a signal adapter circuit 3, enters a comparator 4 whose reference voltage (Vct) corresponds to the "continuous light threshold" and its output signal, which will be called "CT Light Detection", is activated (raised) when the signal from the light sensing module 1 is located above said reference (i.e. when the light detected by the sensor is located above the continuous light threshold). To avoid undesirable transitions at the output of the comparator 4 and the outputs of the comparators 5 and 6 to be described below, said comparators have a hysteresis cycle centered on their respective references. Thus, the output of each of said comparators will be activated (high level) when the signal present at the comparator input reaches a certain level that is above its reference voltage. The output of each of said comparator will be deactivated (low level) when the signal present on its input falls to a certain level which lies below the corresponding reference voltage. The difference between the voltage present at the comparator input when its output switches to high level and the voltage present at the input of said comparator when its output switches low is called "hysteresis width" (h). The output signal of the light sensing module 1 also enters, through the filter 7, another comparator 5 whose reference voltage (Vit) corresponds to the "intermittent light threshold". So that the output of said comparator 5, which we will call "IT light detection", is presented in the form of a pulse in correspondence with each pulse of intermittent light received by the light sensor 2 with an intensity exceeding the intermittent light threshold, said filter 7 must be capable of eliminating a possible component of continuous voltage that is still present in the output signal of the light sensing module 1.

In addition, by adjusting the time constant of said filter 7 and the hysteresis of the comparator 5 it is possible to form the width of the pulses at the output of said comparator 5. To justify the use of such a filter 7 we turn to the same example of FIG. 14, but now supposing that V2 is the first to detect light above the continuous light threshold and hence the first to use intermittent light. As we have assumed that the vehicles do not have rear-view protection, V3 will not yet be employing intermittent light, therefore the light sensor of V1 will be detecting the intermittent light coming from V2 mounted on the continuous light coming from V3. In the absence of such a filter, the "IT light detection" output of comparator 5 of V1 would only present the waveform corresponding to the intermittent light from V2, when the continuous light component from V3 did not exceed the intermittent light threshold. Otherwise, i.e. if the continuous light coming from V3 exceeds the intermittent light threshold, V1 could not determine, without the use of said filter, that it is receiving intermittent light. This is so because the output of comparator 5 would remain at high level and the system could not determine, based on a time analysis of the same, whether the vehicle is receiving intermittent light or not.

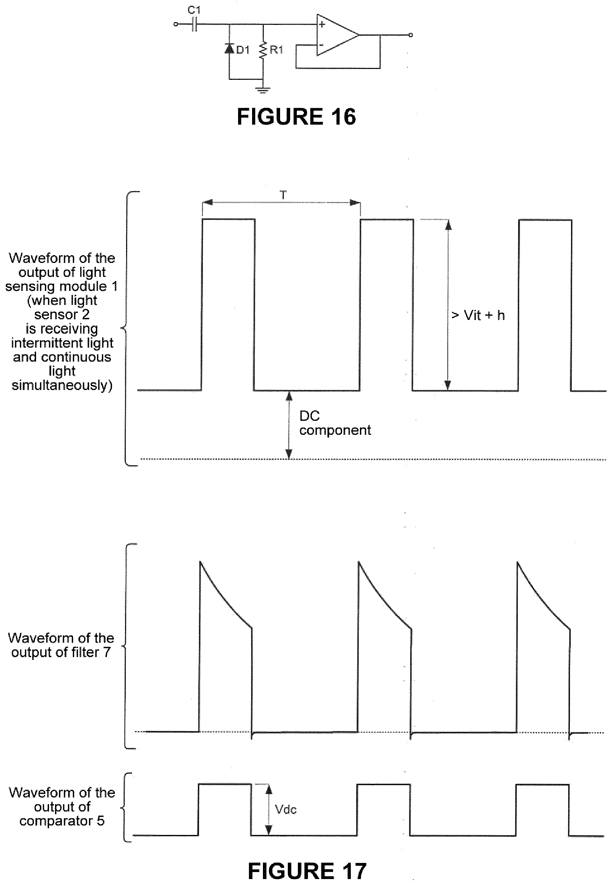

Consequently, without the use of the filter 7, the entry of V1 into the NVE would be delayed until the light detected by its light sensor 2 exceeds the continuous light threshold, since when this latter happens the system will assume -without needing to perform a temporal analysis on the signal "CT light detection"- that the vehicle has entered an NVE. However, when it is required to determine whether a vehicle is receiving conventional continuous light, it will be necessary to analyze the temporal behavior of the "CT light detection" signal. FIG. 16 shows, by way of illustration only, the simplified scheme of a possible circuit for the filter 7 of FIG. 15, to explain how said filter 7 must respond to pulses whose characteristics correspond to the intermittent light. If the circuit diagrammed in FIG.16 is adopted for the filter 7 of FIG. 15, when a pulse is present at the input of said filter 7, the capacitor C1 is charged through the resistor R1 and for this reason said pulse appears at the output of the filter 7 showing a reduction of amplitude in correspondence with the charge of said capacitor C1 (see FIGS. 17A - 17C). Therefore, the time constant T1 = R1 · C1 and the hysteresis of the Comparator 5 of FIG. 15 can be adjusted either for the comparator 5 to switch low before the flashing light pulse is extinguished, or to preserve the width of said pulse at the output of the comparator 5 if so desired.

However, for some of the systems to be described below, it would be desirable for the pulses obtained at the output of said comparator 5 to be narrow. It is also convenient that, upon the extinction of a pulse at the input of the filter 7, the capacitor C1 is immediately discharged, which is done through the diode D1. The output of the light sensing module 1 also enters a comparator 6 whose reference voltage (Vdzt) corresponds to a light intensity threshold which we will call "dazzling threshold" which will obviously be greater than the "continuous light threshold ". The output of said comparator 6, which we call "DZT light detection", is activated when the light detected by the light sensor 2 exceeds the dazzling threshold. When this happens, the system will analyze the temporal behavior of this output to determine if the vehicle driver is receiving said light above the dazzling threshold out of the vision protection time interval $T_p$. If this situation occurs the system will cause the vehicle to temporarily use the low beam headlights waiting for a similar action by the other vehicles involved. It should be mentioned that this case would only occur between vehicles that, for some reason, did not have their lights synchronized.

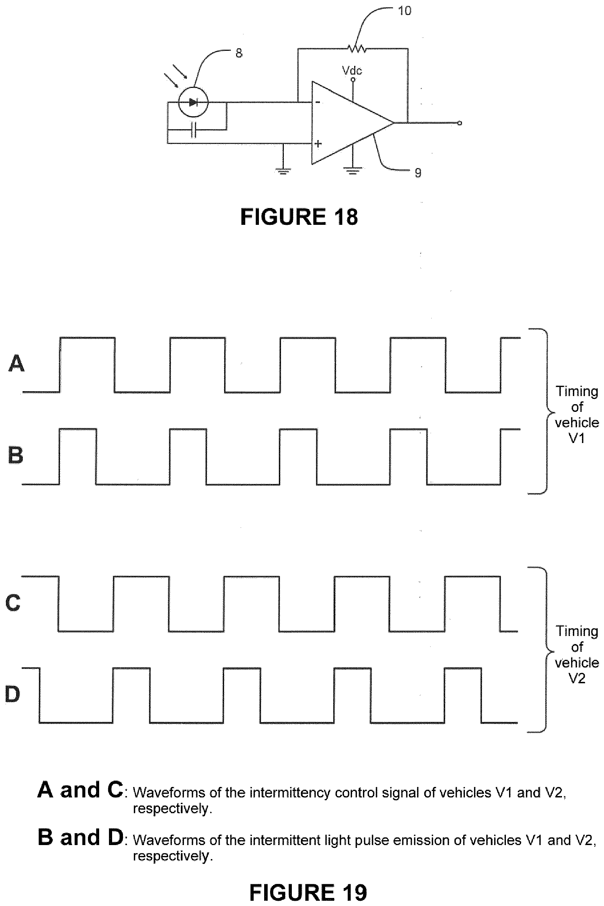

FIG. 18 shows a schematic diagram of a possible light sensing circuit, which comprises a photodiode 8 (as a light sensor) connected directly to the inputs of an operational amplifier 9 which, negatively feedback through a resistor 10, fulfills the signal adapter circuit function. The output of said operational amplifier 9 will be proportional to the current generated by the photodiode 8, which will be operated in its most stable mode, i.e. in the "short-circuit" mode. It is to be noted that the response curve of a conventional photodiode includes both the visible light region and the infrared light region. In those systems, whose implementation makes it possible to detect light coming from other vehicles working only in the infrared region (i.e. filtering the visible light), the possibility that lights strange to those produced by the vehicles will be detected by the system would be reduced (For example, light from luminous signs). Said light sensor 2 will preferably be mounted on places where the light intensity received by it is like that perceived by the driver of the vehicle (e.g. behind the windshield).

Transitions in the type of light detected by a vehicle

Next, we describe the transitions, which can occur in a regular way, among the types of light that a vehicle detects, the most frequent situations in which said transitions could take place and the response the system will give in each case. (The transitions have been described, for the sake of simplicity, thinking on vehicles which do not have rearview protection, that is, vehicles which can only be front involved in a NVE).

Transition: from not detecting light (neither continuous nor intermittent) to continuous light detection. Situation: The vehicle in question, which is not involved in an NVE, is the first to detect another or other approaching vehicles that are not involved in an NVE. System response: activate the ILPE.

Transition: from not detecting light (neither continuous nor intermittent) to intermittent light detection. Situation: The vehicle in question, which is not involved in an NVE, detects another or other approaching vehicles already involved in an NVE. System Response: activate the ILPE.

Transition: from detecting conventional continuous light to intermittent light detection. Situation: The vehicle in question, which is already emitting intermittent light because it is detecting continuous light from another or other approaching vehicles, receives the ILPE from one or more of those vehicles in response to its ILPE. System Response: If these intermittent light pulse emissions are properly synchronized, the system keeps the ILPE active. Otherwise the response will depend on each system and will be dealt with later.

Transition: from detecting intermittent light to non-detecting light. Situation: the vehicle in question just left an NVE. System Response: The system activates conventional continuous illumination.

Using "high beam" versus "low beam"

The conventional way of "attenuating" the problem of dazzling is to make use of the low beams in the vehicles. However, since with the use of anti-dazzling systems and methods developed in the present invention, the driver of a vehicle participating in a synchronized NVE is protected from the intense light coming from other vehicles, the intermittent or flashing light employed by the vehicles may have greater intensity and reach than conventional continuous low light or low beam and even could have greater intensity and scope than "conventional continuous high beam", (this applies especially to systems that provide rear view protection). However, in some situations, the intensity of light employed by a vehicle could cause problems within a non-synchronized NVE. Some of the cases in which this may occur include: When the driver of a vehicle participating in an NVE has deactivated the anti-dazzling system (vehicles will have a manual means to deactivate the anti-dazzling system, in which case the vehicle may only use its conventional lighting) or when a vehicle, which participates in an NVE, is not equipped with an anti-dazzling system.

Since in any of these cases a vehicle will use conventional continuous light, the drivers of vehicles traveling in the opposite direction will receive light outside the $T_p$ vision protection time interval. When a vehicle receives light outside said interval $T_p$ with an intensity such that it exceeds the "dazzling threshold" the system will activate for a short time a signal that we will call "Force high beam use" and immediately after said short time has passed, it will activate another signal that we will call "Force low beam use". As their names indicate, these signals force the use of high and low beams respectively, regardless of the position of the "high/low beam manual selector switch" (manual dimmer switch) of the vehicle. These actions of the system, which will then be explained in more detail, are done to avoid causing inconvenience to the driver of the vehicle that does not have anti-dazzling system and, in turn, to request the driver to lower his vehicle's beams. Obviously, the driver of a vehicle that has the system will also be able to carry out said request manually, closing and releasing the switch or push button which activates temporarily the high beams of his vehicle. It should be mentioned that if the light of said vehicle is intermittent the change of light will go unnoticed for the drivers of those vehicles whose intermittent light is synchronized with the previous one.

Intermittent Control Signal (ICS)

In the anti-dazzling systems to be described, the ICS is a square wave signal of a predetermined frequency that will be generated in the vehicles in such a way that their phase is adjustable. In such systems, the ILPE is performed with the frequency and phase of said ICS, which means that when the vehicle is using regular intermittent light, each positive edge of the ICS will initiate the emission of a light pulse. The ICS allows a vehicle to maintain the ILPE phase even if the vehicle is not using intermittent light, such as when a vehicle leaves an NVE, or when the vehicle stops and turns off its lights. The ICS phase will only be modified if a new synchronization requires it. It should be noted that the ICS of synchronized vehicles that circulate in opposite directions will be, within a certain margin of tolerance, in counterphase. Therefore, the reception by one vehicle of each pulse of intermittent light from another vehicle synchronized with the first one approaching in the opposite direction starts - within a certain tolerance range - from the negative edge of its ICS. FIGS. 19A - 19D shows the ICS and ILPE waveforms corresponding to two vehicles V1 and V2 "perfectly" synchronized with each other and traveling in opposite directions. FIGS. 19A and 19C are the waveform of the "Intermittence Control Signal" of the vehicles V1 and V2, and FIGS. 19B and 19D are the waveform of the ILPE of the vehicles V1 and V2 respectively.

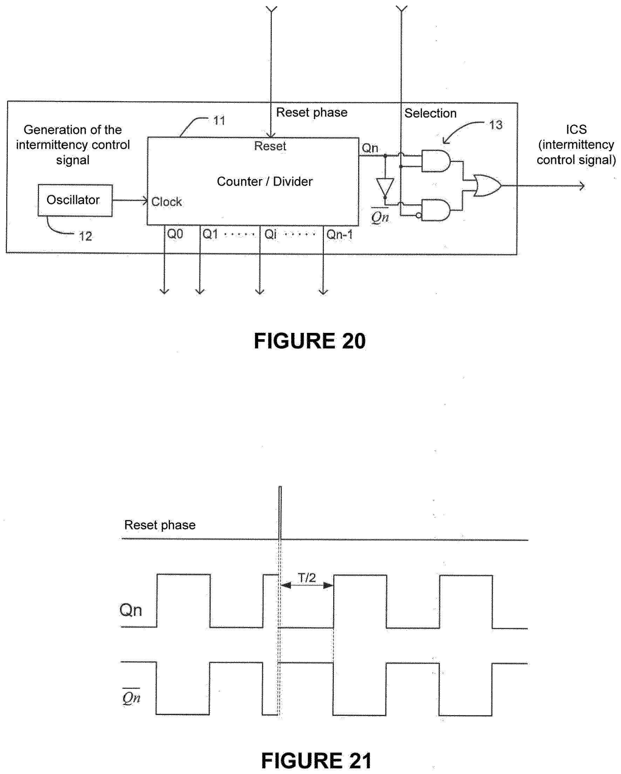

The ICS will be obtained from a much higher base frequency. This base frequency is generated by an oscillator whose stability determines the time that a vehicle can maintain a certain phase of ILPE without the displacement of that phase exceeds a certain value. The stability requirements of said oscillator are not the same for all systems since these requirements change according to the synchronization procedure employed. FIG. 20 corresponds to a simplified diagram of a circuit for generating the ICS. This circuit has two inputs called "phase reset" and "Selection". The "phase reset" input is the reset input of a multi-stage binary counter 11, which stages will be used as frequency dividers and whose outputs will be identified as Qn, Qn-1, ..., Q1, Q0, where Qn is the output of the highest order stage (n+1 stages). The base frequency delivered by an oscillator 12 enters the clock input of the counter/divider 11. By acting on the reset input of said counter/divider 11 the phase of all its outputs is adjusted. The output Qn of said counter/divider 11 enters along with the signal $\overline{Qn}$ into the selector circuit 13 at whose output Qn is obtained when the "selection" input of said circuit is at high level and $\overline{Qn}$ when said "selection" input remains at low level. The output of this selector circuit constitutes the "ICS". To establish the phase for the ILPE of the vehicle, each system must generate signals to control the "phase reset" and "selection" inputs of the ICS generation circuit.

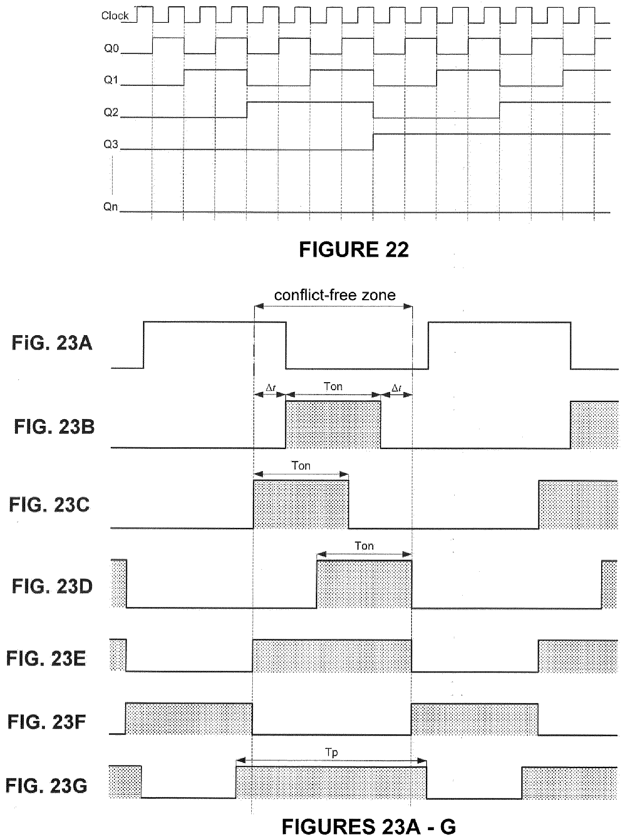

A phase adjustment of the ICS can be presented in the form of the high-level setting of said ICS (by setting the "phase reset" input to high level and the "selection" input to low level) or in the form of setting low level of said ICS (putting the input "phase reset" in high level and the input "selection" in high level). FIG. 21 shows the behavior of the Qn and $\overline{Qn}$ outputs when a pulse is present at the "phase reset" input. With this form of generating the ICS an accuracy is obtained for the phase adjustment which will be given by the period of the clock signal generated by the oscillator 12, i.e, the inverse of the base frequency. Other outputs corresponding to the intermediate stages of the counter/divider 11, whose frequencies are multiples of the ICS frequency, will be used to delimit certain "zones" within the period T of the ICS, such as the vision protection time interval $T_p$ and other areas that will be defined below. FIG. 22 shows the timing of the outputs of said counter/divider 11 and the clock which supplies it.

Definition of zones within the T period of the ICS

"Conflict-Free Zone (CFZ)": we shall call this way the time space or zone within the period T of the ICS of a vehicle in which intermittent light pulses coming from other vehicles considered synchronized with the first and which circulate in the opposite direction will be received. We will call "CFZ" to a signal that identifies said conflict free zone, reason why said signal will have the same frequency that the ICS and will remain active within each conflict free zone. FIGS. 23A - 23G shows the extent and location of the conflict-free zone in relation to the ICS of the vehicle. FIG. 23A shows the ICS of a vehicle V1 on which the CFZ has been indicated. FIG. 23B shows the ILPE of a vehicle V2 perfectly synchronized with V1 that circulates in the opposite direction to it. As can be seen in both figures, the conflict-free zone will have a location and extent such that it encompasses the pulse width of FIG. 23B plus a certain margin of tolerance ($\Delta t$) on both sides of said pulse. FIGS. 23C - 23D show the ILPEs of two vehicles V3 and V4 that circulate in the opposite direction of V1 and which represent the extreme cases of vehicles considered synchronized with V1. FIG. 23E shows the waveform of the "CFZ" signal of V1.

"Conflict zone" (CZ): we shall call this way the time space or zone within the period T of the ICS of a vehicle in which pulses of intermittent light coming from other vehicles not synchronized with the first and which circulate in the opposite direction will be received. We will call "CZ" a signal that identifies the conflict zone within each period T of the ICS of a vehicle, so that signal will have the same frequency as the ICS and will remain active within each conflict zone. FIG. 23F shows the waveform of the signal "CZ" for V1, said "CZ" signal is obtained by inverting the "CFZ" signal.

"Vision protection zone" (VPZ): in anti-dazzling systems, we shall call this way the time space or zone that coincides with the vision protection time interval $T_p$ already defined when describing anti-dazzling methods. We will call "VPZ" a signal that identifies the vision protection zone within each T period of the ICS of a vehicle, so that the signal will have the same frequency as the ICS and will remain active within each vision protection zone. FIG. 23G shows the waveform of the VPZ signal for V1 which, as can be seen, includes the conflict-free zone.

Other zones not used in all systems will be defined for each system. From now on we will use the same acronym to refer to both a zone and the signal that identifies that zone, for example, we will use CFZ to refer to both the conflict-free zone and the signal that identifies that zone.

Zone signals generation

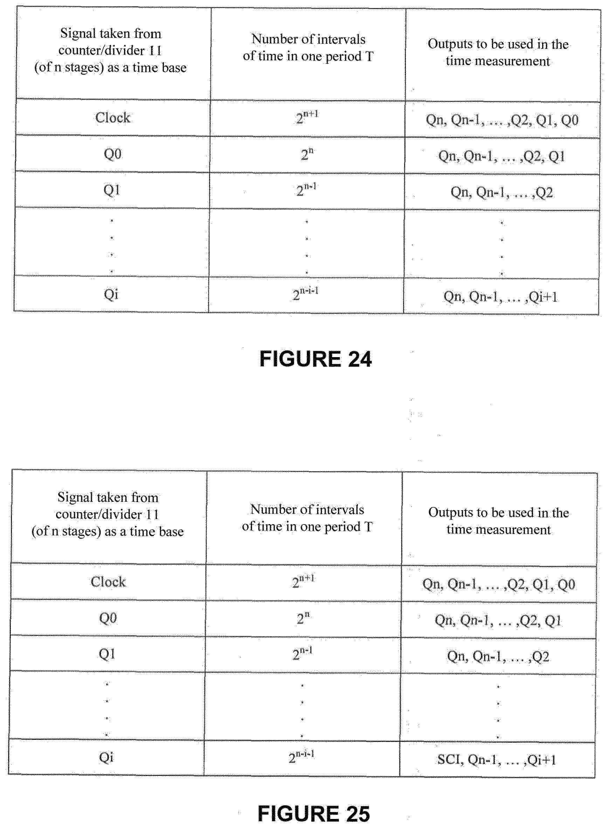

To generate a signal that identifies a zone, which has a certain location and extension within the period T of the ICS, it is necessary to define the start and end times of that zone, for which a means must be available to measure the time within each period T as a function of a chosen time base. If the period of the clock signal entering the clock input of the counter/divider 11 is used as the time base, it can be distinguished within the period T of the ICS, which is generated from the output Qn of said counter/divider 11, $2^{(n+1)}$ distinct time intervals. Each of said intervals can be identified by the state of the outputs Qn, Qn-1, ..., Q1, Q0 of the counter/divider 11, shown in the timing of FIG. 22. Similarly, if used as a time base the period of output Q0 of the counter/divider 11, each period T of the ICS can be divided into $2^n$ time intervals whose extension will be equal to the period of the output Q0. Each of said intervals will now be determined by the state of the outputs Qn, Qn-1, ..., Q2, Q1 of said counter/divider 11. In the table of FIG. 24 this analysis is extended to a time base given by the period of an intermediate output Qi of the counter/divider 11.

However, since the time will be measured within each period T, from the negative edge of the ICS, and that said ICS is obtained as the selection of Qn or $\overline{Qn}$ (see FIG. 20), we will replace the output Qn in said time measurement by the ICS output of the selector circuit 13, as shown in the table of FIG. 25. Thus, if the period of any output Qi of the counter/divider 11 is chosen as the time base, the time within the period T of the ICS will be determined by a binary number of (n-i) bits formed by the state of the outputs [ICS, $Q_{n-1}$, ..., $Q_{i+2}$, $Q_{i+1}$] where $Q_{i+1}$ is the least significant bit. In this way, the start time for the generation of a certain zone signal will be specified by the n-i bits [$I_{n-i-1}$, $I_{n-i-2}$, ..., $I_1$, $I_0$] where Io is the least significant bit, and the end time of said zone signal will be specified by the (n-i) bits [$(F_{n-i-1})$, $F_{n-i-2}$, ..., $F_1$, $F_0$] where Fo is the least significant bit. The signal representing that zone will be set high when the binary number given by the outputs [ICS, $Q_{n-1}$,..., $Q_{i+2}$, $O_{i+1}$] equals the binary number [$I_{n-i-1}$, $I_{n-i-2}$, ..., $I_1$, $I_0$] and will be set to a low level when said binary number [ICS, $Q_{n-1}$,..., $Q_{i+2}$, $Q_{i+1}$] equals the binary number [$(F_{n-i-1})$, $F_{n-i-2}$ ..., $F_1$, $F_0$]].

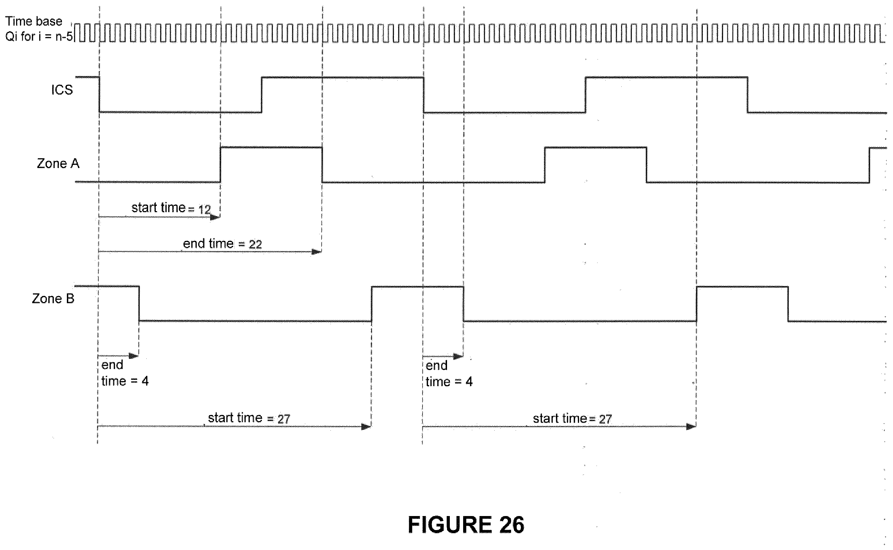

FIG. 26 shows, by way of example, two hypothetical zones A and B whose start and end times have been defined using the time period Qi of the counter/divider 11 for a value of i = n-5. With this time base, the start times of said zones will be specified by the following five bits [I4, I3, I2, I1, I0], and the end times of said zones by the following five bits [F4, F3, F2, F1, F0]. In this example for zone A the start time = $01100_2$ = 12 and the end time = $10110_2$ = 22, and for zone B the start time = $11011_2$ = 27 and the end time = $00100_2$ = 4. For The time base chosen the time within the period T of the ICS will be measured as a binary number given by the outputs [ICS, $Q_{n-1}$, $Q_{n-2}$, $Q_{n-3}$, $Q_{n-4}$] with $Q_{n-4}$ being the least significant bit.

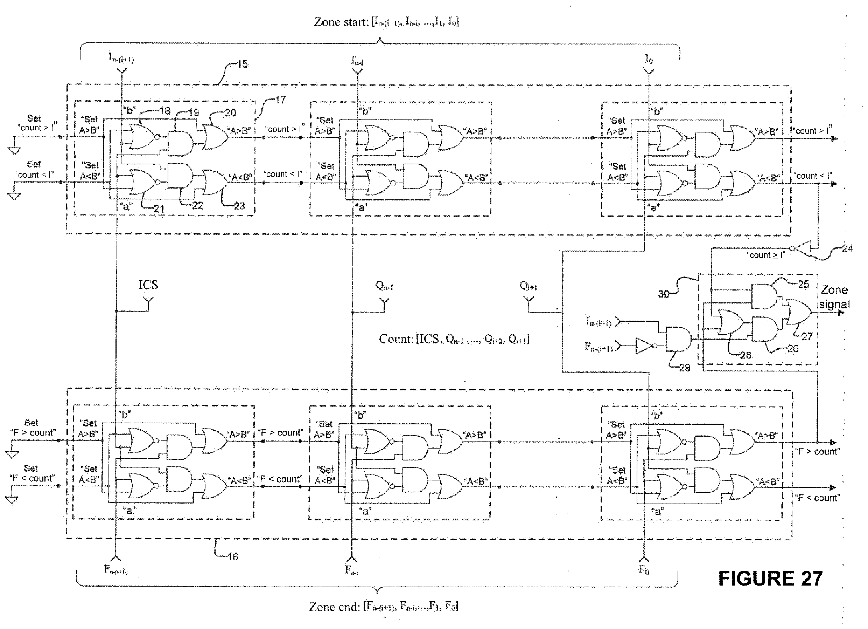

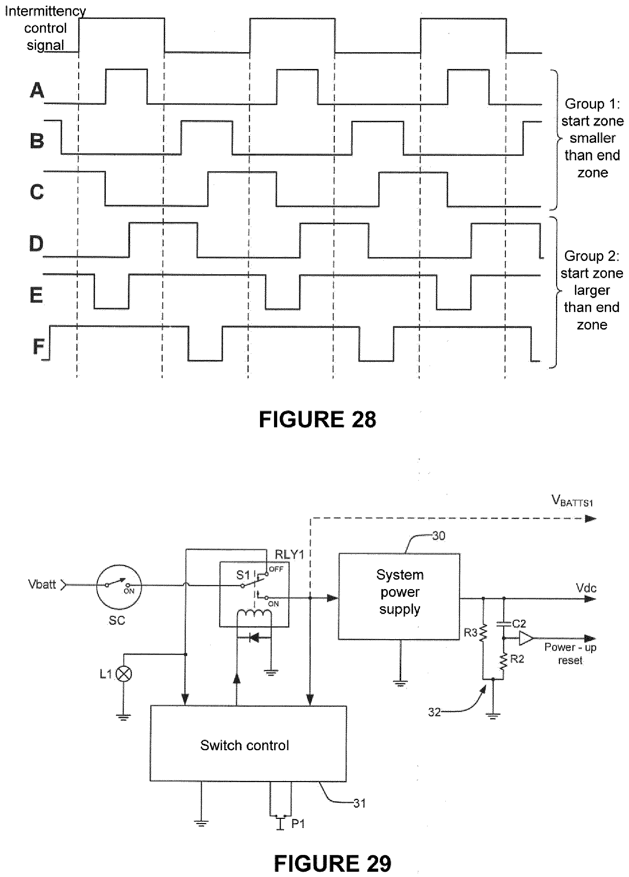

FIG. 27 shows the simplified diagram of a circuit that has been designed in generic form for any time base Qi and that allows to generate the zone signals that will be used in the different systems. Before describing the circuit, it is necessary to analyze some characteristics of said zone signals. In FIGS. 28A - 28F, six hypothetical zone signals (A, B, C, D, E, and F) are shown that differ by their location and extent with respect to ICS. By measuring the time within the period T from the negative edge of the ICS, zone signals A, B, and C (group 1) have in common that their respective start times are less than their respective end times. The zone signals D, E and F (group 2) have in common that their respective start times are greater than their respective end times. The A, B, and C zone signals will be at a high level as long as the start time of zone is less than or equal to the time count within the T period of the ICS and that said time count is less than the end time of zone:

$$(I_{n-i-1}, I_{n-i-2}, ..., I_1, I_0] \leq [ICS, Q_{n-1}, ..., Q_{i+2}, Q_{i+1}]$$

AND

$$([ICS, Q_{n-1}, ..., Q_{i+2}, Q_{i+1}] < [F_{n-i-1}, F_{n-i-2}, ..., F_1, F_0])$$

On the other hand, D, E and F zone signals will be at a high level as long as the start time of zone is less than or equal to the time count within the T period of the ICS or as long as said time count is less than the end time of zone:

$$([I_{n-i-1}, I_{n-i-2}, ..., I_1, I_0] \leq [ICS, Q_{n-1}, ..., Q_{i+2}, Q_{i+1}])$$

OR

$$([ICS, Q_{n-1}, ..., Q_{i+2}, Q_{i+1}] < [F_{n-i-1}, F_{n-i-2}, ..., F_1, F_0])$$

The zone signals to be used by the systems correspond to those of type A, B, C, and D and can be generated indistinctly by the circuit of FIG. 27. This is because the logic block 30 will behave as a two-input logic gate OR if the zone is of type D and as a two-input AND gate otherwise, thus providing this block 30 the logical AND/OR operators used in the expressions corresponding to the zone signals of groups 1 and 2 respectively. Observing FIGS. 28A - 28F, we can see that the zone signal D is the only one that has the most significant bit of its start time on and in turn the most significant bit of its end time off (In-i-1 > Fn-i-1). This feature allows the control of the behavior of block 30 by means of the AND gate 29. So, when the zone signal to be generated is of the type D the output of the AND gate 29, which feeds one of the inputs of the AND gate 26, is set to high level allowing the output of the OR gate 28, which enters to the other input of said AND gate 26, to feed to one of the inputs of the OR gate 27 from whose output the zone signal is obtained.

Since the other input of the OR gate 27 is connected to the output of the AND gate 25 and to this gate the same signals as the OR gate 28 are input, the zone signal corresponds to the logical AND operation of said signals always and when said zone is not of type D, that is when the output of the AND gate 29 remains at low level. The signals entering the gates AND 25 and OR 28 are "count ≥ I" and "F> count", this last signal is one of the outputs of the comparator of magnitude 16, whereas the signal "count ≥ I" is obtained by inverting, through the inverter 24, the output "count <I" which is one of the outputs of the comparator of magnitude 15. This comparator 15 compares the start time of the zone to be generated, given by the bits [$I_{n-i-1}$, $I_{n-i-2}$, ..., $I_1$, $I_0$], with the count of time given by the Outputs [ICS, $Q_{n-1}$, ..., $Q_{i+2}$, $Q_{i+1}$], while the comparator 16 compares said time count with the end time of the zone to be generated, given by bits [$F_{n-i-1}$, $F_{n-i-2}$, ..., $F_1$, $F_0$].

As can be seen in the simplified diagram of FIG. 27, said comparators 15 and 16 are composed of simple two-bit comparators cascaded, the operation of which will be described regarding the simple comparator circuit contained in block 17. Outputs "A>B" and "A<B" of said block 17 are the outputs of the gates OR 20 and OR 23 respectively. When the input "set A> B", which enters one of the inputs of said OR gate 20, and the input "set A<B", which enters one of the inputs of said OR gate 23, are both in low level, the state of output "A> B " will be determined by the output of AND gate 19, connected to the other input of said OR gate 20, and the state of output "A<B" will be determined by the output of the AND gate 22, connected to the other input of said OR gate 23. One of the inputs of the AND gate 19 is fed by the input bit "a" and the other input of said AND gate 19 is fed by the input bit "b" inverted by NOR gate 18, therefore the output of said AND gate 19 will be set high when "a" is at high level and "b" is at low level(a>b). One of the inputs of the AND gate 22 is in turn fed by the input bit "a" inverted by the NOR gate 21 and the other input of the AND gate 22 is fed by the input bit "b", so the output of said AND gate 22 will be set to high level when "a" is in low level and "b" in high level (a <b). Note that the circuit prevents the outputs of the AND 19 and AND 22 from being simultaneously in high level. When the "set A> B" input is high, the "A> B" output will be high regardless of the status of the "a" and "b" inputs, and when the "set A <B" input is in high level, the output "A <B" will be high regardless of the state of inputs "a" and "b". Note that in the simple two-bit comparators of FIG. 27 the inputs "set A> B" and "set A <B" will never be in high level simultaneously. The outputs "A>B" and "A<B " of a stage are connected to the inputs "set A>B" and "set A<B" of the next stage respectively (in the first stage, these inputs "set A>B" and "set A<B" are both set to low level). When in a higher order stage the two input bits "a" and "b" of said stage determine that the output "A> B" is activated, or that the output "A <B" is activated, in all subsequent stages its outputs will adopt the same status as in that higher order stage. The latter is carried out by the OR gates which generate the outputs of each stage and which in block 17 have been identified with the numbers 20 and 23. The outputs of the comparators 15 and 16 will be the outputs of the last stage of said comparators. It is noted that when a phase readjustment of the ICS occurs, the circuit of FIG. 27 will immediately readjust the zone signal; which would not occur if a circuit were used to update the zone signal only at the start times and end times of said zone. This is something that should be considered even if other alternatives are used to implement the zone signals, for example those based on the use of microprocessors.

System Activation and Power Supply.

FIG. 29 shows a schematic diagram of the system power supply 30A and of the switch control circuit that controls the activation/deactivation of said system. We call "Vdc" the regulated voltage provided by said power supply 30A, the value of Vdc will be defined according to the type of circuits with which the system is implemented. System activation occurs when the system is energized with voltage Vdc. This is done -being the vehicle ignition switch (IGS) on- pressing the push-button switch P1 whereby, via the "switch control" circuit 31, the relay coil RLY1 is energized which leads to the switch S1 to the ON position. Thus, the input of the power supply 30A is connected to the positive terminal of the battery via switch S1 (see $V_{BATTS1}$) thus energizing the system. When pushbutton P1 is pressed again switch S1 will return to the OFF position. This action allows the manual deactivation of the system as well as when the ignition switch of the vehicle IGS is opened. In both cases the input of the power supply 30A will be disconnected from the voltage Vbatt. The circuit 32 of this FIG. 29 composed of the capacitor C2 and the resistors R2 and R3 generate a "power-up reset" pulse for the system at the moment when the switch S1 is switched to the ON position. The L1 light will remain on when the switch S1 is in the OFF position indicating to the driver that the system is deactivated.

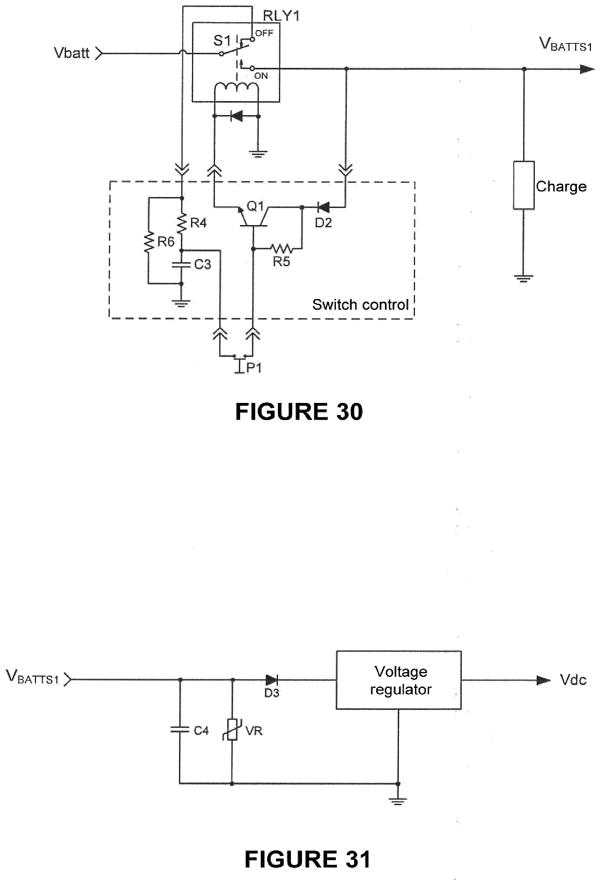

An exemplary simplified diagram of the "switch control" circuit corresponding to block 31 of FIG. 29 is shown in FIG. 30. If switch S1 is in the OFF position, capacitor C3 is charged to through resistor R4 as it remains connected to voltage Vbatt while said switch S1 remains in the OFF position. This capacitor C3 must be of such a value as to store the energy needed to temporarily energize the coil of the relay RLY1 through the base-emitter diode of the transistor Q1 when the push-button P1 is pressed. This action brings the switch S1 to the ON position, and hence the collector of the transistor Q1 is connected through the diode D2 to the voltage Vbatt. This will produce (if the resistor R5 has the appropriate value) the saturation of said transistor Q1, thereby keeping the relay coil RLY1 energized when the push-button P1 has been released.

When the push-button P1 is released the capacitor C3 is discharged through the resistors R4 and R6. When the push-button P1 is pressed again, the voltage at the base of the transistor Q1 will drop abruptly, since the capacitor C3 is discharged, bringing said transistor Q1 into the cut, whereby the relay coil RLY1 is de-energized and the Switch S1 returns to the OFF position, the time constant R4 · C3 must be large enough to allow the push-button P1 to be released before the relay coil RLY1 is energized again. The diode D2 prevents the load of capacitor C3 (intended to energize the relay coil RLY1 when switch S1 is in the OFF position) to flow, by pressing the push-button P1, through the base-collector diode of transistor Q1 to the load connected to the output of switch S1.

FIG. 31 shows the simplified circuit diagram of the power supply 30A of the system. The capacitor C4 and the metal oxide varistor VR provide protection to the circuits for transient voltages that can be produced by the vehicle's electrical system, while the diode D3 provides protection against reverse voltages.

Control of the headlamps for the generation of continuous/intermittent light.

When the anti-dazzling system is deactivated, the control of the headlights of a vehicle is carried out in the conventional manner, i.e. manually. When the system is activated the control of the front lights of a vehicle for the emission of continuous/intermittent light is made from the following signals generated by the system:

"Emit light pulse"

"Activate continuous light"
"Force high beam use"
"Force low beam use"

The "Emit light pulse" and "Activate continuous light" signals cannot be active at the same time and their functions are indicated by their respective names. The signals "Force high beam use" and "Force low beam use" will not be active at the same time since, as their names indicate, they force the use of high and low beam respectively independently of the position of the high/low beam manual selector switch.

Here are two alternatives to implement the device that controls the front lights of a vehicle for the generation of continuous/intermittent light, which can be used in any of the anti-dazzling systems. These alternatives are related to the techniques used to generate intermittent pulses of light, mentioned in the formulation of the anti-dazzling method.
Alternative 1:
Alternative 1 is related to the techniques used to generate pulses of intermittent light referred to in points 2 and 3 of the formulation of the anti-dazzling method, i.e. obstructing in total or partial form the continuous light beam of conventional lamps used in vehicles, to the rhythm of the intermittency that is wanted to achieve. This can be done by optoelectronic or electromechanical means.

Using pixel headlights based on the DMD technology (digital micromirrors device) that allow directing the light through micro-mirrors. These micro-mirrors can be driven electronically to the rhythm of the intermittency that is desired to divert the continuous light out of the area of the road that the vehicle must illuminate intermittently.

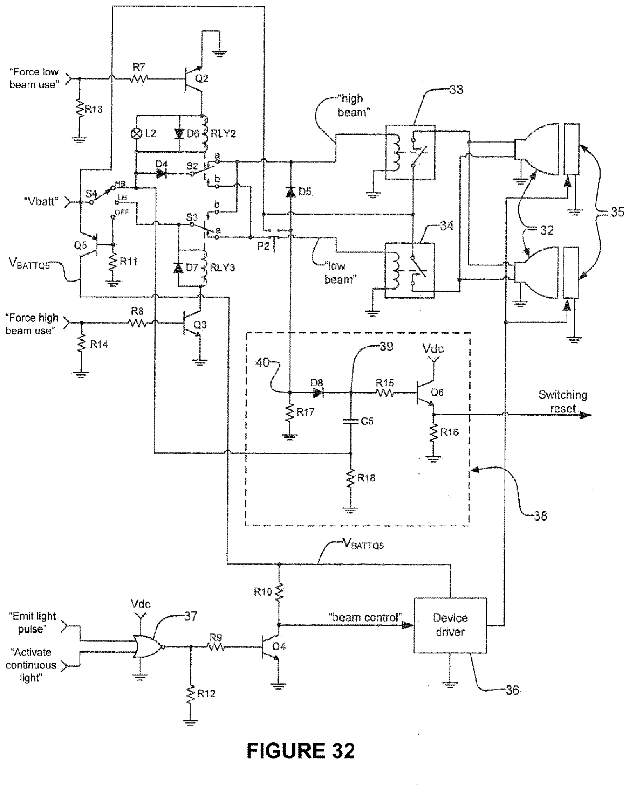

FIG. 32 shows the schematic diagram of a device for controlling the headlights of a vehicle for the generation of continuous/intermittent light, the intermittent light being generated according to said alternative 1. The lamps 32 produce a beam of continuous light and are turned on by relays 33 or 34 whose coils are energized by the "high beam" or "low beam" signals respectively. When the "high beam" signal is activated, the lamps that generate high beam are energized through the relay 33. When the "low beam" signal is activated, the lamps that generate low beam are energized through the relay 34. If the switches S2 and S3 corresponding to the relays RLY2 and RLY3 remain in their normal closed positions "a", and the push-button P2 used in the vehicles to temporarily activate the high beam is not activated, the status of the "high beam" and "low beam" signals will be determined by the position of the manual switch S4. Thus, when the switch S4 is in the HB position, the line that provides the "high beam" signal will be connected, through the diode D4, to the voltage Vbatt that feeds the input of said switch. Similarly, when switch S4 is in the LB position the line that provides the "low beam" signal will be connected to the voltage Vbatt.

When the "Force low beam use" signal is activated - which can only happen if the system is activated - a high level signal is present at the base of the transistor Q2 through the resistor R7 which leads the said transistor to the conduction, thus energizing the relay RLY2, as long as the switch S4 is in the HB position. In this way switch S2 leaves its normal closed position "a" and switches to position "b". This allows the "low beam" signal to be activated when the manual switch S4 is in the HB (high beam) position. Thereby preventing the use of high beam until such signal "Force low beam use" is deactivated (low level), unless the push-button P2 be pressed forcing temporarily the use of high beam. When the push-button P2 is actuated, regardless of the position of the switches S4 and S2, the "low beam" signal is deactivated and the line providing the "high beam" signal is connected to the voltage Vbatt through the diode D5. Said push-button is the one that allows the driver of a vehicle to realize a change of light forcing temporarily the use of high beam. In this case, the high beam will be continuous or intermittent according to the type of light being used by the vehicle at that time.

The luminous indicator L2 lights when the transistor Q2 is conducting, indicating to the driver that the system is forcing the use of low beam. When the "Force high beam use" signal is activated - which can only happen if the system is activated - a high level signal is present at the base of the transistor Q3 through the resistor R8, which leads to said transistor to the conduction thus energizing the relay RLY3 - if the switch S4 is in the position LB-. In this way switch S3 leaves its normal closed position "a" and switches to position "b". This allows the "high beam" signal to be activated when the manual switch S4 is in the LB (low beam) position, thus forcing the use of high beam.

The continuous light beam produced by the lamps 32 may be obstructed or deflected by electromechanical, optoelectronic or similar devices 35 which we shall call "beam shaper devices". These devices are managed by the signal "beam control" through a driver 36. While said "beam control" signal is maintained at a high level, the beam shaper devices will not affect the continuous beam of light produced by the lamps 32. The "Activate continuous light" and "Emit light pulse" input signals enter the NOR gate 37. The output of said NOR gate 37 enters via resistor R9 to the base of transistor Q4 having the emitter connected to ground and the collector connected to a terminal of resistor R10 whose other terminal is connected to voltage VBATTQ5.

The "beam control" signal is obtained from the collector of said transistor Q4. When One of the signals "Activate continuous light" or "Emit light pulse" is at high level (for these signals the high level will be given by the voltage Vdc) the output of the NOR 37 gate will be set to low level taking the transistor Q4 to the not conductive state so the beam control signal will be set to high level (for this signal the high level is equal to VBATTQ5). Thus, when the signal "Activate continuous light" is at a high level, i.e. when the vehicle must emit continuous light, the "beam control" signal will remain at high level whereby the light beam produced by the lamps 32 will not be obstructed. When the signal "Emit light pulse" is in high level, i.e. when the vehicle must emit an intermittent light pulse, the signal "beam control" will be kept high during the time $T_{on}$ corresponding to that pulse of light. When both inputs of the NOR gate 37 are in low level the output of this gate will be set to high level so that transistor Q4 will go to saturation (for this the resistors R9 and R10 must have the appropriate values, i.e. they must comply with the expression R9/R10 <$\beta$ · (Vdc - 0.7)/VBATTQ5).

Thus, the beam control signal will be set low. This last one corresponds to the moments in which the vehicle does not emit light. The voltage VBATTQ5 is used to power those devices that do not need to be energized when the vehicle is not using its lights (manual dimmer switch in the OFF position). The voltage VBATTQ5 is obtained in the collector of the Darlington PNP Q5 transistor whose emitter is connected to the voltage Vbatt and its base is connected to the OFF position of switch S4 and to one of the terminals of resistor R11 whose other terminal is connected to ground. When switch S4 is not in the OFF position the transistor Q5 will be saturated making VBATTQ5 ≈ Vbatt. On the other hand, with the switch S4 in the OFF position, the transistor Q5 does not drive thus de-energizing the devices that are powered by VBATTQ5. When the system is deactivated the NOR gate 37 will be de-energized because it is powered by the voltage Vdc. When this occurs the base of the transistor Q4 will be maintained at zero volts through the resistors R9 and R12, whereby said transistor will not conduct remaining the beam control signal at high level.

Thus, with the system deactivated, the vehicle can only emit conventional continuous light. With the system deactivated the relays RLY2 and RLY3 cannot be energized because the signals "Force low beam use" and "Force high beam use" cannot be activated (being kept low by resistors R13 and R14 respectively) and therefore the switches S2 and S3 remain in their normal closed positions "a". Thus, when the system is deactivated, the front lights of the vehicle can only be operated in the conventional way - for high and low beam emission - by means of the manual dimmer switch S4. The function of the diodes D6 and D7 is to protect the transistors Q2 and Q3 respectively from the overvoltage generated by the coils of the corresponding relays RLY2 and RLY3, when said transistors Q2 and Q3 go to the cut off state.

The circuit 38 generates the signal "Switching reset" whose function will be described later. This signal will be set to high level (Vdc) when transistor Q6 is saturated. The resistors R15 and R16 of said circuit 38 are calculated in such a way that said transistor Q6 saturates when at point 39 a voltage near Vbatt is present. The latter will happen both at the time when the manual switch S4 is switched to the HB position and when the push-button P2 is actuated. When S4 is switched to the HB position the "Switching reset" signal will take the form of a pulse whose duration will be determined by the value of the capacitor C5 and the value of the resistors R15 and R16 through which said capacitor is charged (said capacitor will be discharged through the resistors R17 and R18 when the manual switch S4 leaves the HB position). Diode D8 fulfills the function of differentiating the charging and discharging circuits of said capacitor C5. On the other hand, when the push-button P2 is activated the signal "Switching reset" will take high level until the push-button is released. The diode D5 is to ensure that the voltage Vbatt appears at point 40 only when the push-button P2 is actuated. Similarly, the diode D4 ensures that the voltage Vbatt can only appear at the terminal HB of the manual switch S4 when the switch S4 is in the HB position.

Alternative 2:

Alternative 2 is related to the techniques used to generate the pulses of intermittent light referred to in point 1 of the formulation of the anti-dazzling method, i.e. using LED headlamps, or gas discharge lamps or the like, operated by means of a control circuit that sets the width and frequency of the light pulses.

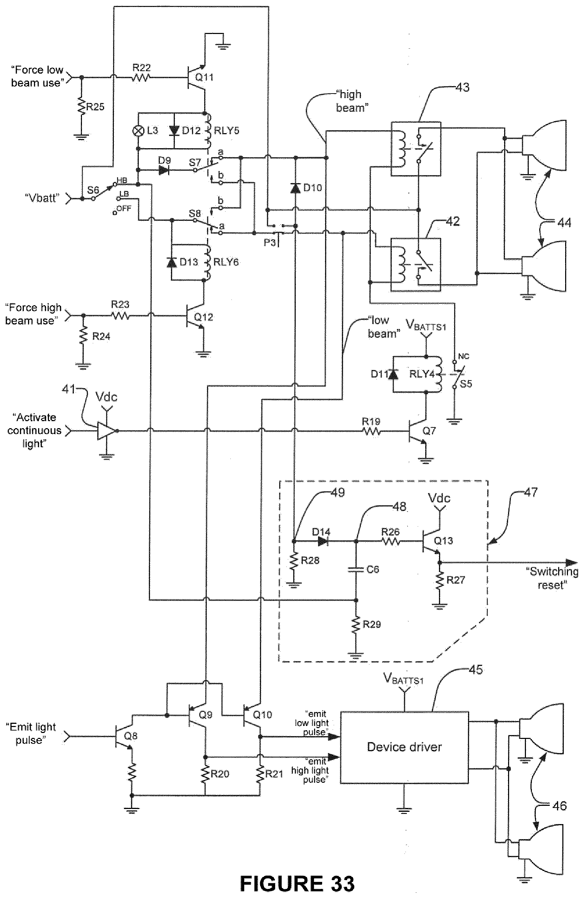

FIG. 33 shows the schematic diagram of a device for controlling the front lights of a vehicle for the generation of continuous/intermittent light, the intermittent light being generated according to this alternative 2. When the signal "Activate continuous light" which feeds the input of inverter 41 is at high level, transistor Q7 does not conduct, since its base is connected through resistor R19 to the output of said inverter 41, therefore the coil of relay RLY4 will be de-energized and thus the switch S5 of said relay will be maintained in the normal closed position NC and the coils of relays 42 and 43, by which the lamps of the conventional headlamps 44 are turned on, will have one of their ends connected to ground, a condition necessary for these coils can be energized by the signals "high beam" or "low beam" as appropriate. When the "high beam" signal is activated, the lamps that generate high beam continuous light are energized through the relay 43. When the "low beam" signal is activated, the lamps that generate low beam continuous light are energized through the relay 42. When the vehicle is going to intermittent light the "Activate continuous light" signal will be deactivated (low level), therefore the output of the inverter 41 will be set to high level which causes the transistor Q7 to conduct, energizing the relay coil RLY4. This causes the switch S5 to leave its normal closed position NC which prevents the coils of the relays 42 and 43 from being energized, preventing the lamps of the conventional headlights 44 from emitting continuous light.

When the "Emit light pulse" signal, which enters the base of transistor Q8, goes to high level, said transistor Q8, whose collector is connected to the bases of the PNP transistors Q9 and Q10, goes into the conduction state with so that said transistors Q9 and Q10 also goes into the conduction state. The collectors of the transistors Q9 and Q10 are connected to ground through the resistors R20 and R21 respectively and their emitters are fed by the signals "high beam" and "low beam" respectively. When the signal "high beam" is at high level (Vbatt) and the signal "Emit light pulse" goes high (Vdc), transistor Q9 goes to the state of saturation whereby the signal "Emit high beam light pulse" from the collector of said transistor Q9 will be set to high level ($\approx$ Vbatt).

Similarly, when the "low beam" signal is at high level (Vbatt) and the signal "Emit light pulse" goes high (Vdc), transistor Q10 goes into the saturation state whereby the signal "emit low beam light pulse" from the collector of said transistor Q10 will be set to high level ($\approx$ Vbatt). The "Emit high beam light pulse"and "Emit low beam light pulse" signals enter the driver 45 whose outputs energize the lamps that are used to generate the intermittent light pulses 46. While the S7 and S8 switches corresponding to the RLY5 and RLY6 remain in their normal closed positions "a" and the push-button P3, used in vehicles to temporarily activate high beam, is not actuated, the state of the "high beam" and "low beam" signals will be determined by the position of the manual switch S6. In this case, the line providing the "high beam" signal will be connected via the diode D9 to the voltage Vbatt only when switch S6 is in the HB position since the input of said switch is connected to the voltage Vbatt. Similarly, the line providing the "low beam" signal will be connected to the voltage Vbatt only when the switch S6 is in the LB position since the input of the switch is connected to the voltage Vbatt.

When the "Force low beam use" signal is activated - which can only happen if the system is activated - a high level signal is present at the base of the transistor Q11 through the resistor R22 which leads the transistor to the conduction, thus energizing the relay RLY5, if the switch S6 is in the HB position. Thus the switch S7 switches to position "b". This allows the "low beam" signal to be activated when the S6 switch is in the HB position as if the switch S6 were in the LB position. This will prevent the use of high beam until the signal "Force low beam" is deactivated (low level), unless the push-button P3 is operated by temporarily forcing the use of high beam. When the push-button P3 is activated, regardless of the position of the switches S6 and S7, the "low beam" signal is deactivated and the line from which the "high beam" signal is obtained is connected to the voltage Vbatt through the diode D10.

Said push-button P3 is the one that allows the driver of a vehicle to realize a change of light by temporarily forcing the use of high beam. In this case, the high beam will be continuous or intermittent according to the type of light being used by the vehicle at that time. The L3 light turns on when the transistor Q11 is driving, indicating to the driver that, although the manual switch S6 is in the HB position, the system is forcing the use of low beam. When the "high beam use" signal is activated - which can only happen if the system is activated - a high signal is present at the base of the transistor Q12 through the resistor R23 which brings the said transistor Q12 to the conduction thus energizing the relay RLY6, if the switch S6 is in the LB position. Thus switch S8 switches to position "b". This means that if the manual switch S6 is in the LB position, the "high beam" signal is activated - as if the switch S6 were in the HB position - thus forcing the use of high beam.

The driver 45 is supplied with voltage Vbatt via switch S1 in its ON position (see VBATTS1 in FIG. 29). In this way when the system is deactivated said driver 45 will be de-energized preventing the lamps 46 from emitting intermittent light. Similarly, with the system deactivated, the relay coil RLY4 is de-energized, the switch S5 remaining in the NC position, whereby the coils of relays 42 and 43 are left with one of their ends connected to ground allowing the coils of said relays can be energized by "high beam" or "low beam" signals to produce continuous high beam or continuous low beam light respectively. In addition, with the system deactivated, the coils of relays RLY5 and RLY6 cannot be energized because the signals "Force high beam use" and "Force low beam use" cannot be activated (being kept low by resistors R24 and R25 respectively) so that switches S7 and S8 remain in their normal closed positions "a".

Thus, when the system is deactivated, the front lights of the vehicle can only be operated in the conventional way, for the emission of high and low beam, by means of the manual switch S6. The function of the diodes D11, D12 and D13 is to protect the transistors Q7, Q11 and Q12 respectively from the over-voltages generated by the coils of the relays RLY4, RLY5 and RLY6 respectively when said transistors go to the cut off state. Circuit 47 generates the "Switching reset" signal, which will be set to high level (Vdc) when transistor Q13 is saturated. The resistors R26 and R27 of said circuit are calculated in such a way that said transistor Q13 saturates when a voltage near Vbatt is present at the point 48. The latter will happen both at the time when the manual switch S6 is switched to the HB position as when the push-button P3 is actuated. In the first case, the "Switching reset" signal will have the form of a pulse whose duration will be determined by the value of capacitor C6 and resistors R26 and R27 through which said capacitor is charged (said capacitor will be discharged through resistors R28 and R29 when the manual switch S6 leaves position HB). Diode D14 fulfills the function of differentiating the charging and discharging circuits of said capacitor C6.

On the other hand, when the push-button P3 is activated the signal "Switching reset" will take high level until the push-button is released. The diode D10 is to ensure that the voltage Vbatt appears at point 49 only when the push-button P3 is actuated. Similarly, the diode D9 ensures that only the voltage Vbatt can be present at the terminal HB of the manual switch S6 when this switch is in the HB position. It should be mentioned that if the headlight lamps 44 and 46 are of the LED type, said headlamps 44 and 46 could be the same.

Externally Synchronized Anti-Dazzling System

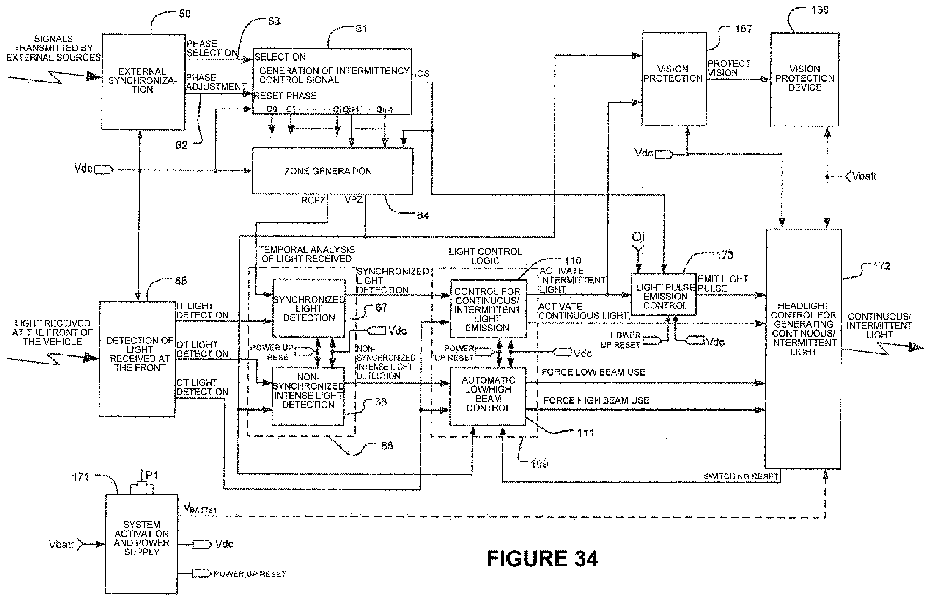

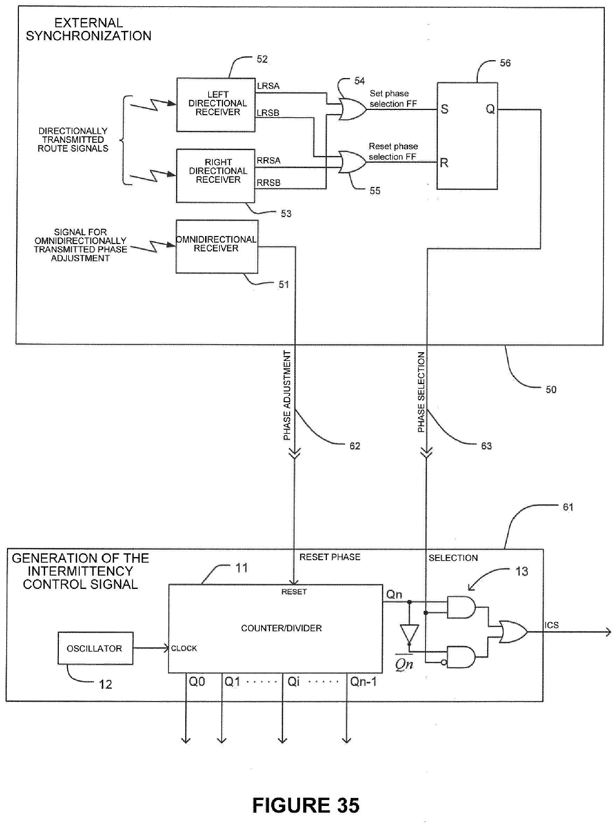

FIG. 34 shows the block diagram of the externally synchronized anti-dazzling system. This system is based on the anti-dazzling method already described and makes use of the external synchronization procedure. The function of the "External Synchronization" block 50 of FIG. 34 is to obtain, from the reception of signals transmitted by transmission sources external to the vehicles, the "Phase adjustment" and "Phase selection" signals required by the external synchronization procedure. The contents of block 50 are presented in two versions, corresponding to the alternatives A and B outlined in said external synchronization procedure for obtaining the "Phase adjustment" and "Phase selection" signals. FIG. 35 shows a simplified diagram of the contents of block 50 of FIG. 34 made according to the "alternative A" described in the external synchronization procedure. To facilitate the description of the operation of this block 50, it has been included in FIG. 35 the contents of the block "Intermittence control signal generation" 61 of FIG. 34, the operation of which has already been explained above (See FIG. 20) when describing the characteristics common to all systems (see item "Intermittence control signal"). The "Phase adjustment" output of the "External synchronization" block 50 enters via line 62 to the "phase reset" input of the "Intermittence control signal generation" block 61 to adjust the two alternative phases given by $Qn$ and $\overline{Qn}$. On the other hand, the "Phase selection" output of the "External synchronization" block 50 enters via the line 63 to the "selection" input of the block 61, selecting as ICS the output $Qn$ when the "Phase selection" signal remains at high level and selecting as ICS the output $\overline{Qn}$ when the "Phase selection" signal remains at low level.

The vehicles receive by air, via an Omni-directional receiver 51, a carrier modulated by the "Phase adjustment" signal. This signal, once demodulated, constitutes one of the outputs of said block 50. The vehicles also receive by air through one of the directional receivers 52 or 53 a carrier modulated by one of two different signals that we have called "course signal A" and "course signal B". As already mentioned, directional transmission sources that transmit the same course signal should all be located on the same side of the road. Therefore, directional transmission sources that are located on opposite sides of the road must transmit different course signals. These course signals will be used by the system to determine the direction of travel of the vehicle relative to the road and thus be able to select one of the two alternative phases (given by $Qn$ or $\overline{Qn}$) as the phase of the ICS. When a vehicle is traversing the coverage area of one of said directional transmission sources only one of the receivers 52 or 53 will be receiving a course signal. The receiver 52 will receive the course signal if it comes from the left with respect to the direction of movement of the vehicle; whereas the receiver 53 will receive the course signal if it comes from the right with respect to the direction of movement of the vehicle. If a vehicle is traversing the coverage area of a directional transmission source which transmits the "course signal A" and said course signal is being detected by the receiver 52, then the "LR-CSA" output of said receiver - which enters to the OR gate 54- will be set to high level (like the output of said OR gate 54) thus indicating that the vehicle has a direction of travel in the road which we will call, for example, "direction of circulation 1". On the other hand, if the receiver 53 is receiving the "course signal A", the output "RR-CSA" of said receiver - which enters the OR 55 gate - is that which is set to high level, which means that the vehicle Is traversing the area of coverage of said directional transmission source in the direction of circulation opposite to the previous one which we will call "direction of circulation 2".

A similar analysis can be performed when the directional transmission source is located on the other side of the road, i.e. when said source transmits the "course signal B". Thus, if the receiver 53 is receiving the "course signal B", the "RR-CSB" output of said receiver - which enters the OR gate 54 - is set to high. This means that the vehicle is passing through the coverage area of the corresponding directional transmission source in the direction of circulation which we have called "direction of circulation 1". On the other hand, if the receiver 52 is receiving the "course signal B", the "LR-CSB" output of said receiver -which enters the OR gate 55 - is that which is set to high level, which means that the vehicle has the "direction of circulation 2".

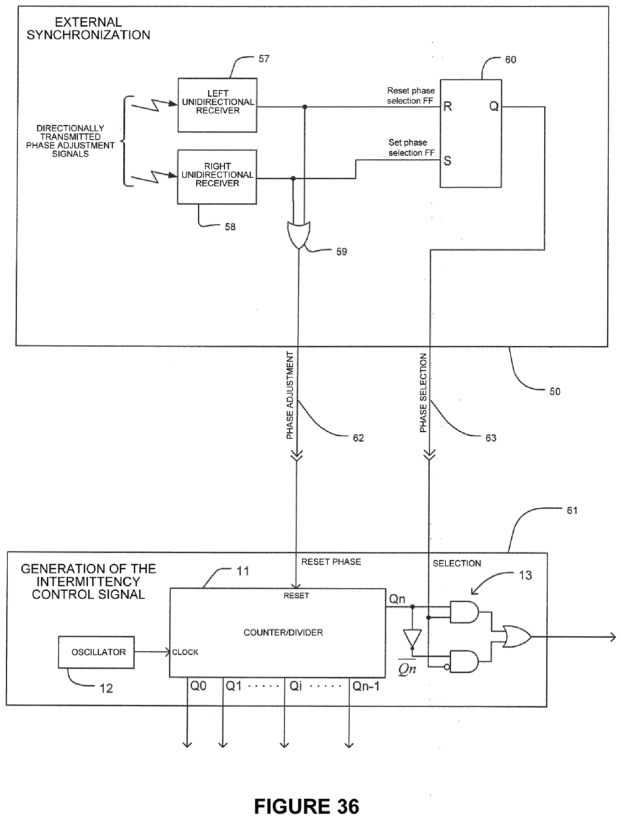

As the outputs of the OR 54 and OR 55 gates enter the set and reset inputs respectively of the Flip-Flop RS 56, at the output Q of said Flip-Flop 56 is obtained the "Phase selection" signal as a function of the travel direction of the vehicle. In this way, once a value has been set for the "phase selection" output, this value will not change unless the vehicle changes its direction of travel with respect to the road and then traverses the coverage area of a directional transmission source. FIG. 36 shows a simplified diagram of the contents of block 50 of FIG. 34 made according to "Alternative B" described in the external synchronization procedure. To facilitate the description of this version of block 50, the contents of the block "Intermittence control signal generation" 61 of FIG. 34 are also included in FIG. 36. The vehicles receive by air, via one of the directional receivers 57 or 58, a carrier modulated by one of two "Phase adjustment" signals. As already mentioned, directional transmission sources that transmit the same "Phase adjustment" signal must all be located on the same side of the road. To install directional transmission sources on both sides of the road these sources must transmit the "Phase adjustment" signals having a period which is an odd multiple of the period of the ILPE and in addition, directional transmission sources which are located on opposite sides of the road shall transmit the "Phase adjustment" signals having a phase shift of 180° between them. When a vehicle is traversing the coverage area of one of said directional transmission sources, only one of the receivers 57 or 58 will be receiving the corresponding "Phase adjustment" signal.

The receiver 57 will receive the directional "Phase adjustment" signal that comes from the left with respect to the direction of circulation of the vehicle. While the receiver 58 will receive the directional "Phase adjustment" signal that comes from the right with respect to the direction of circulation of the vehicle. The output of each of said receivers 57 and 58 is input to OR gate 59 at which output the "Phase adjustment" signal is obtained, while the "Phase selection" signal is obtained at output Q of the Flip-Flop RS 60 to whose reset and set inputs enter the outputs of receivers 57 and 58 respectively.

To explain the behavior of the "phase adjustment" and "phase selection" outputs, in this version of block 50, the following example is used: a vehicle is taken as reference and all directional transmission sources have been located on the left side of the road with respect to the direction of movement maintained by said vehicle. So that the "Phase selection" signal of said vehicle will remain at a low level since each time the vehicle crosses the coverage area of a directional transmission source, the Flip-Flop 60 will receive the pulses of the "Phase adjustment" signal at its reset input. If, on the other hand, it is assumed that all directional transmission sources have been located on the right-hand side of the road, with respect to the direction of movement maintained by said vehicle, in said vehicle the "Phase selection" signal will be maintained at high level since each time the vehicle passes through the coverage area of a transmission source, the Flip-Flop 60 will receive the pulses of the "Phase adjustment" signal at its set input. Although in the two cases described the "Phase selection" signal takes a different value, it must also be considered that in both situations the "Phase adjustment" signal received by the vehicle will be different (remember that the Phase adjustment signals transmitted from opposite sides of the road will have a phase shift of 180° from one another).

Therefore said vehicle will adopt in both cases the same phase for the intermittent pulses emission, which in one case will be obtained from the output Qn (when the "Phase selection" signal is in high level) and in the other case from the output $\overline{Qn}$ (when the "Phase selection" signal is in low level). The fact that the "Phase adjustment" signals corresponding to the two cases described have a phase shift of 180° between each other is what allows said vehicle to obtain over Qn in one case and over $\overline{Qn}$ in the other case, a same phase for the emission of intermittent pulses of light. The latter can be checked by analyzing the effect of the "Phase adjustment" and "Phase selection" outputs on the "Intermittent control signal generation" circuit whose function has already been explained, in correspondence with FIG. 20, when describing the characteristics common to all systems. The operation of this block 50 for the case where the directional transmission sources are distributed on both sides of the path is apparent from the above.

The "Zones Generation" block 64 of FIG. 34 has as outputs the "RCFZ" signal and the VPZ signal. This last VPZ signal has already been defined under the heading "Definition of zones within the T period of the ICS" when describing the characteristics common to all systems. Another signal that has already been defined is CFZ which, based on the beginning and extension of a pulse of light received by the vehicle, determines whether said light pulse can be considered synchronized or not. In contrast the RCFZ signal, which identifies an area to be called a "Restricted Conflict Free Zone", is designed to determine whether said light pulse can be considered synchronized or not, considering only the starting edge of said light pulse. Therefore, the RCFZ is narrower than the CFZ.

Both signals are activated at the same time but the width of the RCFZ is the width of the CFZ minus the width set for the intermittent light pulses. This block 64 enters the ICS signal and, by choosing as the time base for the generation of said zone signals to an output Qi of the counter/divider 11 contained in the block "Intermittence control signal generation" 61, also enters to this block 64 the outputs $Q_{n-1}$, $Q_{n-2}$, ..., $Q_{i+2}$, $O_{i+1}$ of said counter/divider 11. The RCFZ and VPZ outputs are generated as described under the heading "Zone Signals Generation" and each one of said zone signals can be implemented using a circuit as shown in FIG. 27, which must be preset to generate the RCFZ signal with the following start and end times:

$$\text{Start time} = 2^{n-i} - \Delta$$

$$\text{End time} = \Delta$$

where: $2^{n-1}$ is the duration of the period T of the ICS measured at periods of an output Qi of the counter/divider 11(FIG. 20), and the period of said output Qi being the time base chosen to define said start and end times.

$\Delta$ is the margin of tolerance described in defining the conflict-free zone, under the heading "Definition of zones within the T period of the ICS", measured in periods of said output Qi of the counter/divisor 11 (see $\Delta t$ in FIG. 23).

The circuit corresponding to the "vision protection zone" VPZ must be preset with the following start and end times:

$$\text{Start} \qquad \text{time} \qquad = \qquad 2^{n-i} \qquad - \qquad \Delta \qquad - \qquad \delta$$

$$\text{End time} = PW + \Delta + \delta$$

where: $\delta$ is a term that allows to extend the vision protection zone beyond the conflict-free zone and on both sides thereof by a value given by $\delta$, measured at periods of said output Qi of the counter/divider 11. When implemented the system could chose for $\delta = 0$ in which case the vision protection zone would coincide with the conflict-free zone.

PW: is the width set for pulses of intermittent light measured in periods of said output Qi of the counter/divider 11.

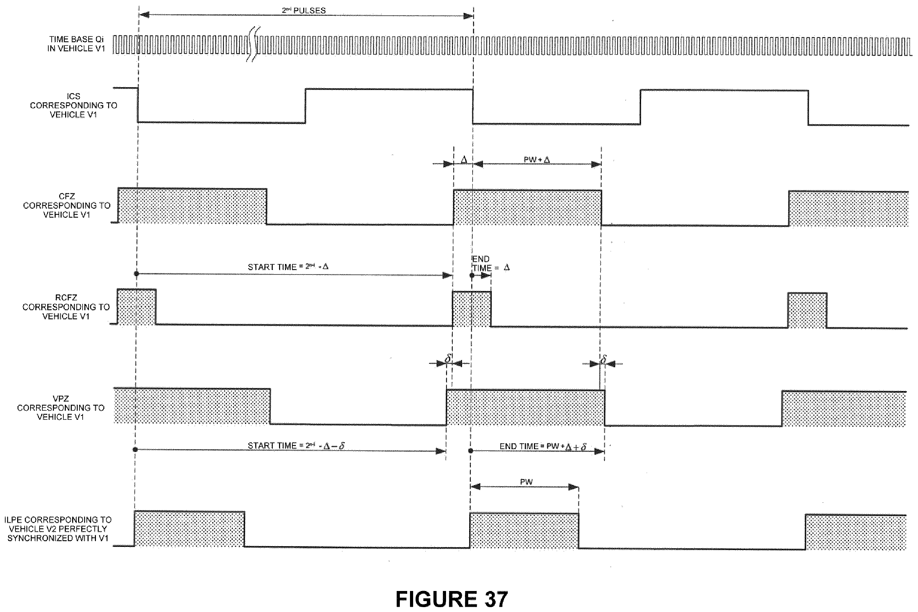

FIG. 37 shows a timing of the CFZ, RCFZ and VPZ signals corresponding to a vehicle V1 in relation to its ICS and the time base Qi. In this figure, the times corresponding to the terms that appear in the expressions of each zone ($2^{n-i}$; PW; $\Delta$; $\delta$) have been indicated. To facilitate the understanding of this timing the wave form of the intermittent light pulses emission corresponding to a vehicle V2 perfectly synchronized with V1 and which circulates in the opposite direction thereof has been included.

The inputs, outputs and contents of the block "Front received light detection" 65 of FIG. 34 are shown in FIG. 15 and their operation, which has already been explained under the heading "Formation of an NVE", is summarized below. In FIG. 15 the output of the light sensing module 1 enters a comparator 4 whose reference voltage (Vct) corresponds to the "continuous light threshold" and its output, which we will call "CT light detection", is activated when the light received by the light sensor 2 exceeds said continuous light threshold. The output of the light sensing module 1 also enters, through the filter 7, capable of removing the DC component of said output, to another comparator 5 whose reference voltage (Vit) corresponds to the "intermittent light threshold" and its output, which we will call "IT light detection", is activated when the intermittent light received by the light sensor 2 exceeds said intermittent light threshold. The output of the light sensing module 1 also enters a comparator 6 whose reference voltage (Vdzt) corresponds to a threshold of light intensity which we will call a "dazzling threshold" which will be greater than the "continuous light threshold".

The output of said comparator 6, which we call "DZT light detection", is activated when the light received by said light sensor 2 exceeds said dazzling threshold. When this occurs, the system will analyze the temporal behavior of said DZT light detection output to determine whether the vehicle driver is receiving light outside the vision protection time interval $T_p$.

The block "Temporal analysis of the received light" 66 is composed in turn of the blocks "Synchronized light detection" 67 and "Not-Synchronized Intense light detection" 68. The first one has as inputs the "IT Light Detection" signal from block 65 RCFZ signal from block 64 and the "Power up reset" signal from block 171 and as output the signal "synchronized light detection". The "Not Synchronized Intense Light Detection" block 68 has the following inputs: "DZT light detection" from block 65, "VPZ" from block 64 and the "Power up reset" signal and as outputs the "Not-synchronized intense light detection" signal.

The function of the "Synchronized light detection" block 67 is to determine when a vehicle is receiving intermittent light within the conflict-free zone from another vehicle or vehicles. This is done by the temporal analysis of the signal "IT light detection" in relation to the signal "RCFZ". The algorithm for determining whether the vehicle is receiving intermittent light within the conflict-free zone is based on verifying, during a time interval we will call "$t_2$", whether the signal "IT light detection" is giving, with some regularity, positive edges when the RCFZ signal is active. Said time "$t_2$" will have a duration of several periods T, and will be measured using a counter, which we will call "counter II", which, after reaching the value equivalent to the time "$t_2$", will cause the activation of the "Synchronized light detection output". It should be noted that if no pulses of light fall within the conflict-free zone with a certain regularity of the intermittent light, said "counter II" cannot reach the value equivalent to the time "$t_2$". This is since said counter II will be reset if an interval of time lapses, which we will call "$t_1$", without the signal "IT light detection" gives a positive edge with the signal RCFZ being active. To measure this time "$t_1$" another counter will be used, which we will call "counter I", which, in case of reaching the value equivalent to said time "$t_1$", will cause the deactivation of the "Synchronized light detection" signal.

If the system detects pulses of synchronized light with a certain regularity (conditioned by the choice of time "ti") the counter I will be reset before reaching the value equivalent to said "$t_1$" and consequently counter II will evolve freely. If this situation is maintained until said counter II reaches the value equivalent to the time "$t_2$" the output "synchronized light detection" will be activated. It should be noted that "$t_1$" should obviously be less than "$t_2$". Such a time "$t_1$" should be at least equal to the period T, however, assigning a higher value (e.g. 2T) to "$t_1$" would give the system greater tolerance when evaluating an interruption in the reception of pulses of intermittent light. Even the value of "$t_1$" could be increased after the "synchronized light detection" output has been activated, thus increasing the time that said output would take in being disabled

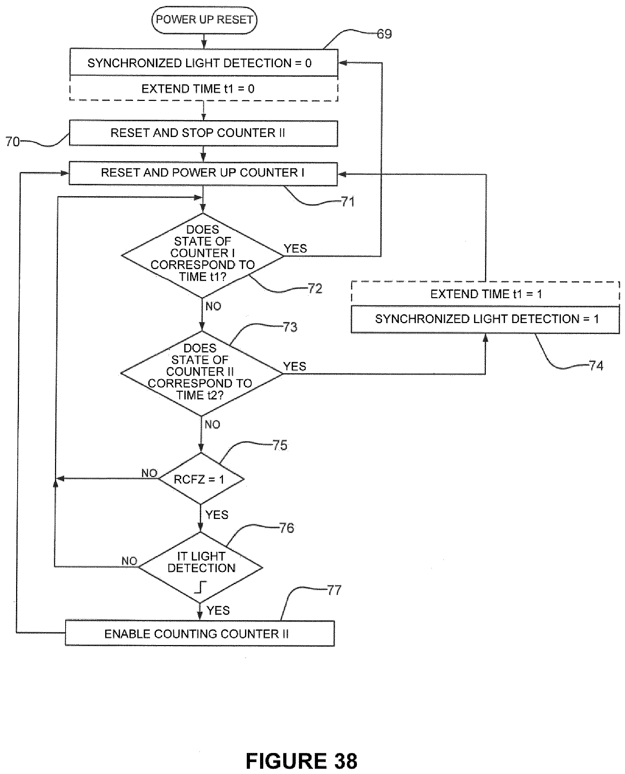

The flowchart corresponding to block 67 is shown in FIG. 38. The appearance of a power-up reset pulse, because of the system activation, causes the setting to zero (low level) of the "synchronized light detection" output" in step 69, resetting and stopping the counter II in step 70 and resetting and starting the counter I in step 71. The counter II is enabled to start counting after detecting a synchronized light pulse, which corresponds to the sequence given by steps 75, 76 and 77. Then the sequence returns to step 71 returning to zero the counter I. While receiving pulses of synchronized light with a certain regularity (conditioned by the time "ti") the counter I cannot reach the value equivalent to the time "$t_1$" and consequently the counter II will evolve freely (avoiding the sequence given by steps 72, 69, 70).

If this situation is maintained enough time for said counter II to reach the value equivalent to the time "$t_2$" the output "synchronized light detection" will be activated - see steps 73 and 74 - and the counter I set to zero in step 71. If synchronized light pulses are not received or they are not received under the described conditions, the counter I will reach the value equivalent to the time "$t_1$" whereby the sequence will return to step 69 in which the "synchronized light detection" output is deactivated. As it has already been said "$t_2$" > "$t_1$" since "$t_2$" is the time during which it is "verified" that synchronized light pulses arrive with a regularity conditioned by "$t_1$". If it is desired to increase the time it takes to deactivate the "synchronized light detection" output, the command "extend the time $t_1$ = 1" should be included in step 74 and in step 69 the command "extend the time $t_1$ = 0".

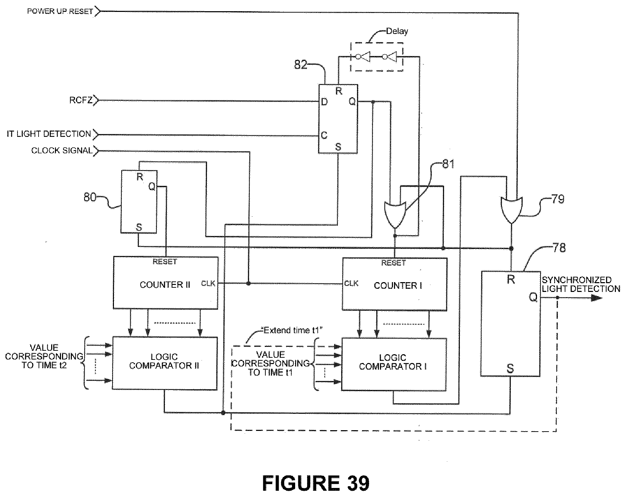

FIG. 39 shows the simplified scheme of a possible circuit for implementing block 67 of FIG. 34. The output "synchronized light detection" is obtained as output Q of the Flip-Flop RS 78. The "Power-up reset" signal enters via the OR gate 79 to the reset input of the Flip-Flop 78 and to the set input of the Flip-Flop RS 80. This signal "Power-up reset" also enters, through the gates OR 79 and OR 81, to the input of "reset" of the counter I. Thus, when a "power-up reset" pulse is given, the circuit initiates the sequence given by the steps 69, 70, 71, ... of the flowchart of FIG. 38. To the other input of OR gate 79 also enters the output of logic comparator I which, when set to high level, produces the same effect as the "Power-up reset" signal. The output of said "logic comparator I" will be set to high level whenever the "counter I" has reached the value equivalent to the time "$t_1$". The counter II will start counting when the "IT light detection" signal - which feeds the clock input of the Flip-Flop D 82 - switches to a high level while the RCFZ signal is also high. This is so since when the Q output of said Flip - Flop 82 is set at high level then it is reset the Flip - Flop 80 which Q output controls the "reset" input of said counter II. This corresponds to the sequence given by steps 75, 76, and 77 of the flowchart of FIG. 38.

The "synchronized light detection" output is set high when the Flip-Flop 78 receives a pulse at its set input, which will occur when the output of logic comparator II is set to high level as a result of counter II having reached the value corresponding to time "$t_2$". The output of the logic comparator II also enters the "set" input of the Flip-Flop 82 whose output Q, through the OR gate 81, causes the resetting of the counter I to zero. In this way, the circuit performs the sequence given by the steps 73, 74, 71, ... of the flowchart of FIG. 38 (until the output of the logic comparator II switches to a low level, the Flip-Flop D 82 will have its set and reset inputs at high level simultaneously, but this does not affect the behavior of the stated logic). The dashed connection between the Q output of the Flip-Flop 78 and the logic comparator I represents the possibility of extending the time "$t_1$" (for example using said output as one of the bits of the value corresponding to the time "t1") to thereby increase the time it takes to deactivate the "synchronized light detection" output. It should be noted that it is convenient that the frequency of the "clock signal" entering the counters be a multiple of the frequency of the ICS. Therefore, one of the outputs of the counter/divider 11 of FIG. 20 (used in the generation of the ICS), can provide said clock signal.

The function of the "Not Synchronized intense light detection" block 68 of FIG. 34 is to analyze the temporal behavior of the "DZT light detection" signal to determine whether the driver of a vehicle is receiving intense light outside the vision protection time interval $T_p$ which will be indicated by the status of the "Not-synchronized intense light detection" output of said block 68 (remember that this could only happen between vehicles that for some reason do not have their lights synchronized). Although to determine whether the driver of a vehicle is receiving intense light outside the vision protection time interval $T_p$ it would be sufficient to analyze whether the "DZT light detection" signal is activated (high level) while the "VPZ" signal remains at low level, it would be convenient to check this situation for a longer time than a period T, since when the output "Not Synchronized intense light detection" is activated the system will activate the high beam light for a short time and then immediately switch to low beam light (see what is described under the title: Using "high beam" versus "low beam"). Thus, extending this analysis to a time greater than a period T, which we will identify as "n · T", reduces the possibility of a vehicle making unnecessary changes in the intensity of its lights. For the same reason, it is convenient to check the cessation of intense light reception outside the vision protection time interval $T_p$, for a time greater than that of a period T, which time we will identify as "m · T".

These time periods "n · T" and "m · T" will be measured using a counter that we will call "counter III." Therefore, when the counter III achieves the value equivalent to the time n · T, the "not-synchronized intense light detection" output will be activated and said counter III will be restarted. This can only occur if in each of the "n" periods T intense light is detected outside the vision protection time interval $T_p$. Otherwise, i.e. if in any of said periods T no intense light is detected outside the vision protection time interval $T_p$, the counter III will be restarted staying deactivated the "not-synchronized intense light detection" output. When this output has been activated, it will be deactivated when the counter III reaches the value equivalent to the time m · T. This can only occur if no intense light is detected outside the vision protection time interval $T_p$ during "m" periods T. It will suffice to detect intense light outside the vision protection time interval $T_p$ in one of said periods T to restart the counter III thus keeping the "not-synchronized intense light detection" output active. The greater the value of "n" the longer the time during which the system will confirm the receipt of intense light outside the vision protection time interval $T_p$ before making a change in the intensity of the lights. The higher the value of "m" the greater the tolerance with which the system evaluates if the vehicle has stopped receiving intense light outside the vision protection time interval $T_p$.

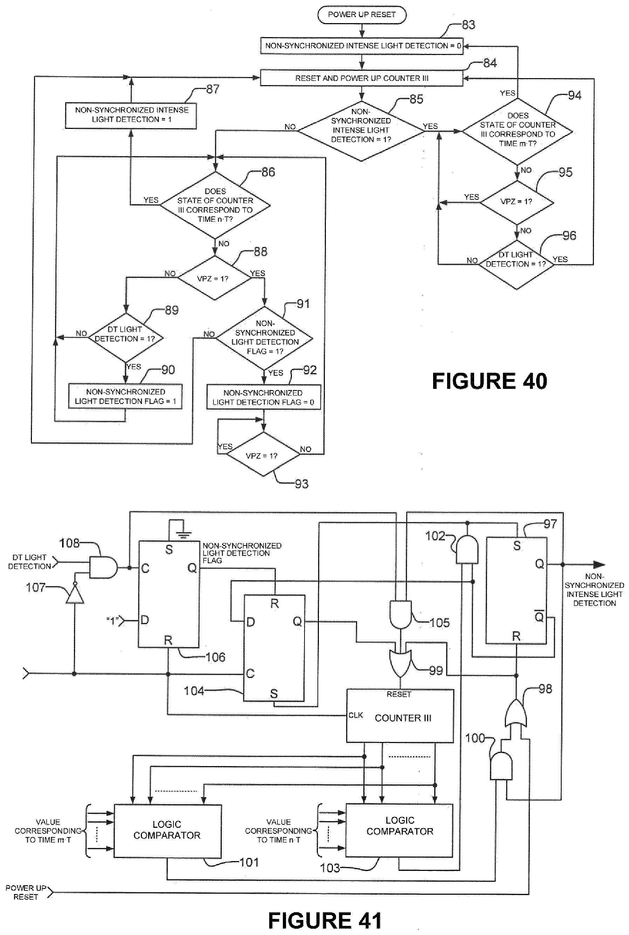

The flowchart corresponding to this block 68 is shown in FIG. 40. The appearance of a "power up reset" pulse will cause the setting at low level of the "Not-synchronized intense light detection" output in step 83, and the resetting and subsequent starting of the counter III in step 84. At decision point 85 the actions to be taken by the system are determined depending on whether or not the "Not-synchronized intense light detection" output is active. So, if this output is at low level it will be executed the part of the algorithm that determines whether to activate said output. On the other hand, if that output is already active, it will be executed the part of the algorithm that determines whether to disable said output. Therefore, the part of the algorithm that determines whether to activate the "not-synchronized intense light detection" output begins at the decision point 86, where the status of the counter III is inquired. If said counter III has succeeded in reaching the value corresponding to the time $n \cdot T$, the output "not-synchronized intense light detection" will be activated in step 87, the sequence returning to step 84. Otherwise the sequence passes to the decision point 88, from which if the signal "VPZ" is in low level the sequence it passes to the decision point 89 and if the signal "DZT light detection" is at high level, the "not-synchronized light detection flag" is set to high level in step 90, returning the sequence to the decision point 86. Otherwise the sequence returns to the decision point 86 without changing the state of said flag. Thus, if during a period T, light has been detected above the dazzling threshold outside the vision protection time interval $T_p$, it will be indicated in the "not-synchronized light detection flag", a situation which must occur during n periods T for that the "not - synchronized intense light detection" output is activated.

Therefore, when the "VPZ" signal returns to high level the sequence will pass from the decision point 88 to the decision point 91 where it is asked for the status of the "not -synchronized light detection flag", and if said flag is not in high level the counter III is restarted in step 84 (thus restarting the evolution of said counter to the value corresponding to time $n \cdot T$). On the other hand, if at the decision point 91 the "not -synchronized light detection flag" is at a high level then in step 92 the flag is reset and then at decision point 93 it is expected that the "VPZ" signal returns to low level (end of the vision protection zone), returning the sequence to decision point 86 to ask if counter III has already reached the value corresponding to time $n \cdot T$. The reset of said flag in step 92 is performed to check during the next period T if light is still detected above the dazzling threshold outside the vision protection time interval $T_p$.

That part of the algorithm that determines whether to deactivate the "Not -synchronized intense light detection" output starts at decision point 94 where the status of counter III is asked. If said counter III has been able to reach the value corresponding to the time $m \cdot T$ the sequence will go to step 83 deactivating said "not-synchronized intense light detection" output. Otherwise, at the decision points 95 and 96 it is analyzed whether there is light detection on the dazzling threshold outside the vision protection zone $T_p$, in which case the counter III is restarted in step 84 (thus restarting the evolution of said counter to the value corresponding to time $m \cdot T$). Otherwise, i.e. if no light is being detected on the dazzle threshold outside the vision protection zone $T_p$, the sequence goes back to the decision point 94 to ask again for the status of said counter III.

FIG. 41 shows the simplified scheme of a possible circuit for implementing block 68 of FIG. 34. The "non-synchronized intense light detection" output is obtained as the output Q of Flip-Flop 97. The signal "Power up reset" is entered, via the OR 98 gate, to the reset input of the Flip-Flop 97 and, through the OR 98 and OR 99 gates, to the "reset" input of the counter III, thus starting the sequence given by the steps 83, 84,... of the flowchart of FIG. 40. Note that if the "not synchronized intense light detection" output remains low, the AND gate 100, to one of whose inputs enters said output, prevents the output of logic comparator 101 from acting on the reset input of Flip Flop 97 through the other input of said AND gate 100. This is because the logic comparator 101 -whose function is to indicate when the counter III reaches the value corresponding to the time $m \cdot T$- should only act on the reset input of said Flip-Flop 97 when the output "not -synchronized intense light detection" is activated (see the sequence given by steps 85, 94 and 83 of the flowchart of FIG. 40).

On the other hand, when the "not -synchronized intense light detection" output remains high, the AND gate 102, to one of whose inputs enters the output $\overline{Q}$ of the Flip-Flop 97, prevents the output of the logic comparator 103 from acting on the "Set" input of said Flip-Flop 97 through the other input of said AND gate 102. This is because the logic comparator 103 -whose function is to indicate when the counter III reaches the value corresponding to the time $n \cdot T$- should only act on the "set" input of Flip-Flop 97 when the "not -synchronized intense light detection" output is deactivated (see the sequence given by steps 85, 86 and 87 of the flowchart of FIG. 40). This ensures that the set and reset inputs of the Flip-Flop 97 will not be acted on simultaneously. As a clock input for counter III the "VPZ" signal has been selected (this was done because the signal is available in the circuit and has the same period T as the "ICS"). As will be apparent from the above, the "not -synchronized intense light detection" output will be activated when the logic comparator 103 indicates that the counter has reached the value "n", this is done through AND gate 102, the output of which enters the "set" input of Flip-Flop 97. The output of said AND gate 102 also enters the "set "input of Flip-Flop 104 whose output, acting through OR gate 99, restarts counter III (note that the output of said AND gate 102 is activated in the form of a narrow pulse since the output of said AND gate 102 is connected to the set input of the Flip-Flop 97 whose output $\overline{Q}$ enters one of the inputs of said AND gate 102). The above described corresponds to the sequence given by the steps 86, 87 and 84 of the flowchart of FIG. 40. While the output "not -synchronized intense light detection" is at a low level, the only way to interrupt the advance of the counter III to the value "n" is by setting to high level the output Q of the Flip-Flop 104 which, via the OR gate 99, acts on the "reset" input of said counter III, since the AND gate 100 and AND gate 105 cause the other two inputs of said OR gate 99 to remain at a low level while the "not -synchronized intense light detection " output is at a low level. The Q output of said Flip-Flop 104 will be set to high when the "VPZ" signal, which enters the clock input of Flip-Flop 104, switches high while both the output $\overline{Q}$ of Flip-Flop 97, which enters the data input of Flip-Flop 104, is at high level and the "not -synchronized light detection flag", which enters the reset input of Flip-Flop 104, is at a low level (the above is matched with the sequence given by the decision points 88, 91, and the step 84 of the flowchart of FIG. 40). When the "VPZ" signal is set to low, the output of the inverting gate 107, which enters one of the inputs of the AND gate 108, is set to high level and if the signal "DZT light detection", which enters the other input of said AND gate 108, is also set to high level, then a positive edge appears at the clock input of Flip-Flop 106 whereby the "not -synchronized light detection flag", corresponding to the output Q of said Flip-Flop 106, is set to high level (what previously described corresponds to the sequence given by the decision points 88, 89, and the step 90 of the flowchart of FIG. 40). If the Q output of Flip-Flop 106, which enters the reset input of Flip-Flop 104, and which corresponds to the "Not -synchronized light detection flag" signal, is high when the "VPZ" signal -which enters the reset input of said Flip-Flop 106- switches to high level, said reset input of Flip-Flop 104 will be set to low level. But because the positive edge of the "VPZ" signal, which acts on the clock input of the Flip-Flop 104, is presented before said reset input of the Flip-Flop 104 is set to low level, the Q output of said Flip-Flop will remain at a low level and counter III will not be reset (what previously described corresponds to the sequence given by decision points 88, 91, and step 92 of the flowchart of FIG. 40).

If the "not -synchronized intense light detection" output is at a high level, the only way to interrupt the advance of counter III to the value "m" is by the occurrence of a high level at the output of the AND gate 105 which, via OR gate 99, acts on the "reset" input of counter III. This is so since the Q output of the Flip-Flop 104, which enters another input of the OR gate 99, is kept low because the "D" input and the set input of said Flip-Flop 104 are kept at a low level when the "not - synchronized intense light detection" output is high and on the other hand the remaining input of the OR gate 99 is also kept low until the counter III, as already mentioned, reaches the value "m". In these conditions, the output of the AND gate 105 will be set to high level resetting the counter III when the output of the AND gate 108 is set to high level, that is, whenever light is detected above the dazzling threshold and outside the vision protection zone (what previously described corresponds to the sequence given by the decision points 85, 94, 95, 96 and the step 84 of the flowchart of FIG. 40). The "Emission Light Control Logic" block 109 of FIG. 34 is composed in turn of the blocks "Continuous/intermittent light emission control" 110 and "High beam/low beam automatic control" 111. The "Continuous/intermittent light emission control" block 110 has as inputs the signals: "Power-up reset", "CT light detection" from block 65, and "Synchronized light detection", from block 67. And as outputs the signals: "Activate continuous light" and "Activate intermittent light". The "High beam/low beam automatic control" block 111 has as inputs the signals: "Power-up reset", "Switching reset" from block 172, "Not -synchronized intense light detection ", from block 68, "VPZ", from block 64 and "CT light detection", from block 65. The outputs of this block are the signals: "Force low beam use" and "Force high beam use".

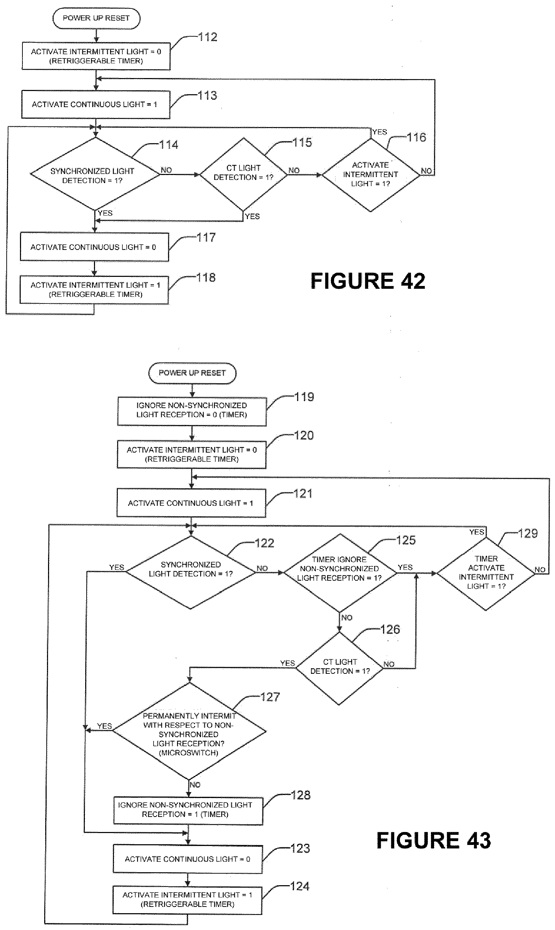

The function of the "Continuous/intermittent light emission control" block 110, as the name implies, is to determine when the vehicle must use continuous light or intermittent light. The functioning of this block will be explained by making use of a simplified flowchart of the same - shown in FIG. 42 - which will then be extended to its final version. In this simplified version, a vehicle participating in an NVE will use intermittent light not only when it detects intermittent light within the conflict-free zone, but also when it detects not -synchronized light, i.e. when it receives continuous light or when pulses of intermittent light received be detected outside the conflict-free zone (in the latter two cases the detected light must exceed the continuous light threshold). Referring to FIG. 42, it is noted that when a "power-up reset" pulse occur the "Activate intermittent light" signal, which is the output of a retriggerable timer with the same name, is set to low level in step 112 and the "Activate continuous light" output signal is set to high level in step 113. At decision points 114 and 115 it is noted that if the vehicle detects intermittent light within the conflict-free zone ("Synchronized light detection"= 1) or detects light on the continuous light threshold ("CT light detection"= 1), then the system set to low level the "Activate continuous light" output signal in step 117 and triggers the timer "Activate intermittent light" in step 118, returning the sequence to the decision point 114. While this situation is maintained, the vehicle will keep its intermittent lights on and the corresponding timer will be continuously retriggered. When at the decision point 114 the "Synchronized light detection" signal is at a low level (indicating that there is no detection of synchronized intermittent light) and when at the decision point 115 the "CT light detection" signal is at a low level (indicating that no light is being detected above the continuous light threshold), then the sequence will pass to decision point 116 in which the state of the "Activate intermittent light" timer is asked. When this timer is depleted the sequence returns to step 113 and the system activates the conventional continuous light again. One of the objectives of the "Activate intermittent light" timer is to make the vehicle keep its intermittent lighting active a short time after the vehicle has left the NVE.

FIG. 43 shows an expanded version of the flowchart for the "Continuous/ intermittent light emission control" block 110 which allows to configure (for example by means of a micro switch) how the lights of a vehicle will respond within a NVE. One way of configuring the behavior of the lights corresponds to that described in the flowchart of FIG. 42. Another way to configure the behavior of the lights of a vehicle within an NVE is that the vehicle only makes use of its intermittent illumination in a sustained manner if it is receiving synchronized intermittent light from a vehicle of said NVE. The vehicle will not detect synchronized light within an NVE if received light pulses fall outside the conflict-free zone or also, obviously, if the vehicle is receiving only conventional continuous light. The latter may occur, for example, in an NVE between two vehicles when one of these vehicles maintains the conventional continuous illumination active because it still does not detect the intermittent light emitted by the other, or possibly when one of the vehicles has its system deactivated. In these cases, the vehicle that is detecting conventional continuous light will activate the intermittent light for a short time waiting to receive the intermittent light of the other vehicle in response. Said time interval will be given by the "activate intermittent light" timer already described. If after said time interval the vehicle continues to receive only continuous light, it will then activate the conventional continuous light for another time interval, significantly greater than the previous one, before using intermittent light again. This second interval of time will be given by a timer that we will call "Ignore not synchronized light reception". Making the "Ignore not synchronized light reception" timer significantly larger than the "Activate intermittent light" timer is equivalent to make, while the vehicle is receiving only continuous light, the vehicle's lights to behave practically as if emitting conventional continuous light. For this reason, in the flowchart of FIG. 43, it has not been differentiated whether the detection of light above the continuous light threshold (decision point 126) is due to the reception of conventional continuous light or to the reception of not synchronized intermittent light.

The most likely cause that within a NVE a vehicle could emit pulses of intermittent light not synchronized with those of another vehicle is that some of those vehicles have stopped detecting the "Phase adjustment" signal during a time long enough so that its ICS has suffered a phase shift greater than the tolerated by the system. Next, the flowchart of FIG. 43 is described. When a "power-up reset" pulse is produced, the "Ignore not -synchronized light reception" and "Activate intermittent light" timers are set to zero at steps 119 and 120 respectively. Then in step 121 the "Activate continuous light" signal is set to high level. If at the decision point 122 the "Synchronized light detection" signal is at high level then the system sets to low level the "Activate continuous light" output signal at step 123 and triggers the "Activate intermittent light" timer at step 124, returning the sequence to decision point 122.

If this situation is maintained, i.e. while the vehicle is detecting intermittent light within the conflict-free zone, the "Activate intermittent light" timer will remain triggered and the vehicle will keep its intermittent light active. If at the decision point 122 the "Synchronized light detection" signal is not active and at decision point 125 the "Ignore not synchronized light reception" timer output is not at high, the sequence reaches the decision point 126 at which is consulted for the status of the "CT light detection" signal. If this signal is in high level, the system will assume that the vehicle is receiving not-synchronized light and the sequence reaches the decision point 127. If the system has been configured by setting the signal "Intermit permanently to not synchronized light detection" in high level (for example by a micro switch), then the sequence will continue in step 123, thus omitting step 128 what implies that the "Ignore not synchronized light reception" signal will never be activated. With this configuration, the behavior of the vehicle's lights will be identical to that described in the simplified flowchart of FIG. 42. On the other hand, if the system has been configured by placing the signal "Intermit permanently to not synchronized light detection" in low level, the sequence will always include step 128 in which the "Ignore not -synchronized light reception" timer is triggered. Then, in step 123, the "Activate continuous light" signal is set to low level and in step 124 the intermittent light is activated by the corresponding timer returning the sequence to the decision point 122. If the signal "Synchronized light detection "remains at a low level, the sequence will return to the same decision point 122, through decision points 125 and 129, until the "Activate intermittent light" timer is depleted (this last timer will be the first timer to run out because the timer "Ignore not synchronized light reception" is of longer duration and both have been triggered at the same time). When said "Activate intermittent light" timer is exhausted, the sequence continues at step 121 in which the vehicle reactivates the conventional continuous light, because it has not received intermittent light within the conflict-free zone.

If this situation continues, i.e. if at the decision point 122 the "Synchronized light detection" signal continues at low level, the vehicle will maintain the conventional continuous illumination until the timer "Ignore not-synchronized light reception" is exhausted -see step 125 - in which case, if the vehicle continues detecting not -synchronized light and in view of the possibility to be continuous light, the vehicle will re-activate the intermittent light for a short time. The sequences remaining to be described are: that given by steps 122, 125, 126, 129, 122 and that given by steps 122, 125, 126, 129, 121, 122. The first one occurs when a vehicle leaves an NVE (therefore it is not detecting neither intermittent light nor continuous light) and the "Activate intermittent light" timer has not yet been exhausted. The second sequence corresponds to a vehicle that is not participating in an NVE and therefore has its conventional continuous illumination active.

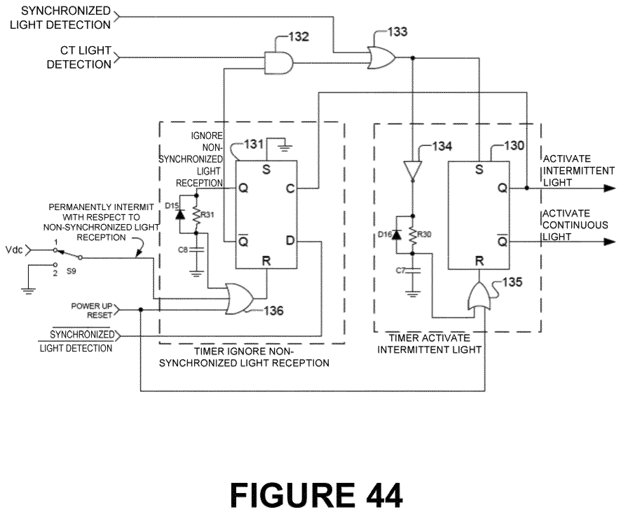

FIG. 44 shows the simplified scheme of a possible circuit for implementing the block "Continuous/intermittent light emission control" 110. The switch S9 establishes the state of the signal "Intermit permanently to not synchronized light detection". This signal is set to high level with switch S9 in position 1, and to low level with switch S9 in position 2. The timers "Activate intermittent light" and "Ignore not synchronized light reception" are obtained by the Flip -Flops 130 and 131 respectively. The "Power-up reset" signal enters the reset input of said Flip-Flops 131 and 130 through the OR gates 136 and 135 respectively. With a pulse of the "Power-up reset" signal the "Ignore not -synchronized light reception" and "Activate intermittent light" timers are set to zero, in correspondence with steps 119 and 120 of the flowchart of FIG. 43. A power-up reset pulse also causes the setting at high level of the signal "Activate continuous light", as it is obtained at the output $\overline{Q}$ of said Flip-Flop 130, which corresponds to step 121 of the flowchart of FIG. 43. The signal "Synchronized light detection" enters, via the OR gate 133, to the set input of the Flip-Flop 130, so that when said signal is activated it is set to low level the "Activate continuous light" signal and the "Activate intermittent light" timer is triggered, which corresponds to the sequence given by steps 122, 123, 124 and 122 of the flowchart of said FIG. 43.

We will now analyze the behavior of the circuit for each position of the switch S9 while the signal "Synchronized light detection" is at low level. With switch S9 set to position 1 the Flip-Flop 131 will remain reset through the OR 136 gate, whereby the timer "Ignore not synchronized light reception" will remain inactive, therefore the input of the AND gate 132 that is connected to the output $\overline{Q}$ of said Flip Flop 131 remains at high level and consequently the "CT light detection" signal, which enters the other input of said AND gate 132, will be present at the output of said gate AND 132. If said "CT light Detection" signal is in high level the Flip-Flop 130 will remain set through the OR gate 133 since the output of said OR gate 133 also enters the inverter gate 134 whose output will remain in low level impeding the charging of capacitor C7 and therefore, through the OR gate 135, that a high level also appears at the reset input of said Flip-Flop 130. The described corresponds to the sequence given by the steps 122, 125, 126, 127, 123, 124 and 122 of the flowchart of FIG. 43. Returning to FIG. 44, when the signal "Synchronized light detection" is at low level, when the "CT light detection" signal is also set to low level, the output of the OR gate 133 is set to low level so that the output of the inverter gate 134 is set to high level allowing the capacitor C7 to be charged through the resistor R30 for a time proportional to the product R30· C7. During that time, the "Activate intermittent light" signal will be kept active, which corresponds to the sequence given by the steps 122, 125, 126, 129 and 122 of the flowchart of FIG. 43. Once said time proportional to the product R30· C7 has elapsed, the flip-flop 130 is reset via the OR gate 135, whereby the "Activate intermittent light" signal is set to low level and the "Activate continuous light" signal is set to high level. This corresponds to the sequence given by steps 122, 125, 126, 129, 121 and 122.

On the other hand, with switch S9 set to position 2, Flip-Flop 131 will not be permanently reset. As long as the "Ignore not-synchronized light reception" timer is off (as is the "Activate intermittent light" timer), the input of the AND gate 132 that is connected to the output $\overline{Q}$ of said Flip-Flop 131 will be at high level and consequently when the "CT light detection" signal entering the other input of said AND gate 132 is set to high level, the output of said AND gate 132 will be set to high level by setting Flip-Flop 130 through the OR gate 133, which in turn results in the activation of the timer "Ignore not synchronized light reception", through the clock input of said Flip-Flop 131. With this, the output of said AND gate 132 is again set to low level, and since for this analysis it has been assumed that the signal "Synchronized light detection" is at a low level, Flip-Flop 130 is no longer set and the "Activate intermittent light" timer starts running. This corresponds to the sequence given by steps 122, 125, 126, 127, 128, 123, 124 and 122, followed by the sequence 122, 125, 129 and 122 of the flowchart of FIG. 43. This last sequence will be repeated while both timers remain active. When the "Activate intermittent light" timer is extinguished, the "Activate continuous light" signal is activated. This corresponds to the sequence given by the steps 122, 125, 129, 121 and 122 of the flowchart of FIG. 43, then that sequence will be repeated until the extinction of the "Ignore not -synchronized light reception" timer. The "Activate intermittent light" timer has a duration proportional to the product R30· C7, while the duration of the timer "Ignore not -synchronized light reception" is given by the charging time of the capacitor C8. Once this timer has been triggered, the capacitor C8 is charged through the resistor R31 and will produce the reset of the flip-flop 131, and therefore of said timer, through the OR 136 gate. The diode D15 ensures the immediate discharge of the capacitor C8 once the timer "Ignore not synchronized light reception" has been reset. Diode D16 ensures immediate discharge of capacitor C7 at the time the set input of Flip-Flop 130 is set to high level.

Further consideration will be given to the thresholds used for the detection of light. It has already been said that the threshold of intermittent light is assigned a value lower than the threshold of continuous light to accelerate the formation of an NVE. For this same reason, we add that it is desirable for the intermittent light threshold to be such that the distance at which the continuous high beam from one vehicle V1 is detected by another vehicle V2 is like the distance at which the intermittent low beam light from V2 is detected by V1. This is intended for the case where a meeting occurs, for example, between V1 that has been making use of high beam and V2 that has been making use of low beam. Obviously, V2 will be the first to detect light above the threshold of continuous light and consequently the first to use intermittent light. But given that said vehicle V2 will use intermittent low beam light, if it is not taken into account the previous consideration, formation of the corresponding NVE would be delayed until such intermittent low beam light is detected by V1.

The "High beam/low beam automatic control" block 111 of FIG. 34 has as inputs the signals: "Not -synchronized intense light detection" from block 68, "VPZ" from block 64, "CT light detection" from block 65, "Switching reset" from block 172 and "Power up reset" from block 171, and generates the outputs: "Force low beam use" and "Force high beam use". The main function of this block 111 is to make, regardless of the position of the manual dimmer switch, a vehicle to temporarily use the low beam lights in order not to cause major inconvenience to other drivers when in that vehicle, the signal "Not-synchronized intense light detection" is activated. This action will be performed by activating the output "Force low beam use". To obtain the same response from the other vehicles, prior to forcing the use of low beam light the system will force for a short time the use of high beam light, to ensure that said other vehicles also receive intense light outside the vision protection time interval $T_p$, and consequently that also lower the intensity of its lights. This action is carried out by activating the "Force high beam use" output which will always be activated for a short and determined time span, unlike the "Force low beam use" output whose activation can be extended for the duration of the described situation.

It is worth mentioning that if the signal "Not synchronized intense light detection" is activated in a vehicle due to the intensity of the light coming from a vehicle whose anti-dazzling system is not working (vehicle that will only have continuous light), the sequence given by the actions "Force high beam use" followed by "Force low beam use" will also be useful, as it will be interpreted by the driver of the vehicle without system as a request to manually lower the intensity of the lights. It should also be mentioned that this sequence given by the actions of "Force high beam use" followed by "Force low beam use" fulfills its purpose whether the vehicle was making use of the low beam lights as if it was making use of the high beam lights.

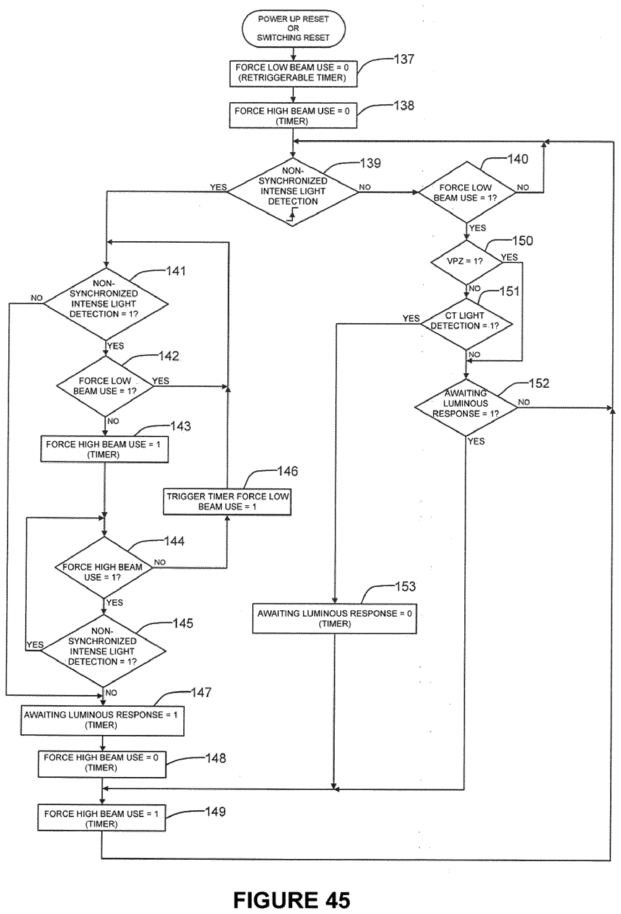

The flowchart corresponding to said block 111 is shown in FIG. 45. The appearance of a pulse of the "Power up reset" signal or the "Switching reset" signal results in the setting to zero of the retriggerable timer "Force low beam use" in step 137 and the setting to zero of the "Force high beam use" timer at step 138 (the "Force low beam use" output is generated by a retriggerable timer to be able to extend the time during which output will remain active). With the "Force low beam use" timer set to zero, and while the "Not -synchronized intense light detection" signal does not switch to high level, the sequence will be restricted to the cycle given by the decision points 139 and 140. Thus, the outputs of this block will remain inactive if there are no encounters with not-synchronized vehicles, and the driver will have full control over the intensity of the lights of his vehicle by means of the manual dimmer switch. When the signal "Not -synchronized intense light detection" is switched to high level in step 139, the actions of "Force high beam use" followed by "Force low beam use" are repeated in sequence to request to the vehicles which said not-synchronized light comes from to reduce the intensity of its lights. The part of the flowchart that performs these actions is described below.

When the "Not-synchronized intense light detection" signal is in high level, the timer generating the "Force high beam use" output will be triggered as long as the timer generating the "Force low beam use" output is inactive. This corresponds to the sequence given by steps 141, 142, and 143 of the flowchart. If the "Not-synchronized intense light detection" input is still held at a high level for when the "Force high beam use" timer has been extinguished (see decision points 144 and 145) then the timer generating the "Force low beam use" output will be triggered in step 146. Similarly, if the "Not-synchronized intense light detection" input is still held at a high level for when the "Force low beam use" timer has been extinguished (see decisions points 141 and 142) then the "Force high beam use" timer will be triggered at step 143, to re-request to the vehicles from which said not-synchronized light comes from to lower the intensity of their lights. It is convenient that the time during which the "Force low beam use" signal is kept active be significantly longer than the time during which the "Force high beam" signal is kept active so as not to cause major inconvenience to the drivers of not-synchronized vehicles. When the "Not-synchronized intense light detection" signal is set to low level at the decision point 141 or at the decision point 145, the sequence proceeds to step 147 where the timer that is called "Awaiting luminous response" is triggered, then the "Force high beam use" timer is set to low level in step 148 and then the "Force low beam use" timer is triggered (or retriggered) in step 149, returning the sequence to the decision point 139.

In this way, the system forces the use of low beam light assuming that it is in front of another vehicle that has lowered the intensity of its lights. Before explaining the function of the timer "Awaiting luminous response" it is necessary to analyze the cases in which a vehicle can stop detecting not-synchronized intense light. Obviously the most common case is that which occurs when the vehicle from which the not-synchronized intense light comes, lowers the intensity of its lights. Another case is the one that occurs when a vehicle stops detecting not-synchronized intense light because the vehicle from which the not-synchronized intense light came has already crossed it on the route (this could happen, for example, when the latter vehicle has its system deactivated and its high beam light activated). Other less frequent cases could be those caused by vehicles that stop at the side of the road and turn off their lights or simply deviate from the road. As can be seen, the first of these cases, i.e. the one that occurs when the vehicle from which the not-synchronized intense light comes lowers the intensity of its lights, is the only one that requires the system to keep forcing the use of low beam light until crossed with the vehicle not synchronized. The function of the timer "Awaiting luminous response" is then to give the system time to determine if it is in front of a not-synchronized vehicle that has decreased the intensity of its lights or if it is one of the other cases described. This is because the luminous detection of a vehicle could be interrupted when that vehicle lowers the intensity of its lights. To facilitate the luminous detection of a vehicle that has lowered the intensity of its lights, it is necessary to use a threshold of light that is less than the dazzling threshold, and possibly wait until the vehicle approaches sufficiently to be detected again with this new threshold.

As already said, this wait will be regulated by the timer "Awaiting luminous response". On the other hand, since the continuous light threshold complies with the condition being less than the dazzling threshold, it can be used as said new light threshold. In short, if the luminous detection of a not-synchronized vehicle is interrupted when the vehicle lowers the intensity of its lights (i.e. if the received light intensity is below the continuous light threshold), the system will keep the timer "Force low beam use" triggered for a time set by the "Awaiting luminous response" timer expecting to detect light above said continuous light threshold outside the vision protection time interval Tp. If the latter happens, then the "Awaiting luminous response" timer is deactivated (set to low level) and the "Force low beam use" timer will be retriggered for the duration of the light detection, i.e. until the crossing with the not synchronized vehicle occur. Once the timers "Awaiting luminous response" and "Force low beam use" have been extinguished, the system will assume that the detection of not-synchronized light has already been concluded and will consequently allow the intensity of the vehicle's lights to be selected again by the manual dimmer switch.

After this analysis, we continue with the description of the flowchart of FIG. 45 from the return to decision point 139 (a return occurring when the "Not-synchronized intense light detection" signal is set to low level at the decision point 141 or at decision point 145). Since the detection of not-synchronized intense light has ceased, the sequence passes from the decision point 139 to the decision point 140 and then, if the "Force low beam use" timer is active, it is passed to the decision point 150, in which the status of the signal "VPZ" is analyzed. When the "VPZ" signal is at a low level, the status of the "CT light detection" signal at the decision point 151 is analyzed, which is equivalent to asking if light is detected outside the vision protection time interval $T_p$ above the continuous light threshold. If this does not happen, the sequence arrives at the decision point 152 from which, if the timer "Awaiting luminous response" still remains active, the sequence goes to step 149 in which the "force low beam use" timer is retriggered, closing the cycle again at decision point 139. Conversely, if at the decision point 152 the timer "Awaiting luminous response" is depleted the sequence returns directly to decision point 139 without retriggering the timer "Force low beam use". If this last timer runs out without the "CT light detection" signal being activated outside the vision protection zone, the system will assume that there is no vehicle not synchronized in front of it and therefore the intensity of the lights will be set by the manual dimmer switch.

When at the decision point 151 the "CT light detection" signal is active, the system assumes that it is detecting the not-synchronized vehicle that has lowered the intensity of its lights, therefore set to low level the timer "Awaiting luminous response" in step 153 and retriggers the "Force low beam use" timer in step 149, then returning the sequence to step 139. Thus, if the "Force low beam use" timer is active, each time light is detected above the continuous light threshold - at the decision point 151- said timer will be retriggered, thus responding to the vehicle which keeps the intensity of its lights low. When no light is detected again at the decision point 151 for a time such as to allow the timer "Force low beam use" to be depleted, the intensity of the lights will again be that fixed by the manual dimmer switch as it will be assumed that the other not synchronized vehicle has already crossed. When a vehicle detects again not-synchronized intense light (decision point 139), regardless of the status of the timers "Awaiting luminous response" and "Force low beam use", the system will re-execute the sequence that starts in the decision point 141 and has already been described.

The reason why at decision point 139 is asked about the appearance of a positive edge in the signal "Not-synchronized intense light detection" is to allow the driver, in the presence of a not-synchronized vehicle that for some reason does not lowers the intensity of its lights, can interrupt the repetition of the sequence given by the actions of "Force high beam use" followed by "Force low beam use" and recover the manual control of the lights. To do this, all said driver will have to do is to take the manual dimmer switch to the HB position or press the button that forces temporarily the activation of the high beam light of the vehicle. This will cause the activation of the "Switching reset" signal from the block 172 of FIG. 34, whereby the "Force low beam use" and "Force high beam use" outputs are set to low level in steps 137and 138 respectively, the sequence then being restricted to the cycle given by decision points 139 and 140 until a positive edge occur in the "Not-synchronized intense light detection" signal. This will keep the outputs of this block inactive until the other not-synchronized vehicle responds by making a change of lights. A case in which a not-synchronized vehicle might not lower the intensity of its lights occurs, for example, if the not-synchronized vehicle does not have its anti-dazzling system activated and its driver does not respond to the requests of to manually lower the intensity of its lights.

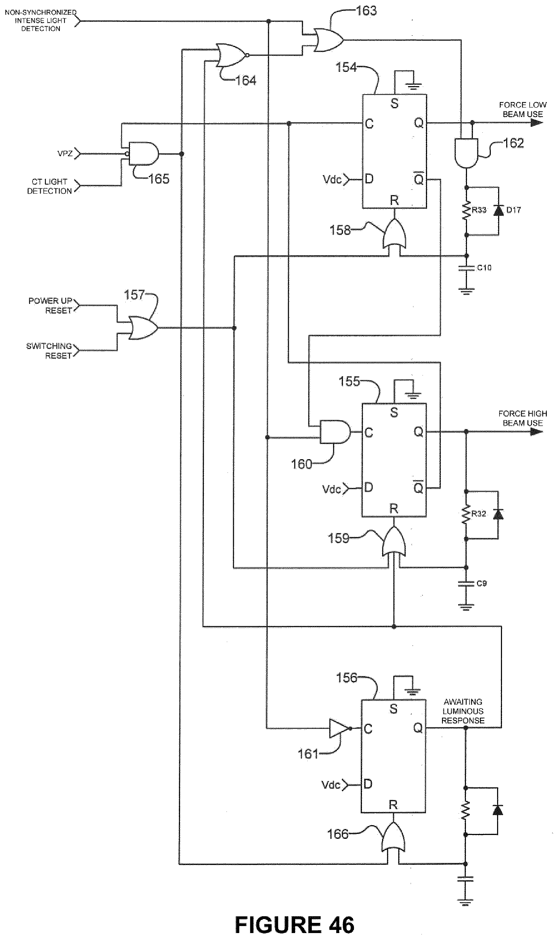

FIG. 46 shows the simplified scheme of a possible circuit for implementing the block "High beam/low beam automatic control" 111. The timers "Force low beam use", "Force high beam use" and "Awaiting luminous response" are obtained by Flip-Flops D 154, 155 and 156 respectively. The "Power up reset" and "Switching reset" inputs enter the OR gate 157 whose output enters, through the OR gate 158, the reset input of the Flip-Flop 154 and, through the OR gate 159, to the reset input of Flip-Flop 155. Thus, when one of the inputs of the OR gate 157 is set to high level, the outputs "Force low beam use" and "Force high beam use" are set to low level in correspondence with steps 137 and 138 of the flowchart of FIG. 45. Both outputs will remain inactive (low level) until a transition to a high level at the "Not synchronized intense light detection" signal take place (in the flowchart this corresponds to the cycle given between decision points 139 and 140).

When the "Force low beam use" output is at low level, the output $\overline{Q}$ of the Flip-Flop 154, which enters one of the inputs of the AND gate 160, is at high level, thus, when a transition to a high level occurs in the "Not synchronized intense light detection" signal entering the other input of the AND gate 160, a rising edge will occur on the clock input of the Flip-Flop 155, thereby triggering the "Force high beam use" timer whose duration will be given by the time it takes the capacitor C9 to charge through the resistor R32 to the voltage necessary to cause the resetting of the Flip-Flop 155 through the OR gate 159 (see steps 139, 141, 142 and 143 of the flowchart). When said "Force high beam use" timer is extinguished, the output $\overline{Q}$ of Flip-Flop 155, which is connected to the clock input of Flip-Flop 154, will be set to high level thus triggering the timer "Force low beam use". This trigger can be caused either by the self-extinguishment of the timer "Force high beam use" (see steps 144 and 146 of the flowchart), or by the forced extinction (reset) of said timer "Force high beam use" (see steps 148 and 149 of the flowchart). Said forced extinction occurs when the "Not-synchronized intense light detection" signal is set to low level, triggering, through the inverter gate 161, the timer "Awaiting luminous response" which in turn, through the OR gate 159, acts on the reset input of the Flip-Flop 155 causing said forced extinction (this corresponds to the sequence given by steps 145, 147, 148 and 149 of the flowchart).

To ensure that while the "Force high beam use" timer is active it will remain in low level the reset input of the Flip-Flop 156, the output $\overline{Q}$ of the Flip-Flop 155 will be input to one of the inputs of the AND gate 165 since the output of said AND gate 165 acts on the reset input of said Flip-Flop 156 through the OR gate 166. This is done to ensure that the timer "Awaiting luminous response" is always triggered when the "Not-synchronized intense light detection" switches to low level, since of the trigger of said "Awaiting luminous response" timer the forced extinction of the "Force high beam use" timer depends, through the OR gate 159. From the above, it can be deduced that the auto extinction of the "Force high beam use" timer can only occur as long as the "Not synchronized intense light detection" signal remain at a high level (see cycle between decision points 145 and 144). As it was said, when said timer "Force high beam use" self-extinguishes the timer "Force low beam use" is triggered (see step 146). The Q output of Flip-Flop 154, with which the "Force low beam use" timer is implemented, enters one of the inputs of the AND gate 162. When the timer "Force low beam use" is triggered it will evolve freely as long as the other input of the AND gate 162 is at high level, since when the output of said AND gate 162 is set to high level the capacitor C10 is charged through the resistor R33, until causing the reset of the Flip-Flop 154 through the OR gate 158.

When the timer "Force low beam use" is triggered, if the output of the OR gate 163 -which enters the AND gate 162- is set to low level, the output of the "Force low beam use" timer will remain in high level since when the output of said AND gate 162 is set to low level the capacitor C10 is abruptly discharged through diode D17. Thus, said capacitor C10 can only be recharged when both inputs of the AND gate 162 are high again. Thus, if the signal "Not synchronized intense light detection" -that enters the AND gate 162 through the gate OR 163- is maintained at high level, the timer "Force low beam use", once triggered, will freely evolve towards its self-extinction because both inputs of the AND gate 162 are high (see cycle between steps 141 and 142 of the flowchart). When the "Force low beam use" timer self-extinguishes, a positive edge appears at the $\overline{Q}$ output of Flip-Flop 154 which is connected to one of the AND gate 160 inputs and due to the fact that the "Not synchronized intense light detection" signal enters the other input of said AND gate 160, when this signal is at a high level said positive edge will enter the clock input of Flip-Flop 155 triggering again the timer "Force high beam use" (step 143 of the flowchart). On the other hand, the "Force low beam use" timer will not become extinct if before the "Not-synchronized intense light detection" signal is set to low level, since with this is triggered, through the inverting gate 161, the timer "Awaiting luminous response", which in turn - through the NOR gate 164 sets to low level one of the inputs of the OR gate163 whose other input is also in low level since it enters the signal "Not-synchronized intense light detection". Thus, the output of said OR gate 163 sets to low level one of the inputs of the AND gate 162 and with this, as already said, the discharge of the capacitor C10 occurs, keeping the timer "Force low beam use" triggered (see the sequence given by steps 141, 147, 148 and 149 of the operating diagram).

If the "Awaiting luminous response" timer has been triggered it will remain active until its self-extinguishment or until the output of AND gate 165 is set to high level with which said timer will be reset through the OR gate 166. While the "Not synchronized intense light detection" signal is kept at low level and the "Awaiting luminous response" timer is active, the "force low beam use" timer will remain triggered. In this state, the system will be waiting to detect luminously the vehicle that lowered the intensity of its lights. This corresponds to the cycle given by steps 149, 139, 140, 150, 151, 152 and 149. As long as the signal "Not synchronized intense light detection" is kept at low level and from the moment the timer "Awaiting luminous response" has been reset by setting at high level the output of the AND gate 165 (in correspondence with the luminous detection of a Not-synchronized vehicle that lowered the intensity of its lights), the "Force low beam use" timer will be retriggered each time the output of the AND gate 165 goes high since through the NOR gate 164 is set to low level one of the inputs of the OR gate 163 whose other input is also in low level (since to this one enters the signal "Not synchronized intense light detection"), thus one of the inputs of the AND gate 162 is set to low level and with this the discharge of the capacitor C10 is produced retriggering said timer "Force low beam use".

For the output of the AND gate 165 be set to high level, the signal "CT light detection", which enters one of the inputs of said AND gate 165, must be at high level when the "VPZ" signal is at low level ("VPZ" signal is applied to one inverted input of said AND gate 165), and in turn the output $\overline{Q}$ of Flip-Flop 155 , must be at high level, since said output $\overline{Q}$ of Flip-Flop 155 also enter said AND gate 165. The above corresponds to the cycle given by steps 149, 139, 140, 150, 151, 153 and 149 of the flowchart. When the pulses stop at the output of AND gate 165, the "Force low beam use" timer evolves freely into self-extinguishment in correspondence with the cycle given by steps 139, 140, 150, 151, 152 and 139. If this timer is extinguished before a pulse returns to the output of AND gate 165, the system assumes that the crossing with the not synchronized vehicle has occurred, so that the intensity of the lights returns to the one fixed by the manual dimmer switch (see cycle between decision points 139 and 140).

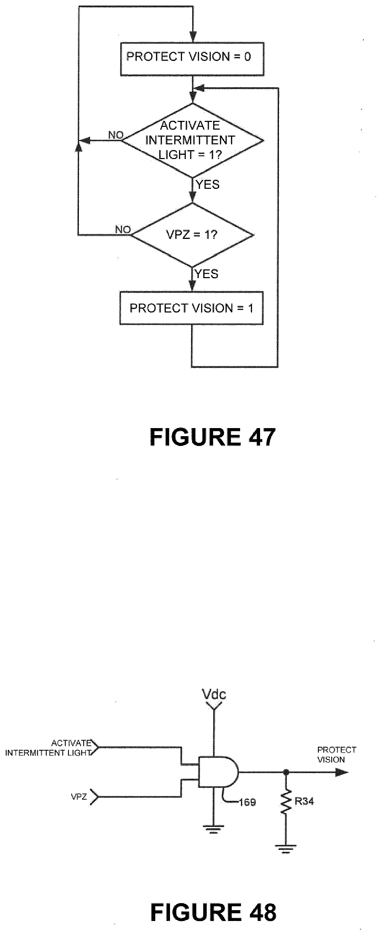

The function of the "Vision Protection" block 167 of FIG. 34 is to generate the signals necessary to control the device in charge of providing the vision protection of the driver of a vehicle. Said block 167 generates the "Protect vision" output signal starting from the input signals "VPZ" from block 64 and "Activate intermittent light" from the block 110. FIG. 47 shows the flowchart of said block 167. As can be seen, said flowchart corresponds to the simple AND logic function between the "Activate intermittent light" and "VPZ" input signals. In this way, the system will protect the driver's vision (signal "Protect vision" = 1) within the "VPZ" vision protection zone when the vehicle is using intermittent light, i.e. when the vehicle is participating in an NVE, whether synchronized or not. The latter is so because although vision protection will only be fully effective within a synchronized NVE, it may also be useful within a not-synchronized NVE where there are synchronized vehicles.

FIG. 48 shows the simplified scheme of the circuit corresponding to block 167 of said FIG. 34. While the "Protect vision" output signal is kept at high level the "Vision protection device" 168 of said FIG. 34 shall prevent or attenuate the light passage. The signal "Protect vision" is obtained at the output of AND gate 169 to whose inputs enter the "Activate intermittent light" and "VPZ" signals. The AND gate 169 is powered by the voltage Vdc which disappears when the system is deactivated. Thus, when the system is deactivated, the output of AND gate 169, which is grounded through resistor R34, will remain at low level. Regarding the design of the "Vision Protection Device" 168, it will be conditioned by the techniques used to implement the vision protection, some of which have been mentioned together with the formulation of the anti-dazzling method. The Vbatt voltage could be used to power the "Vision Protection Device" 168, if it should remain active when the system is deactivated.

The contents of the "System Activation and Power Supply" block 171 of FIG. 34 are shown in FIGS. 29, 30 and 31 and their operation has been explained when describing the characteristics common to all systems.

The function of the block "Headlights control for the generation of continuous/intermittent light" 172 of FIG. 34 is indicated by its own name. This block 172 has as inputs the signals "Emit light pulse" from block 173, "Activate continuous light" from block 110 and "Force high beam use" and "Force low beam use" from block 111. In addition to controlling the front lights of the vehicle (type of light to be used and its intensity), this block 172 also generates the "Switching reset" output signal. The implementation of said block 172 depends on the techniques to be employed to generate the intermittent light, and its contents have already been shown when describing the characteristics common to all the systems in FIGS. 32 - 33

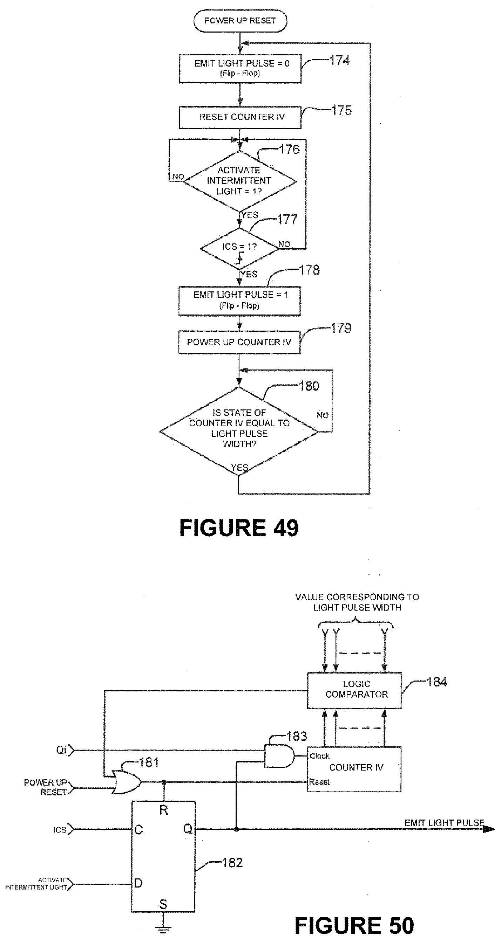

The function of the "Light pulses emission control" block 173 of FIG. 34 is to handle the emission of intermittent pulses of the vehicle. This block 173 has as inputs the signals "Activate intermittent light" from the block 110, "Power-up reset" from the block 171, the "ICS" signal from the block 61 and a clock signal which will be formed by the output Qi of the counter/divider 11 which provides the time base for measuring the width of the light pulses. The output of said block 173 is the signal "Emit light pulse", which enters the block "Headlights control for the generation of continuous/intermittent light" 172. In FIG. 49 is shown the flowchart corresponding to said block 173. When a "power up reset" pulse occurs, the output "Emit light pulse" is set to low level in step 174, in step 175, a counter which we will call "counter IV" is reset, then while the signal "Activate intermittent light" is in low level the sequence will be maintained at decision point 176. When the "Activate intermittent light" signal is set to high level the sequence advances to decision point 177 from which it will return to decision point 176 while the "ICS" signal does not switch to high level. When the "ICS" signal switches to high level, the "Emit light pulse" output is set to high level in step 178 and the counter IV is started in step 179. As can be seen, with the signal "Activate intermittent light" in high level, the emission of each pulse of light begins with the positive edge of the ICS. The counter IV is used to determine the time at which the output "Emit light pulse" should be set to low level, thereby limiting the width of the light pulses. Thus, at the decision point 180 when the counter IV reaches the value equivalent to the width of the light pulse, the sequence will restart in step 174 again.

FIG. 50 shows the simplified scheme of a circuit for implementing the block "Light pulses emission control" 173. The signal "Power up reset" enters, through the OR gate 181, to the reset input of the Flip-Flop D 182 in whose output Q the "Emit light pulse" output is obtained. The output of said OR gate 181 also enters to the "reset" input of counter IV whose clock input is driven by the output of AND gate 183. One of the inputs of said AND gate 183 is connected to the Q output of the Flip-Flop 182 and the other input is fed by a clock signal which, as already said, will be formed by the output Qi of the counter/divider 11 which provides the time base for measuring the width of the light pulse. When a "power up reset" pulse occurs, the Flip-Flop 182 and the counter IV will be reset setting the "Emit light pulse" signal to low level and preventing, by means of AND gate 183, the input of the clock signal to said counter IV so that it will remain at zero. The "Activate intermittent light" signal enters the Flip-Flop 182 data input and the "ICS" signal enters the clock input of said Flip-Flop 182. When the "ICS" signal switches to high level, being the "Activate intermittent light" signal in high level, the output "Emit light pulse" is set to high level, enabling the input of the clock signal to the counter IV. When the counter IV reaches the value corresponding to the width fixed for the light pulse (PW), the output of the logic comparator 184, which enters the OR gate 181, will be set to high level resetting the Flip-Flop 182 and the counter IV. When the latter occurs, the output of logic comparator 184 will no longer be at high level so that Flip-Flop 182 and counter IV will no longer be reset. In this way, when the counter IV reaches the value corresponding to the desired width of the light pulse, the output "emit light pulse" returns to a low level.

Concepts and characteristics common to anti-dazzling systems with rear-view protection.

Before proceeding with the description of the anti-dazzling systems that provide vision protection as well as rear view protection we will review some concepts regarding to the interaction between vehicles applicable to such systems. The vehicular interaction capability of anti-dazzling systems that do not provide rear-view protection should be extended so that vehicles can provide, in addition to vision protection, rear-view protection.

Vehicles may interact forward with the front or rear part of another vehicle, and may interact backwards only with the front of another vehicle (vehicles that have already crossed on the road do not interact with each other). Obviously, to enable such interaction, the vehicle must have means for receiving on the front both the signals that a vehicle can transmit to the front and those that another vehicle can transmit backwards, and means for reception from behind of signals which a vehicle can transmit to the front. With respect to vehicle interaction, both ends of the vehicle will have the ability to act independently, so that the rear part of a vehicle will act within an NVE similarly to the front of a vehicle moving in the opposite direction with respect to the road.

Following these concepts, we can see that a simple way to conceive systems that provide vision protection and rear view protection emerges from treating each end of the vehicle as a separate entity. Thus, anti-dazzling systems with rear-view protection will be configured as two subsystems that we will call "Front Subsystem" and "Rear Subsystem". Based on the above, we will apply to each of these subsystems a design similar to that used in anti-dazzling systems that do not provide rear-view protection, to obtain corresponding anti-dazzling systems that provide rear-view protection. Anti-dazzling systems that provide rear-view protection will be described assuming that when a vehicle has to interact backwards with other vehicles it will do so by the emission of light pulses in the non-visible spectrum, or, in certain circumstances that will be described later, by means of the emission of pulses of visible light.

Detection of light received by the front of the vehicle

Systems providing vision protection and rear-view protection require the vehicle to detect on the front not only visible light but also the type of light vehicles uses to interact with other vehicles backwards. The contents of the "Front received light detection" block 65 of FIG. 34, schematically shown in FIG. 15, may be used in the front subsystem of the systems providing vision protection and rear-view protection, as long as the type of light used by the vehicles to interact backwards can also be detected by the light sensor 2 of said FIG. 15. Now, if in a system we want, for reasons to be discussed below, to discriminate whether the light a vehicle is receiving on the front includes visible light or not, then the front subsystem of said system shall use an enlarged version of said block 65 which includes the modifications shown in FIG. 76 and described below. The content of the "Light sensing module" 1 is the same as in FIG. 15, except that in this case the light sensor 2 must respond to visible light but should not respond to the type of light employed by the vehicles to interact backwards. The function of the "Not-visible light sensing module" 1A is similar to that of the light sensing module 1 already described, the difference lies in the light sensor 2A, which must respond to the type of light used by vehicles for interact backwards. The output signal of said module 1A enters through the filter 7A, which behaves like the filter 7 of FIG.15, to the comparator 5A, whose reference voltage ($V_{rit}$) corresponds to a threshold, equivalent to the intermittent light threshold already described, which we will call the "retrointermittence threshold".

The output of said comparator 5A, which we will call "IT not-visible light detection", will be presented in the form of a pulse in correspondence with each pulse of intermittent light received by the light sensor 2A having an intensity higher than said retrointermittence threshold. Said output "IT not-visible light detection" enters one of the inputs of the OR gate 523. The comparator 5 is the same as in FIG. 15, only that its output has been renamed as "IT visible light detection" and enters to the other input of said OR gate 523. The "IT light detection" signal is now obtained as the output of said OR gate 523. The comparator 4, the filter 7 and the comparator 6 of FIG. 76 are the same and perform the same function as those of FIG. 15. We must mention that in those systems where the ILPE phases that a vehicle can adopt are not restricted to two predetermined alternative phases it would be desirable to make the pulses entering the OR gate 523 sufficiently narrow to be able to distinguish, by the output of said gate, the pulses of light that said vehicle could receive out of phase and overlapping.

Detection of light received by the rear part of the vehicle

Systems providing rear-view protection require the vehicle to detect not only by the front but also by behind the visible light emitted by other vehicles. The latter will be performed by the block of the "Rear Subsystem" called "Rear Received Light Detection". The contents of this block may be equal to the contents of the block "Front received light detection" shown in FIG. 15, however, because in some systems it is not required the "DZT light detection" output signal generated by this block, in the FIG. 77 it is shown the contents of a simplified version in which the comparator 6 has been removed. In this block "Rear Received Light Detection", whether its content corresponds to that shown in FIG.15 or to that shown in FIG. 77, the light sensor 2 must respond only to visible light if one wants to prevent vehicles that have just crossed on the road from interacting with each other.

Externally Synchronized Anti-Dazzling System with rear-view Protection

This system is based on the "Anti-dazzling method with rear-view protection" and makes use of the "External synchronization procedure". As previously announced, this system will be configured as two subsystems which we will call "Front Subsystem" and "Rear Subsystem", to treat each end of the vehicle as a separate entity when the front and/or rear part of a vehicle participate in a NVE. FIGS. 78A - 78B show the block diagram of a first version of the Externally Synchronized Anti-dazzling system with rear-view protection. The blocks composing the composite block 525, which corresponds to the "Front Subsystem", and the blocks "External Synchronization" 50 and "System Activation and Power Supply" 171 are the same as those already shown in FIG. 34, and described under the heading "Externally synchronized anti-dazzling system". In this version of the system the "Front-Received Light Detection" block 65 has the contents schematically shown in FIG. 15, with a light sensor 2 capable of detecting both visible light and the type of light employed by the vehicles to interact backwards, as described under the heading "Concepts and Characteristics Common to Anti-Dazzling Systems with rear view Protection".

The contents of the composite block 526, which corresponds to the "Rear Subsystem", appears as a simplification of the "Front Subsystem" whose details are discussed below: the "Phase Selection" output of block 50 enters the rear subsystem through of an inverter 527 in order to cause the ICS generated in said rear subsystem, which we will call "Rear ICS", to have the opposite phase to the ICS generated in the front subsystem. In this way, the rear part of the vehicle will use the same phase for the ILPE as the pre-assigned one to the front of the vehicles that circulate in the opposite direction with respect to the road. The rear subsystem blocks 528, 529, 531, 533 and 535 are the same in name and content to the front subsystem blocks 61, 64, 67, 110 and 173 respectively, with the proviso that in this first version of the system, the output "Activate continuous light" of block 533 is not used. The contents of the "Rear-view protection" block 534 of the rear subsystem is equal to the contents of the "Vision protection" block 167 of the front subsystem. As long as the "Protect rear vision" output of said block 534 is maintained at high level the "Rearview protection device" 534A shall prevent or attenuate the passing of light. The design of this device 534A will be conditioned by the techniques used to implement the rear-view protection, some of which have been mentioned together with the formulation of the anti-dazzling method with rear-view protection.

In this version of the system, the contents of the block "Rear Received Light Detection" 530 corresponds to that shown schematically in FIG. 77, and described under the heading "Concepts and characteristics common to Anti-dazzling systems with rear-view protection". The "Control of the Devices for the Retro-emission Generation" block 536 has the sole function of generating the light emission that the vehicle will use to interact with other vehicles backwards, to this block it only enters the signal "Emit light pulse", so that it is of less complexity than its counterpart, the block 172 of the front subsystem. The implementation of said block 536 depends on the techniques to be employed to generate this "retro-emission".

FIGS. 79A - 79B shows the block diagram of a second version of the Externally Synchronized Anti-dazzling system with rear-view protection, which introduces two improvements to the first version of said system. The improvement No. 1 is to prevent the vehicle from activating the vision protection when that vehicle is detecting from the front pulses of not visible light (only), i.e. those coming from the rear part of one or more other vehicles, as would for example in an NVE integrated by vehicles that advance in a single file. The improvement No. 2 has the purpose of allowing, under certain conditions, a vehicle to be able to emit pulses of visible light backwards, in order to cooperate with the vehicles that circulate in the opposite direction extending the area of the road that these vehicles can illuminate. The conditions for a vehicle to be able to emit pulses of visible light backwards using the frequency and phase of the rear ICS are: Condition No. 1: that the vehicle that is going to emit pulses of visible light backwards has in front other vehicles approaching in the opposite direction, so that there are drivers that can benefit from this additional illumination. Condition No. 2: that the vehicle which is going to emit pulses of visible light backwards does not have behind it on the road not-synchronized vehicles whose drivers could be harmed by the light emitted backwards by the vehicle ahead.

From the block diagram of FIG. 79 (A and B) only those blocks differing from those shown in FIG. 78 (A and B) will be described. The composite block 525A of FIG. 79A, corresponding to the front subsystem, presents the following modifications with respect to block 525 of FIG. 78A: Block 65A is an enlarged version of block 65 of FIG. 78A. The contents of this block 65A are shown in FIG. 76 and have already been described under the heading "Concepts and Characteristics Common to Anti-dazzling systems with rear-view protection". The composite block 66A has the same content as the composite block 66 of FIG. 78A plus the addition of the block "Synchronized visible light detection" 537. The contents of this block 537 are equal to the contents of the block 67 already described and its flowchart corresponds to that shown in FIG. 38, with the proviso that the input "IT Light Detection" changes to "IT Visible Light Detection" and that the "Synchronized Light Detection" output changes to "Synchronized Visible Light Detection". Said block 537 has as inputs the "IT Visible Light Detection" signal coming from the block 65A and the "RCFZ" signal from the block 64 and as output the "Synchronized Visible Light Detection" signal, output that will remain in high level while the vehicle is receiving pulses of synchronized visible light from the front. On the "Vision protection" block 167 of FIG. 79A, as in FIG. 78A, the "Activate intermittent light" signal acts, with the difference that it does so through the AND gate 540 when the signal "Synchronized Visible Light Detection", which also enters said AND gate 540, is in high level.

The composite block 526A of FIG. 79B, corresponding to the rear subsystem, has the following modifications with respect to block 526 of FIG. 78B: The contents of the block "Rear received light detection" 530A corresponds to that shown schematically in FIG. 15, wherein the light sensor 2 of said FIG. 15 must respond only to visible light if we want to avoid vehicles that have just crossed on the road from interacting with each other. The "Not-synchronized light detection" block 532 (which does not have its equivalent in the rear subsystem of FIG. 78B) has the same content as the front subsystem block 68. The AND gate 538 and the inverter 539 represent another extension present in the rear subsystem of FIG. 79B. The way the modifications described affect the behavior of this system is described below. The "IT Visible Light Detection" output of block 65A (FIG. 79A) makes it possible to determine whether the light being received by a vehicle from the front includes visible light or not, this output enters the "Synchronized Visible Light Detection" block 537 whose output determines whether the vehicle is receiving from the front pulses of synchronized visible light. To implement the improvement No. 1, the signals "Synchronized visible light detection" from block 537 and "Activate intermittent light" from block 110, enter the AND gate 540 inputs, whose output, when it is in high level, allows, through the "Vision Protection" block 167, the "protect vision" output to be activated within the VPZ zone. In this way, the vision protection will only be activated when the vehicle is using its intermittent light, but in front of vehicles that are also emitting pulses of visible light. This will prevent the vehicle from activating the vision protection when the vehicle is detecting from the front only pulses of not visible light coming from the rear part of another vehicle, as would be the case, for example, in an NVE composed of vehicles moving in a single file.

The implementation of improvement No. 2 is described below. The output of block 537 "Synchronized visible light detection" (FIG. 79A) enters one of the inputs of the AND gate 538(FIG. 79B), while the output of the block 532 "Not synchronized light detection"(FIG. 79B) enters, inverted by the inverter 539, to the other input of said AND gate 538. In this way, the output of said AND gate 538, which we will call "Enable visible light use" and that it enters the block "Control of the devices for the retro-emission generation" 536, will be set to high level when the vehicle can emit visible light backwards. This is because the signal "Synchronized visible light detection" in high level indicates that it fulfills condition No. 1, while the signal "Not synchronized light detection" in low level indicates that condition No. 2 is fulfilled, so that the output of the AND gate 538 in high level indicates that both conditions are fulfilled. It is to be noted that at block 530A it is convenient to adapt the activation threshold of the "DZT light detection" signal which enters the block 532, to ensure that when a vehicle has behind it on the road to not-synchronized vehicles, the signal "Not synchronized light detection" will be set to high level before the drivers of said not-synchronized vehicles could be harmed by the visible light emitted backwards by the vehicle ahead.

Formulation of the External Synchronization Procedure with Vehicular Assistance

A further procedure for establishing the synchronization required by the anti-dazzling methods already described is described below. This procedure referred to as "External synchronization procedure with vehicular assistance" comprises the External synchronization procedure already described and further comprises the reception and processing of a "Synchronization signal" by vehicles participating in an NVE without having the phase of ILPE corresponding to its direction of movement with respect to the road, for said vehicles to obtain the ILPE phase from said "Synchronization signal", which will be transmitted, using a predetermined communication means, by another or other vehicles participating in said NVE and that they do have the ILPE phase corresponding to their direction of movement with respect to the road.

This procedure is an extension of the "External synchronization procedure" which introduces some improvements thereto. These improvements are manifested when the particular case of a vehicle that does not have the correct ILPE phase is presented due, for example, to one of the following causes:
When a vehicle reverses its direction of movement with respect to the road, at a point thereof in which there are no transmission sources that allow it to update its "Phase selection" signal.

When the ILPE phase of a vehicle has suffered a shift greater than the allowable because it has not received the "Phase adjustment" signal for a longer time than that vehicle is capable of maintaining the correct ILPE phase. In this case, in which the vehicle does not have the correct ILPE phase, said vehicle can obtain said phase in the first NVE which integrates with another vehicle or vehicles that do have the correct phase. Thus, eliminating the problem that the presence of vehicles that do not have the correct phase within an NVE represents in the external synchronization procedure. The means of communication to be employed in this procedure are included among those based on the transmission/reception of electronic, magnetic, optical, acoustic signals or a combination thereof. It should be noted that the most natural and economical means of transmitting a "Synchronization signal" from one vehicle to another from the front is provided by the ILPE itself of each vehicle.

The following are some alternatives for carrying out the reception and processing of the "Synchronization signal" by those vehicles that do not have the correct ILPE phase and how that signal is transmitted by the vehicles that do have that phase and that integrate a same NVE with the first ones.

(a) When the anti-dazzling method is applied (without rear-view protection), vehicles shall be capable to transmit directionally forward a "Synchronization signal" which could be captured by vehicles traveling in the opposite direction. The vehicles must therefore have means for the reception of said signal arranged in such a way as to enable them to receive said "Synchronization signal" from the front. The phase contained in the "Synchronization signal" transmitted by a vehicle will be the phase corresponding to the ILPE of said vehicle. The vehicles of said NVE which do not have the ILPE phase corresponding to their direction of movement with respect to the road extract the phase contained in the received "Synchronization signal" and from there elaborate and adopt the corresponding counterphase for the ILPE. In this way, all the vehicles of the NVE will be synchronized. If it is chosen to make the "Synchronization signal" transmitted by a vehicle be the ILPE itself, the reception of said "Synchronization signal" will be based on the use of optical sensors.

(b) When the anti-dazzling method with rear-view protection is applied, vehicles shall be capable to transmit synchronization signals directionally forward as well as backwards on the road. The phase contained in the "Synchronization signal" that a vehicle transmits directionally forward will be the phase corresponding to the ILPE of said vehicle, and the phase contained in the "Synchronization signal" that a vehicle transmits directionally backwards will correspond to the counter phase of the ILPE of said vehicle.

The vehicles must have means for capturing the synchronization signals transmitted by other vehicles, means which will be arranged in such a way so that they can discern whether a "Synchronization signal" is received at the front of the vehicle or behind it. The vehicles of said NVE that receive the "Synchronization signal" from the front and do not have the ILPE phase corresponding to their direction of movement with respect to the road, extract the phase contained in said "Synchronization signal" and from it elaborate and adopt the counter-phase for the ILPE. On the other hand, vehicles of said NVE which receive the "Synchronization signal" from behind and do not have the ILPE phase corresponding to their direction of movement with respect to the road simply adopt the ILPE phase contained in the received Synchronization signal.

The reason for making a vehicle transmit backward a "Synchronization signal" is to enable the application of this procedure in an NVE composed of vehicles that all circulate in the same direction. This "Synchronization signal" transmitted backward by a vehicle contains the opposite phase to that used by said vehicle for the ILPE. This is done thus to transmit to the vehicles that circulate behind a "Synchronization signal" equivalent to the one that would receive of another or other vehicles that circulate in the opposite direction. If it is chosen that the vehicles transmit forward the Synchronization signal using the ILPE itself, then it would be desirable for said vehicles to transmit the "Synchronization signal" backwards by emitting backwards a not-visible light signal (e.g. infrared light) equivalent to the ILPE of the vehicle, in terms of being able to pass phase information to the vehicles that come behind but in counter phase with said ILPE, that we will call "rear ILPE", where the frequency and phase of said rear ILPE will be controlled by a signal equivalent to the ICS already described, which we have called "rear ICS". Within an already synchronized NVE, such rear ILPE could be performed using visible light for an additional purpose: that vehicles driving in a certain direction with respect to the road can cooperate with those traveling in the opposite direction, extending the area of the road that the vehicles can illuminate. It should be noted that in this case the pulses of visible light of said rear ILPE will not disturb the drivers of the vehicles circulating behind, since these drivers will have the vision protected when said pulses of light become present.. If it is chosen that the vehicles transmit the synchronization signals using pulses of light, the means for receiving said synchronization signals will obviously be based on the use of optical sensors.

The signal that a vehicle transmits backwards, while it has no other utility than that of transmitting information, could have a frequency lower than the one corresponding to the ILPE, as long as a vehicle can extract from it the correct phase for the ILPE. To this end, the "Synchronization signal" that a vehicle transmits backwards should have a frequency that is an odd exact sub-multiple of the frequency corresponding to the ILPE.

We will say that two pulsating signals of different frequencies, one of said frequencies being exact multiple of the other, are in phase if each time the lower frequency signal has a positive edge, the higher frequency signal also has a positive edge. By way of example, note that the signals of FIG. 9A and FIG. 9B are in phase.

We will also say that two pulsating signals of different frequencies, one of said frequencies being an odd exact multiple of the other, are in counter phase if each time the lower frequency signal has a positive edge, the counter phase of the higher frequency signal also has a positive edge. As an example, note in FIGS. 11A - 11D that the signals of FIG. 11A and FIG. 11D are in counter phase, since the signal of FIG. 11A is in phase with the signal of FIG. 11C, the latter being the counter phase of the signal of FIG. 11D Note also that the signals of FIG. 11B and FIG. 11C are also in counter phase. Externally Synchronized Anti-Dazzling System with Vehicular Assistance

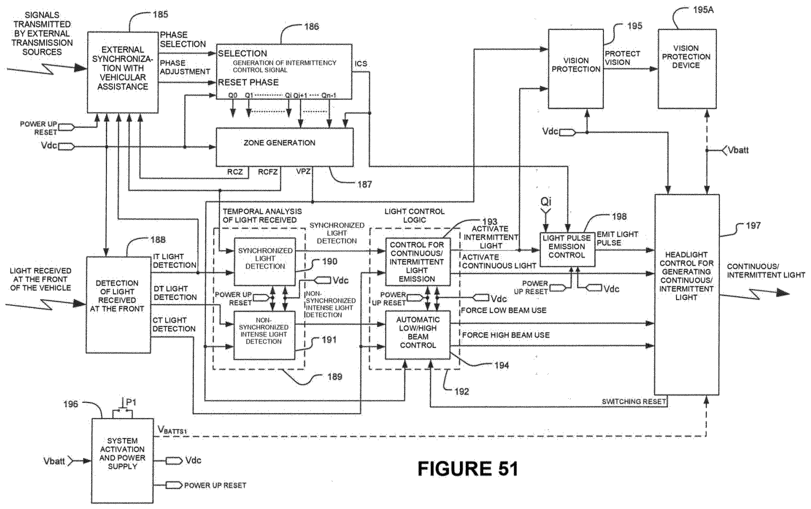

FIG. 51 shows the block diagram of the "Externally Synchronized Anti-Dazzling System with Vehicular Assistance". This system is based on the anti-dazzling method already described and makes use of the external synchronization procedure with vehicular assistance and will be implemented from the "Externally Synchronized Anti-Dazzling System" previously described, adding to the latter system the improvements announced in said external synchronization procedure with vehicular assistance. For the above reasons, the blocks and signals of FIG. 51 coincide in name, function and description with the blocks and signals of FIG. 34, except for the block "External synchronization with vehicular assistance" 185 and the Restricted Conflict Zone (RCZ) signal which only enters the said block 185 and is provided by the block "Zones Generation" 187. Thus, the contents of the blocks 186, 188, 189, 190, 191, 192, 193, 194, 195, 195A, 196, 197 and 198 of FIG. 51 correspond to the contents of the blocks 61, 65, 66, 67, 68, 109, 110, 111, 167, 168, 171, 172 and 173 of FIG. 34, respectively.

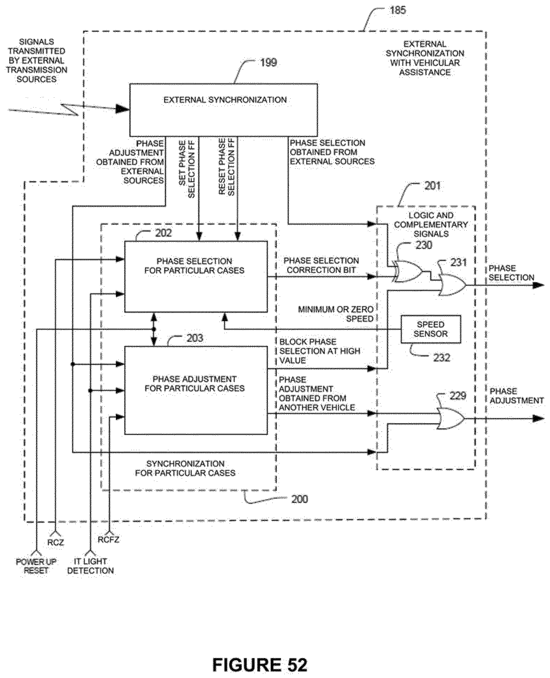

FIG. 52 shows a simplified diagram of the contents of the "External Synchronization with vehicular assistance" block 185 of FIG. 51, which is composed of the blocks "External Synchronization" 199, "Synchronization for particular cases" 200 and "Complementary Logic and Signals" 201. The contents of the block "Complementary Logic and signals" 201 comprises the OR 231 and OR 229 gates, the exclusive OR gate 230 and the velocity sensor 232. The velocity sensor 232 produces the "Null velocity" signal which will be activated when the vehicle reduces its speed to a minimum permissible or stops, thus indicating that there is a possibility that said vehicle has reversed its direction of movement with respect to the road.

The "External Synchronization" block 199 has the same function and description as the homonymous block 50 of FIG. 34 which is described by FIG. 35 - 36, except that the "Phase Selection" and "Phase Adjustment" outputs of said block 50 have been renamed in said block 199 as "Phase selection from external sources" and "Phase adjustment from external sources" respectively and in addition, the "Set Phase selection FF" and "Reset phase selection FF", which are internal signals in said block 50 (see FIG. 35 - 36), are now outputs from block 199. The function of the "Synchronization for Particular Cases" composite block 200 is that the vehicle can obtain from another vehicle the correct phase for the ILPE when for some reason said phase is not provided by the "External Synchronization" block 199. This block 200 is in turn integrated by the blocks "Phase selection for particular cases" 202 and "Phase adjustment for particular cases" 203. The "Phase Adjustment for Particular Cases" block 203 has the function of adjusting the phase of the vehicle's ICS when the "External Synchronization" block 199 stops to provide the "Phase adjustment from external sources" signal during a period of time longer than the permissible, as long as the vehicle is receiving not-synchronized intermittent light. This phase adjustment of the ICS of the vehicle will be carried out through the outputs of said block 203 "Phase adjustment from other vehicle", which acts on the OR gate 229, and "Override phase selection", which acts on the OR gate 231, as detailed below. The signals that enter this block 203 are: "Phase adjustment from external sources", "IT light detection", "RCFZ" and "Power up reset".

The "Phase Selection for Particular Cases" block 202 will invert the vehicle's ICS phase when said vehicle is receiving intermittent light with the opposite phase than it would receive in a synchronized NVE, provided that the "Null velocity" signal from the sensor 232 is in high level indicating that the vehicle has reduced its speed to the limit of the allowable, which allows to assume that said vehicle is the one that has inverted its direction of movement with respect to the road. This phase inversion of the vehicle ICS is carried out by setting to high level the output of said block 202 called the "Phase selection correction bit", which acts on the exclusive OR gate 230 by inverting the state of the signal "Phase selection from external sources" at the output of said exclusive OR gate 230. The signals entering this block 202 are: "Set phase selection FF" and "Reset phase selection FF" from block 199, "IT Light detection" from block 188 of FIG. 51, "RCZ" from block 187 of FIG. 51, "Null velocity" from the velocity sensor 232, and "Power up reset".

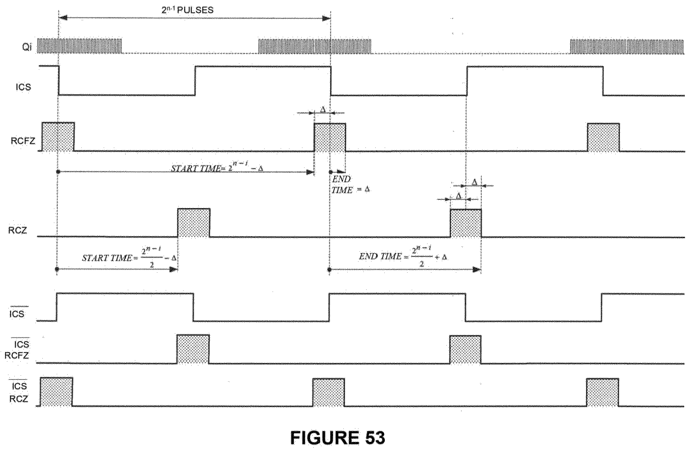

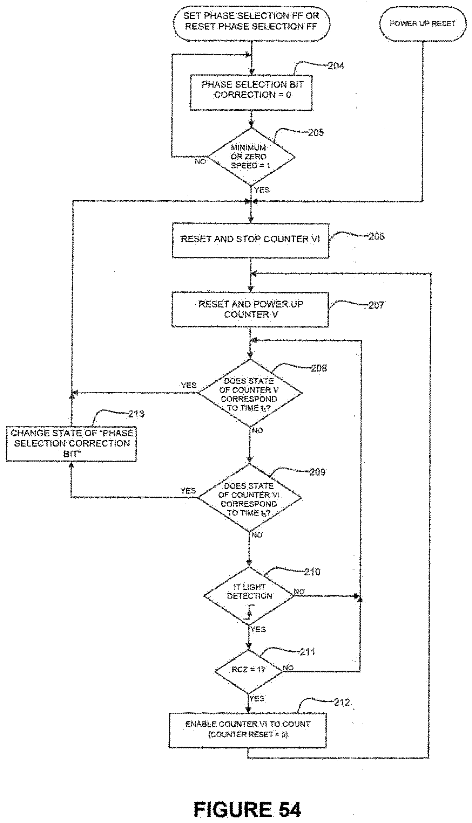

Before describing in detail the contents of blocks 202 and 203 it is necessary to explain the function of the "RCZ" signal. We will call "RCZ" a signal that identifies the time space or zone, within the period T of the ICS, that we will call "Restricted Conflict Zone". From now on, the "zones" defined within the T period of the ICS and the signals that identify those zones will be indicated by the same acronym, for example, we will use RCZ to refer to both the restricted conflict zone and the signal which identifies said zone. A vehicle shall detect within the RCZ the positive edge of the intermittent pulses of light coming from another vehicle moving in the opposite direction and having the opposite phase to that corresponding to a vehicle synchronized with the first one (when we say, "positive edge of a light pulse" we refer to the "positive edge generated by the corresponding detector"). Thus, if one of these two vehicles inverts the phase of their ICS, the positive edge of the pulses of light received by those vehicles will now fall into the RCFZ of such vehicles, therefore, generating the RCZ for an ICS is equivalent to generating the RCFZ for the $\overline{ICS}$ (see timing of FIG. 53). For example, where there is a possibility that the vehicle has reversed its direction of movement on the route ("Null velocity" signal = 1) the system will analyze, by block 202, whether pulses of intermittent light whose positive edges fall into the RCZ are received and if so inverts the phase selection by activating the "Phase selection correction bit" output, as explained below. FIG.54 shows the flowchart of the block "Phase selection for particular cases" 202. The "Phase selection correction bit" output is set to low level in step 204 when a pulse appears on any of the signals "Set phase selection FF" or "Reset phase selection FF" from the block "External Synchronization" 199 of FIG. 52, and said output will be kept low while at the decision point 205 the "Null velocity" signal remains at a low level. Thus, as long as the "Phase selection correction bit" output is inactive, the phase selection will be handled by the "Phase selection from external sources" output of block 199. When the "Null velocity" signal is activated or when a "power up reset" pulse is received, block 202 will correct, if necessary, the phase selection. For this it must be determined if the vehicle is receiving intermittent light whose positive edges fall into the RCZ. This is done by the temporal analysis of the signal "IT light detection" in relation to the signal RCZ.

The algorithm used, hereafter referred to as the "Tolerant verification" algorithm, is basically the same as described in the "Externally synchronized anti-dazzling system" to generate the "Synchronized light detection" signal (see block 67 of FIG. 34) and which is reproduced below adapted for this case. The algorithm is based on verifying during a time interval that we will call "$t_6$" if the signal "IT light detection" is giving positive edges inside the RCZ with certain regularity characteristic of the intermittent light. Said time "$t_6$" will have a duration of several periods T and will be controlled by the "counter VI" which, after reaching the value corresponding to said time "te", will cause a change of state of the "Phase selection correction bit" output. On the other hand, the regularity characteristic of the intermittent light will be controlled by another counter that we will call "counter V", which will be reset every time the "IT light detection" signal has a positive edge inside the RCZ. So that if said counter V reaches the value corresponding to the time "$t_5$", the reception of intermittent light is discarded because it does not present the required regularity and the counter VI is reset, thus avoiding reaching the value corresponding to the time "$t_6$". Obviously, the minimum value that can be given to "$t_5$" is T. Assigning a higher value (for example 2T or greater) makes this algorithm "tolerant". Now we return to the description of the flowchart of FIG.54 assuming that the signal "Power up reset" or the signal "Null velocity" has been activated. In step 206 the counter VI is reset and stopped and in step 207 the counter V is reset and started, so that the sequence will advance, through the decision points 208 and 209, to the decision point 210. Here, when the signal "IT light detection" has a positive edge with the signal RCZ being active the sequence will include the steps ... 210, 211, 212, 207, ... leaving the counter VI enabled to count in step 212 and zeroing the counter V in step 207. If this sequence is repeated, without the counter V reaching the value corresponding to the time "$t_5$", when the counter VI reaches the value corresponding to the time "te" -in step 209- the output "Phase selection correction bit" will change its state in step 213 and then the counter VI will be reset and stopped in step 206, and the counter V will be reset (and started) in step 207. On the other hand, when the vehicle stops detecting pulses of light whose positive edges fall into the RCZ the counter V will reach the value corresponding to the time "$t_5$" and the sequence will pass from the decision point 208 to the step 206 to reset the counter VI, and then reset and start the counter V on step 207. It is important to note that, in step 213 instead of setting to high level the "Phase selection correction bit" signal, the state of said signal is changed so that, until the phase selection returns to be controlled by the "External synchronization" block" 199, the state of said signal may be changed back to suit any particular situation that may arise on the route.

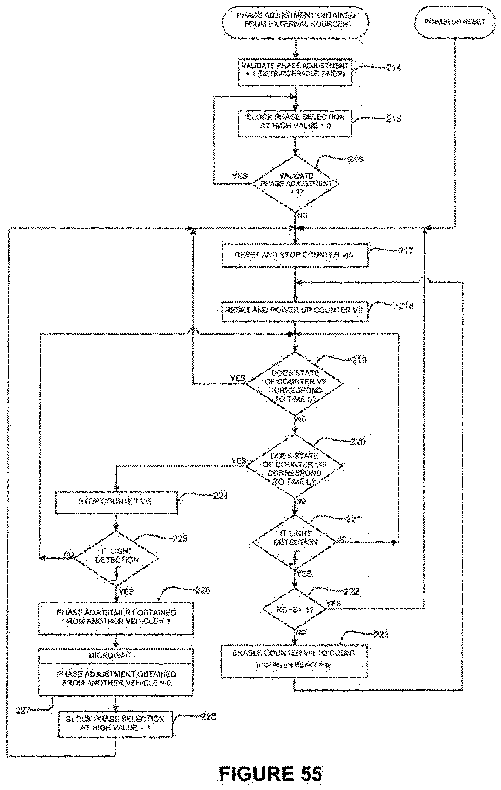

FIG. 55 shows the flowchart of the "Phase adjustment for particular cases" block 203 of said FIG. 52. Each time a pulse appears in the signal "Phase adjustment from external sources" the retriggerable timer "Validate phase adjustment" is triggered (or retriggered) in step 214. While said timer is active the "Override phase selection" signal will be kept low, see sequence given by steps 214, 215, 216, 215. If for some reason the "Phase adjustment from external sources" signal stops producing pulses, allowing the timer "Validate phase adjustment" to extinguish, then the sequence advances to step 217. The same occurs when a pulse of "power up reset" is produced. From step 217, when the vehicle participates in an NVE and does not receive synchronized light pulses, i.e. when it is receiving only not synchronized intermittent light, this block 203 will adjust the phase of the ICS of the vehicle. For this purpose, the temporal analysis of the signal "IT light detection" in relation to the signal "RCFZ" will be carried out by means of a "tolerant verification" algorithm as the one described for block 202. Thus, if the counter VIII reaches the value corresponding to the time "te", in step 220, it is confirmed that the vehicle is receiving only not-synchronized intermittent light. On the other hand, the regularity characteristic of the intermittent light will be controlled by another counter which we will call "counter VII", which will be reset each time the "IT light detection" signal has a positive edge. So that if said counter VII reaches the value corresponding to the time "$t_7$", the reception of intermittent light is discarded because it does not present the required regularity and the counter VIII is reset, thus avoiding reaching the value corresponding to the time "te ". That said, we can see that the sequence that includes steps ... 221, 222, 223, 218 ... corresponds to the situation that keeps the counter VIII enabled to count. The return path from step 221 to step 219 corresponds to the waiting for the next not synchronized light pulse. The sequence ...222, 217, 218,... occurs when the vehicle has received a synchronized light pulse which calls into question that said vehicle must readjust its phase and therefore both counters VIII and VII are set to zero in steps 217 and 218 respectively. The sequence 219, 217 and 218 occurs when the vehicle is not receiving intermittent light and thereby zeroes both counters VIII and VII. When the counter VIII reaches the value corresponding to the time "$t_8$" the sequence passes from the decision point 220 to the step 224 in which said counter is stopped but not reset. This is done to enable the sequence 225, 219, 220, 224, 225 corresponding to the wait of the first light pulse after confirming reception of not-synchronized intermittent light. When said first light pulse is presented, the sequence goes to steps 226 and 227 in which the "Phase adjustment from other vehicle" signal is activated in the form of a narrow pulse. Said "Phase adjustment from other vehicle" signal enters, through the OR gate 229, the "reset" input of the counter/divider 11 used in the "Intermittence control signal generation" block 186 of the FIG. 51 (see FIG. 20). Thus, the output Qn of said counter/divider 11 (like all its other outputs) is set to low level at the time the ICS of the vehicle emitting said first light pulse was set to high level. Therefore Qn must be selected as the ICS of the vehicle "receiver" of said first pulse of light to achieve the synchronization of its lights. To achieve this in step 228 the "Override phase selection" signal is activated. This signal, through OR gate 231, sets a high level at the "Selection" input of said block 186 of FIG. 51, which sets Qn as the ICS of the vehicle (see FIG. 20). The sequence then returns to step 217 whereby the phase adjustment will continue to be carried out by the "Phase adjustment for particular cases" block 203 until the "Phase adjustment from external sources" signal is again received.

We will now expand the description of the block "Complementary logic and signals" 201 of said FIG. 52, which will be done, given the simplicity of this block, based on the logical scheme drawn therein. The "Phase adjustment" output is obtained by the logic OR operation between the "Phase adjustment from external sources" and "Phase adjustment from other vehicle" signals. Said logic operation is represented in FIG. 52 by the OR gate 229. The "Phase selection" output is obtained as the logical sum, represented by the OR gate 231, between the "Override phase selection" signal from the block 203 and the result of the exclusive OR, represented by the exclusive OR gate 230, between the "Phase selection correction bit" signal from the block 202 and the "Phase selection from external sources" signal from the block 199. As can be seen, when the "Override phase selection" signal is set to high level the "Phase selection" output will be set high regardless of the level of the signals entering said exclusive OR gate 230.

On the other hand, when the signal "Override phase selection" is at low level (inactive) the "Phase selection" output will have the same level as the "Phase selection from external sources" signal if the "Phase selection correction bit" signal is set to low level, and will have the opposite level if the "Phase selection correction bit" signal is at high level, as set by the exclusive OR logic operation. As already mentioned the velocity sensor 232 produces the "Null velocity" signal which must be activated when the vehicle reduces its speed to the minimum permissible or stops.

The "Zones Generation" block 187 of this system generates the same signals as the "Zones Generation" block 64 of the Externally Synchronized Anti-Dazzling System, and further generates the RCZ signal, as described in the above-mentioned manner. To delimit this RCZ zone we use:

$$ start\ time\ = \frac{2^{n-i}}{2} - \Delta $$

$$ end\ time\ = \frac{2^{n-i}}{2} + \Delta $$

where, as already said:

$2^{n-i}$: Is the duration of the period T of the ICS measured in periods of an output Qi of the counter/divider 11 (see FIG. 20). The period of said output Qi being the time base chosen to define said start and end times.

$\Delta$: Is the same margin of tolerance as defined in the conflict-free zone (see $\Delta t$ in FIGS. 23A - G) measured in periods of said output Qi of the counter/divider 11 chosen as the time base.

In order that the start and end times of the RCZ can be easily visualized, they have been indicated in FIG. 53 along with the times corresponding to the RCFZ.

If the "Continuous/Intermittent Light Emission Control" block 193 of FIG. 51 is configured so that the vehicle does not use permanently intermittent light unless it is receiving synchronized light (see description of FIG. 43), then it must be taken into account that the "Activate intermittent light" timer should be longer than the time required by the "Synchronization for particular cases" block 200 to synchronize the vehicle lights. Said time will be determined by the times "te" or "$t_8$" depending on whether in said block 200 has been "activated" either the block 202 or 203 respectively (note that the times "$t_6$" and "$t_8$" could have the same value). Beyond the configuration that is chosen for the block "Continuous/intermittent light emission control" 193, it is characteristic of the operation of the system that the timer "Activate intermittent light" has more duration than the time that requires the block "Synchronization for particular cases "200 to synchronize vehicle lights, since being "$t_6$" and "te" the times used to qualify as "intermittent" the received light, these times can be as small as, for example, 10T or 20T , i.e. on the order of the tenth of a second, while the "Activate intermittent light" timer, which determines how long a vehicle will continue to use intermittent light when it has stopped receiving synchronized light, will have a duration that can be measured in seconds.

For this system, circuit diagrams are not attached to the flowchart of each block, because such circuit diagrams are not fundamental to describe the operation of the system since other alternatives of implementation could be chosen, such as those based on the use of microprocessors.

Externally Synchronized Anti-Dazzling System with Vehicular Assistance and Rear-View Protection

This system is based on the "Anti-dazzling method with rear-view protection" and makes use of the "External synchronization procedure with vehicular assistance". As previously announced, this system will be configured as two subsystems which we will call "Front Subsystem" and "Rear Subsystem", to treat each end of the vehicle as a separate entity when the front and/or the rear part of a vehicle participate in a NVE. FIGS. 80A - 80B shows the block diagram of a first version of the "Externally Synchronized Anti-Dazzling System with Vehicular Assistance and Rear-View Protection". In FIG. 80A, the blocks composing the composite block 541 corresponding to the "Front Subsystem" and the contents of the "System Activation and Power Supply" block 196 are the same as those already shown in FIG. 51, and described under the heading "Externally synchronized anti-dazzling system with vehicular assistance".

The contents of the composite block 542 of FIG. 80B, which corresponds to the "Rear Subsystem", appears as a simplification of the "Front Subsystem" whose scope will be discussed below. In this system, the signals generated from the information that the vehicles receive from the transmission sources external to them, are used in both the front subsystem and the rear subsystem. Said signals will then be generated in the front subsystem by the block "External synchronization with vehicular assistance" 185, and used in the homonymous block 543 of the rear subsystem as shown in detail in FIG. 81. These signals are: "Phase adjustment from external sources", "Selection from external sources", "Set phase selection FF ", "Reset phase selection FF" and "Null velocity". The sharing of these signals by both subsystems allows the "External Synchronization" block 199 and "Velocity Sensor" block 232 to be present only in the front subsystem, within the "External Synchronization with vehicular assistance" composite block 185, as shown in FIG. 81. In FIG. 81, the "Phase Selection from external sources" output of block 185 enters the block 543 of the rear subsystem where it is inverted by the inverter 544 in order to cause the ICS generated in said rear subsystem, which we will call "rear ICS", has the opposite phase to the ICS generated in the front subsystem. In this way, the rear part of the vehicle will use the same phase for the ILPE as the pre-assigned one to the front of the vehicles that circulate in the opposite direction with respect to the road. The blocks: "Phase selection for particular cases" 545, "Phase adjustment for particular cases" 546 and "Complementary Logic and Signals" 547, of the composite block 543 of the rear subsystem have the same function as their homonyms of the composite block 185 of the front subsystem, and also have identical content, except for the absence in block 547 of the velocity sensor.

We refer again to FIGS. 80A - 80B to continue with the description of the rear subsystem. Blocks 548, 549, 551, 553 and 555 of the rear subsystem are the same in name and content to blocks 186, 187, 190, 193 and 198 of the front subsystem respectively, with the proviso that in this version of the system the "activate continuous light" output of block 553 is not used. The content of the "Rear-view protection" block 554 of the rear subsystem is equal to the contents of the "Vision protection" block 195 of the front subsystem. While the "Protect rear vision" output of said block 554 is held at high level, the "Rear View Protection Device" 554A should prevent or attenuate the passing of light. The design of this 554A device will be conditioned by the techniques used to implement the rearview protection, some of which have been mentioned together with the formulation of the "Anti-dazzling method with rear-view protection".

In this version of the system, the content of the block "Rear received Light detection" 550 corresponds to that shown schematically in FIG. 77, and described under the heading "Concepts and characteristics common to anti-dazzling systems with rear-view protection". The "Control of Devices for the Retro-emission generation" block 556 has the sole function of generating the light emission that the vehicle will use to interact with other vehicles backwards, to this block it only enters the signal "Emit light pulse" so that it is of less complexity than its counterpart, the block 197 of the front subsystem. The implementation of said block 556 depends on the techniques to be employed to generate this "retro-emission". FIGS. 82A - 82B shows the block diagram of a second version of the "Externally Synchronized Anti-dazzling system with vehicular assistance and Rear-View Protection", which introduces two improvements to the first version of said system. The improvement No. 1 is to prevent the vehicle from activating the vision protection when it is detecting from the front only pulses of not visible light coming from the rear part of another or other vehicles, as would for example in an NVE integrated by vehicles that advance in a single file. Improvement No. 2 has the purpose of allowing, under certain conditions, a vehicle to be able to emit pulses of visible light backwards, in order to cooperate with the vehicles that circulate in the opposite direction extending the area of the road that these vehicles can illuminate. The conditions for a vehicle to be able to emit pulses of visible light backward using the frequency and phase of the rear ICS are:

Condition No. 1: that the vehicle which is going to emit pulses of visible light backwards has in front other vehicles approaching in the opposite direction, so that there are drivers that can benefit from this additional illumination.
Condition No. 2: that the vehicle which is going to emit pulses of visible light backwards does not have behind it on the road to not-synchronized vehicles whose drivers could be harmed by the light emitted backwards by the vehicle ahead. From the block diagram of FIGS. 82A - 82B only those blocks differing from those shown in FIGS. 80A - 80B will be described. The composite block 541A of FIG. 82A, corresponding to the front subsystem, presents the following modifications with respect to block 541 of FIG. 80A. Block 188A is an enlarged version of block 188 of FIG. 80A. The contents of this block 188A are shown in FIG. 76 and have already been described under the heading "Concepts and Characteristics Common to Anti-Dazzling Systems with rear-view protection". The composite block 189A has the same content as the composite block 189 of FIG. 80A plus the addition of the block "Synchronized Visible Light Detection" 557. The contents of this block 557 are equal to the contents of block 190, and its flowchart corresponds to the one shown in FIG. 38, except that the input "IT Light Detection" changes to "IT Visible Light Detection", and that the output "Synchronized light detection" changes to "Synchronized visible light detection". So that said block 557 has as inputs the "IT Visible Light Detection" signal coming from the block 188A and the "RCFZ" signal from the block 187 and has as output the "Synchronized Visible Light Detection" signal, output that will remain at high level while the vehicle is receiving from the front pulses of synchronized visible light. On the "Vision protection" block 195 of FIG. 82A acts, as in FIG. 80, the "Activate intermittent light" signal, with the difference that it does so through the AND gate 560 when the signal "Synchronized visible light detection", which also enters said gate AND 560, is at high level.

The composite block 542A of FIG. 82B, corresponding to the rear subsystem, has the following modifications with respect to block 542 of FIG. 80B: the contents of the block "Rear received light detection" 550A corresponds to that shown schematically in FIG. 15, wherein the light sensor 2 of said FIG. 15 must respond only to visible light if it is desired to prevent vehicles that have just crossed on the road from interacting with each other. The "Not-synchronized light detection" block 552 (which does not have its equivalent in the rear subsystem of FIG. 80B) has the same content as the block 191 of the front subsystem. The AND gate 558 and the inverter 559 represent another extension present in the rear subsystem of FIG. 82A. The way the modifications described affect the behavior of this system is described below. The "IT Visible Light Detection" output of block 188A allows to determine whether the light being received by a vehicle from the front includes visible light or not, this output enters the "Synchronized Visible Light Detection" block 557 whose output determines whether the vehicle is receiving from the front pulses of synchronized visible light.

In order to implement the improvement No. 1, the signals "Synchronized visible light detection" from block 557 and "Activate intermittent light" from block 193, enter the inputs of the AND gate 560, the output of which, when is at high level, allows the "Protect vision" output to be activated within the VPZ zone through the "Vision Protection" block 195. In this way the vision protection will only be activated when the vehicle is using its intermittent light, but in front of vehicles that are also emitting pulses of visible light. This will prevent the vehicle from activating the vision protection when the vehicle is detecting from the front only pulses of not visible light coming from the rear part of another or other vehicles, as would be the case, for example, in an NVE composed of moving vehicles in a single file.

The implementation of improvement No. 2 is described below. The output of block 557 "Synchronized visible light detection" enters one of the inputs of the AND gate 558, while the output of the block 552 "Not synchronized light detection" enters, inverted by the inverter 559, to the other input of said AND gate 558. Thus, the output of said AND gate 558, which we will call "Enable visible light use" and that enters the "Control of the devices for the retro-emission generation" block 556, will be set to high level when the vehicle can emit visible light backwards. This is because the signal "Synchronized visible light detection" at high level indicates that the condition No. 1 is fulfilled, while the signal "Not synchronized light detection" at low level indicates that condition No. 2 is fulfilled, reason why the output of gate AND 558 at high level indicates that both conditions are fulfilled.

It should be noted that in block 550A it is desirable to adapt the activation threshold of the "DZT light detection" signal, that enters the block 552, to ensure that when a vehicle has behind it on the road to not-synchronized vehicles, the "Not-synchronized light detection" signal shall be set at high level before the drivers of said not-synchronized vehicles could be harmed by the visible light emitted backwards by the vehicle ahead.

Formulation of Inter-Vehicular Synchronization Procedure with External Assistance

A further procedure for establishing the synchronization required by the anti-dazzling methods already described is described below. In this procedure, which is referred to as an "Inter-vehicular synchronization procedure with external assistance", the vehicles receive a "Phase adjustment" signal transmitted by one or more transmission sources external to them, using a predetermined communication means, so that in said vehicles, by means of said "Phase adjustment" signal, the possible ILPE phases are reduced to two alternatives: a certain phase and its counter phase. A vehicle that has not yet participated in an NVE, since it started or restarted its traffic along the way, will initially adopt, according to a predetermined criterion, one of those alternative phases as its current phase of ILPE. Once the vehicle has adopted one of these alternative phases as its current phase of ILPE, the "Phase adjustment" signal will serve to readjust this phase, because for technological reasons a vehicle cannot maintain indefinitely a certain phase without it suffering from run-overs that over time would cause the loss of synchronization between the ILPEs of the different vehicles that circulate along the way. It is desirable that the "Phase adjustment" signal be a periodic signal of narrow pulses whose frequency is an exact sub-multiple of the frequency predicted for the ILPE. FIG. 12A shows the waveform of a "Phase adjustment" signal to which it has been given, by way of example only, a period corresponding to twice the period of ILPE. FIGS. 12B - 12C show the possible ILPE waveforms of a vehicle corresponding to the already mentioned alternative phases. By way of reference, one of the alternative phases for the ILPE is obtained in "direct form" from the "Phase adjustment" signal by causing each positive edge of said "Phase adjustment" signal to indicate the start of a positive edge of the ILPE which will be carried out with said alternative phase (see FIGS. 12B and 12A). The ILPE corresponding to the other alternative phase will be 180° out of phase with respect to the previous one (see FIGS. 12C and 12B).

The "Phase adjustment" signal will be transmitted using one or more omni-directional transmission sources attempting to provide coverage all the way so that the vehicles can readjust their ILPE phase at regular intervals of time given by the period of the "Phase adjustment" signal transmitted. The value of the period of said "Phase adjustment" signal shall be less than the time that a vehicle can maintain the correct phase for ILPE. This time will be related to the stability of the oscillators used in vehicles to control the ILPE since the lower the stability of these oscillators the shorter the time elapsed before the ILPE phase undergoes a shift that exceeds the admitted tolerance range. However, it should be noted that the stability of such oscillators should be adequate so that a vehicle can maintain the correct phase of ILPE while driving through some areas of the road where it is difficult to receive the "Phase adjustment" signal, e.g. when crossing a tunnel. If more than one omni-directional transmission source is used, they must be synchronized with each other to transmit a same "Phase adjustment" signal. Such synchronization could be performed, for example, by a satellite signal. If a single source of omni-directional transmission is used, it should provide coverage all the way. An example of this can be the satellite transmission of the "Phase adjustment" signal to vehicles.

Unlike the "External synchronization" and "External synchronization with vehicular assistance" procedures, in this procedure the vehicles do not receive a "Phase selection" signal, therefore such alternative phases will not be pre-assigned to a particular direction of movement with respect to the road, but the assignment of phases is resolved in each not-synchronized NVE by the exchange of information between the vehicles of said not-synchronized NVE. Said exchange of information between vehicles will be carried out, using a predetermined communication means, by the directional transmission/reception of signals by said vehicles. The media to be employed in this procedure are included among those based on the transmission/reception of electronic, magnetic, optical, acoustic signals or a combination thereof. It is to be noted that the most natural and economical means for the exchange of information between vehicles by the front is provided by the own emission of light pulses of each vehicle, if this emission is properly controlled. Among the vehicles of the same not-synchronized NVE, said information exchange is performed to solve, processing said information by a predetermined algorithm, which we will call "Inter-vehicular phase selection algorithm", which of said vehicles will have to change their current ILPE phase by the opposite phase and which not, to reach the synchronization of said NVE.

Said "Inter-vehicular phase selection algorithm" is based on establishing differences between the not-synchronized vehicles of said NVE to give them a hierarchy, so that on the basis of said hierarchy said vehicles compete with each other to make their ILPE phase prevail. Where the winning vehicle of this competition, which will be the vehicle of the highest hierarchy, initiates the synchronization of said NVE by imposing the counter-phase of its current ILPE phase as emission phase for the vehicles that emit in the opposite direction to said winning vehicle, and where the vehicles already synchronized with the winning vehicle collaborate with it by imposing the counter-phase of its current ILPE phase as the emission phase for the vehicles not yet synchronized that emit in the opposite direction to the already synchronized vehicles, thus completing the synchronization of said NVE.

The "information" that a vehicle receives from another vehicle or other vehicles within an NVE allows it to determine, among other things, whether or not it is synchronized with those vehicles and therefore whether, eventually, it should change its phase to be synchronized. In the anti-dazzling methods already described, it has been established that vehicles must interact with one another to get involved in an NVE. In this synchronization procedure, we have added that in the case of a not-synchronized NVE, the vehicles must exchange "information" to achieve the synchronization of said NVE. So vehicles should be able to directionally transmit signals both from the front and from the rear part if they have the capability to provide vision and rear-view protection, and only from the front if vehicles provide only vision protection. In order to explain the characteristics that such exchange of "information" should have in the event that vehicles provide vision and rear-view protection, we will consider as separate entities the front and rear part of the vehicles. The front of a vehicle can interact with the front or rear part of another vehicle, while the rear part of a vehicle does not interact with the rear part of another vehicle (vehicles that have already crossed each other on the road do not interact with each other). Thus, the vehicle must have, in addition to means for omni-directional reception of the "Phase adjustment" signal, means for receiving at the front both the signals that a vehicle can transmit from the front and those that another vehicle can transmit from behind and in addition means for the reception at the rear part the signals that a vehicle can transmit from the front. Make vehicles exchange information backwards also makes it possible to apply this synchronization procedure to an NVE composed of vehicles that all move in the same direction with respect to the road.

Obviously, the ILPE phase of a vehicle is the basic information that another vehicle, exposed to said ILPE, needs to determine whether or not it is synchronized with the "emitter" vehicle of said ILPE. For this reason, it is necessary that the vehicles emit backwards a periodic adjustable phase signal equivalent to said ILPE in terms of being able to pass phase information to the vehicles that come behind, where that backward emission will be controlled by a signal equivalent to said ICS (ICS for the rear end) and will be a not-visible emission (e.g. infrared light), at least as long as said NVE is not synchronized. We will say that both ends of a vehicle are synchronized with each other when the signals that the vehicle can directionally transmit from each end are in counter phase. Thus, when this is met, the phase information that a vehicle will transmit backward will be the same phase information that will transmit forward another vehicle synchronized with it that advances in the opposite direction. From this point of view, we can say that the rear part of a vehicle behaves like the front of another vehicle coming in the opposite direction.

What we have just said and the statement made under the title "Definition of Night Vehicle Encounter", that when the anti-dazzling method with rear view protection is applied a vehicle may be involved from the front in an NVE (or "front involved" in an NVE) and involved from behind in another NVE (or "rear involved" in an NVE), allow us to emphasize something that is implicit in what has been said and is that, in relation to vehicle interaction, each end of the vehicle will have the ability to act separately. Much of the following has been written, however, with reference to the vehicle in general and not to any of its particular ends, unless this were necessary, and was written in this way with the intention of facilitating its comprehension and in that it is applicable both to vehicles that can provide rear-view protection as to those that do not have that capacity, since in the latter case, in which vehicles interact only from the front, it does not make sense to specify for each action of the vehicle the end by which said action is carried out. Therefore, in vehicles that provide rear-view protection and in relation to aspects related to vehicle interaction, the actions attributed to the vehicle must be referred to the extreme(s) involved in those actions. By way of example, if we say, "the losing vehicle of the competition will change its current emission phase" it must be interpreted that: if the front end of the vehicle is the one that loses the competition, that front end will change its current phase of ILPE, or if the rear end of the vehicle is losing the competition, that rear end will change the current phase of the signal equivalent to that ILPE, or if both ends of the vehicle are losing the competition, both ends will change its phase. Other aspects and characteristics of the vehicle interaction valid for this synchronization procedure will be treated at the end of the description of the same.

The inter-vehicular phase selection algorithm is described below, which, in order to give a hierarchy to the vehicles of a not-synchronized NVE for obtaining its synchronization, applies two strategies in the following order:
First strategy: when a vehicle determines that it forms part of a not-synchronized NVE it obtains a hierarchy that will be determined by the conformation of the NVE. This means that each vehicle interprets, depending on the information it has and exchanges with another vehicle or other vehicles, what its hierarchy is within said NVE and based on it competes with the other vehicles to determine whether or not to change its current emission phase. When the conformation of said NVE is such that it does not allow to establish different hierarchies between the vehicles, a second strategy will be applied in which each not-synchronized vehicle will independently generate a second hierarchy to compete.

Second strategy: If after a certain time interval since the start of the inter-vehicular phase selection algorithm (interval that will be given by the time required by the application of the first strategy) the vehicles are still interacting with not-synchronized vehicles, then they will apply a second strategy to achieve the synchronization of the NVE. This second strategy will require a hierarchy of vehicles that does not depend on how the NVE is formed.

Next it will be detailed, in function of the type of not synchronized NVE that the vehicles integrate, when and how each one of this strategies is applied: The implementation of the first strategy is sufficient to obtain the synchronization of a not-synchronized NVE when it has been formed from a synchronized NVE by the incorporation of one or more not-synchronized vehicles. In this case the vehicles that will have the highest hierarchy will be those coming from the synchronized NVE and the "information" that they receive and that allows them to identify this situation is given by the synchronized ILPE and/or by the signal equivalent to said synchronized ILPE (if said information comes from the rear part of a vehicle) that said vehicles are detecting since before said not-synchronized NVE was formed. When the vehicles have already gotten a hierarchy they start a competition, seeking to preserve their current emission phase, which is developed as follows: the smaller the hierarchy of a vehicle the less time will be that said vehicle late, within a preset timing, in change phase in response to not-synchronized emissions from other vehicles of said NVE. In this way the vehicle with the highest hierarchy within this NVE will not have to change phase to synchronize with the rest and will be the winner of the competition. By making not-synchronized vehicles which do not come from a synchronized NVE be those that should change phase, it is avoided to have to spread a phase change among the vehicles that do come from said synchronized NVE. Possible start times for not-synchronized vehicles to start said competition could be obtained directly from the "Phase adjustment" signal. However, it is desirable that said start times be indicated by an internally generated signal in each vehicle which we will call "Starting signal" and use the "Phase adjustment" signal to synchronize said "Starting signal" in all vehicles. This signal should then be periodic, phase adjustable and should have a frequency which, like ILPE frequency, be an exact multiple of the frequency of the "Phase adjustment" signal, but obviously, several times less than the frequency of said ILPE.

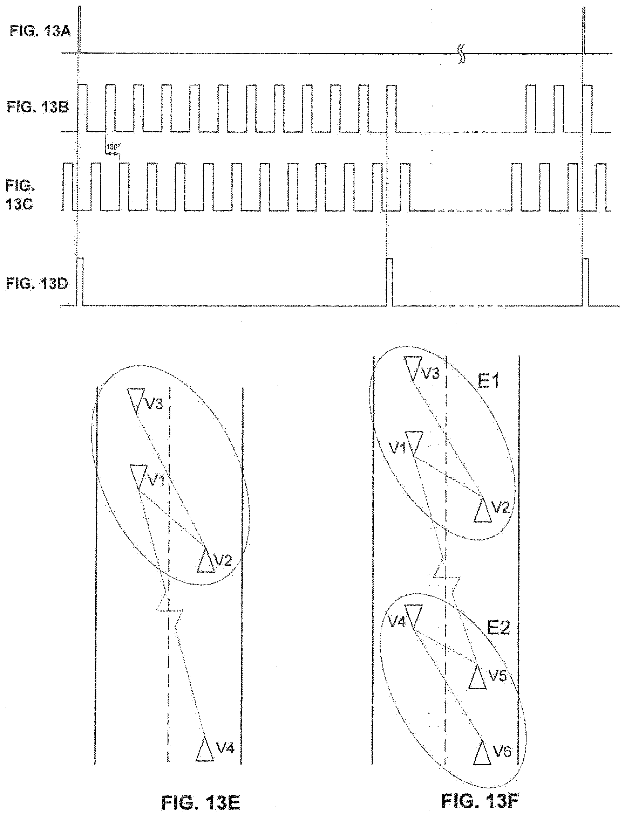

In the above way, the vehicles will have the possible start times to start the competition, even in those areas of the road where it is difficult to receive the "Phase adjustment" signal. The waveform of a "Phase adjustment" signal whose period is an exact multiple of the ILPE period is shown in FIG. 13A. FIG. 13B shows the ILPE waveform whose phase corresponds to that obtained directly from the "Phase adjustment" signal. FIG. 13C shows the ILPE waveform whose phase is produced by phase-shifting by 180° the signal of FIG. 13B. FIG. 13D shows the "Starting" signal waveform whose period is an exact multiple of the ILPE period. The stability of the oscillators used to generate in the vehicles the "Starting" signal will determine the validity time of said signal from the moment a vehicle stops receiving the "Phase adjustment" signal. However, before the "Starting" signal phase is unsuitable for its purpose, it will be unacceptable the phase-shift which, for the same reason, would have the ILPE phase of said vehicle. In a "particular case" such as this, the inter-vehicular phase selection algorithm will only allow the vehicle to participate in the synchronization of an NVE in a "passive" way, readjusting its phase according to the phase with which emit the other vehicles of said NVE, as it will be explained later. In the scheme of FIG. 13E, a not-synchronized NVE generated by the incorporation of V4 to the synchronized NVE that was formed by vehicles V1, V2 and V3, which are shown encircled in said figure, is shown by way of example. In this example, vehicles can only be involved in an NVE by vehicles moving in the opposite direction (for simplicity it has been assumed that these vehicles do not provide rear-vision protection). V4 is interacting directly only with V1. This is because it has been assumed that V4 is "out of reach" of V3 and because V4 cannot interact directly with V2 (since in this case vehicles do not provide rearview protection). The broken dashed line drawn between V4 and V1 indicates that the ILPEs of said vehicles are not synchronized. Analyzing this example we may see that if it were the vehicle V1 the one which changed of phase instead of the vehicle V4, this phase change should be propagated to V2 and then through V2 to V3 so that all the vehicles are left synchronized. By avoiding this "chain" propagation the synchronization of the entire NVE can be completed in less time and it is further achieved that the vehicles more distant from each other, represented in the example by V1 and V4, are the only ones which exchange not-synchronized light during the short synchronization time. The application of the second strategy is necessary when a not-synchronized NVE has been formed from the encounter of two synchronized NVEs. This not-synchronized NVE will be composed of those not-synchronized vehicles coming from both synchronized NVEs that have approached enough to interact with each other. In the scheme of FIG. 13F is shown an example of a not-synchronized NVE formed from the encounter of two synchronized NVEs E1 and E2, which in the figure appear encircled. It has been assumed, as in the example of FIG. 13E, that vehicles can only be involved in an NVE by vehicles moving in the opposite direction. We will assume that V1 and V5 are two vehicles not synchronized with each other, coming from E1 and E2 respectively, which have approached enough to interact with each other. When this second strategy is applied, the not-synchronized vehicles V1 and V5, in the example, will independently generate a second hierarchy to compete that will not depend on how said NVE is formed. Based on this hierarchy, the vehicles will agree on which will change phase and which will not. In this procedure, two alternatives are proposed to carry out this second strategy, which we will call "Synchronization with Pseudorandom Hierarchy" and "Synchronization with hierarchy given by magnetic course", alternatives that will be described later. In the type of NVE we are describing, after said not-synchronized vehicles (V1 and V5 in the example) have applied the second strategy and agreed which one or which of them will have to change phase, the propagation of said phase change between the vehicles coming from the same synchronized NVE as that or those vehicles that have resigned their phase should begin. In the propagation of a phase change we will identify as "propagator" the vehicle (s) that just changed its phase and as a "successor" to the vehicle (s) to which the next turn corresponds to change phase.

It should be clarified that the "successor" vehicles, among which this phase change should be propagated, will receive "information" from the propagator vehicle (s) which will cause them to adopt a minimum hierarchy and apply the first strategy to synchronize. It is worth mentioning that before a vehicle becomes a "propagator", its "successor" has been receiving synchronized light, or its equivalent signal, so if it does not receive said "information" from the propagator vehicle (s) it would maintain the "hierarchy" confers to belong to a synchronized NVE and would not change its phase without using that hierarchy to compete (which could put an end to that propagation). For this reason, it is necessary that the propagator vehicle be identified as such in the presence of the "successor" vehicle, for example, by altering in a preset manner its regular emission of pulses. One way of doing this is to emit, for a short time, the ILPE or its equivalent signal, as appropriate, with a phase shift (for example 90°) that allows the "successor" to differentiate said emission from either of the two alternatives phases. When the successor vehicle (s) receive this "information", they will change phase and become propagators to communicate to their successors, if any, that they must in turn change phase, and so on will propagate the phase change until the synchronization of the NVE is completed. Returning to the example of FIG. 13F, we will show the dynamics of the propagation of a phase change: we will assume that V1, when applying the second strategy, is the one that has changed phase to synchronize with V5. Therefore V1, which is now no longer synchronized with V2, becomes a propagator vehicle so that the successor V2, applying the first strategy, changes phase to synchronize with V1. Done this, V2 now becomes in propagator vehicle and V3 in successor vehicle, which when changes phase completes the synchronization. As can be seen, with the exception of the vehicles that initiate the synchronization (V1 and V5 in the example), which apply the second strategy, the rest of the not-synchronized vehicles will change phase when applying the first strategy, since they will do so in function of the "information" they receive from other vehicles.

In this type of non-synchronized NVEs, drivers of vehicles that propagate a phase change could be exposed to intense not-synchronized light for a brief instant of time. This can be avoided by "extending" the vision/rear-view protection during said instant of time so that said drivers are not affected.

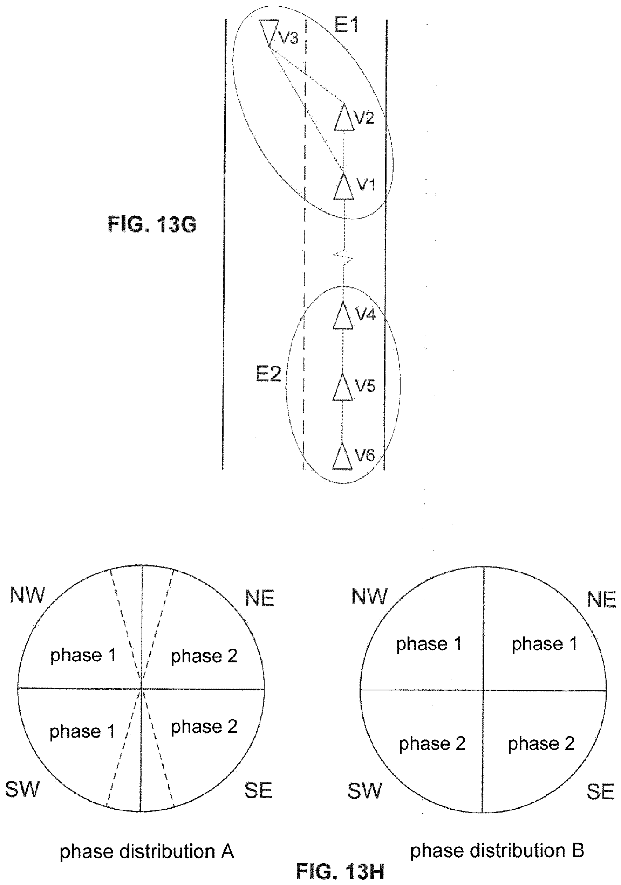

The schematic of FIG.13G is another example of not-synchronized NVE that has been formed from the encounter of two synchronized NVEs (E1 and E2) but integrated by vehicles that can be involved in an NVE both from the front and from behind, as it corresponds to vehicles that provide protection of vision and rear-vision. In this example, it has been assumed that V1 and V4 are vehicles not-synchronized with each other, coming from E1 and E2 respectively, which are close enough to interact with each other. Note that if V4 imposes its phase on V1, the propagation of the phase change, between the vehicles of E1, will be initiated from the front of V1, instead if V1 imposes its phase on V4, the propagation of the phase change, between the vehicles of E2 will be initiated from the rear part of V4.

The application of the second strategy is also necessary when in a not-synchronized NVE neither of the vehicles are detecting synchronized light, or its equivalent signal, at the moment of starting the execution of the inter-vehicular phase selection algorithm, that is when none of them come from a synchronized NVE (this case has some exceptions that will be explained next as "particular cases").

Particular cases:

The application of the first strategy is sufficient to cause a vehicle to change phase when said vehicle participates in a not-synchronized NVE in a "passive" form, since it has stopped receiving for a preset maximum time the phase adjustment signal (as this could cause an inadmissible shift in the ILPE phase of said vehicle). Said vehicle assumes that it is the cause that the NVE is not synchronized and readjusts its phase according to the phase with which the other vehicles emit.

In this case, the information that the vehicle will use to interpret its situation within said NVE could be given by a timer that is triggered each time that said vehicle receives the "Phase adjustment" signal and that if it were extinguished it would indicate that its phase is invalid.

The application of the first strategy is also sufficient to cause a vehicle to change phase when that vehicle participates in a not-synchronized NVE having started or restarted its nocturnal displacement by a certain path, that is to say, when it has not yet synchronized its lights with those of no other vehicle traveling in the opposite direction. When a vehicle in this condition participates in a non-synchronized NVE, it will assume, as long as it is interacting with a vehicle that has a valid phase, that said NVE is formed by vehicles with a higher hierarchy than its own and therefore will change phase. In this case, the information that the vehicle will use is given by: a "flag" that indicates it as a "Beginner" vehicle on the road and by the not-synchronized emission coming from another vehicle, whose phase must correspond to one of the two alternatives phases of ILPE for this "Beginner" vehicle to change its phase. Thereby preventing said vehicle from changing phase in front of a vehicle with an invalid phase. Assigning this "Beginner" condition to vehicles that start or restart their nocturnal displacement along the road tends to reach, through successive NVEs, a unique phases assignment for the entire road. The latter is not necessary to avoid dazzling but would gradually reduce the occurrence of not-synchronized NVEs. A vehicle with the status of "Beginner" will initially adopt either of the two alternative phases for the emission of intermittent light. The "Beginner" flag will be deactivated when the vehicle receives from the front synchronized intermittent light. We have described when and how the implementation of the first strategy can produce the synchronization of an NVE, and when it becomes necessary to implement the second strategy. The following two alternatives are proposed to implement this second strategy:

Synchronization with Pseudorandom Hierarchy

The first step is to make that all vehicles applying the second strategy start a waiting time before exchanging information. The duration of said waiting time will be given by a value generated in each vehicle in pseudo-random form, which we will call "inverse score". The first vehicle that completes its waiting time will be the one which gets the highest hierarchy and, as a "winning" vehicle, the one which initiates the exchange of information with the other vehicles by emitting a signal, which we will call "success signal", which will end the competition and which will be immediately replicated by all the vehicles involved in this competition, if they receive this "success signal" either in a direct or replicated way, so that all of them abandon their respective waiting times together with the "winning" vehicle. The maximum value of "inverse score" that a vehicle can generate and the waiting time that corresponds to that value must be defined taking into account that the increase in the range for said values of "inverse score" decreases the probability that a tie occur, and that by reducing the maximum waiting time accelerates the synchronization process. Of course, that both are not incompatible within certain limits. Anyway, if a tie occurs between two or more vehicles, the competition will be repeated, which includes the generation in each vehicle of a new pseudorandom "inverse score" value and therefore a new waiting time during which the information exchange is interrupted with other vehicles. It should be clarified that the latter would not represent a problem, even if said information exchange between vehicles was performed by altering in a preset way its regular emissions of light pulses, since these waiting times are very small and also because suspend the exchange of information between vehicles does not necessarily imply suspending in them the emission of intermittent light. If the exchange of information between vehicles is carried out by altering the regular emission of light pulses, the technique to be used for a vehicle to transmit or retransmit the "success signal" could be the emission of a light pulse whose phase, with respect to the ICS of the vehicle, allow other vehicles to distinguish said pulse of light from a regular pulse of ILPE or equivalent signal. One way to do this is to make the vehicles suspend the counting of said waiting time for a small gap of time around the positive and negative edges of the ICS during the competition (gap that will be defined by the tolerance margins for the synchronization already described), since the vehicles will emit this pulse of light as a "success signal" immediately after the end of their respective waiting times.

The winning vehicle, after transmitting the "success signal" that ends the competition, must transmit additional information allowing the rest of the vehicles to check whether or not they have the correct phase with respect to that of the winning vehicle. In this way each vehicle will be able to determine whether or not to change phase to achieve NVE synchronization. If it is chosen to perform the exchange of information between vehicles by altering the regular emission of light pulses, the technique to be employed in order for the winning vehicle to be able to transmit said additional information is to make said winning vehicle to be able to emit for a short period of time pulses of the ILPE or the equivalent signal, as appropriate, with a predetermined phase shift, for example of 90°. So that vehicles that detect a phase shift equal to the predetermined between the emission of the winning vehicle and their own one, must change of phase to synchronize. While those vehicles that between the emission of the winning vehicle and their own one detect a phase shift of 180° greater than the predetermined one will preserve its phase. It remains to say that each vehicle that checks that it has the correct phase (whether or not it has had to change phase) will also be enabled to emit with said predetermined phase shift, in order to act as the winning vehicle to cooperate with it in the transmission of said additional information. It should be noted that we use the term "enabled to emit with phase shift" because said phase shift is conditioned upon the vehicle be interacting with another vehicle with which it is not yet synchronized. In other words, the phase shift will occur as long as the vehicle is receiving pulses of light (or pulses of equivalent signal) not synchronized. The advantage of applying this technique is that it allows transmitting information using the vehicle's intermittent light even when other vehicles are emitting with their regular phase (which will happen, for example, when there are "successor" vehicles or vehicles that are not yet transmitting with phase shift).

Synchronization with hierarchy given by magnetic course:
We will now describe how to apply the "Synchronization with hierarchy given by magnetic course" as the second synchronization strategy. When applying this second strategy, each vehicle will adopt according to the magnetic course that corresponds to it at that moment one of the two "alternative" phases as its current phase of ILPE and a hierarchy to "defend" that phase. The 360° of the compass will be divided into four sectors or quadrants and the vehicle must have the ability to determine which quadrant corresponds to it depending on its magnetic direction. To the opposite quadrants will be assigned opposite "alternative" phases and at two of these opposite quadrants, for example NW and SE, will be assigned high hierarchy, while to the other two will be assigned low hierarchy. Two predefined distributions, which comply with the above, will be used to specify the phase and hierarchy to be assigned to each quadrant. We will call these distributions, "Predetermined phases distribution A" and "Predetermined phases distribution B". The "Predetermined phases distribution B" is obtained from the "Predetermined phases distribution A" by inverting the phase assignment in the low hierarchy quadrants, while the high hierarchy quadrants have the same phase assignment in both distributions.

Each vehicle will initially adopt the hierarchy and the phase corresponding to its quadrant according to the "Predetermined phases distribution A". If said "Predetermined phases distribution A" does not lead to the synchronization of the NVE, then each vehicle will adopt the phase corresponding to its quadrant according to the "Predetermined phases distribution B", which will lead to the synchronization of said NVE.

FIG. 13H shows, by way of example, a "Predetermined phases distribution A" and the corresponding "Predetermined phases distribution B". To the NW and SE quadrants have been assigned high hierarchies in both predetermined distributions. We will identify as "phase 1" the alternative phase that is obtained in "direct form" from the "Phase adjustment" signal, and as "phase 2" to the opposite alternative phase. As can be seen in said FIG.13H, in the "Predetermined phases distribution A", the "phase 1" has been assigned to the quadrants NW and SW and "phase 2" to the quadrants NE and SE, whereas in the "Predetermined phases distribution B" it has been assigned the "phase 1" to the NW and NE quadrants and "phase 2" to the SW and SE quadrants. Note that in both phases distributions Λ and B it has been assigned opposite "alternative phases" to opposite quadrants and further that the "Predetermined phases distribution B" is obtained from the "Predetermined phases distribution A" by inverting the assignment of phases in the quadrants NE and SW, while the NW and SE quadrants retain the same phase assignment because they have been assigned high hierarchy.

We will now explain, using the predetermined phases distributions A and B of the example of FIG.13H, why it is necessary to have two predetermined phases distributions and when vehicles must use both distributions to achieve synchronization. In the predetermined phases distribution A of FIG.13H, two cones joined by the vertex are drawn with a dashed line representing what we will call "risk zone" for the predetermined phases distribution A in the sense that it is not certain that a group of vehicles having their magnetic directions there could synchronize with each other using said distribution. For example, within this risk zone there may be some vehicles in the NW quadrant and others in the NE quadrant traveling in the same direction with respect to the road and having opposite phases (when they should have the same phase). Similarly, there could be vehicles in the NW and SW quadrants traveling in opposite directions and having the same phase (when they should have opposite phases). The case presented, which is one of the most unfavorable that can be presented, is solved by making the vehicles with magnetic directions in the NE and SW quadrants, which are those of lower hierarchy, change phase adopting the predetermined phases distribution B and thus achieving the synchronization of the NVE.

We will now describe a way to apply the "Synchronization with hierarchy given by magnetic course" as the second synchronization strategy when it is opted to perform exchange of information between vehicles by altering the regular emission of the light pulses. Each vehicle will initially adopt the hierarchy and phase corresponding to its quadrant according to the "Predetermined phases distribution A" and will be enabled to emit pulses of intermittent light (or pulses of the equivalent signal as appropriate) with a predetermined phase shift (for example of 90°), shift that will be carried out as long as the vehicle is receiving pulses of light (or pulses of the equivalent signal) not synchronized, which will occur if said "Predetermined phases distribution A" did not lead to the synchronization of the NVE. Thus, if a vehicle receives one or more of said pulses with said phase shift with respect to its own phase and has low hierarchy it will change phase to synchronize with the rest adopting the phase that corresponds to its quadrant according to the "Predetermined phases distribution B", which will lead to the synchronization of said NVE.

It should be noted that dividing the 360° of the compass into four sectors is sufficient, since vehicles traveling in opposite directions with respect to the road will only very rarely have magnetic directions within the same quadrant. In the same way, only very rarely do the vehicles traveling in the same direction with respect to the road have magnetic directions in opposite quadrants (both situations could occur in closed curves with an angle of less than 90°, situations in which anyway drivers would not be dazzled), so assigning vehicles a same phase and hierarchy within each quadrant is sufficient.

When a vehicle has the capacity to interact with others forward as well as backward, the phase and hierarchy it will adopt at each of its ends are those corresponding to the magnetic direction in which each of those ends is interacting with other vehicles. Thus, if both ends were involved in a synchronization process through magnetic course both ends would adopt opposite phases but with the same hierarchy, which is adequate since anyone of said ends, in the case of prevailing in said synchronization process, would impose the same phases distribution on the rest of the vehicles. Of course, it will be enough to provide means for determining the magnetic direction of the vehicle and to assign that direction to the front end of the vehicle and the opposite magnetic direction to the rear end thereof.

As we can see the "Synchronization with hierarchy given by magnetic course" can be a very efficient alternative to "Synchronization with Pseudo-random Hierarchy" to apply in the second synchronization strategy.

To continue we describe, for the case in that the vehicles provide rear view protection, other characteristics and consequences of vehicular interaction that can be inferred from what has already been said:
A vehicle having both ends synchronized with each other may lose this condition when it participates in a not-synchronized NVE having only one of its ends involved in the NVE. In this situation is for example V4 of FIG. 13E which, in this case, must resign its front end phase in front of the vehicles that come from the synchronized NVE shown in the encirclement. On the other hand,-a vehicle that has both ends involved in different not-synchronized NVEs would be in the same situation.

A vehicle that loses the synchronization of its ends could recover it immediately if one of its ends is "free", that is to say not involved in any NVE, since that end can change phase following the other end ("intra-vehicular" phase propagation). If the vehicle does not have a free end said synchronization will be delayed until the moment one of the ends of the vehicle is "free". This is done in this way so that one end of the vehicle does not interfere or disturb the NVE in which the other end is involved.

From the foregoing, it follows that when the conflicting join of two synchronized NVEs occur, there will not be "intra-vehicular" phase propagation, i.e. that a phase change will have to go from one end to the other of a vehicle indirectly through of another vehicle, using the "propagator/successor" roles. This is done in order not to extend the propagation of a phase change beyond what is necessary.

Usually if a vehicle has both ends synchronized with each other and only one of these ends is involved in a synchronized NVE, when the other end, which is free, is involved in a non-synchronized NVE will participate in it with the same hierarchy with which it would do the first, that is to say with the hierarchy that grants to belong to a synchronized NVE. In this way both ends of the vehicle acquire such hierarchy to try to maintain synchronized. Otherwise, even an "isolated" vehicle could prevail in said not-synchronized NVE in front of said free end, which would generate in the "limits" of the synchronized NVE another synchronized NVE but in conflict with the previous one, and later when both NVEs begin to interact with each other there would be a propagation of a phase change that can be avoided by making said "isolated" vehicle to resign its phase and be incorporated into a single synchronized NVE. A specific example has not been included for the presented situation, but it can be observed in FIG. 13G making abstraction of V5 and V6, that is to say, considering V4 as if it were an isolated vehicle.

If we chose to make the vehicles to transmit forward the signals necessary to achieve the synchronization of said NVE using the vehicle's own ILPE, then it would be convenient for the vehicles to emit backwards the signal equivalent to said ILPE using also pulses of light, and we will call it "rear ILPE", where said rear ILPE will be controlled by said ICS for the rear end. If the rear ILPE is used solely for the purpose of transmitting information, then such emission could be made using light in the not-visible spectrum (e.g., infrared light). An additional utility might be given to the rear ILPE as described below: within a synchronized NVE, vehicles moving in a certain direction with respect to the road could cooperate with those traveling in the opposite direction by extending the area of the road that these vehicles can illuminate. For this, obviously, said rear ILPE should be performed using visible light. The pulses of visible light of said rear ILPE will not disturb the drivers of vehicles driving behind as these drivers will have the vision protected when said pulses of light become present.

Inter-Vehicular Synchronized Anti-Dazzling System with External Assistance

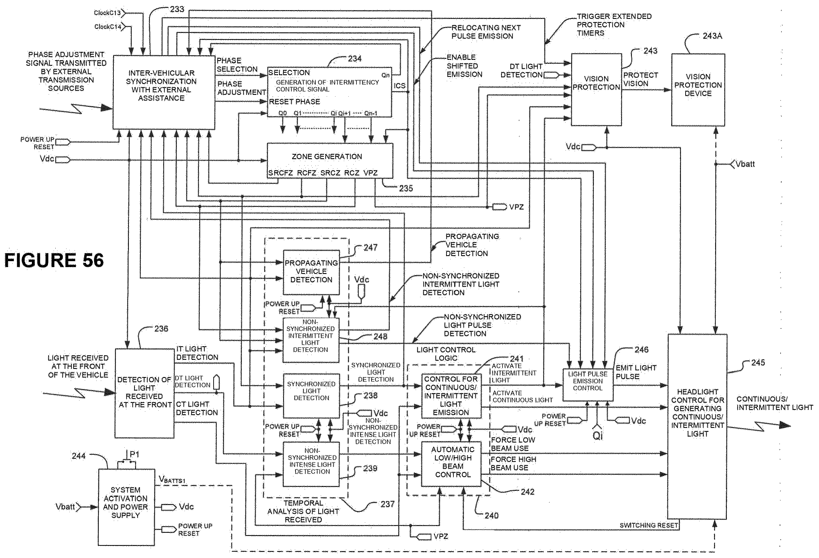

FIG. 56 shows the block diagram of the "Inter-Vehicular Synchronized Anti-Dazzling System with External Assistance" which is based on the "Anti-dazzling Method" already described and uses the "Inter-vehicular synchronization procedure with external assistance".

The blocks 234, 236, 238, 239, 240, 241, 242, 244 and 245 of said FIG. 56 correspond one by one in name, function and content with the blocks: 186, 188, 190, 191, 192, 193, 194, 196 and 197 of FIG. 51 and thus also with the blocks 61, 65, 67, 68, 109, 110, 111, 171 and 172 of FIG. 34 corresponding to the externally synchronized anti-dazzling systems described. To be more specific, it should be noted that the operation of the block "Intermittent control signal generation" 234 was explained in describing the characteristics common to all systems (see FIG. 20). The same is true of the block "Front received light detection" 236 whose operation was described under the heading "Formation of an NVE" (see FIG. 15). The description of the block "System activation and power supply" 244 is also included within the characteristics common to all systems (see FIG. 29). The same applies to the block "Headlights control for the generation of continuous/intermittent light" 245 (described in relation to FIGS. 32 - 33). The operation of the blocks "Synchronized Light Detection" 238, "Not synchronized intense light detection" 239, "Continuous/Intermittent Light Emission Control" 241 and "High beam/low beam automatic control" 242 was explained in relation to the operating diagrams of FIGS. 38, 40, 43 and 45, respectively. The blocks "Zones generation" 235, "Vision protection" 243 and "Light pulses emission control" 246 have the same function as their homonyms of FIGS. 51 and 34, but their contents are not identical to those, so they will be described later. The blocks "Propagator vehicle detection" 247 and "Not-synchronized intermittent light detection" 248 have not been previously described and will be described as sub-blocks of the block "Temporal analysis of received light" 237. Finally, the synchronization block will be described which in this system is called "Inter-vehicular synchronization with external assistance" 233. Obviously, those signals indicated in FIG. 56 that do not appear in FIG. 51 are those generated by the added blocks and by the blocks that have variations with respect to the FIG. 51 and will be described, next to said blocks, as follows:

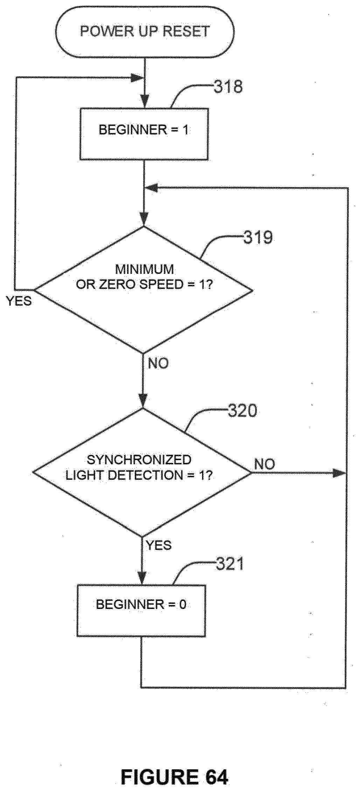

In this system, the Zones Generation block 235 produces two zone signals that have not been previously defined and are: "Displaced Restricted Conflict Zone" (DRCZ) and "Displaced Restricted Conflict Free Zone" (DRCFZ) and produces also the RCZ, RCFZ and VPZ signals whose definitions have already been given (see description of the homonymous blocks 187 of FIG. 51 and 64 of FIG.34). The DRCZ and DRCFZ signals will be used in the vehicle to determine when and under what circumstances another vehicle is transmitting information by applying a certain phase shift to its regular ILPE. If a vehicle is phase shifting its ILPE, the positive edges of said ILPE will be detected by another vehicle within the DRCFZ if both vehicles are synchronized with each other, instead, they will be detected within the DRCZ if those facing vehicles have a same ICS phase (vehicles not synchronized with each other).

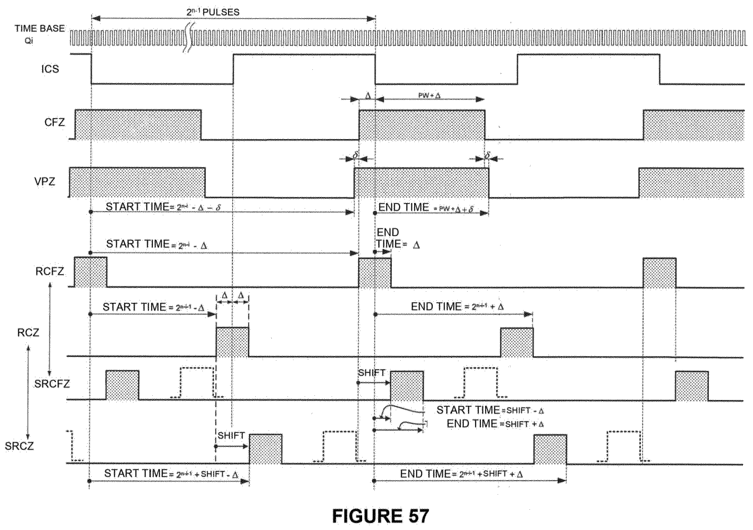

Although in the "Inter-vehicular synchronization procedure with external assistance" a phase shift of 90° for the ILPE were mentioned when explaining said transmission of information, said phase shift could be different from 90° insofar as it has a predetermined value that makes it possible to differentiate said phase shifted ILPE from another not shifted. FIG. 57 shows, by way of example, the zone signals DRCFZ and DRCZ together with the other signals produced by the "Zones generation" block 235. Both zones have been drawn in two different positions corresponding to the extreme shifts which could be chosen as predetermined between 0° and 180°. Note that if the shift in the alternative drawn with a solid line were reduced or if the shift in the alternative drawn with dashed line were increased, it could not be safely distinguished between pulses received with and without said shift (since there would be overlaps with the corresponding non-shifted areas).

The following expressions are used to define the start and end times of the DRCFZ and DRCZ zone signals:

$$\text{Start time of DRCFZ} = \text{DISP} - \Delta$$

$$\text{End time of DRCFZ} = \text{DISP} + \Delta$$

$$\text{Start time of DRCZ} = 2^{n-i-1} - \Delta + \text{DISP}$$

$$\text{End time of DRCZ} = 2^{n-i-1} + \Delta + \text{DISP}$$

where:

$2^{n-i}$: is the duration of the period T of the ICS measured in periods of an output Qi of the counter/divider 11 (see FIG. 20). The period of said output Qi being the time base chosen to define said start and end times.

$\Delta$: is the tolerance margin already described when defining the conflict-free zone (see $\Delta t$ in FIG.23A - 23G) measured at periods of said output Qi of counter/divider 11.

DISP: it is the displacement that a vehicle will apply to its ILPE, to transmit information to another vehicle, measured in periods of said output Qi (to measure said phase shift as an angle, it must be taken into account that $2^{n-i}$ periods of Qi correspond to 360°).

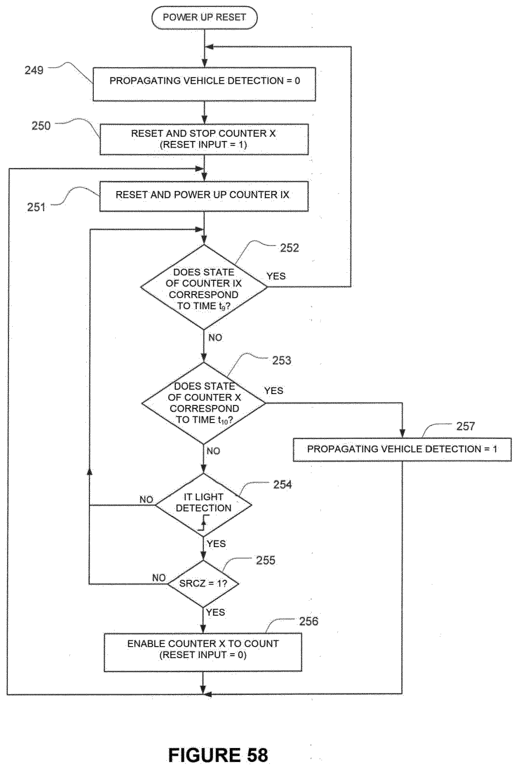

FIG. 58 shows the flowchart of the block "Propagator vehicle detection" 247. This block allows determining when the vehicle is "successor" in the propagation of a phase change (see propagator-successor relation in the "Inter-vehicular synchronization procedure with external assistance"). When this block 247 determines that the vehicle is detecting pulses of light whose positive edges fall within the DRCZ it will activate the "Propagator vehicle detection" output to indicate to the "Synchronization" block of the system that it must invert the ICS phase and propagate the change phase as will be opportunely described. Activation of the "Propagator vehicle detection" output requires the temporary analysis of the "IT light detection" signal in relation to the DRCZ signal and it is performed by the "tolerant verification" algorithm already used in the previously described systems. The algorithm verifies for a time interval that we will call "$t_{10}$" if the signal "IT light detection" is giving positive edges inside the DRCZ with certain regularity characteristic of the intermittent light. Said time "tio" will have a duration of several periods T and will be controlled by the "Counter X" which, upon reaching the value corresponding to the time "tio", will cause the activation of the "Propagator vehicle detection" output. On the other hand, said regularity characteristic of the intermittent light will be controlled by another counter which we will call "counter IX", which will be reset every time the "IT light detection" signal has a positive edge within the DRCZ. If said counter reaches the value corresponding to a time "$t_9$", the counter X will be reset, thus avoiding reaching the value corresponding to the time "tio". Obviously, the minimum value that can be given to "$t_9$" is T. Assigning a higher value (e.g. 2T or greater) makes this algorithm "tolerant".

We now return to the description of the flowchart of FIG. 58. A "Power up reset" pulse causes: the zeroing of the "Propagator vehicle detection" output at step 249, resetting and stopping the counter X in step 250 and resetting and starting counter IX at step 251. When the signal "IT light detection" provide a positive edge within the DRCZ the sequence will include steps 254, 255, 256, 251, ... leaving the counter X enabled to count in step 256, and zeroing the counter IX in step 251. If said sequence is repeated, without the counter IX reaching the value corresponding to the time "$t_9$", when the counter X reaches the value corresponding to the time "tio", in step 253, the "propagator vehicle detection" output will be activated in step 257 and then the counter IX will be set to zero in step 251. On the other hand, when the vehicle stops detecting pulses of light whose positive edges fall within the DRCZ the counter IX will reach the value corresponding to the time "$t_9$" and the sequence will pass from the decision point 252 to step 249 with which the "Propagator vehicle detection" output will be deactivated and counters X and IX handled the same as when giving a power up reset pulse - steps 250 and 251-. "tio" must be greater than "$t_9$" since "tio" is the time during which it is "verified" that light pulses arrive to the zone DRCZ with a regularity conditioned by "$t_9$".

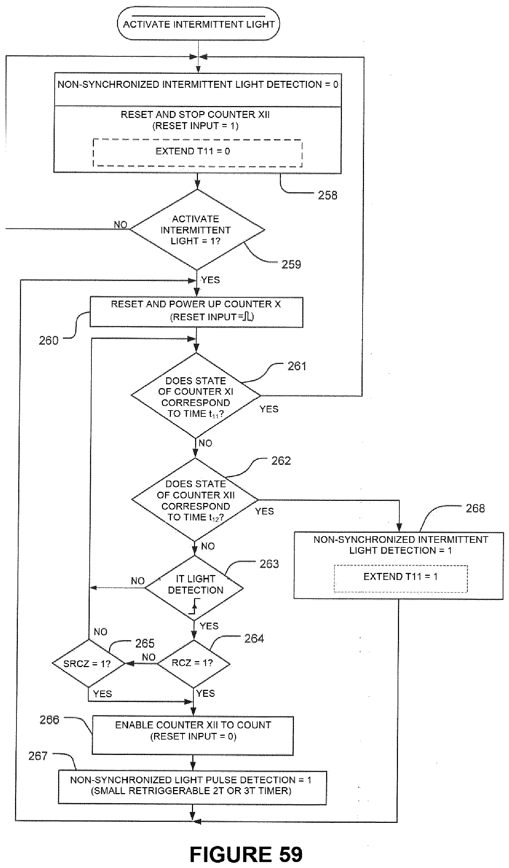

The "Not-Synchronized Intermittent Light Detection" block 248 has the primary function of determining when the vehicle has been involved in a not-synchronized NVE. When this happens the output "Not-synchronized intermittent light detection" will be activated and with this the "Inter-vehicular synchronization with external assistance" block 233 will also be activated as will be described later. FIG. 59 shows the flowchart of said block 248. When the "Activate intermittent light" signal from block 241 is set to low level, the sequence starts at step 258 and is maintained in said step 258 until the signal "Activate intermittent light" is set to high level (see step 259). Since in said step 258 the "Not-synchronized intermittent light detection" output is set to low level, this "Not- synchronized intermittent light detection" block 248 will remain inactive while the vehicle does not participate in an NVE. To activate the output "Not-synchronized intermittent light detection", it is necessary to carry out the temporal analysis of the "IT light detection" signal in relation to the "RCZ" and "DRCZ" zone signals. This is because the vehicle may be receiving not-synchronized light with or without phase shift depending on its situation within a not-synchronized NVE. This temporal analysis will be performed using the "tolerant verification" algorithm already used. When the signal "IT light detection" provides a positive edge within the RCZ or within the DRCZ the sequence will advance through the steps ... 263, 264, 266, 267, 260 ..., or by the steps ... 263, 264, 265, 266, 267, 260 ..., as appropriate.

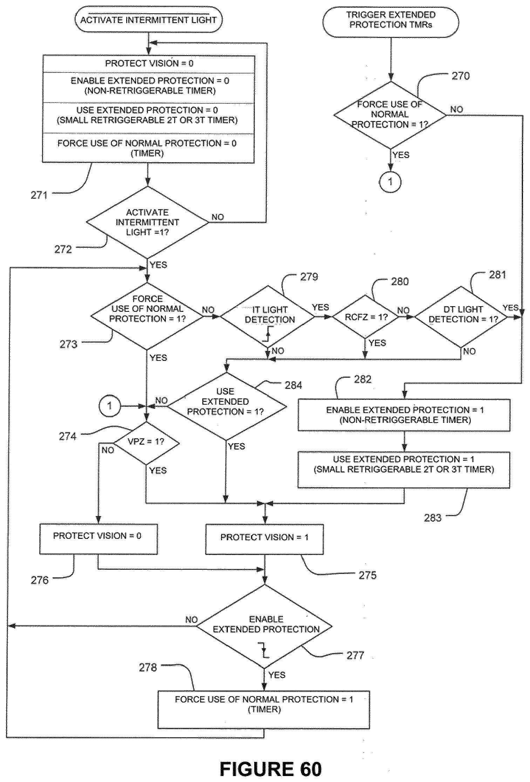

Either of these two sequences enables the "counter XII" to count at step 266, activates the retriggerable timer "Not synchronized light pulse detection" at step 267 (this timer is of short duration, 2 or 3T, and is used in block 246) and zeroes the counter XI in step 260. If any of these sequences is repeated, without the counter XI reaching the value corresponding to the time "$t_{11}$", the counter XII will reach the value corresponding to the time "$t_{12}$" at step 262, the "Not-synchronized intermittent light detection" output will be activated at step 268 and then counter XI will be set to zero at step 260. On the other hand, when the vehicle stops detecting pulses of light whose positive edges fall in the RCZ or DRCZ zones the counter XI will reach the value corresponding to the time "$t_{11}$" and the sequence will pass from the decision point 261 to the step 258 whereby the "Not-synchronized intermittent light detection" output will be deactivated and the counter XII treated as indicated by step 258. The signal "extend $t_{11}$" is shown in the diagram framed in broken line indicating that its use is optional. This signal "extend $t_{11}$" is activated and deactivated together with the "Not-synchronized intermittent light detection" output signal in steps 268 and 258 respectively, and will be used to extend the time which the "Not-synchronized intermittent light detection" output signal takes to be deactivated (for example using said signal to give value to one or more of the bits that make up the value corresponding to the time "$t_{11}$"). However, when the "Not-synchronized intermittent light detection" output is inactive, "$t_{11}$" will be less than "$t_{12}$" since "$t_{12}$" is the time during which it is "verified" that light pulses are being received, either in the RCZ or in the DRCZ, with a regularity conditioned by "$t_{11}$". The flowchart of the "Vision protection" block 243 of FIG. 56 is shown in FIG. 60. Remember that while the "Protect vision" output of said block 243 is maintained at high level the "Vision Protection device" 243A shall prevent or attenuate the passage of light. This block constitutes an extended version of its homonymous block 167 of FIG. 34 and said extension is because in this system, unlike previously described, encounters with not-synchronized vehicles may be more frequent, encounters in which the driver of a vehicle that must propagate a phase change could be exposed, for a brief instant of time, to not-synchronized intense light. This is because in the propagation of a phase change the vehicles may be at a minor distance than the one that normally separates the vehicles that initiate a not-synchronized NVE and therefore would not be affected in the same way as those that synchronize their lights when they are still far from each other. For a vehicle involved in the propagation of a phase change the exposure time to the not-synchronized intermittent light is initiated when the vehicle preceding it in said phase change ("predecessor" vehicle) begins to emit pulses of light with a shifted phase, and can be extended until its "successor" vehicle (if any) stops, in turn, emitting pulses of light with a shifted phase. Although the duration of this exposure to the not-synchronized intermittent light is very short (its duration will be specified below for "the worst case") a possible nuisance to the driver of the vehicle may be avoided by extending, during said brief instant of time, the vision protection time interval.

This has been contemplated in this version of the "vision protection" block 243, whose flowchart is shown in FIG. 60, and the description of which is now taken up. When the "Activate intermittent light" signal is set to low level, the sequence starts at step 271 and is maintained at said step 271 until the "Activate intermittent light" signal is set to high level (see step 272). Since in said step 271 the "Protect vision" output remains in low level said block 243 will remain inactive if the vehicle does not participate in an NVE. In step 271 the timers "Enable extended protection", "Use extended protection" and "Force normal protection use" also remain inactive. The "Enable extended protection" timer is not retriggerable and, as the name implies, it sets a time span during which it is possible to extend the vision protection, if necessary. The "Use extended protection" timer is short (2 or 3T may be sufficient) but it is retriggerable and indicates when it is necessary to enforce said extended protection. The timer "Force normal protection use" is triggered each time the "Enable extended protection" timer is extinguished, preventing, while active, the two timers used to extend the vision protection can be triggered again. This is done to ensure that there cannot be two periods of extended vision protection without a much longer period of "normal" vision protection in between, which makes it practically imperceptible to the driver that said extended protection existed.

Thus, the "Enable extended protection" timer will be triggered when, being the "Force normal protection use" timer inactive, the vehicle detects a not-synchronized intense light pulse, or when the "Trigger Extended Protection TMRs" signal is activated in the form of a narrow pulse being inactive said timer "Force normal protection use" (hereinafter "this particular case" is described). Said "Enable extended protection" timer will have the necessary minimum duration to prevent the driver from being exposed to not-synchronized intense light pulses, which could occur during the propagation of a phase change. This "Enable extended protection" timer must be triggered together with the "Use extended protection" timer, the latter timer being retriggered with the arrival of each new not-synchronized intense light pulse, so that the extended vision protection is only maintained if said pulses continue to arrive with certain regularity. If this is not the case, the vision protection is again the "normal", that is to say the one that applies only in the VPZ. However, said extended protection could be re-applied as long as the "Enable extended protection" timer has not been extinguished.

We will now see on the flowchart of FIG. 60 to which sequences correspond each of the situations just described:

If the timer "Force normal protection use" is active, either at step 273 or 270, the only possible sequences are ... 274, 275, 277 ... and ... 274, 276, 277 ... through which the "Protect vision" output is activated within the VPZ and deactivated outside of said zone respectively, without giving place to the use of extended vision protection.

If the timer "Force normal protection use" is not active in step 273, and an not-synchronized pulse of intense light is detected, the sequence given by steps 273, 279, 280, 281, 282, 283, 275 ... will be executed triggering the timers "Enable extended protection" -in step 282- and "Use extended protection", at step 283, and activating the "Protect vision" output at step 275, regardless of the state of the VPZ signal. If a new not-synchronized intense light pulse has not been detected but the "Use extended protection" timer is still active -at step 284- the "Protect vision" output will also remain active, at step 275, regardless of the status of the VPZ signal.

If the "Trigger extended protection TMRs" signal is activated, being the timer "Force normal protection use" inactive in step 270, the sequence given by steps 270, 282, 283, 275, ... is executed triggering the "Enable extended protection" timer, at step 282, and the "Use extended protection" timer at step 283.

When the "Enable extended protection" timer expires - at step 277 - the timer "Force normal protection use" is triggered at step 278. The sequences 273, 279, 284, 274, ... or 273, 279, 280, 284, 274, ... or 273, 279, 280, 281, 284, 274, ... correspond to the use of the "normal vision protection" even though the timer "Force normal protection use" be inactive, since the "Use extended protection" timer will also be inactive.

To further optimize the operation of this version of the "Vision protection" block, it should be noted that, except when the "Trigger extended protection TMRs" signal is activated in the vehicle, the driver of the vehicle will only have the extended protection vision after receipt of a first not-synchronized intense light pulse. Protection that will then remain active while the "Use extended protection" timer is active, thus anticipating the possible arrival of a next unsynchronized intense light pulse during the propagation of a phase change. Thus, normally, the driver will not have vision protection for said first not-synchronized intense light pulse, unless the starting of said pulse falls within the VPZ. As this will not occur if said pulse is emitted by a propagator vehicle after inverting its phase, protection for said first pulse can be obtained by doing the following two things:

1. Adopting for the phase shift that vehicles will eventually apply to their ILPEs, a value (DISP) close to the minimum valid value between 0° and 180°. Thus, the beginning of each light pulse (and a good part of the pulse) that a vehicle emits with said phase shift will be received by another vehicle synchronized with the previous one inside its VPZ (the minimum value "DISP" must be higher than the width of the RCFZ to ensure that this phase-shifted emission is recognized as such by the receiving vehicle, see FIG. 57).

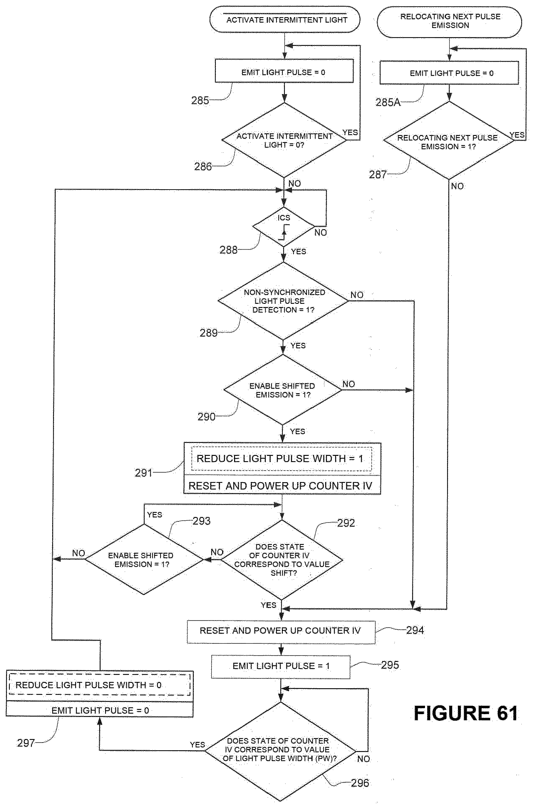

2. Making "propagator" vehicles to emit at least one phase-shifted light pulse before changing phase, i.e. when they are still synchronized with their "successors". FIG. 61 shows the flowchart of the block "Light pulses emission control" 246 of FIG. 56. As already mentioned, this block has the same function as its homonym of FIGS. 51 or 34, that is to say, "to handle the emission of pulses of intermittent light of the vehicle", but differs in its content since, in contrast to what happens in the systems previously described, in this system is altered by brief intervals of time the ILPE of the vehicle applying a predetermined phase shift to transmit information to other vehicles within a not-synchronized NVE. On the other hand, as already described in describing the "Inter-vehicular Synchronization Procedure with External Assistance", in addition to using said predetermined phase shift (defined in the system by the value DISP) there are times in which the vehicle must emit its "next pulse of light" with a non-predetermined delay (for example to end a competition). This last type of emission will be controlled by the system through a signal that we will call "Relocating next pulse emission". This signal once activated delays the emission of the next pulse of light until it is deactivated, at which moment that pulse will be emitted. Referring again to the flowchart of FIG. 61, when the "Activate intermittent light" signal is set to low level the sequence starts in step 285 setting the "Emit light pulse" signal to low level, and it is maintained in said step 285 until the "Activate intermittent light" signal is set to high level (see step 286). Similarly, when the signal "Relocating next pulse emission" is set to high level, the sequence starts at step 285A setting the "Emit light pulse" signal at low level, and is maintained in said step 285A until the signal "Relocating next pulse emission" is set to low level (see step 287). It is worth mentioning that the signal "Relocating next pulse emission" is only activated during the synchronization of an NVE, so that the signal can only be activated when the signal "Activate intermittent light" is already active and therefore the sequences starting in steps 285 and 285A cannot occur simultaneously. When the "Activate intermittent light" input is activated, the sequence proceeds from step 286 to step 288 in which a positive edge of the ICS input is expected. With this positive edge, the immediate emission of a light pulse will occur if the "Not-synchronized light pulse detection" timer output is not high or if the "Displaced emission enabled" signal is deactivated, which corresponds to the sequences 288, 289, 294, 295, ... or ... 288, 289, 290, 294, 295, ... respectively.

The emission of a displaced light pulse, with respect to the positive edge of the ICS, begins to take place when the "Not-synchronized light pulse detection" timer and the "Displaced emission enabled" signal are active (both at high level) in steps 289 and 290 respectively. However, only if the "Displaced emission enabled" signal remains active until the counter IV reaches the "DISP" value (see steps 293 and 292) the emission of said displaced light pulse will take place (see steps 292, 294, 295 ...). Now, since the "Not-synchronized light pulse detection" timer is activated only if the vehicle is detecting pulses of light starting at the RCZ or the DRCZ (see FIG. 59), we can point out that a vehicle which is receiving phase-shifted pulses of light will not displace its ILPE (even if it is enabled to do so) unless said phase-shifted light pulses come from vehicles not synchronized with it. Expanding the description of FIG. 61, step 291 includes the option of activating the "Reduce light pulse width" signal used to reduce the width of the pulses of light being emitted displaced (the reason for this is explained below). In said step 291, the counter IV is also set to zero and started to measure the displacement (DISP) to be applied to the emission of said light pulse. When said counter IV reaches the value DISP the sequence proceeds from decision point 292 to step 294 where the counter IV is again set to zero and started to control the width that the light pulse whose emission starts at step 295 and ends in step 297 will have, after said counter IV has reached the value corresponding to the width of the light pulse "PW" in step 296 (in step 297 also the deactivation of the "Reduce light pulse width" signal must be included if this option is used). Completed the emission of a light pulse the sequence returns to step 288 waiting for the next positive edge of the ICS. If the signal "Relocating next pulse emission" is activated, the next emission will occur at the time that said signal is deactivated again, which corresponds to the sequence 285A, 287, 294, 295, ... It should be mentioned that clock signal for said counter IV will be determined by the output Qi of the counter/divider 11 which provides the time base for measuring the width of the light pulses and the displacement or phase shift that a vehicle will apply to its ILPE.

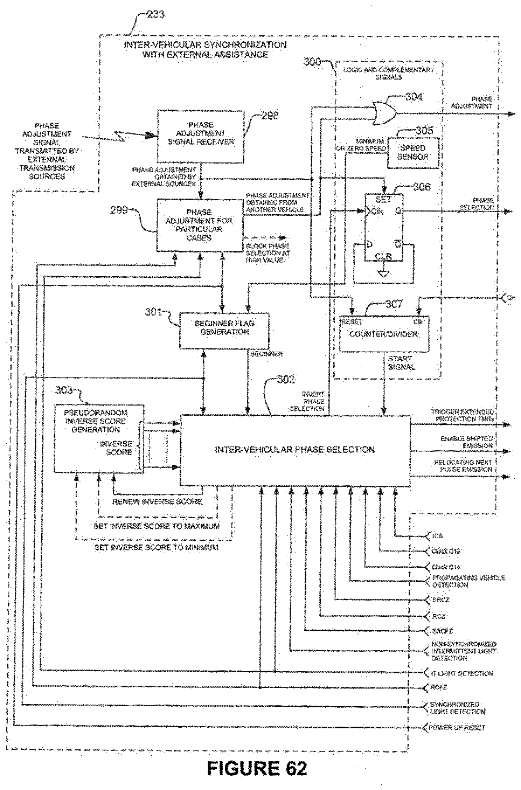

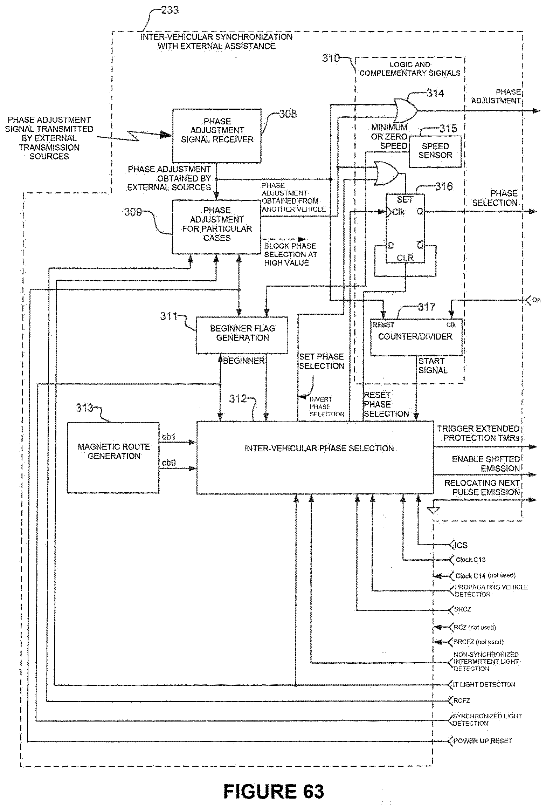

The block to be described, "Inter-vehicular synchronization with external assistance" 233 of FIG. 56, is a composite block and will be presented in two versions whose contents are shown in the simplified diagrams of FIGS. 62 and 63 respectively. These two versions of block 233 arise due to the existence of two versions for the component block "Inter-vehicular phase selection", which in one version makes use of "Synchronization with Pseudorandom Hierarchy" and in the other version it uses "Synchronization with hierarchy given by magnetic course" (see inter-vehicular synchronization procedure with external assistance).

In the version of said block 233 schematized in FIG. 62, the "Inter-vehicular phase selection" block 302 uses "Synchronization with Pseudorandom Hierarchy", so that version includes the block "Random inverse score generation" 303. In the version of said block 233 schematized in FIG. 63, the "Inter-vehicular phase selection" block 312 uses "Synchronization with hierarchy given by magnetic course", so the latter version includes the "Magnetic course generation" block 313. The block "Random inverse score generation" 303 of FIG. 62 has the function of generating the pseudorandom value mentioned in the "Inter-vehicular synchronization procedure with external assistance" and which we have called "inverse score". This block has the following entries: "Renew inverse score", "Set inverse score to max." and "Set inverse score to min.". When the "Renew reverse score" signal is activated, block 303 generates, in a pseudo-random way, a new inverse score value. When the "Set inverse score to max." signal is activated, block 303 generates the provided maximum value for the inverse score. And when the "Set inverse score to min." signal is activated, block 303 generates the minimum value for the inverse score. The minimum provided value for the inverse score is 1 and the maximum depends on the number of bits used to generate said score.

The "Magnetic course generation" block 313 of FIG. 63 has the function of determining the sector or quadrant that corresponds to the vehicle in function of its magnetic direction, to be used as described in the "Inter-vehicular synchronization procedure with External assistance". Since the 360° of the compass will be divided into four sectors or quadrants the output of said block 313 will be coded using two bits that we will call "cb0" and "cb1", where "cb0" is the least significant bit.

The blocks "Phase adjustment signal receptor", "Phase adjustment for particular cases" and "Beginner Flag Generation" have identical function and content in the versions of FIGS. 62 and 63, while the block "Complementary Logic and Signals" has the same function and similar content in the versions of FIGS. 62 and 63, and will be described below:

The "Phase Adjustment Signal Receptor" block, 298 in FIG. 62 and 308 in FIG. 63, allows vehicles to acquire the "Phase Adjustment Transmitted by External Sources" signal to be able to adjust the two alternative phases for the ILPE given by Qn and $\overline{Qn}$ and therefore the phase of the ICS of the vehicle. This block contains an omni-directional receptor of the same characteristics as the receptor of block 51 of FIG. 35 corresponding to the "Externally synchronized anti-dazzling system".

The already demodulated received phase adjustment signal will be available at the output of said block 298 or 308 as appropriate under the name "Phase adjustment from external sources".

The "Phase adjustment for particular cases" block, 299 in FIG. 62 and 309 in FIG. 63, has the function of adjusting the ICS phase of the vehicle when block 298 or 308, as appropriate, had stopped providing the signal "Phase adjustment from external sources" for a time greater than the admissible. This block "Phase adjustment for particular cases" has the same name, function and content as block 203 of FIG. 52, described for the "Externally synchronized anti-dazzling system with vehicular assistance" (with the only proviso that the "Override phase selection" output is not used in this system) and its flowchart is shown in FIG. 55, the description of which is reproduced below:

Each time a pulse appears in the "Phase adjustment from external sources" signal, the "Validate phase adjustment" timer is triggered (or retriggered) at step 214. while said timer is active the "Override phase selection" signal will remain at low level, see sequence given by steps 214, 215, 216, 215. If for some reason the "Phase adjustment from external sources" signal stops providing pulses, allowing the timer "Validate phase adjustment" be extinguished, then the sequence proceeds to step 217. The same happens when a power up reset pulse is provided. From step 217, when the vehicle participates in an NVE and do not receive synchronized light pulses, i.e. when it is receiving only not-synchronized intermittent light, this block 203 will adjust the ICS phase of the vehicle. For this purpose, the temporal analysis of the signal "IT light detection" in relation to the signal "RCFZ" will be carried out by means of a "tolerant verification" algorithm as the described for block 202. Thus, if the counter VIII achieves the value corresponding to the time "ta", in step 220, it is confirmed that the vehicle is receiving only not-synchronized intermittent light. On the other hand, the regularity characteristic of the intermittent light will be controlled by another counter which we will call "counter VII", which will be reset each time the "IT light detection" signal provides a positive edge.

So that if said counter VII reaches the value corresponding to the time "$t_7$", the reception of intermittent light is discarded because it does not present the required regularity and the counter VIII is reset, thus avoiding reaching the value corresponding to the time "$t_8$". That said, we can see that the sequence that includes steps ... 221, 222, 223, 218 ... corresponds to the situation that keeps the counter VIII enabled to count. The return path from step 221 to step 219 corresponds to waiting for the next not-synchronized light pulse. The sequence ... 222, 217, 218,... occurs when the vehicle has received a synchronized light pulse which puts in doubt that said vehicle must readjust its phase and therefore both counters VIII and VII are set to zero in steps 217 and 218 respectively. The sequence 219, 217 and 218 occurs when the vehicle is not receiving intermittent light and thereby zeroes both counters VIII and VII. When the counter VIII reaches the value corresponding to the time "$t_8$" the sequence passes from the decision point 220 to the step 224 in which said counter is stopped, but not reset. This is done to enable the sequence 225, 219, 220, 224, 225 corresponding to the waiting of the first light pulse after confirming reception of not-synchronized intermittent light. When said first light pulse is presented, the sequence goes to steps 226 and 227 in which the "Phase adjustment from other vehicle" signal is activated in the form of a narrow pulse. Said "Phase adjustment from other vehicle" signal enters, through the OR gate 229 of FIG. 52, the "reset" input of the counter/divider 11 used in the "Intermittent control signal generation" block 186 of the FIG. 51 (see also FIG. 20). Thus, the output Qn of said counter/divider 11 (like all its other outputs) is set to low level at the time the ICS of the vehicle emitting said first light pulse was set to high level. Therefore, Qn must be selected as the ICS of the vehicle "receiver" of said first pulse of light to achieve the synchronization of its lights. To achieve this in step 228 of FIG. 55 the "Override phase selection" signal is activated. This signal, through OR gate 231 of FIG. 52, sets a high value at the "selection" input of said block 186 of FIG. 51, which sets Qn as the ICS of the vehicle (see FIG. 20). The sequence then returns to step 217 whereby the phase adjustment will continue to be charged to the "Phase adjustment for particular cases" block 203 until the "Phase adjustment from external sources" signal is received again.

The block "Complementary logic and signals", 300 in FIG. 62 and 310 in FIG. 63, will be described, given its simplicity, based on the logical scheme drawn therein. The "Phase adjustment" output is obtained by the logic OR operation between the "Phase adjustment from external sources" and "Phase adjustment from other vehicle" signals. Said logic operation is shown in FIGS. 62 and 63 by OR gates 304 and 314 respectively. The "Phase selection" output is obtained at block 300 of FIG. 62, from output Q of Flip-Flop type D 306. The "Phase adjustment from other vehicle" signal enters the "S" input of said Flip-Flop D 306 (to set the "Phase selection" output to high value, thereby establishing the output Qn of the counter/divider 11 of FIG. 20 as the vehicle's ICS). The "Invert phase selection" signal enters the clock input of said Flip-Flop 306 while its data input is fed by the output $\overline{Q}$ of the Flip-Flop D 306 itself (thus the "Phase selection" output will change of state with each positive edge of the "Invert phase selection" signal). In block 310 of FIG. 63, the "Phase selection" signal is obtained by the Flip-Flop type D 316 which is handled in the same manner as said Flip-Flop D 306 with the addition that to its "set" and "reset" inputs enter "Set phase selection "and "Reset phase selection" outputs respectively from block 312 of said FIG. 63.

The counter/divider 307 in FIG. 62, and 317 in FIG. 63, generates the "Starting signal" defined when the "Inter-vehicular synchronization procedure with external assistance" was described so that the vehicles have the possible starting times for the execution of the inter-vehicular phase selection algorithm. In order to keep the "Starting signal" synchronized on all vehicles, said counter/divider (307 or 317 as appropriate) is reset by the signal "Phase adjustment from external sources" and its clock input is fed by the output Qn of the block "Intermittence control signal generation" 234 of FIG. 56. Said block 234 will be simultaneously reset with said counter/divider (307 or 317 as appropriate) if the "Phase adjustment from external sources" signal is receiving normally. The velocity sensor, 305 in FIG. 62 and 315 in FIG. 63, produces the "Null velocity" signal, which will be activated when the vehicle reduces its speed below a permissible minimum or stops. This signal enters the "Beginner Flag Generation" block, that will be described next:

The "Beginner Flag Generation" block, 301 in FIG. 62 and 311 in FIG. 63, has the function of indicating, by means of said flag, when the vehicle has started or restarting its night traffic along a given road. The utility of generating this information has been analyzed in the "Inter-vehicular synchronization procedure with external assistance", but we will remember that a vehicle that has this flag active will resign its phase when, within an NVE, it interacts with a not-synchronized vehicle with a valid phase. FIG. 64 shows the flowchart of this block "Beginner Flag Generation". When the "Power up reset" signal is activated the "Beginner" flag is set to high. The same happens if at the decision point 319 the signal "null velocity" is active. Otherwise, said flag will be set to low level if the sequence reaches step 321, i.e. when at the decision point 320 the "Synchronized light detection" signal is active.

It should be noted that the entries "Clock C14", "RCZ" and "DRCFZ" are used in the version of the "Inter-vehicular synchronization with external assistance" block 233, of FIG. 56, schematized in FIG. 62 but are not used in the version of said block 233 schematized in FIG. 63. However, since the set of inputs and outputs for both versions of said block 233 has been unified in FIG. 56, in FIG. 63 these inputs are included as "not used". In addition, when block 233 of FIG. 56 is implemented according to the embodiment outlined in FIG. 63, the "Relocating next pulse emission" signal, which enters the "Light pulses emission control" block 246, will never be activated. Therefore, said signal, which is one of the outputs of block 233, is shown grounded (low level) in said FIG. 63.

In order to complete the description of the system is still to be described the "Inter-vehicular phase selection" block, which has been designed to implement the algorithm of the same name already described in the formulation of the "Inter-Vehicular Synchronization Procedure with External Assistance". This algorithm, as already mentioned, uses two strategies in order to establish different hierarchies between the vehicles of a not-synchronized NVE and then obtain its synchronization. The first strategy that is applied is the one in which the vehicles obtain a hierarchy according to their situation within the not-synchronized NVE, in order that some of these vehicles make its phase to prevail over the phase of the rest of the vehicles. If this does not happen, a second strategy is applied in which each not-synchronized vehicle independently generates a second hierarchy to compete with the other vehicles for imposing its phase. For this second strategy, two alternatives have been described: "Synchronization with pseudorandom hierarchy" and "Synchronization with hierarchy given by magnetic course", giving rise to the two versions of this block "Inter-vehicular phase selection" that will be described as follows:

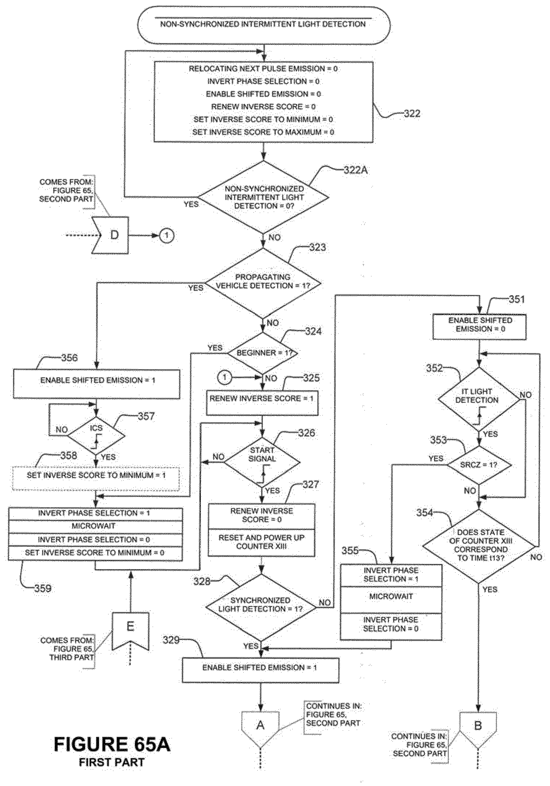

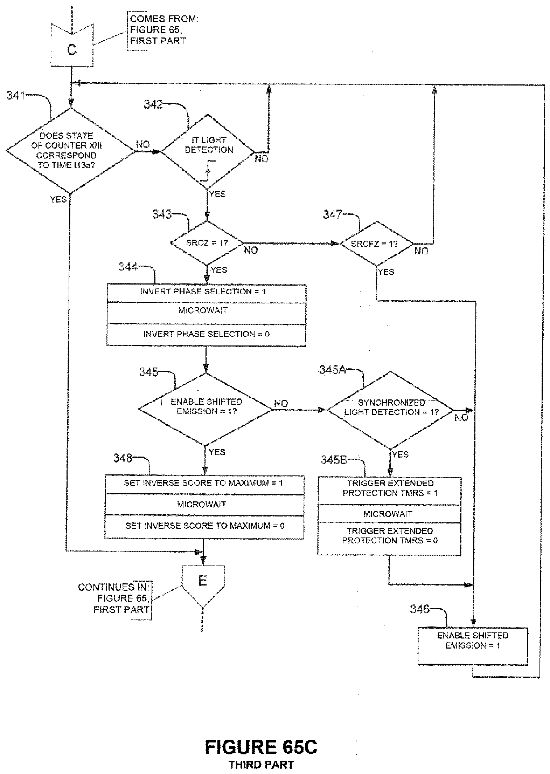

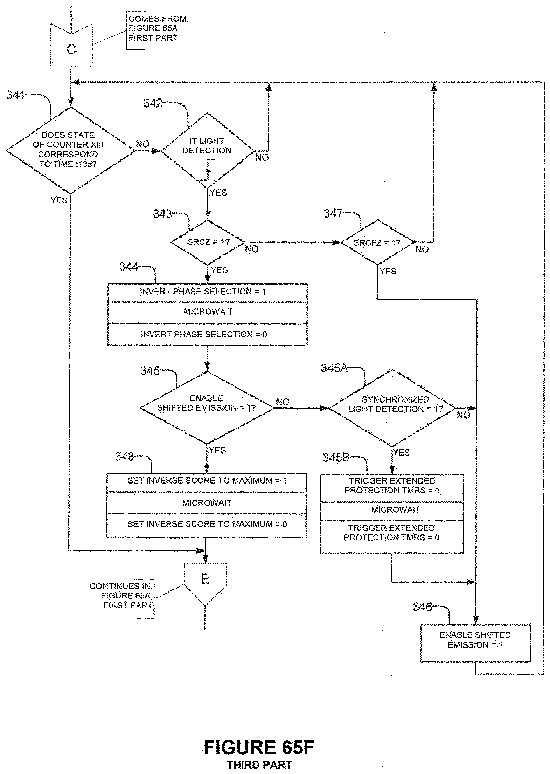

FIGS. 65A - 65C shows the flowchart of the "Inter-vehicular phase selection" block 302 of FIG. 62, which uses "Synchronization with Pseudorandom Hierarchy" as the second synchronization strategy. When the "Not-synchronized intermittent light detection" signal is set to low, the sequence starts at step 322 setting to low level the following signals: " Relocating next pulse emission", "Invert Phase Selection", "Displaced emission enabled", "Renew inverse score", "Set inverse score to min." and "Set inverse score to max.", and it is maintained at said step 322 until the "Not-synchronized intermittent light detection" signal is set to high level (see step 322A). If the vehicle is not marked as a "successor" in the propagation of a phase change nor as a "Beginner", the sequence proceeds from step 322A to the decision point 326 in which a positive edge of the "Starting signal" is waited for. In step 325 the "Renew inverse score" signal is activated which, acting on block 303 of FIG. 62, allows to obtain a new pseudorandom inverse score which will be used when the vehicle has to implement the second synchronization strategy. In step 327, said "Renew inverse score" signal is deactivated and the counter XIII is started from zero. The sequence then passes to the decision point 328 in which the state of the "Synchronized light detection" signal is analyzed and it is there where the sequence followed by the vehicles of the not-synchronized NVE coming from a synchronized NVE (high hierarchy) separate from the sequence that will follow the vehicles that at the moment of being involved in said not-synchronized NVE were not interacting with any other vehicle (to these "isolated" vehicles correspond a low hierarchy).

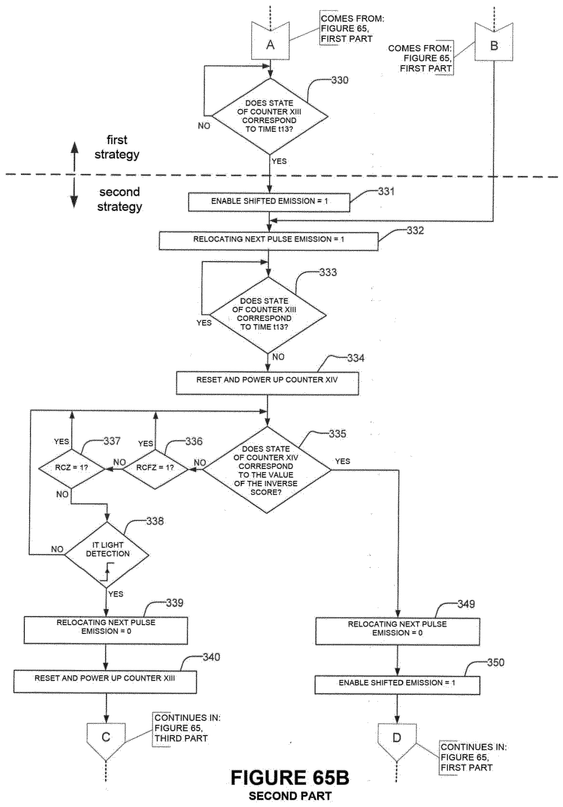

We will analyze the different cases that solve the algorithm and we will see which sequences each case generates on the flowchart (to facilitate this analysis, in FIGS. 65A - 65C it has been marked which part of the flowchart corresponds to the application of the first strategy and what part to the implementation of the second strategy, see dashed line in FIG. 65B ).

Case 1: This is a not-synchronized NVE that has been formed due to the interaction between vehicles of a synchronized NVE with one or more "isolated" vehicles not synchronized with the former. At the decision point 328 vehicles from the synchronized NVE will have the "Synchronized light detection" signal active, therefore in said vehicles the "Displaced emission enabled" signal is activated at step 329 and then a waiting time is initiated at the decision point 330. Enabling the displaced emission in step 329 is intended, in this case, for the vehicle to transmit information to the "isolated" vehicles as we shall see below. In "isolated" vehicles, as no synchronized light is detected, the sequence passes from the decision point 328 to step 351 where the "displaced emission enabled" signal is deactivated. Then in step 352 the sequence initiates a cycle which will be controlled by the counter XIII in step 354, a cycle which can be interrupted by detecting a light pulse whose positive edge falls on the DRCZ (see steps 352, 353 and 355).

This sequence occurs because, in this Case 1, vehicles from the synchronized NVE are enabled to displace the emission of their light pulses in front of the not-synchronized light emitted by "isolated" vehicles. These "isolated" vehicles, upon receiving this "information", execute the sequence including steps 352, 353, 355, 329, 330...., so by step 355 the status of the "Phase selection" signal of the vehicle is inverted (see Flip-Flop 306 in FIG. 62) and then in step 329 the "Displaced emission enabled" signal is activated so that, if necessary, this vehicle can "defend" its new phase as another vehicle in the synchronized NVE to which it has just been added. After the synchronization is completed, the "Not-synchronized intermittent light detection" signal will be deactivated, thereby resetting the "Intervehicular phase selection" block 302 of FIG. 62, which we are describing.

Therefore, by properly choosing the value "$t_{13}$" said block 302 can be reset during the waiting time at the decision point 330, returning the sequence to step 322 without that sequence getting to involve, for Case 1 that we are analyzing, the steps corresponding to the second strategy. In an initial estimate, which will then be refined, we can say that the time "$t_{13}$" must be greater than the sum of the time it takes the "isolated" vehicles, in this case 1, to change phase plus the "$t_{11}$" time it takes to deactivate the "Not-synchronized intermittent light detection" signal. This time "t13" is also used as the account limit for the counter XIII at the decision point 354, where there apparently the said limit could be lower. The reason will be explained later.

Case 2: When none of the vehicles of the not-synchronized NVE has the "Synchronized light detection" signal active, the sequence in each of said vehicles will go from step 328 to step 351 where the "Displaced emission enabled" signal will be deactivated. Then, from step 352, the sequence enters a cycle controlled by the counter XIII in step 354, cycle that in this case 2 will only be interrupted when said counter reaches the value corresponding to the time "$t_{13}$". This is because in this case 2 there are no vehicles coming from a synchronized NVE that emit their light pulses displaced. When the counter XIII reaches the value corresponding to the time "$t_{13}$" the sequence passes to the part of the flowchart corresponding to the application of the second strategy in order to be able to solve the synchronization of this NVE whose conformation is not enough to establish differences of "hierarchy" in vehicles. The description of that part of the flowchart will be done after describing the remaining "cases".

Case 3: This is a not-synchronized NVE that is formed from the conflicting union of two synchronized NVEs whose respective vehicles are not synchronized with each other. Said not-synchronized NVE starts when the closest vehicles of both synchronized NVEs begin to interact with each other. Once in these "initiator" vehicles of the not-synchronized NVE, the "Not-synchronized intermittent light detection" signal is activated, in all of them the sequence including the steps 322, 322A, 323, 324, 325, 326, 327, 328, ... will be executed. At decision point 328 said "initiator" vehicles will have the "Synchronized light detection" signal active and then the sequence will go to step 329 where each vehicle is enabled to emit phase shifted light pulses (pulses that in this case fulfills the function of enabling, if necessary, the extended vision protection in the first potential successor(s), predicting that the NVE from which they come may be the one that has to change phase). Then at the decision point 330 the waiting time handled by the counter XIII will normally arrive at its end ("$t_{13}$"), since in this case, as no vehicle has yet changed its phase, the "Not-synchronized intermittent light detection" remains active. When the counter XIII reaches the value corresponding to the time "$t_{13}$", the sequence passes to the part of the flowchart corresponding to the application of the second strategy for the establishment of hierarchies since, as in Case 2, the conformation of this type of NVE it is not enough to establish among these "initiator" vehicles differences of "hierarchy" that allow to achieve the synchronization. As already mentioned, said section of the flowchart will be described later.

Case 4: In this case we will discuss the synchronization of vehicles that are "successors" in the propagation of a phase change. In a not-synchronized NVE such as Case 3, after the initiator vehicles of said NVE have synchronized their lights (applying the second strategy), those vehicles that have had to change phase will have to propagate that phase change (applying the first strategy). These propagators vehicles, which are now no longer synchronized with their successors, are enabled to apply a phase shift to their ILPE, therefore in said successor vehicles the "Propagator vehicle detection" signal (see FIG. 58) will be activated and it will also activate the signal "Not synchronized intermittent light detection" (see FIG. 59). When the latter occurs, the "Intervehicular phase selection" block is activated in said successor vehicles and the sequence including steps 322, 322A, 323, 356, 357, 358, 359,... is produced. In step 356 the "Displaced emission enabled" signal is activated, then at the decision point 357 the arrival of the next positive edge of the ICS is expected so that only when the latter has occurred has the sequence been advanced to the next step. In this way, the vehicle emits a light pulse displaced with respect to the phase it had before changing phase in step 359 (this is achieved because, as can be seen in the operating diagram of FIG. 61, the "Detection of non-synchronized light pulse" and "Displaced light emission" will be active and therefore, once the positive edge of the ICS is present, the emission displaced with respect to said positive edge will be unavoidable, even though before said emission changes the phase of said ICS). Said displaced emission has been provided for to allow the next "successor" vehicle (if any) to extend, if necessary, the vision protection before it is exposed to the pulses of light that it will receive outside the VPZ. Note the term "if necessary" is stated in order to remember that "the extension of the vision protection" will only become effective if the intensity of these pulses of light justify it, see diagram of operation of the block "Vision protection" in FIG. 60).

The phase change generated in step 359 of the FIG. 65A will cause said "successor" vehicle to become a "propagator" vehicle since when changing phase it has been synchronized with its "predecessor" vehicle but not with its "successor" vehicle (if any). The option of including in step 358 the activation of the "Set inverse score to min." signal indicated in FIG. 65A with dashed lines will be discussed below. From the decision point 328 the path that the sequence will take on a vehicle that still has successors will be that given by steps 328, 329, 330,.... this is so because a vehicle that has successors receives from them synchronized light until the moment of changing its phase in step 359, and will continue to receive synchronized light after changing phase but now from its predecessor (with which it was synchronized when changing phase). On the other hand, the path that the sequence will take in a vehicle that no longer has successors will be the one given by steps 328, 351, 352, 353, 354.... This is so because the vehicle has no one of whom to receive synchronized light until that the sequence reaches step 359, wherein said vehicle begins to receive synchronized light upon changing phase, but the "Synchronized light detection" signal has not yet been activated upon reaching the sequence to said step 328 (see operating diagram of "Synchronized Light Detection" block 238 in FIG. 38).

As already mentioned, a vehicle that has changed its phase in step 359 will be synchronized with its predecessor but will still detect non-synchronized light from its successors (if any) until they change phase. When the latter occurs, the vehicle will be synchronized then resetting the "Intervehicular phase selection" block 302 of FIG. 62, returning the sequence to step 322 when the "Not-synchronized intermittent light detection" signal is deactivated in the vehicle. This must occur without the sequence having passed the decision point 330 or 354, depending on whether or not the vehicle has successors respectively, since case 4 does not apply the second synchronization strategy (which can start either in the step 331 or step 332). Therefore, the waiting at decision point 330, given by the time "$t_{13}$", must be greater than the time a vehicle needs, already converted into a propagator, to cause that in their successors the "Propagator vehicle detection" and "Not synchronized light detection" signals be activated (signals which in this case will be activated at about the same time) added to the time it takes to deactivate the "Not-synchronized intermittent light detection" signal.

We can now refine the initial estimate made for time "$t_{13}$" in Case 1. The time that has elapsed since a propagator vehicle changes its phase in step 359 until it is synchronized with its successor is given practically by the time "$t_{12}$" that it takes to activate in said successor vehicle the signal "Not synchronized intermittent light detection". In order to estimate the value of "$t_{13}$" we must add to the value of "$t_{12}$" the time "$t_{11}$" that takes in being disabled in this propagator vehicle (already synchronized with its successor) the "Not-synchronized intermittent light detection" signal. This estimate for time "$t_{13}$" is greater than that done in Case 1, since the time it takes for the "isolated" vehicles of Case 1 to change phase will be less than the time "$t_{12}$". This estimate for "$t_{13}$ is also sufficient for the last vehicle to make use of the "Intervehicular phase selection" block as a successor, since in that vehicle, after changing phase in step 359, will only be waited by the deactivation of the "Not-synchronized intermittent light detection" signal, which will occur during the waiting time of the decision point 326 or during the cycle controlled by the counter XIII at the decision point 354. In either case the reset of the "Intervehicular phase selection" block 302 of FIG. 62 will be produced without the second synchronization strategy being applied.

Case5: we will now deal with the synchronization of an NVE in which one or more vehicles that have active the flag that point out them as "beginners" participate. When the "Not-synchronized intermittent light detection" signal is activated in a vehicle having said flag active, the sequence including steps 322, 322A, 323, 324, 359, 326,... will be executed, by step 359 said vehicle inverts the phase of its ICS. If the phase change of the beginner vehicle or vehicles achieves synchronization of the NVE, in the vehicles of said NVE the sequence will return to step 322 either from the decision points 326 or 330 or from the cycle controlled by the counter XIII at the decision point 354, upon deactivating the "Not-synchronized intermittent light detection" signal in them. Otherwise, the vehicles of said NVE wait for the arrival of a positive edge of the "Starting signal", at the decision point 326, to obtain the synchronization in the regular form. After the description of the part of the flowchart of FIGS.65A - 65C corresponding to the application of the first synchronization strategy is finished, we will now describe the rest of said flowchart, in which "Synchronization with Pseudorandom Hierarchy" is applied as second synchronization strategy.

In all vehicles participating in an NVE of the type discussed in "Case 2", the sequence will arrive at the part of the flowchart corresponding to the application of said second strategy through decision point 354. On the other hand in all "starter vehicles" of the not-synchronized NVE type analyzed in "Case 3" (conflicting union of two synchronized NVEs) the sequence will arrive at this part of the flowchart through the decision point 330. Note that by any of the two paths that the sequence arrives at step 332 vehicles will already have the "Displaced emission enabled" signal deactivated (see steps 351 and 331), thereby suspending the exchange of information between vehicles to initiate competition. Recall that, as we said in describing synchronization with pseudo-random hierarchy, the suspension of the exchange of information between vehicles can be done either by suspending for a moment the ILPE (with which the competition can be resolved a little faster) or without suspending the ILPE. In the flowchart of FIGS.65A - 65C we are describing, it has been decided to suspend the ILPE until the competition has a winner (however, the changes that can be introduced to this flowchart so that the vehicles can compete without having to discontinue their ILPEs at any time are mentioned later). So that in step 332, when being activated the signal "Relocating emission of the next pulse" the vehicles suspend for an instant and in a practically simultaneous way the emission of intermittent light and initiate a waiting time controlled by the counter XIV, which is started from zero at step 334.

The previous step 333 inserts into the sequence a wait whose duration is equal to the period of the clock signal of the counter XIII and is intended to avoid the remote possibility that a phase shifted light pulse (which could be emitted by a vehicle at the precise time that said displaced emission is being deactivated in step 331) could cause undesired detection in another vehicle at step 338. However, such undesired detection can also be avoided by causing the time "$t_{13}$" be a multiple of T or T/2. Since said time is counted from the "Starting signal", when the sequence arrives at said step 331 the ICS of vehicle would be giving a positive edge or a negative edge, times in which no displaced emission are produced.

However, step 333 has been included because it also ensures that the vehicle will be able to emit a pulse of light as a "success signal", if it were necessary, very near to the beginning of the competition. It is desirable that the clock signal for counter XIII, which we call "clock C13", be the output $O_{n-1}$ or Qn of the block "Intermittence control signal generation" 234 since they are signals that are synchronized in all vehicles and have a suitable period (T/2 or T respectively). In step 334, a waiting time controlled by counter XIV is started, as already mentioned. Said waiting time will be determined by a binary number which we have called "Inverse score" (generated, in each vehicle, by block 303 of FIG. 62). The first vehicle in which the counter XIV reaches the value corresponding to its "inverse score" (see decision point 335) will be the winner of the competition (high hierarchy) and will, first, make the rest of the vehicles (non-winners) interrupt their respective waiting times.

To do this, in said winning vehicle the sequence proceeds to step 349 in which the signal "Relocating next pulse emission" is deactivated which causes the immediate emission of a light pulse (see FIG. 61), whereas in vehicles which have not yet completed their waiting time, the sequence will be within the cycle formed by steps 335, 336, 337, 338, 335 at the time that said light pulse is emitted, whereby said pulse will be replicated by these vehicles (non-winners) in step 339, said light pulse being detected either directly or replicated at step 338. Decision points 336 and 337 are to make the vehicles participating in this competition only respond to light pulses received outside the RCZ and RCFZ zones. This allows vehicles to detect the pulse of light emitted as a "success signal" even though they were receiving pulses of light emitted with either of the two "regular" alternative phases by other vehicles belonging to or not to the NVE. However, to avoid that the pulse of light emitted as a "success signal" by the winning vehicle can fall into the RCZ or the RCFZ of the other vehicles (since that would be ignored) it is necessary to feed the counter XIV with a clock signal whose positive edges fall outside said zones.

For this reason, said clock signal, which we will call "clock C14", will be provided by one of the outputs of the counter/divider 11 whose period is smaller than that of the ICS and greater than the width of the RCZ (or, what is equal, than the width of the RCFZ). This is because said outputs of the counter/divider 11 give a negative edge both on the negative edge and on the positive edge of the ICS (see FIG. 22) and thus give positive edges on both sides of each edge of the ICS, edges that will fall out of the RCZ and RCFZ zones of the vehicle itself since these zones are centered on the positive and negative edges respectively of the ICS (see FIG. 53). However, in order to ensure that said positive edges will also fall outside the RCZ and the RCFZ of the other vehicles, it is necessary to take into account the predetermined margin of tolerance ($\Delta t$) within which the ICS of the different vehicles are considered to be in phase or counter phase (see FIGS. 23B - D) therefore the output of counter/divider 11 used as a clock signal for counter XIV must have a period which is at least twice the width of said RCZ (or of said RCFZ). As we have just said, to make that vehicles emit and detect pulses of light outside the RCZ and RCFZ zones allows competition between vehicles to be carried out even when those vehicles are receiving pulses of light emitted by other vehicles belonging to the NVE or not. This happens for example to "starter" vehicles of a not synchronized NVE of the type analyzed in "Case 3", which receive pulses of light in the RCFZ from their "successors".

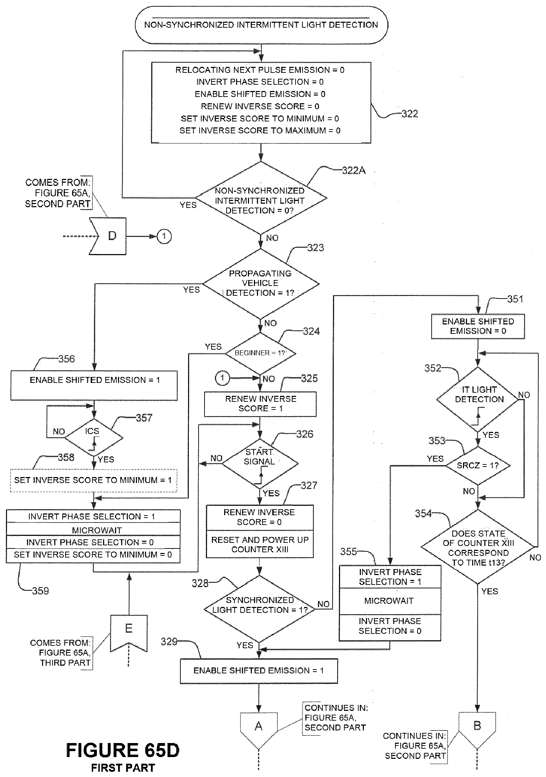

This could also happen due to the eventual "intrusion" of a distant vehicle, not included in the NVE, but that could be detected by some vehicle of said NVE, for this reason the RCZ has also been included in step 336. From what we have just said, another benefit can be drawn from the fact that vehicles could keep their "regular" intermittent light emissions while participating in the competition as long as this does not affect the ability of said vehicles to produce or replicate the "success signal" of the winning vehicle. The changes to be made to the flowchart of FIGS. 65A - 65C so that vehicles can compete without ever having to interrupt their ILPEs are shown in FIGS. 65D - 65F and will be described at the end of the description of FIGS. 65A - 65C. We now return to the analysis of the flowchart of FIGS. 65A - 65C from step 349, in which the winning vehicle of the competition emits a light pulse in a "success signal", and in parallel from step 339, in which the non-winning vehicles of this competition emit a pulse of light replicating said "success signal".

In the winning vehicle, the sequence proceeds to step 350 in which the "Displaced emission enabled" signal is activated and then the sequence returns to step 325. Whereas in the non-winning vehicles the sequence starts, in step 341, a cycle controlled by the counter XIII which has been reset in the previous step 340. Thus, a cycle with the steps 341, 342, 343, 344, 345, ..., 346, 341 will take place, initially, in non-winning vehicles that emit in the opposite direction of the winning vehicle and which are not synchronized with said winning vehicle. These vehicles will receive within the DRCZ the positive edge of the phase shifted light pulses emitted by said winning vehicle (see steps 342 and 343), and by step 344 they will change phase, when being activated in them the signal "Invert phase selection", thus becoming losing vehicles of the competition. Then the "Displaced emission enabled" signal, which in said vehicles is still deactivated, will be activated at step 346 in order to transmit information to non-winning vehicles circulating in the same direction as said winning vehicle. Steps 345A and 345B prior to 346 have been included to determine whether a vehicle that has just inverted its phase comes from a synchronized NVE, in which case the sequence will include step 345B to activate, in the form of a narrow pulse, the "Trigger Extended Protection TMRs" and thereby provide the driver with vision protection for the first non-synchronized light pulse that said vehicle will receive from its successor during phase change. On the other hand, cycle 341, 342, 343, 347, 346, 341 will take place initially on the non-winning vehicles which emit in the opposite direction to the winning vehicle and which were synchronized with said winning vehicle.

Said non-winning vehicles will receive within the DRCFZ the positive edge of the phase shifted light pulses emitted by the winning vehicle (see sequence 342, 343, 347) then in said non-winning vehicles, which will retain their phase, the "Displaced emission enabled" signal is activated at step 346 to transmit information to non-winning vehicles that circulate in the same direction as the winning vehicle. The previous description also applies to those vehicles that are not directly synchronized by the winning vehicle but detect the displaced emissions of vehicles cooperating with the winning vehicle to complete NVE synchronization. If everything works normally, the non-winning vehicles already synchronized will exit the cycle controlled by the counter XIII (step 341) when it reaches the value corresponding to the time "$t_{13a}$" (see steps 341, 326, ...). The value "$t_{13a}$" must be less than the time it takes for a vehicle that has changed its phase (losing vehicle) to cause the "Not-synchronized intermittent light detection" signal to be activated in its successor, if any (see time "$t_{12}$" described in relation to FIG. 59).

This must be so that the vehicles leave the cycle controlled by the counter XIII (step 341) before their synchronization can be altered by the pulse of light that said successor vehicle will emit displaced announcing that it will change phase. The minimum value that can be given to "$t_{13a}$" is around 3T which is the approximate time that the synchronization of the vehicles may require within that cycle. However, if one were to ignore the restriction imposed by the "$t_{12}$" value,

it would suffice to reverse the order of steps 356 and 357, leaving aside the displaced emission with which a "successor" vehicle announces to its possible successors that it will change phase, since said displaced emission only serves so that these successors extend, if necessary, the protection of vision in advance.

Finally, we will analyze what would happen if there were an eventual tie situation, that is to say, if there were more than one vehicle winning the competition, trying to impose its phase on the rest. Obviously, a tie is not a problem when it occurs between vehicles that are synchronized with each other, but if the tie were produced between vehicles not synchronized with each other, the synchronization process should be repeated. For this reason, in the winning vehicles the sequence includes step 325 by means of which said vehicles will renew their "inverse score". However, if a non-winning vehicle was forced to change phase twice, it is a sign that a tie occurred between non-synchronized vehicles. After the first phase change the sequence will follow steps 344, 345, 345A ..., and after the second phase change the sequence will be 344, 345, 348, 326, ... whereupon the vehicle will recover its original phase and abandon the cycle controlled by counter XIII to participate again in the synchronization process. The option of including the activation of the "Set inverse score to max." signal at step 348 is intended to minimize the possibility of a repeat of a tie, because since the winning vehicle will be the one with the lowest "inverse score", vehicles that did not win in the first competition will also not win in the second competition if they adopt a maximum inverse score, being limited this tie possibility only to the winning vehicles that tied in the previous attempt.

In a tie situation it may also happen that the phase of a non-winning vehicle is first confirmed by one of the winners, in which case the sequence will be given by cycle 341, 342, 343, 347, 346, 341, and then another winning vehicle causes said vehicle to change phase and leave the cycle controlled by the counter XIII, through the sequence 341, 342, 343, 344, 345, 348, 326, whereupon this vehicle will again participate in the synchronization process with the opposite phase to the one that had initially. Something similar (although unlikely) would occur in the conflicting union of two synchronized NVEs if there were winning vehicles in both NVEs and one (or more) non-winning vehicles in one of those NVEs. In this case, the non-winning vehicle would change phase following the sequence 341, 342, 343, 344, 345, 345A, 345B, 346, 341 and then it would exit the cycle controlled by the counter XIII (when it reaches the value corresponding to the time "$t_{13a}$") with opposite phase to the one that had. This is not a problem, but the propagation of a phase change would begin to take place without the initiating vehicles of said phase change being synchronized. Therefore, to resolve this as quickly as possible, it has been foreseen the option of include the activation of the "Set inverse score to min." signal at step 358 whereby the first successor, turned into a competitor, would be a sure winner if competition should be repeated. The minimum value for the "inverse score" is 1 and the maximum depends on the number of bits used to generate that score. As already mentioned, in vehicles which have already completed the application of the second synchronization strategy, the sequence returns to step 325 or to step 326 as appropriate. If the application of said second strategy resulted in the synchronization of the involved vehicles, in said vehicles the deactivation of the signal "Not synchronized intermittent light detection" will occur either during the waiting time at the decision point 326 or during the cycle controlled by counter XIII at decision point 330 or 354 as appropriate. This will result in resetting the "Intervehicular phase selection" block 302 of FIG. 62, whereupon the sequence starts again at step 322. It should be mentioned that in vehicles which must propagate a phase change, the deactivation of the signal "Not-synchronized intermittent light detection" will occur either at said decision point 326 or at said decision point 330 as in said vehicles the "Synchronized light detection" signal is kept active (see step 328).

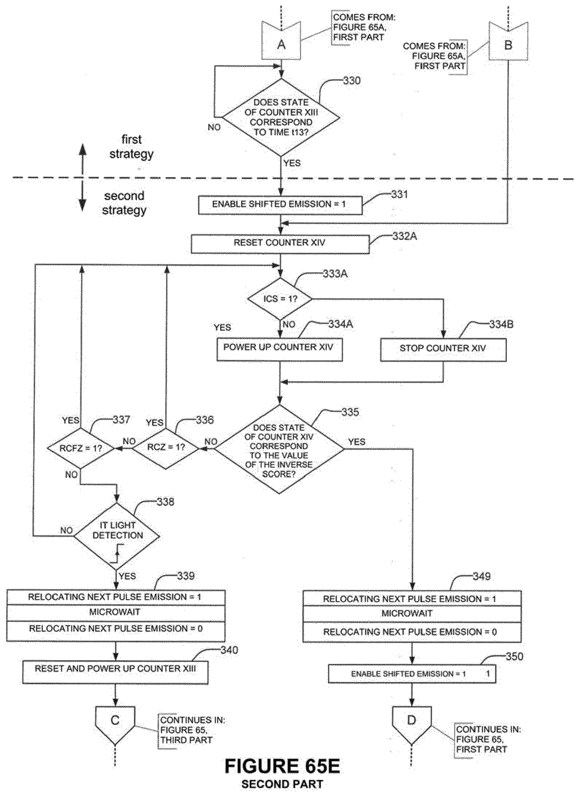

We now turn to the changes to be made to the flowchart in FIGS. 65A - 65C so that vehicles can compete without having to interrupt their ILPEs at any time. Said changes are shown in FIGS. 65D - 65F and are described below. The "Relocating next pulse emission=1" command from step 332 of FIG. 65B is moved to steps 349 and 339 of FIG. 65E preceding the "Relocating next pulse emission=0" command and interposing between the two commands a small delay ("micro-wait"). With this in the flowchart of FIGS. 65D - 65F, as in the flowchart of FIGS. 65A - 65C, the winning vehicle of the competition will emit a light pulse as a "success signal" at step 349, pulse that will be replicated by non-winning vehicles at step 339, but without the vehicles having suspended their ILPEs during the competition. To ensure that whatever technology is used to generate the ILPE, the vehicle will be able to emit or replicate the light pulse that ends the competition, in the flowchart of FIGS. 65D - 65F the input of clock pulses to the counter XIV is prevented while the vehicle's ICS is at a high level. With this it is ensured that at least half of the ICS period has elapsed since the last emission, when the vehicle has to emit or replicate the "success signal" (see steps 332A, 333A, 334A and 334B of said FIGS. 65D - 65F).

The description of the composite block "Intervehicular synchronization with external assistance" 233 of FIG. 56, according to the version of FIG. 62, has been completed, thus also completing the description of the system that applies synchronization with pseudorandom hierarchy as second synchronization strategy.

To now complete the description of the system that applies "Synchronization with hierarchy given by magnetic course" as the second synchronization strategy, the composite block "Intervehicular synchronization with external assistance" 233 will now be described according to the version of FIG. 63, of which it remains to describe the component block "Intervehicular phase selection" 312.

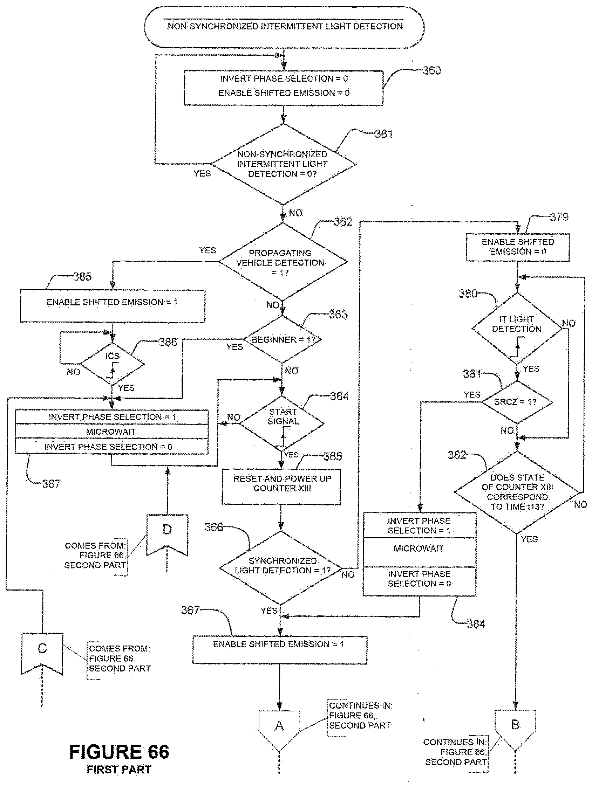

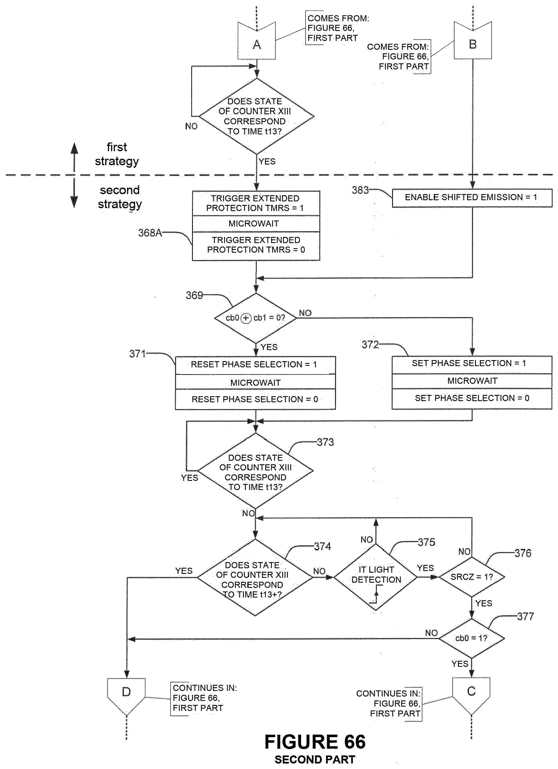

FIGS. 66A - 66B shows the flowchart of said "Intervehicular phase selection" block 312 of FIG. 63, which, as can be seen, is very similar to the flowchart of FIGS. 65A - 65C in that referred to the implementation of the first synchronization strategy. When the "Not-synchronized intermittent light detection" signal is set to low level the sequence is initiated in step 360 by setting the "Invert phase selection" and "Displaced emission enabled" signals to low level, and is maintained in said step 360 until the "Not-synchronized intermittent light detection" signal is set to high level (see step 361).

If the vehicle is not indicated as a "successor" in the propagation of a phase change or as a "beginner", the sequence proceeds from step 361 to the decision point 364 in which is waited for a positive edge of the starting signal. In step 365 the counter XIII is started from zero. Then the sequence passes to the decision point 366 in which the state of the "Synchronized light detection" signal is analyzed and it is there where the sequence that will follow the vehicles of the not synchronized NVE which come from a synchronized NVE (high hierarchy) separate from the sequence that will follow the vehicles which, at the moment of involving in said not synchronized NVE, were not interacting with any other vehicle (to these "isolated" vehicles correspond a low hierarchy). We will analyze the different cases that the algorithm solves and we'll see which sequences each case generates on the diagram (to facilitate this analysis, FIGS.66A - 66B shows which part of the diagram corresponds to the application of the first strategy and which part to the application of the second strategy).

Case 1: This is a non-synchronized NVE that has been formed due to the interaction between vehicles of a synchronized NVE with one or more "isolated" vehicles not synchronized with the former. At the decision point 366 the vehicles from the synchronized NVE will have the "Synchronized light detection" signal active, therefore in said vehicles the "Displaced emission enabled" signal is activated at step 367 and then a waiting time at the decision point 368 is initiated. Enabling the displaced emission in step 367 is intended, in this case, for the vehicle to transmit information to the "isolated" vehicles as we shall see below. In "isolated" vehicles, as not being detected synchronized light, the sequence passes from the decision point 366 to step 379 where the "Displaced emission enabled" signal is deactivated. Then in step 380, the sequence initiates a cycle which will be controlled by the counter XIII in step 382, cycle which can be interrupted by the detection of a light pulse whose positive edge falls on the DRCZ (see steps 380, 381 and 384). This sequence occurs because, in this Case 1, vehicles from the synchronized NVE are enabled to displace the emission of their light pulses in front of the not-synchronized light emitted by "isolated" vehicles. These "isolated" vehicles, on receiving this "information", execute the sequence including steps 380, 381, 384, 367, 368.... so by step 384 the state of the "Phase selection" signal of the vehicle is inverted (see Flip-Flop 316 in FIG. 63), and then in step 367 the "Displaced emission enabled" signal is activated so that, if necessary, said vehicle can "defend" its new phase as a vehicle of the synchronized NVE at which has just joined. Once the synchronization is completed, the "Not-synchronized intermittent light detection" signal will be deactivated, thus resetting the "Intervehicular phase selection" block 312, of FIG. 63, which we are describing. Therefore, by properly choosing the value of "$t_{13}$" said block 312 can be reset during the waiting time at decision point 368, returning the sequence to step 360 without that sequence coming to involve, for Case 1 that we are analyzing, to the steps corresponding to the second strategy. In an initial estimate, which will then be refined, we can say that the time "$t_{13}$" must be greater than the sum of the time it takes the "isolated" vehicles, in this Case 1, to change phase plus the time "$t_{11}$" that takes in being deactivated the "Not-synchronized intermittent light detection" signal. This time "$t_{13}$" is also used as the account limit for the counter XIII at the decision point 382, when apparently, said limit could be lower. The reason will be explained later.

Case 2: When in not one of the vehicles of the not-synchronized NVE the "Synchronized light detection" signal is active, the sequence in each of said vehicles will go from step 366 to step 379 where the "Displaced emission enabled" signal will be deactivated. Then, from step 380, the sequence enters a cycle controlled by the counter XIII in step 382, cycle which in this case 2 will only be interrupted when said counter reaches the value corresponding to the time "$t_{13}$". This is because in this Case 2 there are no vehicles coming from a synchronized NVE that emit their light pulses displaced. When the counter XIII reaches the value corresponding to the time "$t_{13}$", the sequence passes to the part of the diagram corresponding to the application of the second strategy in order to be able to solve the synchronization of this NVE whose conformation is not enough to establish differences of "hierarchy" in vehicles. The description of that part of the diagram will be done after describing the remaining "cases".

Case3: This is a not synchronized NVE that is formed from the conflicting union of two synchronized NVEs, whose respective vehicles are not synchronized with each other. Said not-synchronized NVE starts when the nearest vehicles of both synchronized NVEs begin to interact with each other. Once the "Not-synchronized intermittent light detection" signal is activated in these initiating vehicles of the not-synchronized NVE, in all of them the sequence including steps 360, 361, 362, 363, 364, 365, 366 ... will be executed. At the decision point 366 said initiating vehicles will have the "Synchronized light detection" signal active and then the sequence will go to step 367 where each vehicle is enabled to emit phase shifted light pulses (pulses that in this case comply the function of enabling, if necessary, extended vision protection in the first potential successors, predicting that the NVE from which they come may be the one that has to change phase). Then at the decision point 368 the waiting time handled by the counter XIII will normally arrive at its end ("$t_{13}$"), since in this case, as no vehicle has yet changed its phase, the "Not-synchronized intermittent light detection" remains active. When the counter XIII reaches the value corresponding to the time "$t_{13}$", the sequence passes to the part of the diagram corresponding to the application of the second strategy to acquire a hierarchy since, as in Case 2, the conformation of this type of NVE is not enough to establish among these initiating vehicles differences of "hierarchy" that allow to achieve the synchronization. As already mentioned, said part of the operating diagram will be described later.

Case4: In this case we will treat the synchronization of the vehicles that are "successors" in the propagation of a phase change. In a not-synchronized NVE such as Case 3, after the initiating vehicles of said NVE have synchronized their lights (applying the second strategy), vehicles that have had to change phase will have to propagate that phase change (applying the first strategy). These "propagator" vehicles, which are now no longer synchronized with their "successors", are enabled to apply a phase shift to their ILPE, therefore in said successor vehicles the "Propagator vehicle detection" signal (see FIG. 58) will be activated and it will also activate the "Not synchronized intermittent light detection" signal (see FIG. 59). When the latter occurs, the "Intervehicular phase selection" block is activated in said successor vehicles and the sequence including the steps 360, 361, 362, 385, 386, 387.... is produced. In step 385, the "Displaced emission enabled" signal is activated, then at the decision point 386 the arrival of the next positive edge of the ICS is expected so that only when the latter has occurred the sequence can advance to the next step. In this way the vehicle emits a displaced light pulse with respect to the phase it had before changing phase in step 387 (this is achieved because, as can be seen in the flowchart of FIG. 61, the "Not synchronized light pulse detection" and "Displaced emission enabled" signals will be active and therefore, once the positive edge of the ICS is presented, the emission displaced with respect to said positive edge will be unavoidable, even though before said emission changes the phase of said ICS).

This displaced emission has been designed to allow the next "successor" vehicle (if any) to extend, if necessary, the vision protection before it is exposed to the pulses of light it will receive outside the VPZ (we say "if necessary" to remember that "the extension of the vision protection" will only become effective if the intensity of those pulses of light justifies it, see flowchart of the "Vision protection" block in FIG. 60). The phase change generated by step 387 of said FIGS. 66A - 66B will cause said "successor" vehicle to become a "propagator" vehicle since when changing phase it has been synchronized with its "predecessor" vehicle but not with its "successor" vehicle (if any). From decision point 366 the path that the sequence will take in a vehicle that still has successors will be given by steps 366, 367, 368... This is so because a vehicle that has successors receives from them synchronized light until the moment of changing its phase in step 387, and will continue to receive synchronized light after changing phase but now from its predecessor (with which it was synchronized when changing phase). On the other hand, the path that the sequence will take in a vehicle that no longer has successors will be given by steps 366, 379, 380, 381, 382... This is so because the vehicle doesn't have of who to receive synchronized light until the sequence reaches step 387, wherein said vehicle begins to receive synchronized light upon changing phase, but the "Synchronized light detection" signal has not yet been activated upon reaching the sequence to said step 366 (see operating diagram of the "Synchronized Light Detection" block 238 in FIG. 38).

As already mentioned, a vehicle that has changed its phase in step 387 will be synchronized with its predecessor but will continue to detect not-synchronized light from its successors (if any) until they change phase. When the latter occurs, the vehicle will be synchronized being then reset the "Intervehicular phase selection" block 312 of FIG. 63, returning the sequence to step 360 when the "Not-synchronized intermittent light detection" signal is deactivated in the vehicle. This must occur without the sequence having passed decision point 368 or 382, depending on whether or not the vehicle has successors respectively, since in this Case 4 doesn't correspond to apply the second synchronization strategy (which can start either in the step 369 or at step 383). Therefore, the wait at decision point 368, given by the time "$t_{13}$", must be greater than the time a vehicle needs, already converted into a "propagator", to make that in their successors the "Propagator vehicle detection" and "Not synchronized light detection" signals be activated (signals which in this case will be activated at about the same time) added to the time it takes to deactivate the "Not synchronized intermittent light detection" signal.

Thus, we can now refine the initial estimate we made of time "$t_{13}$" in Case 1. The time that lapses since a "propagator" vehicle changes its phase in step 387 until it is synchronized with its "successor" is given practically by the time "$t_{12}$" that it takes to activate in said successor the signal "Not synchronized intermittent light detection". In order to estimate the value of "$t_{13}$" we must add to the value of "$t_{12}$" the time "$t_{11}$" that takes in being disabled in said propagator vehicle (already synchronized with its successor) said "Not synchronized intermittent light detection" signal. This estimate of the time "$t_{13}$" is greater than that done in Case 1, since the time it takes for the "isolated" vehicles of Case 1 to change phase will be less than the time "$t_{12}$". This "$t_{13}$" estimate is also sufficient for the last vehicle to make use of the "Inter-vehicular phase selection" block as a successor, since said vehicle, after changing phase at step 387, only has to wait for the deactivation of the "Not synchronized intermittent light detection" signal, which will occur during the waiting time of the decision point 364 or during the cycle controlled by the counter XIII at the decision point 382. In any case, the "Intervehicular phase selection" block 312 of FIG. 63 will be reset without the second synchronization strategy being applied.

Case5: we will now discuss the synchronization of an NVE in which one or more vehicles that have active the flag that points them as "beginners" participate. When the "Not synchronized intermittent light detection" signal is activated in a vehicle having said flag active, the sequence including steps 360, 361, 362, 363, 387, 364, ... is executed. Through step 387 said vehicle inverts the phase of its ICS. If the phase change of this beginner vehicle (s) achieves synchronization of the NVE, in the vehicles of said NVE the sequence will return to step 360 either from the decision points 364 or 368 or from the cycle controlled by the counter XIII at decision point 382, upon deactivating the "Not synchronized intermittent light detection" signal therein. Otherwise, the vehicles of said NVE wait for the arrival of a positive edge of the "Starting signal", at the decision point 364, to obtain the synchronization in the regular form.

After the description of the part of the flowchart of FIGS. 66A - 66B corresponding to the application of the first synchronization strategy is finished, we will now describe the rest of said flowchart, in which "Synchronization with hierarchy given by magnetic course" is applied as second synchronization strategy.

In all vehicles participating in an NVE of the type discussed in "Case 2", the implementation of said second strategy is initiated at step 383 in which the "Displaced emission enabled" signal is activated. On the other hand in all "starter vehicles" of a not-synchronized NVE type analyzed in "Case 3" (conflicting union of two synchronized NVEs) the application of said second strategy starts at step 368A, in which the "Trigger extended protection TMRs" signal is activated so that the driver has vision protection against the first not-synchronized pulse of intense light that the vehicle could receive during a phase change. Before proceeding, it is noted that by either path the sequence arrives at decision point 369 the vehicles will have active the "Displaced emission enabled" signal (see steps 367 and 383). As described in the "Inter-vehicular synchronization procedure with external assistance", when applying the "Synchronization with hierarchy given by magnetic course" strategy, each vehicle will adopt, depending on the quadrant that corresponds at that moment to its magnetic direction, one of the two alternative phases as its current phase of ILPE, and a hierarchy to "defend" that phase. Initially each vehicle will adopt the hierarchy and phase assigned to its magnetic quadrant according to a "Predetermined phases distribution A" in which opposite alternative phases are assigned to opposite quadrants and, in addition, high hierarchy to two of said opposite quadrants and low hierarchy to the other two. If said "Predetermined phases distribution A" does not lead to NVE synchronization, then each vehicle will adopt the phase corresponding to its magnetic quadrant according to a "Predetermined phases distribution B", which is obtained simply by making the vehicles with low hierarchy invert their phase, which will lead to the synchronization of said NVE.

As already mentioned, the function of the "Magnetic course generation" block 313, of FIG. 63, is to determine which quadrant corresponds to the vehicle in relation to its magnetic direction, and to identify said quadrant using two bits to which we have called "cb1" and "cb0", where cb0 is the least significant bit. Thus, the four magnetic quadrants will be identified in sequence as "00", "01", "10" and "11" (for example: NW = 00, NE = 01, SE = 10 and SW = 11). In the flowchart of FIGS. 66A - 66B, whose description we reassume now, it has been adopted as the "Predetermined phases distribution A", the one that assigns the alternative phase given by $\overline{Qn}$ to the adjacent quadrants "00" and "11", and the opposite alternative phase (Qn) to the adjacent quadrants "01" and "10", giving high hierarchy to the opposite quadrants "00" and "10" and low hierarchy to the opposite quadrants "01" and "11". When the magnetic direction of the vehicle corresponds to the quadrant 00 or the quadrant 11 the sequence will advance from the decision point 369 to the step 371, since the EXCLUSIVE OR between the bits cb0 and cb1 will result in, zero. In said step 371 a pulse is generated on the output "Reset phase selection" to set the "Phase selection" output to low level (see Flip-Flop 316 in FIG. 63) and thereby to cause said vehicles, with magnetic quadrant "00" or "11", adopt $\overline{Qn}$ as its ICS (see FIG. 20). Conversely, if the magnetic direction of the vehicle corresponds to quadrant 01 or quadrant 10 the sequence will advance from decision point 369 to step 372, since the EXCLUSIVE OR between bits cb0 and cb1 will have a nonzero result. In said step 372 a pulse is generated on the "set phase selection" output to set the "phase selection" output to high level (see Flip-Flop 316 in FIG. 63) and thereby make said vehicles, with a magnetic quadrant "01" or "10", adopt Qn as their ICS (see FIG. 20).

If the vehicles that adopted this initial phases distribution are synchronized with each other, in all of them the sequence will be confined, after step 373 (whose function will be explained later), to decision points 374, 375 and 376 until the counter XIII reaches the value corresponding to the time "$t_{13+}$". This is so because said vehicles, being synchronized with each other, will not receive pulses of light whose positive edges fall into the DRCZ. When the counter XIII reaches the value corresponding to the time "$t_{13+}$" the sequence will go to step 364. Step 374 fulfills the function of causing the sequence in a vehicle to leave cycle 374, 375, 376, 374 before a possible "Successor" of said vehicle emits a displaced pulse with respect to the phase that said "successor" has before changing said phase in step 387, since if said pulse were detected in steps 375 and 376 it could produce a wrong phase change in the propagator vehicle. Accordingly, the value "$t_{13+}$" is obtained by adding to "$t_{13}$" a time which must be less than the time "$t_{12}$" that it takes to activate in said successor vehicle the signal "Not synchronized intermittent light detection". In fact the minimum value that can be given to "$t_{13+}$" is around 3T (anyway if we do not have the subtlety of having a successor vehicle emit a displaced pulse before changing phase -reversing the order of steps 385 and 386- then the restriction on the value of "$t_{13+}$" disappears and decision point 374 could even be eliminated in which case, when the initial phases distribution was correct, the sequence would remain in a cycle between steps 375 and 376 until occurrence the deactivation of the "Not synchronized intermittent light detection" signal).

The function of step 373 is to ensure that the first displaced emission that a vehicle can detect, within the cycle given by steps 374, 375, 376 and 374, corresponds to that performed by another vehicle with the phase already adjusted by the steps 371 or 372, and not with the phase that said vehicle had before making said adjustment. To ensure that this is accomplished it is necessary to introduce a delay of at least 1T between the output of decision point 368 and the output of said decision point 373, as well as between the output of decision point 382 and the output of said decision point of 373. If it is selected as clock signal for counter XIII (signal which we have called "clock C13") to the output Qn of the "Intermittence control signal generation" block 234 said delay will be of 1T, which is a period of the ICS.

If the initial phases distribution does not lead to the synchronization of said vehicles, it will suffice to achieve it that those vehicles which, due to their magnetic course, correspond low hierarchy, change phase, i.e. all vehicles whose magnetic quadrant is "01" or "11". In these vehicles, the sequence will be given by steps ...374, 375, 376, 377, 387, 364, ... In step 377, it is asked about the status of bit cb0 in order to determine whether to the quadrant of the vehicle corresponds low hierarchy, since the quadrants with low hierarchy have in common the bit cb0 in high level. In step 387 the "Phase selection" signal is inverted in vehicles with low hierarchy and then the sequence advances to decision point 364. In contrast, in vehicles with high hierarchy (magnetic direction in quadrant 00 or 10) the sequence will be given by the steps ... 374, 375, 376, 377, 364, ...

As already mentioned, in vehicles which have already completed the application of the second synchronization strategy the sequence will return to step 364. With said vehicles already synchronized, the deactivation of the "Not synchronized intermittent light detection" signal will be produced either during the waiting time at the decision point 364 or during the cycle controlled by the counter XIII at the decision points 368 or 382 as appropriate. This will result in resetting the "Intervehicular phase selection" block 312 of FIG.63, whereupon the sequence starts again at step 360. It should be mentioned that in vehicles which must propagate a phase change, the deactivation of the "Not synchronized intermittent light detection" signal will occur either at said decision point 364 or at said decision point 368 because in said vehicles the "Synchronized light detection" signal remains active (see step 366).

The description of the composite block "Intervehicular synchronization with external assistance" 233 of FIG. 56 has been completed, both for the version of FIG. 63 that we have just described and for the version of FIG. 62 described above. Next, the values that can be assigned to some "time controls" used in said system are reviewed.-"Phase adjustment from external sources" signal period: The period of this signal must be M times the period of the "starting signal". "M" being an integer equal to or greater than 1. On the other hand, the period of the signal "Phase adjustment from external sources" should obviously be significantly less than the duration of the "Validate phase adjustment" timer (see FIG. 55).

"Starting signal" period: The period of the "starting signal" must be longer than the time it takes to execute the complete "Intervehicular phase selection" algorithm. If it is opted to apply "Synchronization with pseudorandom hierarchy" in the second strategy for the establishment of hierarchies, the period of the "starting signal" should be greater than the sum of the time "$t_{13}$", plus the time that the counter XIV takes to equal the maximum "inverse score", plus time "$t_{13a}$". As for the time necessary to count the maximum "inverse score", it is necessary to define the value of said maximum score and the period of the clock signal for the counter XIV which must, as already stated, be at least twice the width of the RCZ (or the RCFZ). For example, assuming that we can choose a clock signal for that counter whose period is T/16 and a range of 48 different scores it would only be needed 3T so that the counter XIV reaches the value of the maximum "inverse score". On the other hand, the time "$t_{13}$" should be, as already stated, greater than the sum of "$t_{11}$" and "$t_{12}$" being "$t_{11}$" the deactivation time of the signal "Not synchronized intermittent light detection" (taking the extended value of "$t_{11}$" if applicable) and "$t_{12}$" being the activation time of said "Not synchronized intermittent light detection" signal. Following the example values and assuming that in step 268 of FIG. 59 "$t_{11}$" is extended to 8T and "$t_{12}$" has also been set to 8T we must set for the period of the "starting signal" a value greater than 23T (note that "$t_{11}$" must be greater than the time needed to count the maximum inverse score since the latter is the maximum time that the signal "Relocating next pulse emission" can remain active and should be avoided that, because of this, be deactivated in another vehicle the "Not synchronized intermittent light detection" signal).

It is worth mentioning that if it is opted to apply "Synchronization with hierarchy given by magnetic course" in the second strategy, the calculation of the period of the "starting signal" shows values similar to the previous ones. Accordingly, to vehicles of a not-synchronized NVE that must apply the second strategy to synchronize, i.e. vehicles having to execute the complete "intervehicular phase selection" algorithm, it would take them a fraction of a second to do so considering the frequency of the ICS to be used (for example, if a frequency of 200 Hz were used, that time would be about one tenth of a second). Anyway, it should be mentioned that vehicles that need to synchronize their lights using the second strategy are vehicles that just begin to interact with each other, therefore, because they are still separated by a considerable distance, the intensity of the light they receive is still relatively low, and since the process of synchronization is very brief, even if they had to repeat it more than once the effect would be almost imperceptible.

"Use extended protection" timer duration:

For the versions shown in FIGS.65A - 65F, the duration of the "Use extended protection" timer (retriggerable) should be greater than the time needed to count the maximum "inverse score". This would avoid that during the competition said timer is extinguished in the first successor vehicle (if any) of a vehicle involved in such competition. This remedies the fact that during a competition said timer will not be retriggered in said successor vehicle, since its predecessors suspend the phase shifted ILPE while participating in that competition (see FIG. 60, FIGS. 65A - 65F). To give this timer the suggested duration has no other importance than to ensure that said successor vehicle will have active vision protection when this competition ends, thus preventing the driver from being exposed (before said timer is retriggered) to the non-synchronized light pulse which ends it (see steps 339 and 349 of FIGS. 65A - 65F).

"Enable extended protection" timer duration:
During the propagation of a phase change the longer exposure time to the reception of not-synchronized light could occur in the first successor vehicle, as long as it has successors which in turn have successors. A vehicle in such conditions could receive not-synchronized light pulses for a maximum time that can be estimated in $t_{13} + 3t_{12}$. This time must be taken into account to set the "Enable extended protection" timer value (see FIG. 60). Thus, for the values given as an example, said timer could have a duration of no more than two tenths of a second. However, since depending on the role of the vehicle in the propagation of a phase change, it will receive not-synchronized light pulses falling in different zones (RCZ, DRCZ, or DRCFZ), it could be decreased the duration of said timer, to the value $t_{13} + 2t_{12}$, making that the pulses received in the DRCFZ to fall completely within the "normal" VPZ. This can be achieved by reducing the width of the pulses of light that the vehicle emits displaced (pulses that the vehicle uses to transmit information).

Furthermore, the duration of said "Enable extended protection" timer could be reduced to $2t_{12}$ provided that, in addition to shortening the width of the light pulses that the vehicles emit displaced, the extended vision protection is prevented from activating when said pulses of light are detected in the DRCFZ. To do this, it is enough to change the content of the decision point 280 of FIG.60 to "RCFZ = 1 OR DRCFZ = 1". So that the timers "Enable extended protection" and "Use extended protection" would cease to be activated in the vehicle in front of the phase-shifted light pulses emitted by a synchronized vehicle. In addition, the latter would make the displaced emission, foreseen for a "successor" vehicle to announce a phase change to its possible successors, to be useless, and therefore it could do without said displaced emission by inverting the order, in the flowcharts of the FIGS. 65A - 65F, of the steps 356 and 357, and further, in the diagram of FIGS. 66A - 66B, also reversing the order of steps 385 and 386. For the same reason it could also modify the duration of the "Use extended protection" timer, reducing it to 1T or 2T. The "cost" of reducing the duration of said timers is limited to that the driver could be exposed (before those timers are first triggered during the propagation of a phase change) to the first unsynchronized pulse of intense light. It should be mentioned that, for the values given as an example, the time $2t_{12}$ would be of the order of one tenth of a second. Anyway, since during the propagation of a phase change the time that said driver could be exposed to the intense light is very brief, one could even choose to do without the "extended vision protection".

Reduction of the width of the light pulses emitted displaced: As already stated in the description of the anti-dazzling method, the intermittent light pulses emitted by synchronized vehicles circulating in opposite directions should be prevented from overlapping. For this, it is necessary that each pulse of light emitted by a vehicle is extinguished before the positive edge of the ICS of another vehicle synchronized with the previous one and that circulates in the opposite direction with respect to the road. Therefore, the maximum width that these pulses can have is given by the expression:
T/2 - width of the RCFZ/2 or, expressed in periods of the output Qi of the counter/divider 11, by the expression: $2^{n-i}/2 - \Delta$. However, if it is desired to avoid said overlapping even when said synchronized vehicles are emitting phase shifted light pulses, it is necessary that the width of said light pulses be reduced to the value: $2^{n-i}/2 - \Delta - DISP$, being, as already mentioned:

$2^{n-i}$: the duration of the period T of the ICS measured in periods of an output Qi of the counter/divider 11 (see FIG.20).
$\Delta$: the tolerance margin already described when defining the CFZ measured in periods of said output Qi of the counter/divider 11.
DISP: The displacement or phase shift that a vehicle will apply to its ILPE to transmit information to other vehicles, measured in periods of said output Qi of the counter/divider 11,

Propagator vehicle detection:

The time (tio) required for the activation of the "Propagator vehicle detection" signal must be less than the time required for the activation of the "Not synchronized intermittent light detection" signal ($t_{12}$), to be able to guarantee in this way the correct treatment of said "Propagator vehicle detection" signal in the "Intervehicular phase selection" block of FIGS. 62 and 63 (see flowcharts of FIGS. 65A - 65F and 66A - 66B).

Not synchronized intense light detection:
Vehicles involved in propagating a phase change will receive pulses of light outside the VPZ for a time that has been contemplated in the duration of the "Enable extended protection" timer. If these pulses of light overcome the intense light threshold ("DZT light detection" = 1) the "extended vision protection" will be activated in said vehicles. This makes unnecessary for "High beam/low beam automatic control" block (see reference number 242 of FIG. 56) to act during the propagation of a phase change to reduce the intensity of the vehicle's lights. Therefore, the "Not synchronized intense light detection" signal (see FIG. 40), which acts on this "High beam/low beam automatic control" block, should have an activation time ("nT") that is longer than the duration of the timer "Enable extended protection". However, if when implementing the system it is opted to do without of the "extended vision protection" it could also be opted to reduce the time of activation of said "Not synchronized intense light detection" signal.

Phase adjustment on vehicles having an invalid phase:

The time "te" is, approximately, the time it takes for a vehicle that has its phase invalidated ("Validate phase adjustment" timer = 0) in readjusting said phase by means of the not-synchronized light pulses received from another vehicle (see FIG. 55). In order to avoid that the light pulses emitted by a vehicle with the invalidated phase can cause the "Not synchronized intermittent light detection" signal to be activated in another vehicle with the correct phase, and that with it the "Intervehicular phase selection" block be activated it is convenient that the time "$t_8$" be less than the time"$t_{12}$".

The time "$t_{13}$ +"

The value of "$t_{13+}$", used in the flowchart of FIGS. 66A - 66B, exceeds "t13" by a value which must be less than "$t_{12}$". Otherwise a vehicle which has changed phase (via step 371 or 372 of said FIGS. 66A - 66B) could receive a phase shift light pulse in the DRCZ zone (see step 376) emitted by a successor vehicle (if any) after the "Not synchronized intermittent light detection" signal is activated in this last vehicle (see steps 361, 362, 385 ...). This could result in an erroneous phase change in said propagator vehicle. In fact, it is sufficient to give to "$t_{13+}$" a value that only exceeds "$t_{13}$" in 2 or 3T. Anyway, as has already been said, one could choose to reverse the order of steps 385 and 386, thus doing without the "subtlety" of making that successor vehicle to emit a displaced light pulse before changing phase, with which the mentioned restriction would be removed.

Intervehicular Synchronized Anti-dazzling System with External Assistance and Rearview Protection.

This system is based on the "Anti-dazzling method with rear-view protection" and makes use of the "Intervehicular synchronization procedure with external assistance". As previously announced, this system will be configured as two subsystems which we will call "Front Subsystem" and "Rear Subsystem", to treat each end of the vehicle as a separate entity when the front and/or the rear part of a vehicle participate in a NVE. FIGS. 83A - 83B show the block diagram of a first version of the "Intervehicular Synchronized Anti-dazzling System with External Assistance and Rearview Protection". In FIG. 83A, the front subsystem, represented by the composite block 561, is basically formed by the same blocks that compose the "Intervehicular Synchronized Anti-dazzling System with External Assistance" described above (see FIG. 56). Accordingly, the same block numbers 234, 235, 247, 248, 238, 239, 241, 242, 243, 243A, 246 and 245 of FIG. 56 have been used in said composite block 561 of FIG. 83A to identify those blocks that do not vary from system to system. On the other hand, the blocks of the front subsystem which exhibit some variation with respect to those of the system of FIG. 56 are referred to below:

The "Front received light detection" block 607 of FIG. 83A corresponds to an extended version of block 236 of FIG. 56 (and hence of block 65 of FIG. 34). This extended version has already been described under the heading "Concepts and Characteristics Common to Anti-dazzling Systems with Rear-view Protection", and is shown in FIG. 76.

The composite block 606 of the front subsystem of FIG. 83A is an enlargement of the composite block 237 of FIG. 56 which incorporates the "Synchronized visible light detection" block 608 into the front subsystem. The content of this block 608 is equal to content of block 238, and its flowchart corresponds to that shown in FIG. 38, with the proviso that the entry "IT Light Detection" changes to "IT Visible Light Detection", and that the "Synchronized Light Detection" changes to "Synchronized visible light detection". So that said block 608 has the inputs "IT Visible light detection" from block 607 and the "RCFZ" signal from block 235, and outputs the signal "Synchronized visible light detection", output which will remain in high level while the vehicle is receiving from the front pulses of synchronized visible light. The output of said block 608 enters the "Intervehicular synchronization with external assistance" block 563 of the front subsystem. Said block 563 will be described later on.

In the rear subsystem, represented by the composite block 562 of FIG. 83B, the blocks 565, 566, 568, 569, 570, 572 and 574 have the same name and content as the "front subsystem" blocks 234, 235, 247, 248, 238, 241 and 246 respectively. The content of the "Rearview protection" block 573 of the rear subsystem is equal to the content of the "Vision protection" block 243 of the front subsystem. While the "Protect rear vision" output of said block 573 is held at high level, the "Rear-view protection device" 573A should prevent or attenuate the passage of light. The design of this device 573A will be conditioned by the techniques used to implement the rearview protection, some of which have been mentioned together with the formulation of the antidazzling method with rearview protection. The contents of the block "Rear received light detection" 567 corresponds to that shown schematically in FIG. 77, and described under the heading "Concepts and characteristics common to anti-dazzling systems with rear-view protection". In this version of the system, the "Control of the Devices for the Retroemission Generation" block 575 has the sole function of generating the light emission that the vehicle will use to interact with other vehicles backwards. This block only enters the signal "Emit light pulse", reason why it is of less complexity than its counterpart, the block 245 of the front subsystem. The implementation of said block 575 depends on the techniques to be employed to generate this "retro-emission".

The block "Intervehicular synchronization with external assistance" 564 of the rear subsystem and its homonym 563 of the front subsystem will be described below as composite blocks: both the contents of said blocks and the interconnection between them are shown in FIGS. 84A - 84B. This interconnection is carried out by means of a bidirectional interface whose logical diagram has been divided in two parts called "FRONT/BACK interface" (see fig.84A) and "BACK/FRONT interface" (see fig.84B) incorporated in said composite blocks 563 and 564 respectively. It should be mentioned that the interaction between the front and rear subsystems, which we will call "intravehicular interaction", allows, among other things, that both ends of the vehicle are kept, most of the time, synchronized with each other. The composite block 563 of the front subsystem is, like the composite block 564 of the rear subsystem, an adaptation of the "Intervehicular synchronization with external assistance" block 233 of the "Intervehicular Synchronized Anti-dazzling System with External Assistance" already described in connection with the FIG. 56. The content of the composite block 563 basically comprises the contents of said block 233 plus the content of said FRONT/BACK interface. The content of the composite block 564 basically comprises the contents of said block 233 plus the contents of said BACK/FRONT interface.

Remember that said block 233 of FIG. 56 was described in two versions: one that uses "Synchronization with pseudorandom hierarchy" (see FIG. 62) and another that makes use of "Synchronization with hierarchy given by magnetic course" (see FIG. 63). The version of block 233 shown in FIG. 62 is that which will be used below to describe the content of blocks 563 and 564 of FIGS. 84A - 84B. Thus, blocks 576, 577, 578, 579, 580 and 581 of the FIG. 84A, belonging to the composite block 563 of the front subsystem, have the same function and content as the following blocks of FIG. 62: 298, 299, 300, 301, 302 and 303 respectively. The rest of the components of said block 563 correspond to the FRONT/BACK interface which, given its simplicity, will be described based on the logic scheme formed by the components 586, 587, 588, 589, 590 and 591. The output Q of Flip-Flop D 586 will indicate when the two ends of the vehicle are synchronized with each other. Remember that both ends of a vehicle are synchronized if the positive edge of the ICS of one of said ends falls on the RCFZ of the other end (and vice versa).

Accordingly, the ICS corresponding to the rear subsystem feeds the clock input of said Flip-Flop D 586 and the RCFZ signal of the front subsystem feed the Data input of said Flip-Flop D 586, so that at output Q of said Flip-Flop D 586 the "Synchronized ends" signal will be set to high level if the RCFZ signal is at high level when said ICS goes to high level. Now, as can be seen in said FIG. 62, the "Synchronized light detection" signal directly enters the "Intervehicular phase selection" block 302. In said block 302, which will be activated when the vehicle has been involved in a not synchronized NVE, said "Synchronized light detection" signal is used to give the vehicle, when applying the first synchronization strategy, high hierarchy when it comes from a synchronized NVE. Although this can be applied without changes to both subsystems (front and rear), it has been chosen to extend this idea making that the vehicle has high hierarchy at one of its ends not only when it is receiving "synchronized light" by that end but also when said vehicle, having both ends synchronized, is receiving synchronized light by the opposite end.

With this extension it is achieved that a vehicle having its two ends synchronized and at least one of them involved in a synchronized NVE maintains the synchronization of these ends when the other end is involved in a not synchronized NVE with an "isolated" vehicle. This is done so that said isolated vehicle is synchronized with the vehicles of said synchronized NVE, thus avoiding the possible propagation of a phase change. This extension has been implemented in the front subsystem by the OR 588 and AND 587 gates. The front end of the vehicle will have high hierarchy, when applying the first synchronization strategy, when the output of said OR gate 588, which enters the "Intervehicular phase selection" block 580, is in high level. This will occur when the "Synchronized light detection" signal of the front subsystem, which enters one of the inputs of said OR gate 588, is at a high level or when, being in high level the "Synchronized ends" signal, that enters one of the inputs of the AND gate 587, the "Synchronized light detection" signal of the rear subsystem is also in high level, signal which enters the other input of said AND gate 587 whose output is in turn connected to the other input of said OR gate 588.

Taking again as a starting point FIG. 62, we see that in said figure the "Invert phase selection" output of the "Intervehicular phase selection" block 302 enters directly into the clock input of the Flip-Flop D 306, which outputs the "Phase selection" signal that will change state when participating in a not-synchronized NVE, the vehicle has to invert its phase. While this could be implemented without changes for both subsystems (front and rear), it has been chosen to make a vehicle also be able to change the state of the "Phase selection" signal of the front end or of the rear end, as appropriate, to recover the synchronization of its two ends (intravehicular synchronization). For this reason, in block 563 of FIG. 84A, the "Invert phase selection" output of block 580 enters, via OR gate 591, the clock input of Flip-Flop D 584.

In this way, by means of the other input of this OR gate 591 a clock pulse can be given to this Flip-Flop D 584 when it corresponds to synchronize both ends of the vehicle by inverting the "Phase selection" signal of the front end. It is to be noted that both inputs of said OR gate 591 will never be active simultaneously since block 580, which can activate one of the inputs of said OR gate 591, will only remain active while the "Not synchronized intermittent light detection" signal be in high level, signal which enters said block 580 and also to one of the inputs of the NOR gate 589. So, as long as said "Not synchronized intermittent light detection" signal is at high level, the output of the NOR gate 589 will be at low level and therefore, the output of the AND gate 590 which is connected to the other input of said OR gate 591 cannot be set to high level. The conditions for synchronizing the two ends of the vehicle with each other by inverting the phase, in this case the front end, are: that the rear end being involved in a synchronized NVE (i.e., being at high level the "Synchronized light detection" signal that comes from the rear subsystem and enters one of the inputs of AND gate 590) it happens that said front end is not involved in an NVE and obviously that both ends are not synchronized with each other.

These latter conditions will be fulfilled when the signals of the front subsystem "Synchronized light detection" and "Not synchronized intermittent light detection", entering the NOR gate 589, are both at low level and when the signal "Synchronized ends" entering another of the inputs of said NOR gate 589 is also in low level. We will now describe the option to add to the bits of the "Inverse score", which enter into block 580 of the front subsystem, one more bit in the most significant position, which value will be given by the "Indian file bit" signal, which will be set to high level when the vehicle is involved in a synchronized NVE in which it is not receiving synchronized visible light by the front (see AND gate 592). The only utility that this has is to make that, when a conflicting union of two synchronized NVEs takes place and in one of them all the vehicles are moving in the same direction (single file), be the vehicles of the latter NVE those that change phase to synchronize, causing them to have a greater "Inverse score" than those in the other NVE. This is done so that the propagation of phase change occurs between vehicles that are not receiving visible light from the front. To conclude the description of the composite block 563 of FIG. 84A, we note that the name of the signal entering the "Beginner flag generation" block 579 is "Synchronized visible light detection" instead of "Synchronized light detection" as in FIG. 62, since in this system the signal "Synchronized light detection" generated in the front subsystem is activated by both visible and not-visible synchronized intermittent light reception. This change is made so that the front end of the vehicle loses the "beginner" condition only when it has synchronized its lights with that of a vehicle that comes in the opposite direction. Next, we will describe the composite block 564 of the rear subsystem only pointing out the differences that said block presents with respect to the composite block 563 just described for the front subsystem. To begin with, we note that the "Phase adjustment from external sources" signal is shared by both blocks 563 and 564, so that the phase adjustment signal receptor 576, included in block 563, has no equivalent in said block 564. The velocity sensor 583 included in said front subsystem block 563 is also unique. The "Synchronized ends" signal is also shared by said blocks 563 and 564, whereby the Flip Flop D 586 included in block 563 also has no equivalent in block 564. It should be mentioned that the "Starting signal" generated in the front subsystem by the block 585 of FIG. 84A could also be used as starting signal for the rear subsystem, although it was chosen to present in FIGS. 84A - 84B to said signals independently generated (see block 600). It remains to be said that the "Beginner flag" is generated in the composite block 564 differently than in the composite block 563, since the beginner flag state of the rear subsystem depends on the state of its homonymous flag in the front subsystem. This is so because the vehicle loses its "beginner" condition first by the front and then, as soon as both ends of the vehicle are synchronized with each other, it will lose its beginner condition at the rear end. Once the vehicle loses the "beginner" condition at its rear end, it will only regain that condition if the "beginner" signal from the front end is re-activated. Said "beginner" flag is generated in the rear subsystem by block 595 of FIG. 84B, the contents of which, given their simplicity, have been schematized within the same block 595 and their operation responds to the behavior just described for said flag. On the other hand, in said composite block 564, components 593, 596, 597, 598, 599, 600, 601, 602, 603, 604 and 605 have the same function and content as components 577, 580, 581, 582, 584, 585, 587, 588, 589, 590 and 591 of the composite block 563 respectively.

FIGS. 85A - 85B shows the block diagram of a second version of the "Intervehicular Synchronized Anti-dazzling System with External Assistance and Rearview Protection", which introduces two improvements to the first version of said system. Improvement No. 1 is to prevent the vehicle from activating the vision protection when the vehicle is detecting from the front only pulses of not visible light coming from the rear part of another vehicle or other vehicles, as would occur for example in an NVE composed of vehicles that advance in single file. Improvement No. 2 has the purpose of allowing, under certain conditions, a vehicle to be able to emit backwards pulses of visible light, in order to cooperate with the vehicles that circulate in the opposite direction extending the area of the road that these vehicles can illuminate. The conditions for a vehicle to be able to emit backwards pulses of visible light using the frequency and phase of the rear ICS are:

Condition No. 1: that the vehicle that will emit backwards pulses of visible light has other vehicles in front approaching in the opposite direction, so that there are drivers that can benefit from this additional illumination.

Condition No. 2: that the vehicle that will emit pulses of visible light backwards does not have behind it on the road not synchronized vehicles whose drivers could be harmed by the light emitted backwards by the vehicle of the front.

Condition No. 3: that the vehicle that will emit pulses of visible light backwards has both ends synchronized with each other, otherwise the visible light that the vehicle could emit backwards would not be really useful for a synchronized vehicle that is approaching in the opposite direction.

From the block diagram of FIGS. 85A - 85B only those blocks differing from those shown in FIGS. 83A - 83B will be described. The composite block 561A of FIG. 85A, corresponding to the front subsystem, presents the following modifications with respect to block 561 of FIG.83A: on the "Vision protection" block 243 of FIG. 85A, as in FIG. 83A, the "Activate intermittent light" signal acts, with the difference that it does so through the AND gate 611 when the signal "Synchronized visible light detection", which also enters said AND gate 611, is in high level.

The composite block 562A of FIG. 85B, corresponding to the rear subsystem, has the following modifications with respect to block 562 of FIG. 83B: the contents of the block "Rear received light detection" 567A corresponds to that shown schematically in FIG. 15, wherein the light sensor 2 of said FIG. 15 should respond only to visible light to prevent vehicles that have already crossed each other on the road from interacting with each other. The "Not synchronized light detection" block 571 (which does not have its equivalent in the rear subsystem of FIG. 83B) has the same content as the front subsystem block 239. The AND gate 609 and the inverter 610 represent another extension present in the rear subsystem of FIG. 85B. The way in which the modifications described affect the behavior of this system is described below. In order to implement the improvement No. 1, that is to prevent the vehicle from activating the vision protection when said vehicle is detecting from the front only pulses of not visible light, in the front subsystem the signals: "Synchronized visible light detection" coming from the block 608 and "Activate intermittent light" from block 241, enter the inputs of the AND gate 611, whose output, when it is at high level, allows, through the "Vision protection" block 243, the "Protect vision" output to be activated within the VPZ zone. In this way the vision protection will only be activated when the vehicle is using its intermittent light, but in front of vehicles that are also emitting pulses of visible light. This will prevent the vehicle from activating the vision protection when the vehicle is detecting from the front only pulses of not visible light coming from the rear part of another or others vehicles, as it would for example in an NVE integrated by vehicles that advance in single file.

Next, the implementation of improvement No. 2 is described, that is to say that a vehicle can emit backwards pulses of visible light, in order to cooperate with the vehicles that circulate in the opposite direction. The "Synchronized Visible Light Detection" output of the front subsystem block 608 enters one of the inputs of the AND gate 609 of the rear subsystem, while the "Not synchronized light detection" output of block 571 enters, inverted by the inverter 610, to another input of said AND gate 609 and the "Synchronized ends" output of block 564 enters the other input of said AND gate 609. In this way, the output of said AND gate 609, which we will call "Enable visible light use" and which enters the" Control of the devices for the retroemission generation" block 575, will be set to high level when the vehicle can emit backwards visible light. This is so because the signal "Synchronized visible light detection" in high level indicates that it fulfills said condition No. 1, while the signal "Not synchronized light detection" in low level indicates that condition No. 2 is fulfilled, and the signal "Synchronized ends" in high value indicates that condition No. 3 is met. So that the output of the AND gate 609 at high level indicates that all three conditions are met. It is to be noted that at block 567A it is desirable to adapt the activation threshold of the "DZT light detection" signal, signal which enters to block 571, to ensure that when a vehicle has behind it on the road to not-synchronized vehicles, the "Not synchronized light detection" signal is set to high level before the drivers of said not-synchronized vehicles could be affected by the visible light emitted backwards by the vehicle ahead. Remember that said block 233 of FIG. 56 was described in two versions: one that makes use of "Synchronization with pseudorandom hierarchy" (see FIG. 62) and another that makes use of "Synchronization with hierarchy given by magnetic course" (see FIG. 63).The contents of blocks 563 and 564, of FIGS. 83A - 83B and 85A - 85B, have been described using "Synchronization with pseudorandom hierarchy" (see FIGS. 62 and 84A - 84B). A totally analogous work can be done to describe the contents of said blocks 563 and 564, of FIGS. 83A - 83B and 85A - 85B, making use of "Synchronization with hierarchy given by magnetic course" (see FIG. 63), and also using, in said blocks 563 and 564, the FRONT/BACK and BACK/FRONT interfaces already described. The only "special" consideration to be taken into account is that the magnetic direction obtained for the vehicle must be assigned to the front end of said vehicle (front subsystem) and that the opposite magnetic direction must be assigned to the rear end of said vehicle (rear subsystem).

Formulation of the Inter-Vehicular Synchronization Procedure

A further procedure for establishing the synchronization required by the anti-dazzling methods already described is described below. In this procedure, which is called the "Inter-vehicular Synchronization Procedure", no external transmission sources are required to transmit information to vehicles. An anti-dazzling system that applies this synchronization procedure will be autonomous, in the sense that it will not need any infrastructure on the road or external devices to vehicles. Since in this synchronization procedure the vehicles do not have any preset phase for the intermittent light pulses emission (ILPE), each vehicle that has not yet participated in any NVE will acquire any initial phase for the ILPE. Vehicles that participate in a not-synchronized NVE, even if they all have different phases of ILPE, can agree on a phase based on which all of them will synchronize their ILPEs. This synchronization will be carried out by means of the exchange of information between vehicles participating in the same not-synchronized NVE so that vehicles, using a predetermined algorithm, compete to make their ILPE phase prevail and to indicate to the other vehicles which phase they should adopt to reach the synchronization of said NVE. Said exchange of information between vehicles will be carried out, using a predetermined means of communication, by the directional transmission/reception of signals by said vehicles, and is performed to solve, by means of said predetermined algorithm that we will call "inter-vehicular phase adjustment algorithm", which one or which of those vehicles will keep their current phase of ILPE and which one or which of those vehicles will readjust their current phase of ILPE to achieve synchronization of said NVE.

Said "inter-vehicular phase adjustment algorithm" is based on establishing differences between the not-synchronized vehicles of said NVE to give them a hierarchy, so that based on said hierarchy said vehicles compete with each other to make their ILPE phase prevail. Where the winning vehicle of this competition initiates the synchronization of said NVE by imposing the counter-phase of its current phase of ILPE as the emission phase for the vehicles emitting in the opposite direction to said winning vehicle and where the vehicles already synchronized with the winning vehicle collaborate with it imposing in turn the counter-phase of its current ILPE phase as the emission phase for vehicles not yet synchronized emitting in the opposite direction to said already synchronized vehicles, thus completing the synchronization of said NVE. The "information" that a vehicle receives from another vehicle or other vehicles within an NVE allows it to determine, among other things, whether it is or not synchronized with said vehicles and therefore whether it should eventually change its phase to be.

Aspects relating to vehicular interaction and valid for this synchronization procedure have already been treated in describing the "Inter-vehicular synchronization procedure with external assistance". However, they are reproduced below: In the anti-dazzling methods already described, it has been established that the vehicles must interact with one another to involve each other in an NVE. In this synchronization procedure, in the case of a not-synchronized NVE, the vehicles must also exchange information to achieve the synchronization of said NVE. So vehicles should be able to directionally transmit signals both from the front and from the rear part if they have the capability to provide "vision protection" and "rear-view protection", and only from the front if the vehicles only provide vision protection. In order to explain the characteristics that said exchange of information should have in the event that vehicles provide vision and rear-view protection, we will consider as separate entities the front and rear part of the vehicles. The front of a vehicle can interact with the front or rear part of another vehicle, while the rear part of a vehicle does not interact with the rear part of another vehicle (vehicles that have already crossed each other on the road do not interact with each other). Thus, the vehicle must have means to receive at the front both the signals that a vehicle can transmit from the front and those that another vehicle can transmit from behind and also means for the reception at the rear part of the signals that a vehicle can transmit from the front. Making a vehicle exchange information backwards also makes it possible to apply this synchronization procedure to an NVE composed by vehicles that all move in the same direction with respect to the road.

Obviously, the ILPE phase of a vehicle is the basic information that another vehicle, exposed to said ILPE, needs to determine whether or not it is synchronized with the "emitter" vehicle of said ILPE. For this reason, it is necessary that the vehicles emit backwards a periodic adjustable phase signal equivalent to said ILPE in terms of being able to pass phase information to the vehicles that come behind, where that backward emission will be controlled by a signal equivalent to said ICS (ICS for the rear end) and will be a not-visible emission (e.g. infrared light), at least as long as said NVE is not synchronized. We will say that both ends of a vehicle are synchronized with each other when the signals that the vehicle can directionally transmit from each end are in counter phase. Thus, when this is met, the phase information that a vehicle will transmit backward will be the same phase information that will transmit forward another vehicle synchronized with it that advances in the opposite direction. From this point of view, we can say that the rear part of a vehicle behaves like the front of another vehicle coming in the opposite direction.

What we have just expressed and the statement made under the title "Definition of Nocturnal Vehicular Encounter", that when the "anti-dazzling method with rear view protection" is applied a vehicle could be front involved in an NVE and rear involved in another NVE, allow us to emphasize something that is implicit in what has been said and is that -in relation to vehicle interaction- each end of the vehicle will have the ability to act separately. Much of the following has been written with reference to the vehicle in general and not to any of its particular ends, unless this were necessary, and was written in this way with the intention of facilitating its comprehension and in that it is applicable both to vehicles that can provide rear-view protection as to those that do not have that capability, since in the latter case, in which vehicles interact only from the front, it does not make sense to specify for each action of the vehicle the end by which said action is carried out. Therefore, in vehicles that provide rear-view protection and in relation to aspects related to vehicle interaction, the actions attributed to the vehicle must be referred to the extreme(s) involved in those actions. By way of example, if we say "the losing vehicle of the competition will change its current emission phase" it must be interpreted that: if the front end of the vehicle is the one that loses the competition, that front end will change its current phase of ILPE, or if the rear end of the vehicle is losing the competition, that rear end will change the current phase of the signal equivalent to that ILPE, or if both ends of the vehicle are losers of competition, both ends will change its phase . Other aspects and characteristics of the vehicle interaction valid for this synchronization procedure will be treated at the end of the description of the same. The "Inter-vehicular phase adjustment algorithm" is described below. This algorithm is similar to the "Inter-vehicular phase selection algorithm" used in the "Inter-vehicular synchronization procedure with external assistance", but with certain implementation differences. Once the vehicles determine that they are part of a not-synchronized NVE, the execution of said "Inter-vehicular phase adjustment algorithm is started". This algorithm sets the hierarchies of the vehicles of a not-synchronized NVE so that based on said hierarchy said vehicles compete with each other to make their phase prevail when synchronizing. For this, said algorithm applies two strategies in the following order:

First strategy: when a vehicle determines that it is part of a not-synchronized NVE, it obtains a first hierarchy based on the information it has and exchanges with another vehicle or other vehicles of said NVE, and on the basis of it determines whether or not it should adjust its current phase emission. The basic principle of this first strategy is to make that the more hierarchical it is a vehicle within said not-synchronized NVE, greater is the time that said vehicle takes, within a preset timing, to readjust its phase in front of the not-synchronized emissions coming from other vehicles. If this first strategy does not lead to the synchronization of the NVE, the "Inter-vehicular phase adjustment algorithm" will apply a second strategy to obtain the synchronization of said NVE.

Second strategy: If after a certain time interval has elapsed since the beginning of the "Inter-vehicular phase adjustment algorithm" (the interval that will be given by the time required by the application of the first strategy), a vehicle determines that it is still part of a not synchronized NVE, it will apply this second strategy to obtain a new hierarchy and on the basis of it decides whether or not to adjust its current emission phase to obtain the synchronization of said NVE. This second synchronization strategy will make use of the algorithm we will call "Synchronization by phase hierarchy" and eventually, in some infrequent configurations of not-synchronized NVEs, of the algorithm we will call "Pseudorandom hierarchy" and which is a variant of the "Synchronization with pseudorandom hierarchy" already described for the "Inter-vehicular synchronization procedure with external assistance".

The following is how the phase adjustment is performed. In the formulation of the anti-dazzling methods we have said that the emission of intermittent light is carried out with the frequency and phase of a periodic signal that we have called "Intermittence control signal" (ICS) and it is the one that maintains the phase adopted by a vehicle even if it is not emitting intermittent light (or its equivalent signal as appropriate). Thus, said phase adjustment will be carried out by resetting the vehicle's ICS at low level with the arrival of an not synchronized pulse of light (or of its equivalent signal), thus being synchronized the emissions of the "emitter" and "receiver" vehicles of said pulse, so that the phase that had the vehicle "receptor" of said pulse will be eliminated from the NVE. For this phase removal mechanism to work properly, when a vehicle changes its phase it will be disabled to change its phase again until it has emitted, at least once, with its new phase.

The following will be detailed, depending on the type of not-synchronized NVE that vehicles integrate, when and how each of these strategies is applied:

The implementation of the first strategy is sufficient to obtain the synchronization of a not-synchronized NVE when it has been formed from a synchronized NVE by the incorporation of one or more not-synchronized vehicles. In this case, the vehicles that will have the highest hierarchy will be those coming from the synchronized NVE and the "information" that they receive and that allows them to identify this situation is given by the synchronized ILPE and/or by the signal equivalent to said synchronized ILPE (if said information comes from the rear part of a vehicle) that said vehicles are detecting since before said not-synchronized NVE was formed. In this way, the vehicle with the best hierarchy within said NVE will not have to change phase to synchronize with the rest and will be the winning vehicle of the competition. Vehicles that do not come from a synchronized NVE will be the ones with the lowest hierarchy and will readjust their phase with the first not-synchronized pulse of light (or of equivalent signal) that they receive after the execution of said "Inter-vehicular phase adjustment algorithm" has started.

By making vehicles that do not come from the synchronized NVE be those that have to change phase, it is avoided having to propagate a phase change between the vehicles that do come from said synchronized NVE. In the scheme of FIG. 13E, a not synchronized NVE generated by the incorporation of vehicle V4 into the synchronized NVE formed by the vehicles V1, V2 and V3 -encircled in said figure- is shown by way of example. In this example, vehicles can only be involved in an NVE by vehicles moving in the opposite direction (for simplicity it has been assumed that these vehicles do not provide rear-view protection). V4 is interacting directly only with V1. This is because it has been assumed that V4 is "out of reach" of V3 and because V4 cannot interact directly with V2 (since in this case vehicles do not provide rearview protection). The broken line drawn between V4 and V1 indicates that the ILPEs of said vehicles are not synchronized. Analyzing this example, we can see that if instead of the vehicle V4 were the vehicle V1 the one that changed phase, this phase change should be propagated toV2 and then through V2 to V3 so that all the vehicles are synchronized. By avoiding this "chain" propagation the synchronization of the entire NVE can be completed in less time and it is further achieved that the vehicles furthest from each other, represented in the example by V1 and V4, be the only ones that exchange not-synchronized light during the short synchronization time.

The implementation of the first strategy will also normally be sufficient to obtain the synchronization of a not-synchronized NVE when none of the vehicles involved in said not-synchronized NVE is detecting synchronized light, or its equivalent, at the time of starting the execution of the "Inter-vehicular phase adjustment algorithm", i.e. when none of said vehicles come from a synchronized NVE. Unlike the "Inter-vehicular synchronization procedure with external assistance", in which vehicles can only adopt one of two alternative phases (phase/counter phase), in the "Inter-vehicular synchronization procedure" that we are describing the vehicles can initially adopt any phase, this characteristic being which we will use to establish "differences" between these vehicles. Thus, as long as said vehicles have different phases, among said vehicles the lowest hierarchy will correspond to the first vehicle that, having started the execution of said "Inter-vehicular phase adjustment algorithm", receives a pulse of light (or of its equivalent signal) not synchronized, pulse with which said vehicle will readjust its phase, being eliminated from the NVE the phase that said vehicle had. Thus, each vehicle that readjusts its phase (vehicle of low hierarchy) is synchronized with another vehicle of greater hierarchy within the NVE, process that leads, by elimination of phases, to the synchronization of said NVE. Remember that for this phase elimination mechanism to work properly, when a vehicle changes phase it will be disabled to change phase again until it has emitted at least once with its new phase (eventually a vehicle could change phase more than once during the synchronization of said NVE).

On the contrary, if said vehicles have, casually, within a predetermined tolerance margin, the same phase (i.e. not-synchronized vehicles emitting their pulses at almost the same time), this first strategy will not be sufficient to obtain the synchronization of said NVE, since said phases would no longer be distinguishable and therefore would have the same hierarchy. In practice this means that both vehicles could detect the arrival of a pulse of light (or of its equivalent signal) emitted by the other when they have just emitted their own pulse of light, which would cause a mutual phase readjustment that would leave to said vehicles not synchronized with each other and with opposite phase to that previously had. Taking into account that in this "Inter-vehicular synchronization procedure" the phase initially adopted by a vehicle is not predetermined, it is quite unlikely that this "equal phases" situation is presented in a "casual" manner. If this happens the vehicles will apply the second strategy to synchronize (in fact they will apply the second algorithm of this second strategy, which we have called "Pseudo-random hierarchy", and which will be described under the heading "Particular cases").

The application of the second strategy is necessary when a not-synchronized NVE has been formed from the encounter of two synchronized NVEs. This not-synchronized NVE will be composed of those not-synchronized vehicles coming from both synchronized NVEs that have approached enough to interact with each other. FIG. 13F shows an example of a not-synchronized NVE formed from the encounter of two synchronized NVEs E1 and E2, which in the figure are encircled. It has been assumed, as in the example of FIG. 13E, that vehicles can only be involved in an NVE by vehicles traveling in the opposite direction. We will assume that V1 and V5 are two vehicles not synchronized with each other -coming from E1 and E2 respectively- that have approached enough to interact with each other. When this second strategy is applied, the not-synchronized vehicles (V1 and V5 in the example) will adopt, through the algorithm we have called "Synchronization by phase hierarchy", a new hierarchy to compete, and based on this hierarchy the vehicles will agree which of them will have to change phase and which will not.

As long as said vehicles have different phases, between said vehicles the lowest hierarchy will correspond to the first vehicle that, having begun the execution of said second strategy, receives a pulse of light (or of its equivalent signal) not synchronized having its ICS in high level. That is to say that, the phase adjustment will be carried out in the vehicle of lower hierarchy, restarting in low level the ICS with the arrival of a pulse of light (or of the equivalent signal) not-synchronized, whose positive edge be present in the moment the vehicle has its ICS in high level. This will synchronize the emissions of the "emitter" and "receiver" vehicles of said pulse.

In the type of NVE we are describing, after said not-synchronized vehicles (V1 and V5 in the example) have applied the second strategy and agreed which one or which of them will have to change phase, the propagation of said phase change should be initiated between vehicles coming from the same synchronized NVE as that or those vehicles that have resigned their phase. In the propagation of a phase change we will identify as "propagator" the vehicle(s) that just changed its phase and as a "successor" to the vehicle(s) to which the next turn corresponds to change phase. It should be clarified that the successor vehicles, among which this phase change should be propagated, will receive information from the propagator vehicle(s) which will cause them to adopt a minimum hierarchy and apply the first strategy to synchronize.

On the other hand, if these not-synchronized vehicles (V1 and V5 in the example) casually had, within a predetermined tolerance margin, the same phase (i.e. they are not-synchronized vehicles emitting their pulses practically at the same time), this first algorithm of the second strategy will not be sufficient to obtain the synchronization of said NVE since in this type of NVE the phase changes are propagated to the successor vehicles and therefore it is necessary that to synchronize only one change of phase takes place and in vehicles that all come from the same synchronized NVE, something that could not happen when these phases were very similar. This is because, due to the mentioned tolerance margin, a vehicle of one of the synchronized NVEs could be receiving pulses of light (or of its equivalent signal), coming from the other synchronized NVE, when its ICS is already in high level, while another vehicle of the same NVE could be receiving said pulses when its ICS is still in low value and the same could happen in the other synchronized NVE.

Obviously, if we only applied "Synchronization by phase hierarchy" to a particular case like this the synchronization would not be achieved. We conclude then that "Synchronization by phase hierarchy" leads to the synchronization of vehicles whose phases differ from each other at least in the value of said tolerance margin, or in other words, whose phases are not the same if they are compared with the tolerance expressed by said predetermined margin. Although the possibility that said equality of phases is presented in casual form between two or more vehicles is, as already mentioned, quite remote, it has been taken into account and the solution is to apply the second algorithm of this second strategy, which we have called the "pseudo-random hierarchy" algorithm, which will be described under the heading "Particular cases". The implementation of the first strategy will also suffice, as we just announced, to propagate a phase change within an NVE. Before a vehicle becomes a "propagator" of a phase change, its "successor" has been receiving synchronized light or its equivalent signal, and therefore, if it did not receive information from the propagator vehicle (s), it would maintain the "hierarchy" which confers it to belong to a synchronized NVE and would not change its phase without using that hierarchy to compete (which could put an end to said propagation). For this reason, it is necessary that a vehicle that can become a propagator is identified as such in front of the successor before changing phase, for example, altering in a preestablished way the synchronization that still maintains with said successor. One way of doing this is to emit, for a short time, the ILPE or its equivalent signal as appropriate with a certain phase shift that allows the successor to differentiate said emission from a emission considered synchronized. Thus, when a propagator vehicle changes phase, the vehicle or vehicles that have detected said phase shift (successor vehicles) will also change phase and become propagators to communicate to their successors, if any, that they will in turn change also of phase, and so on will be propagated the phase change until complete the synchronization of the NVE. Returning to the example of FIG. 13F, we will show the dynamics of the propagation of a phase change: we will assume that vehicle V1, when applying the second strategy, is the one that has changed phase to synchronize with vehicle V5.

Therefore V1, which is now no longer synchronized with V2, becomes propagator vehicle so that the successor vehicle V2, applying the first strategy, change phase to synchronize with V1. Done this V2 now becomes a propagator vehicle and V3 a successor vehicle, which when change phase completes the synchronization. As can be seen, except for the initiating vehicles of the synchronization (V1 and V5 in the example), which apply the second strategy, the rest of the not-synchronized vehicles will change phase when applying the first strategy, since they will do so in function of the information they receive from other vehicles. It should be mentioned that drivers of vehicles that propagate a phase change could be exposed to intense not-synchronized light for a brief instant of time. This can be avoided by "extending" the vision/rear-view protection during that instant of time. The scheme of FIG.13G is another example of not-synchronized NVE that has been formed from the encounter of two synchronized NVEs (E1 and E2) but integrated by vehicles that can be involved in an NVE both from the front and from behind, as it corresponds to vehicles that provide vision protection and rear-view protection. In this example it has been assumed that V1 and V4 are not-synchronized vehicles, coming from E1 and E2 respectively, which are close enough to interact with each other. Note that if V4 imposes its phase on V1, the propagation of the phase change, between the vehicles of E1, will be initiated by the front of V1. Instead if V1 imposes its phase on V4, the propagation of the phase change, between the vehicles of E2, will be initiated by the rear part of V4. Particular cases:

The application of the first strategy is also enough to cause a vehicle to re-adjust its phase when said vehicle participates in a not-synchronized NVE having started or restarted its nocturnal displacement by a certain path, that is to say when it has not yet synchronized its lights with any other vehicle traveling in the opposite direction. When a vehicle in this condition participates in a not-synchronized NVE will be the first to be enabled to readjust its phase assuming that said NVE is formed by vehicles with a higher hierarchy than the own and therefore it will adjust its phase to synchronize it with the first emission that it receives from another not-synchronized vehicle. In this case, the information used by the vehicle to determine this situation is given by: a "flag" that indicates it as a "Beginner" on the road and also by the not-synchronized emission coming from another vehicle. Assigning this "Beginner" condition to vehicles that initiate or restart their nocturnal displacement along the way tends to achieve, through successive NVEs, a single-phase assignment for the entire road, as long as the vehicles have sufficiently stable oscillators to maintain, within an admissible tolerance margin, the adopted phase. This is because in each not-synchronized NVE all phases except the phase (and counter phase) of the winning vehicle are eliminated, which produces a gradual reduction in the number of different phases. While providing a single-phase assignment for the entire path is not necessary to avoid dazzling, it is something that will gradually reduce the occurrence of not-synchronized NVEs.

The Beginner flag can be activated using a velocity sensor, thus invalidating the vehicle's phase when the vehicle slows down to a stop or, for example, to change its direction of travel with respect to the road (it will also be given in this way solution to the non-casual presence of the same phase in vehicles that emit in opposite directions). The beginner flag will be deactivated at the moment in which the vehicle receives from the front synchronized intermittent light again.

Next, we will analyze how begin the synchronization of an NVE whose vehicles come from two synchronized NVEs and that are carriers of very similar phases. The initiators vehicles of the synchronization, using the second strategy, will try to agree which of them will change phase and which will not applying in first place the "Synchronization by phase hierarchy". If with this the synchronization of said NVE is not achieved it can be due to one of the following cases: It may occur that when applying "Synchronization by phase hierarchy" none of said vehicles change phase. This means that none of them is detecting not synchronized pulses of light (or of its equivalent signal) whose phase is different from that of the vehicle itself when these are compared to each other with the tolerance already described.

There may be vehicles in one of the NVEs that change phase and other vehicles in the same NVE that do not change phase. This can be due to the margin of tolerance with which the vehicles are synchronized in each NVE and to a little difference between the "average" phases of both NVEs (something that cannot happen, given the restrictions already described, is that there are vehicles that change phase in both NVEs).

For both cases the solution consists of applying the second algorithm of said second strategy to what we have called "Pseudorandom hierarchy" algorithm. In both cases, competition through "Pseudorandom hierarchy" will be done in the same way. What is different in the second case is that, having vehicles in one of the NVEs that changed phase when applying "Synchronization by phase hierarchy", it is desirable that the other vehicles of the same NVE also change phase when applying "Pseudorandom hierarchy". These latter vehicles will detect the phase change of the former indirectly upon receiving the signals that the successor vehicles (already exposed to said phase change) transmit to their own successors announcing that they are ready to change phase. Thus, the initiating vehicles of the not-synchronized NVE that did not change phase and that receive said signals, instead of competing with a pseudo-random hierarchy will do so with the lowest possible hierarchy reserved for this case. In this way these vehicles will be the losing vehicles of the competition and will change phase.

It should be remembered that said "Pseudo-random hierarchy" algorithm is also applicable to any not-synchronized NVE whose vehicles are carriers in a casual manner of the same phase, although said vehicles do not come from synchronized NVEs.

In general, the synchronization applying the pseudorandom hierarchy algorithm is developed as follows: vehicles that, under the second strategy, have unsuccessfully applied "Synchronization by phase hierarchy" (because these phases are "very similar") compete by running a waiting time whose duration will be given by a value generated in each vehicle in pseudorandom form (except in those vehicles that, as explained above, have adopted the lowest possible hierarchy to lose the competition). Said waiting time is in inverse relation with the hierarchy that will have the vehicle, therefore the first vehicle to complete its waiting time will be the winner of the competition. It should be noted that from this point the algorithm differs somewhat from that described in the "Inter-vehicular synchronization procedure with external assistance" because in the procedure we are describing the vehicles do not receive an external synchronization signal. This means that said waiting times cannot be as brief as in said procedure. For this reason the way in which the winning vehicle ends the competition in front of not-winning vehicles and how the latter communicate with each other is a little different in this case.

The winning vehicle may transmit information to other vehicles by emitting, from the ends of the vehicle involved in the competition, with a predetermined phase shift. Thus not-winning vehicles that have been emitting in the opposite direction and in phase with said winning vehicle, upon detecting said phase shift will change phase (becoming losers) and will be enabled to emit with a predetermined phase shift intended to warn the not-winning vehicles, which emit in the same direction as the winning vehicle, that the competition is over and that they have the right phase. These vehicles may then cooperate with the winning vehicle by transmitting the same information to vehicles that may be out of the reach of said winning vehicle. Finally, if the competition produces a tie between vehicles that emit in the same direction is not a problem since these vehicles are synchronized. If the tie occurs between vehicles that emit in opposite directions the process is repeated with new pseudorandom scores.

Next they are detailed, for the case in which the vehicles can provide rear-view protection, other characteristics and consequences of the vehicular interaction that can be inferred from what has already been said:

A vehicle having both ends synchronized with each other may lose this condition when participating in a not-synchronized NVE having only one of its ends involved in said NVE. In this situation is for example V4 of FIG.13E which, in this case, must resign the phase of its front end in front of the vehicles that come from the synchronized NVE encircled in said FIG.13E. In the same situation would be a vehicle with both ends involved in different not-synchronized NVEs.

A vehicle that loses the synchronization of its ends could recover it immediately if one of its ends is "free", that is to say not involved in any NVE, since that end can change of phase following to the other end ("intravehicular" phase propagation). If the vehicle does not have a free end said synchronization will be delayed until the moment in that one of the ends of the vehicle is "free". This is done in this way so that one end of the vehicle does not interfere or disturb the NVE in which the other end is involved.

From the above, it follows that when the conflicting union of two synchronized NVEs takes place there will be no "intravehicular" phase propagation, that is to say that a phase change will have to reach from one end to the other of the vehicle indirectly through of another vehicle, using the "propagator/successor" roles. This is done in this way in order not to extend the propagation of a phase change beyond what is necessary.

Normally if a vehicle has both ends synchronized with each other and only one of these ends is involved in a synchronized NVE, if the other end, which is free, is involved in a not-synchronized NVE will participate in it with the same hierarchy with which the other end would participate, that is to say with the hierarchy that grants to belong to a synchronized NVE. In this way both ends of the vehicle acquire said hierarchy to try to stay synchronized. Otherwise, even an "isolated" vehicle could prevail in said not-synchronized NVE in front of said free end, which would generate in the "limits" of the synchronized NVE another synchronized NVE but in conflict with the previous one. And later when both NVEs begin to interact with each other there would be a phase change propagation that can be prevented by making said "isolated" vehicle resign its phase and incorporate into a single synchronized NVE. A specific example has not been included for the presented situation, but it can be observed in FIG. 13G making abstraction of the vehicles V5 and V6, that is considering V4 as if it were an isolated vehicle.

If it is opted to make that the vehicles transmit forward the necessary signals to achieve synchronization of an NVE using the own ILPE of the vehicle, then it would be desirable for the vehicles to emit backwards the equivalent signal of the ILPE using also pulses of light, and we will call it "rear ILPE", where said rear ILPE will be controlled by said ICS for the rear end. If the rear ILPE is used solely for the purpose of transmitting information, then said emission could be made using light in the non-visible spectrum (e.g. infrared light). But an additional utility might be given to the rear ILPE as described below: within a synchronized NVE, vehicles moving in a certain direction with respect to the road could cooperate with those traveling in the opposite direction by extending the area of the road that these vehicles can illuminate. For this, obviously, said rear ILPE should be performed using visible light. The pulses of visible light of said rear ILPE will not disturb the drivers of vehicles driving behind as these drivers will have the vision protected when said pulses of light become present.

Intervehicular Synchronized Anti-dazzling System

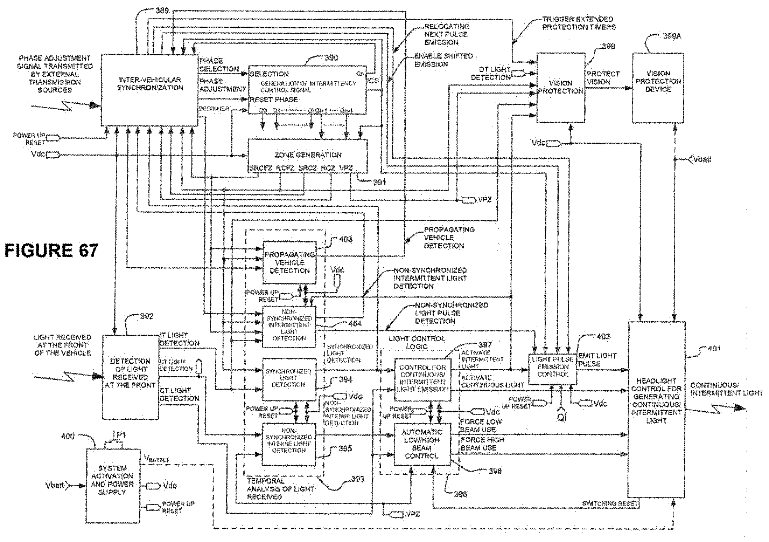

FIG. 67 shows the block diagram of this system, which is based on the anti-dazzling method already described and makes use of the inter-vehicular synchronization procedure. The blocks 390, 392, 394, 395, 396, 397, 398, 400 and 401 of said FIG. 67 respectively correspond in name, function and content with blocks 234, 236, 238, 239, 240, 241, 242, 244 and 245 of FIG. 56 corresponding to the "Inter-vehicular synchronized anti-dazzling system with external assistance" and thus with the blocks 186, 188, 190, 191, 192, 193, 194, 196 and 197 of FIG. 51 corresponding to the "Externally synchronized anti-dazzling system with vehicular assistance" and with the blocks 61, 65, 67, 68, 109, 110, 111, 171 and 172 of FIG. 34 corresponding to the "Externally synchronized anti-dazzling system", all of which have already been described. To be more specific, it should be mentioned that the operation of the block "Intermittence control signal generation" 390 was explained in describing the characteristics common to all the systems (see FIG. 20). The same happens with the block "Front received light detection" 392 whose operation was described under the heading "Formation of an NVE" (see FIG. 15). The description of the block "System activation and power supply" 400 is also included within the characteristics common to all systems (see FIG. 29). The same happens with the block "Headlights control for the generation of continuous/intermittent light" 401 (described in relation to FIGS. 32 and 33). On the other hand the operation of the blocks "Synchronized Light Detection" 394, "Not Synchronized Intense Light Detection" 395, "Continuous/Intermittent Light Emission Control" 397 and "High beam/low beam Automatic Control" 398 was explained in relation to the operating diagrams of FIGS. 38, 40, 43 and 45, respectively.

The blocks "Zones generation" 391, "Vision protection" 399 and "Light pulses emission control" 402 have the same function and content as their homonyms of FIG. 56 (blocks 235, 243 and 246 respectively) that were described for the "Intervehicular Synchronized Anti-dazzling System with External Assistance". Remember that as long as the "Protect vision" output of said block 399 is kept at high level the "Vision Protection Device" 399A should prevent or attenuate the light passage. The design of this device 399A will be conditioned by the techniques used to implement vision protection, some of which have been mentioned along with the formulation of the anti-dazzling method.

The blocks "Propagator vehicle detection" 403 and "Not synchronized intermittent light detection" 404 also have the same function as their homonyms of FIG. 56, but their contents are not identical to those of such homonyms so they will be described later as sub-blocks of the block "Temporal analysis of received light" 393. Finally, the synchronization block that in this system is called "Intervehicular synchronization" will be described as block 389.

As already mentioned, the "Zones Generation" block 391 produces the same zone signals that have already been defined for the "Intervehicular Synchronized Anti-dazzling System with External Assistance". Remember then that the signals "Displaced Restricted Conflict Zone" (DRCZ) and "Displaced Restricted Conflict Free Zone" (DRCFZ) are used in a vehicle to determine when and under what circumstances another vehicle is transmitting information by applying a certain phase shift to its regular ILPE. If a vehicle is phase shifting its ILPE, the positive edges of said ILPE will be detected by another vehicle within the DRCFZ if both vehicles are synchronized with each other, instead, they will be detected within the DRCZ if those vehicles have their ICS in phase (remember that for a vehicle to emit with phase shift it will be necessary that it be enabled to do so and also that it is receiving not synchronized pulses of light outside the DRCFZ). It should be mentioned that in this system the "RCZ" and "DRCZ" zone signals are used to detect and treat those particular situations in which vehicles emitting in opposite direction are carriers, in a casual manner, of the same ILPE phase, since in general the vehicle could determine if it is receiving not synchronized pulses of light ("valid" for this system) only by analyzing whether the positive edges of said pulses fall outside the RCFZ.

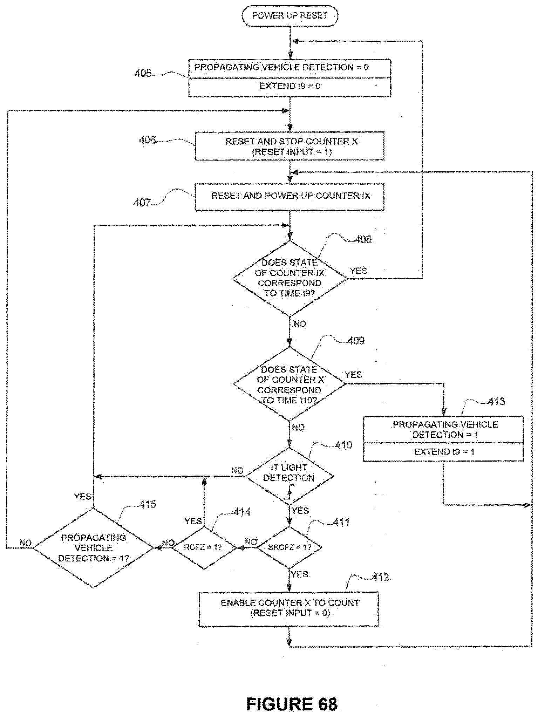

FIG. 68 shows the flowchart of the "Propagator Vehicle Detection" block 403 of said FIG. 67. This block allows determining when a vehicle can assume the role of "successor" in the propagation of a phase change (see propagator-successor relation in the inter-vehicular synchronization procedure). When this block 403 determines that the vehicle is detecting pulses of light whose positive edges fall into the DRCFZ it will activate the "Propagator vehicle detection" output (this signal is used in the synchronization block of the system to make vehicles with "losing" phase to synchronize its ICS with that of the propagator vehicle without "competing" with it and to propagate the phase change as will be subsequently described. Activation of said "Propagator vehicle detection" output requires the temporal analysis of the "IT light detection" signal in relation to the DRCFZ and RCFZ zones and is performed by the "tolerant verification" algorithm already used in the previously described systems. Before starting the description of the flowchart of this block 403 (FIG. 68), it is convenient to explain why the "Propagator vehicle detection" signal is generated and used differently, in this system, as was done in the "Inter-vehicular synchronization anti-dazzling system with external assistance" already described, in which a "losing" vehicle activates in its successor the "Propagator vehicle detection" signal after having resigned the phase of its ICS and to provoke said activation it emits, for a brief lapse of time, its ILPE applying a certain phase shift to its new ICS. In said "Inter-vehicular synchronization anti-dazzling system with external assistance" the successor vehicle can recognize said phase shift because the possible phases for its ICS are predetermined (and restricted to the two alternative phases used in said system for the regular emission of intermittent light pulses).

On the other hand, in the system we are describing, due to the diversity of phases that different vehicles may initially have, the "Propagator vehicle detection" signal must be activated in a possible successor vehicle before the propagator vehicle changes phase, since later a successor vehicle could not recognize a phase shift applied to a new phase that would be unknown to it. For this reason, the "initiating" vehicles of a not-synchronized NVE before competing with each other (i.e. before they know whether or not to change phases) will activate the "Propagator vehicle detection" signal in their respective "possible successors" anticipating them that if they subsequently detect a phase change they must adhere to it (as losing vehicles) but after "transmitting information" to their own successors to activate also the "propagator vehicle detection" signal in them.

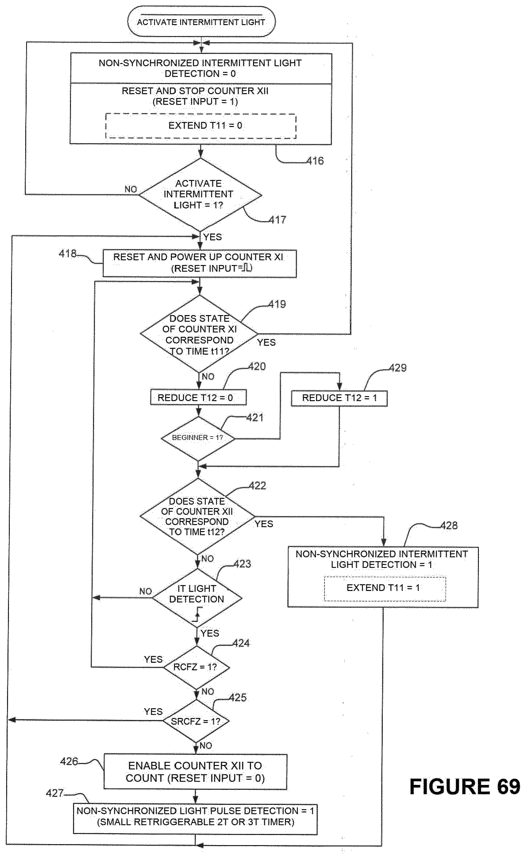

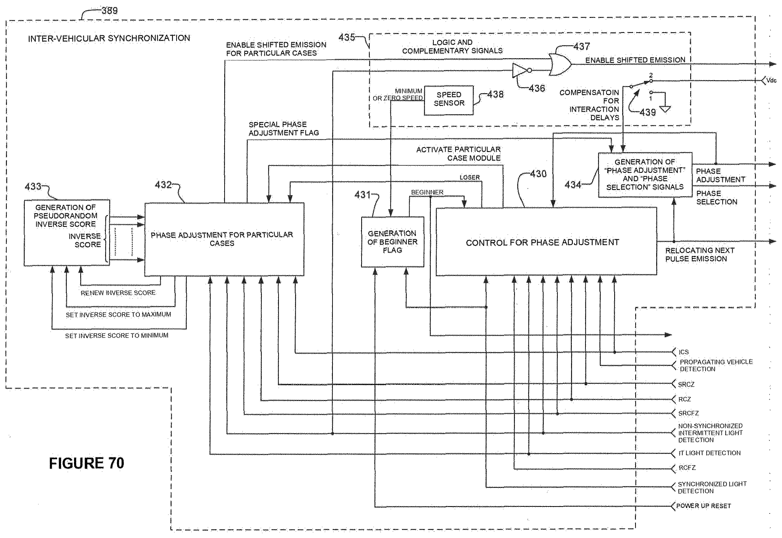

For this reason, a vehicle should emit with a phase shift from the moment the "Not synchronized light pulse detection" signal is activated (see FIG. 61 and 69) and until the "Not synchronized intermittent light detection" signal activates the synchronization block on said vehicle (see FIG. 70). However, not-synchronized light pulses that will cause a vehicle to emit with phase shift do not include those pulses whose positive edge is received within the DRCFZ of the vehicle. This is done so that the "Propagator vehicle detection" signal is activated in a vehicle that is a "possible successor" (through the phase shifted ILPE of its predecessor) without that said "possible successor" can in turn emit with phase shift unless its predecessor has resigned its phase (only then said vehicle will receive light pulses outside the DRCFZ). We will then call a "possible successor" to any vehicle of a not-synchronized NVE in which the "Propagator vehicle detection" signal is activated.

It should be noted that excluding the detection of said positive edges in the DRCFZ does not prevent two vehicles not-synchronized with each other from emitting, both and in their moment, with phase shift, even when the positive edge of the ICS of one of them fall casually in the DRCFZ of the other since when the first of them emits with phase shift the second will receive a pulse of light whose positive edge will fall out of its DRCFZ and can also emit with phase shift.

As already mentioned, the "tolerant verification" algorithm already described will be used for the activation of the "Propagator vehicle detection" output. Said algorithm checks for a time interval that we will call "$t_{10}$" if the "IT light detection" signal is giving positive edges inside the DRCFZ with certain regularity characteristic of the intermittent light. Said time "$t_{10}$" will have a duration of several periods T and will be controlled by the "counter X" which, upon reaching the value corresponding to the time "tio", will cause activation of the "Propagator vehicle detection" output. On the other hand, said regularity characteristic of the intermittent light will be controlled by another counter which we will call "counter IX", which will be reset each time the "IT light detection" signal has a positive edge inside the DRCFZ. If said counter reaches a value corresponding to the time "$t_9$", the counter X will be reset, thus avoiding reaching the value corresponding to the time "tio". If the vehicle receives not-synchronized pulses of light outside the DRCFZ when the "Propagator vehicle detection" output has not yet been activated, said counter X will also be reset since these pulses cannot come from a predecessor vehicle that has not yet changed phase. Obviously the minimum value that can be given to "$t_9$" is T, assigning to it a higher value (e.g. 2T or greater) makes this algorithm "tolerant".

We now start the description of the flowchart of FIG. 68. A "Power up reset" pulse causes: zeroing of the "Propagator vehicle detection" output and of the "Extend $t_9$" signal in step 405, resetting and stopping the counter X in step 406 and resetting and starting the counter IX in step 407. When the "IT light detection" signal gives a positive edge within the DRCFZ the sequence will include the steps 410, 411, 412, 407, ... leaving counter X enabled for counting, see step 412, and zeroing counter IX at step 407. If this sequence is repeated without counter IX reaching the value corresponding to the time "$t_9$" and without receiving not synchronized pulses of light outside the DRCFZ, when the counter X reaches the value corresponding to the time "tio", in step 409, the "Propagator vehicle detection" output will be activated in step 413 and then the counter IX will be set to zero in step 407. When the vehicle stops detecting pulses of light whose positive edges fall on the DRCFZ the counter IX will reach the value corresponding to the time "$t_9$" and the sequence will go from the decision point 408 to the step 405 whereby the "Propagator vehicle detection" output will be deactivated and counters X and IX treated as when a power up reset pulse is given (see steps 406 and 407). On the other hand, if a not-synchronized light pulse is received outside the DRCFZ before the "Propagator vehicle detection" signal has been activated the sequence will also return to the steps 406 and 407 but through the path ... 410 , 411, 414, 415, 406, 407. The time "tio" must be greater than the time "$t_9$" since "tio" is the time during which it is verified that pulses of light arrive to the DRCFZ with a regularity conditioned by "$t_9$". However, once the "Propagator vehicle detection" output has been activated, in a successor vehicle, the value of "$t_9$" is increased by activating the "Extend $t_9$" signal, included in step 413, to prevent said output "Propagator vehicle detection" is deactivated when its predecessor vehicle is no longer enabled to emit with a phase shift, that is, from the time that the synchronization block has been activated in said predecessor vehicle and until the time that said successor vehicle must change phase if it corresponds. Later this time "$t_9$" will be expressed in more detail.

The "Not synchronized intermittent light detection" block 404 has the primary function of determining when the vehicle has been involved in a not-synchronized NVE. When this happens, the output "Not synchronized intermittent light detection" will be activated and with this the "Intervehicular synchronization" block 389 will also be activated as will be described later. The flowchart of said block "Not synchronized intermittent light detection" 404 is shown in FIG.69. When the "Activate intermittent light" signal from block 397 is set to low level, the sequence starts at step 416 and is maintained at said step 416 until the "Activate intermittent light" signal is set to high level (see step 417). Since in said step 416 the "Not synchronized intermittent light detection" output is set to low level, this block 404 will remain inactive as long as the vehicle does not participate in an NVE. The "Not synchronized intermittent light detection" output is activated by the "tolerant verification" algorithm already used, which performs the temporal analysis of the "IT light detection" signal in relation to the "RCFZ" and "DRCFZ" zone signals. This is because a vehicle will receive pulses of light whose positive edges will fall out of said zones when interacting with another or other not-synchronized vehicles enabled to emit with phase shift.

When the "IT light detection" signal gives a positive edge outside said zones RCFZ and DRCFZ the sequence will follow steps ... 423, 424, 425, 426, 427, 418, ... thus enabling "counter XII" to count at step 426, activating the "Not synchronized light pulse detection" retriggerable timer at step 427 (of 1T duration for this system) and zeroing counter XI at step 418. When counter XII reaches value "$t_{12}$" the "Not synchronized intermittent light detection" output will be activated in step 428, but for that to occur it is necessary that the counter XI does not reach the value corresponding to the time "$t_{11}$", for which, once the counter XII has been enabled to count, the vehicle should continue receiving pulses of light whose positive edge falls outside the zones RCFZ and DRCFZ, in which case the sequence 422, 423, 424, 425, 426, 427, 418, ... is repeated, or at least receive pulses of light whose positive edge falls out of the RCFZ, in which case the sequence 422, 423, 424, 425, 418, ... is produced, since in both cases the counter XI will be reset at step 418. Notice that although the pulses of light received in the DRCFZ produce the resetting of counter XI they don't enable the counter XII to start counting. This is done to prevent the "not synchronized intermittent light detection" output from being activated when the only not-synchronized light pulses being received by the vehicle come from a synchronized vehicle enabled to emit with phase shift (i.e. from a predecessor vehicle involved in a not-synchronized NVE that still retains its phase).

However, this does not prevent said "Not synchronized intermittent light detection" output from being activated and remaining active if said light pulses come from a not-synchronized vehicle which has already ceased to emit with phase shift and whose ICS is switching to high level within the DRCFZ of the vehicle in question. In relation to these singular encounters between not-synchronized vehicles in which the positive edge of the ICS of one of the vehicles casually falls within the DRCFZ of another, it is opportune to point out that when the first of said vehicles emits with phase shift the second will continue to receive not-synchronized light. But as long as the second vehicle emits with phase shift the first will stop receiving pulses of not-synchronized light. Therefore, to give a certain regularity to the not-synchronized pulses of light that said vehicles exchange is that it has been suggested to give a duration of 1T to the "Not synchronized light pulse detection" timer, since this timer controls the phase shifted emission of light pulses when said emissions are enabled (see flowchart of FIG.61).

Under these conditions the first of said vehicles will receive a not-synchronized light pulse for every two pulses of light emitted by the second while the latter is enabled to emit with phase shift, for this reason the time "$t_{11}$" must be greater than 2T. When the vehicle stops receiving not-synchronized pulses of light, the counter XI will reach the value corresponding to the time "$t_{11}$" and the sequence will pass from the decision point 419 to the step 416 whereby the "Not synchronized intermittent light detection" output will be deactivated and the counter XII treated as indicated by step 416. The "Extend $t_{11}$" signal is shown in the diagram framed in broken line indicating that its use is optional. This "Extend $t_{11}$" signal is activated and deactivated next to the "Not synchronized intermittent light detection" output signal in steps 428 and 416 respectively, and will be used to extend the time it takes to deactivate the "Not synchronized intermittent light detection" output (for example using said signal to give value to one or more of the bits that make up the value corresponding to the time "$t_{11}$").

However, when the "Not synchronized intermittent light detection" output is inactive, "$t_{11}$" will be less than "$t_{12}$" since "$t_{12}$" is the time during which it "verifies" that not synchronized light pulses are being received with a regularity conditioned by "$t_{11}$". Finally, the "Reduce $t_{12}$" signal will be activated when the vehicle has at high level the "Beginner" flag (see steps 421 and 429). Thus, by reducing the activation time of the "Not synchronized intermittent light detection" output, it is intended that in said "Beginner" vehicle the intervehicular synchronization block 389 is activated before in the other vehicles of the NVE and thus, as we will see later, that said "Beginner" vehicle is the first to resign its phase.

It remains to describe the "Intervehicular synchronization" block 389 of FIG.67 that is a composite block which content, shown in FIG.70, is given by the following blocks: "Phase adjustment control" 430, "Beginner Flag Generation" 431, "Phase adjustment for particular cases" 432, "Random inverse score generation" 433, "Phase adjustment and phase selection signals generation" 434 and " Complementary logic and signals " 435.

The blocks "Beginner flag generation" 431 and "Random inverse score generation" 433 have the same function and content as their homonymous blocks described for the "Inter-vehicular synchronization anti-dazzling system with external assistance".

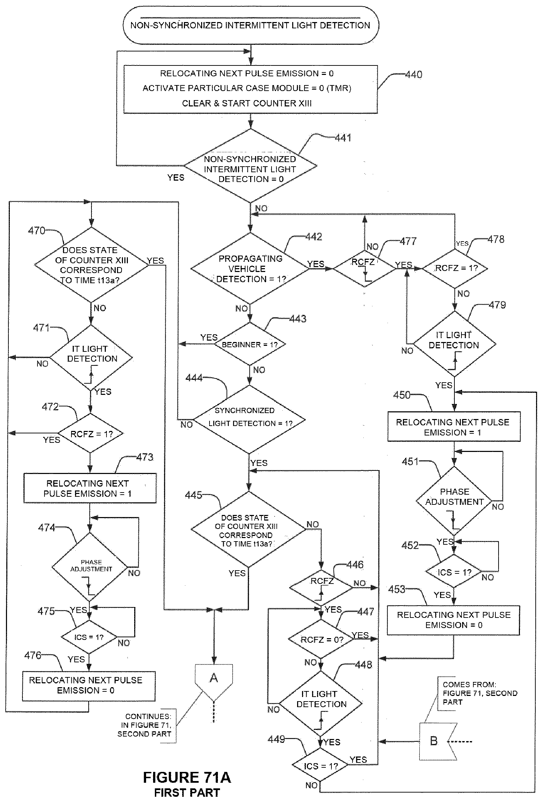

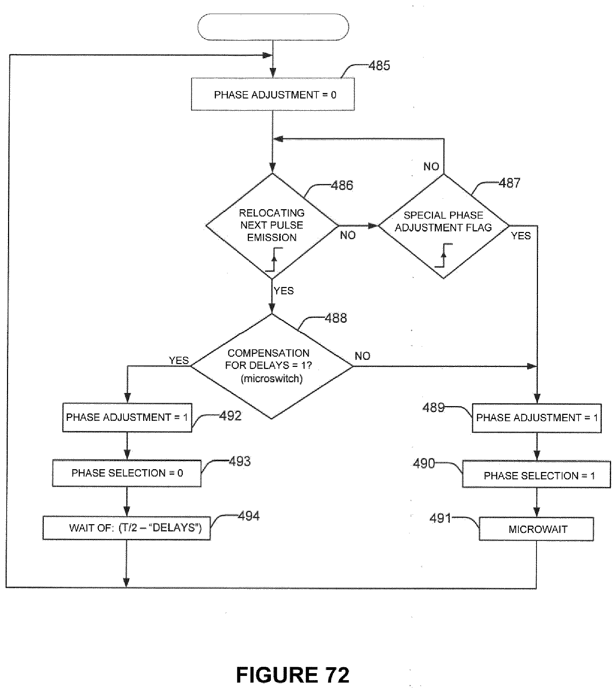

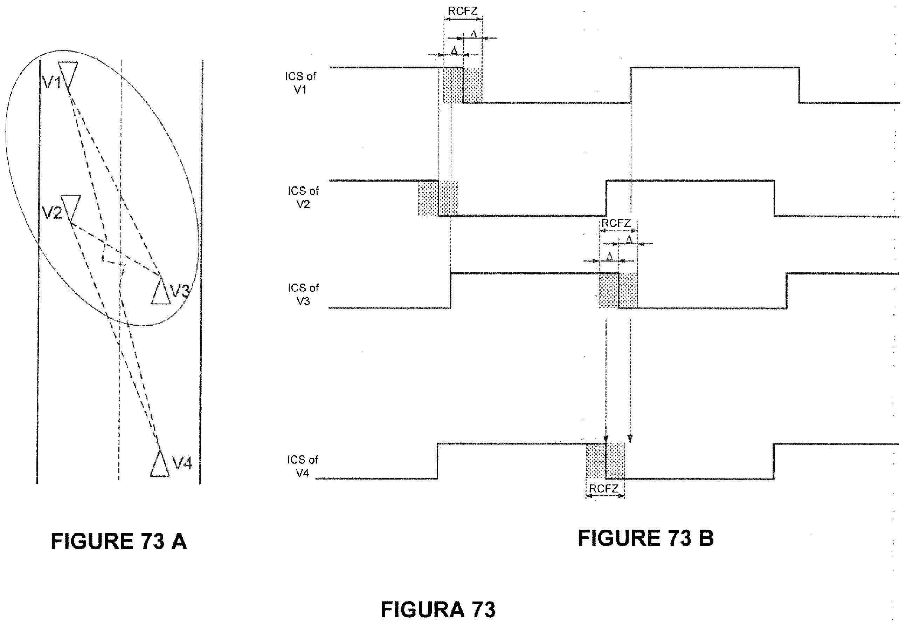

The functioning of the "Phase adjustment control" block 430 is based on the application of the inter-vehicular synchronization procedure. Therefore, this block controls, in relation to the exchange of information of the vehicle with other vehicles of the NVE, the actions that allow to synchronize the ICS of said vehicle with that of the rest of the vehicles of said NVE. Block 434 performs said actions, i.e. modifies, when necessary, the ICS phase of the vehicle via the "Phase adjustment" and "Phase selection" outputs. The "Phase adjustment for particular cases" block 432 acts, as its name indicates, when the vehicles to be synchronized are part of an unusual NVE in which the vehicles that emit in opposite directions are carriers, in a casual way, of a same phase. The following corresponds to the detailed description of the block "Phase adjustment control" 430 whose flowchart is shown in FIGS. 71A - 71B. When the "Not synchronized intermittent light detection" signal is set to low level the sequence starts in step 440 by setting to low level the signals: "Relocating next pulse emission" and "Activate particular cases module" and activating the "Clear & start counter XIII" signal. And is maintained in said step 440 until the "Not synchronized intermittent light detection" signal is set to high level (see step 441). When the latter occurs, if the vehicle is not indicated as a "successor" in the propagation of a phase change or as a "Beginner" the sequence proceeds from step 440 to the decision point 444 in which the state of the "Synchronized light detection" signal is analyzed and it is there where the sequence that will follow the vehicles of the not-synchronized NVE which come from a synchronized NVE (high hierarchy) separate from the sequence that will follow the vehicles which, at the moment of involving in said not-synchronized NVE, were not interacting with any other vehicle (to these "isolated" vehicles correspond a low hierarchy). We will analyze the different cases or situations that solve the phase adjustment algorithm (through the first and second strategy) and we will see which sequences each case generate on the flowchart. Case 1: This is a not-synchronized NVE that has been formed due to the interaction between vehicles coming from a synchronized NVE with one or more "isolated" vehicles not synchronized with the former. At the decision point 444 vehicles from a synchronized NVE will have the "Synchronized light detection" signal active, therefore in step 445, the sequence enters a cycle controlled by the counter XIII during which said vehicles keep their phase (although in the same cycle they subject it, if necessary, to small corrections to improve, for reasons that will be explained later, the synchronization of said vehicles). While in the "isolated" vehicles the sequence passes from the decision point 444 to the decision point 470 at which a cycle is started, also controlled by the counter XIII, during which said "isolated" vehicles will change the phase of their ICS when steps 471 and 472 indicate that the vehicle has received a not synchronized light pulse. Step 473 will cause the ICS to be synchronized with the received light pulse (the "Relocating next pulse emission = 1" command activates block 434 which generates the "Phase adjustment" and "Phase selection" signals as we shall see below when describing the flowchart of FIG.72). Steps 474 and 475 ensure that the pulse of light that the vehicle will emit when the "Relocating next pulse emission" signal returns to low level, at step 476, will have the correct phase (remember that block 402 of FIG. 67 which controls the emission of pulses of light initiates the emission of a pulse "asynchronically" at the moment when the "Relocating next pulse emission" signal is put in low level). The commands given in steps 473 to 476 will be used, in other points of the flowchart, whenever the vehicle has to readjust its phase and the reasons to make it in this way will be better explained when describing the "Phase adjustment and phase selection signals generation" block. After step 476 the sequence returns to the decision point 470 closing the cycle in which said sequence will remain until the counter XIII reaches the value corresponding to the time "$t_{13a}$", time which should be sufficient for an isolated vehicle to adjust the phase of its ICS with the ILPE of vehicles coming from a synchronized NVE. From this point of view the time "$t_{13a}$" could be as small as 1T or 2T, however there are other reasons (to be given later) to assign "$t_{13a}$" a higher value. To complete the description of this "Case 1" we will explain in what circumstances, why and how vehicles coming from a synchronized NVE might have to introduce small corrections to their ILPE phase during the cycle controlled from step 445 by counter XIII. As the night progresses, the proportion of NVEs in which none of the vehicles involved has to change phase to achieve synchronization will increase in the way. In these circumstances and depending on factors such as the tolerance margin for synchronization, the stability of the oscillators used to generate the ICS in the vehicles (see FIG. 20) and the time elapsed since these vehicles last set their phase, it could happen that vehicles of an NVE moving in the same direction, despite being synchronized with vehicles of said NVE coming in the opposite direction, are not synchronized with each other according to the required tolerance margin. In such a case an "isolated" vehicle joining said NVE would not be able to synchronize its lights with that of said not-synchronized vehicles, unless those vehicles have previously made minor corrections in their ICS phases. This situation (without phase correction) has been exemplified by FIG. 73A and FIG. 73B.

The schematic of FIG. 73A corresponds to a not-synchronized NVE composed of the vehicles V1, V2, V3 and V4. The vehicles of the circulation (V1, V2 and V3) come from an NVE such as the one just described, where V3 is synchronized with V1 and V2, without V1 and V2 being synchronized to each other according to the required tolerance margin, while V4 represents an "isolated" vehicle that will try to synchronize with the rest by adjusting its phase to that of V1 or V2. FIG.73B shows the ICS of each vehicle, on which the corresponding RCFZ has been shaded. As can be seen, the positive edge of the ICS of V3 falls within the RCFZs of V1 and V2 and vice versa, as corresponds to vehicles synchronized with each other moving in the opposite direction. The ICS drawn for V4 reflects the moment when this vehicle has already synchronized its lights with those of one of the vehicles of said NVE (V2 in this case). However this does not leave V4 synchronized with V1 since, being the phase shift between the ICSs of V1 and V2 greater than Δ, the positive edge of the ICS of V1 falls outside of the "new" RCFZ of V4 as shown in FIG. 73B.

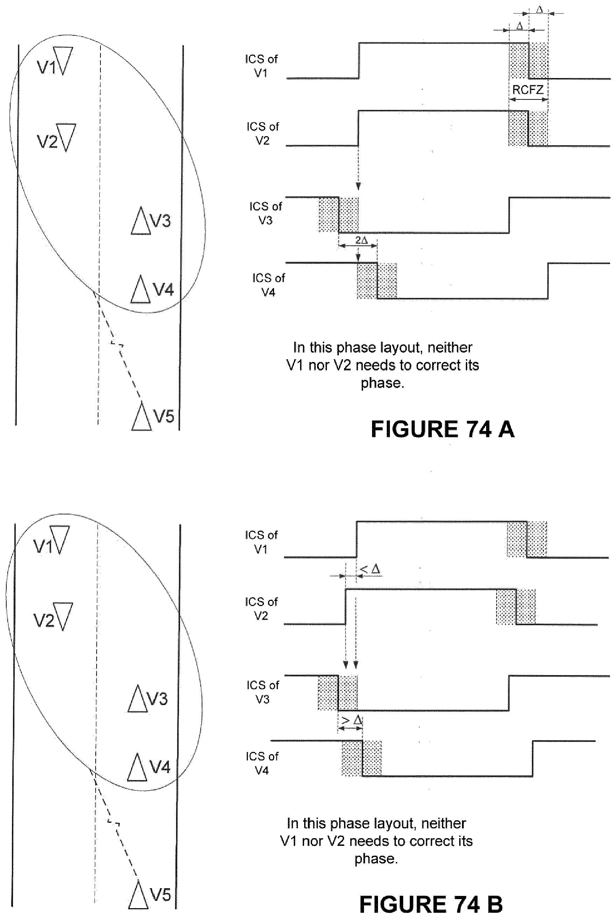

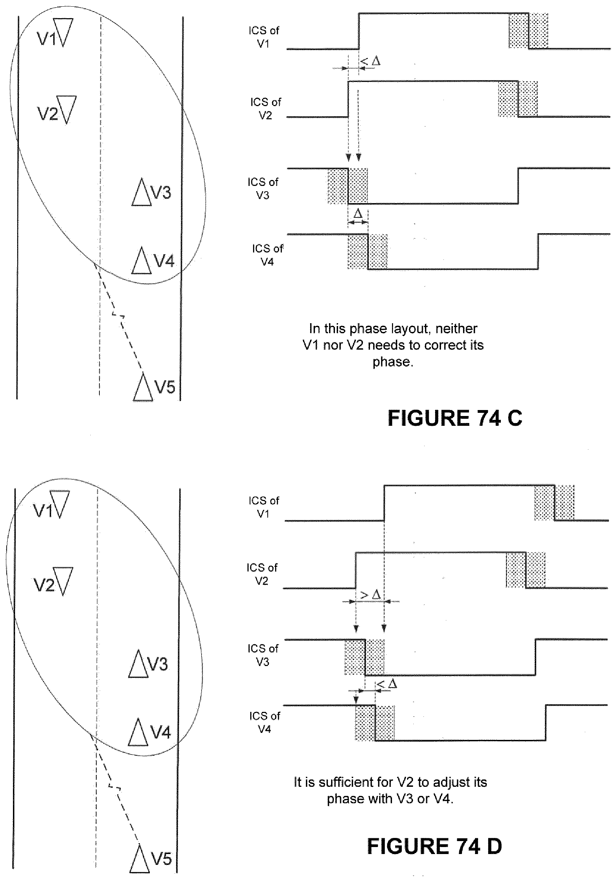

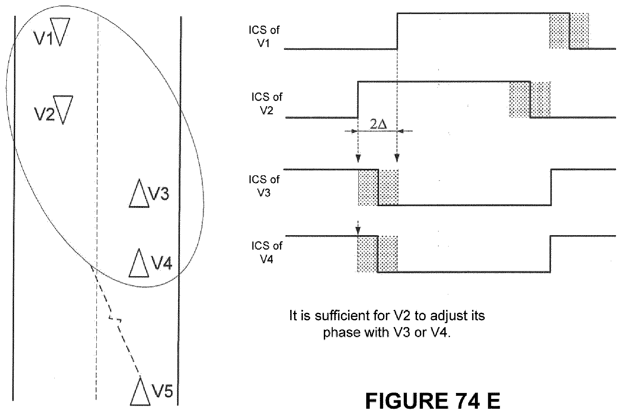

Referring to FIG. 74 we see how a vehicle, coming from a synchronized NVE, determines whether or not to make minor corrections to the phase of its ICS and how to perform them. In FIG. 74 V1 and V2 are synchronized with V3 and V4 and are initiators of a not synchronized NVE with V5, and will also be those, if necessary, which will correct the phase of their ICS with the ILPE of V3 and V4 involved in said not-synchronized NVE as "possible successors". For V1, V2, V3 and V4 we will analyze the relative "extreme" positions that could have their respective ICSs (considering that all of them are detecting synchronized light) and for each case we will see when it is necessary that some of these vehicles involved as initiators of the not synchronized NVE (V1 or V2 in this example) submit their phase to minor corrections. A phase arrangement is shown in FIG. 74A in which the phase shift between the ICS of the "possible successors" V3 and V4 has the maximum value (2Δ) which still makes it possible for these vehicles to maintain synchronization with the vehicles V1 and V2.

Therefore both V1 and V2 must have the positive edge of their respective ICSs centered between the negative edges of V3 and V4. From this it follows that with this phase arrangement neither V1 nor V2 will need to introduce corrections in their phases (which are in fact "perfectly" synchronized with each other) so that another vehicle, like V5, can synchronize its ICS with that of both vehicles. We can also note that as the phase mismatch between V3 and V4 decreases, the feasibility of a greater phase mismatch between V1 and V2 increases, as will be seen below. A phase arrangement is shown in FIG. 74B in which the phase shift between the ICSs of the "possible successors" V3 and V4 is less than 2Δ but greater than Δ. Therefore as the vehicles V1 and V2 are synchronized with both vehicles they must have among their ICSs a phase shift less than Δ. From the above, it follows that neither V1 nor V2 will require phase correction, since another vehicle, such as V5, can synchronize its ICS with the pulses of light emitted by one of them (e.g. V1) and to synchronize, within the admitted tolerance margin, with the other vehicle (e.g. V2). Note that with the phases arranged as in FIGS. 74A and 74B it is not only unnecessary for V1 or V2 to introduce corrections in their phase but also it would be inconvenient to do so, since the one that readjusts its phase with that of V3 or V4 could no longer maintain synchronization with both vehicles at the same time.

A phase arrangement is shown in FIG. 74C in which it is also not necessary for V1 or V2 to correct their phase since between V3 and V4 it has been supposed a phase shift equal to Δ and therefore between V1 and V2 the phase shift cannot be greater than Δ. However in the phase arrangements shown in FIGS. 74D and 74E the situation is different since in them the ICSs of V1 and V2 have a phase shift greater than Δ. Therefore for a vehicle like V5 to synchronize its ICS with that of both vehicles, it is necessary that one of these vehicles V1 or V2 correct its phase (readjusting it with the one of V3 or V4) to reduce said phase shift to a value less than Δ. We will now see how the system determines, within the cycle controlled from the step 445 by the counter XIII, when the vehicle should or should not perform such phase corrections:

If the vehicle receives within the RCFZ the positive edge of a light pulse before its ICS is set to low level then that vehicle is excluded from those which will have to correct its phase (see steps 445, 446, 447, 448, 449, 445).

Conversely, when a vehicle receives within the RCFZ the positive edge of a light pulse with its ICS being at low level, then the phase of said ICS will be resynchronized with the received light pulse. All of this is accomplished by the sequence 445, 446, 447, 448, 449, 450, 451, 452, 453, 445 within which steps 450 to 453 correspond to the actual phase readjustment (that it is carried out in the same way that the phase readjustment of steps 473 to 476). If we apply these rules to vehicles V1 and V2 of FIGS. 74A - 74E we can see that in the phase arrangements of FIGS.74A - 74C both vehicles would be exempt from correcting their phase upon receiving a pulse of light from V3. On the other hand in the phase arrangements of FIGS.74D - 74E V2 will readjust the phase of its ICS upon receiving a light pulse of V3, in correspondence with what has been explained.

In conclusion, if "small phase corrections" in vehicles from a synchronized NVE were not taken into account in this design, if there were "isolated" vehicles that, for this reason, would not be able to synchronize their lights by applying this "first strategy", they would do so anyway immediately afterwards applying the "second strategy" as if it were the "Case 3" described later, although this could cause the propagation of a phase change that could be avoided. Once the "isolated" vehicles have resigned their phase, this "Phase adjustment control" block 430 will be reset, in each vehicle, when the "Not synchronized intermittent light detection" signal is deactivated.

Case 2: If in a not-synchronized NVE there are no vehicles that have the "Synchronized light detection" signal active, then the sequence will pass in each of them from step 444 to the cycle controlled by the counter XIII from the decision point 470. As previously stated, in said cycle controlled by counter XIII a vehicle will change the phase of its ICS if steps 471 and 472 indicate that it has received a not-synchronized light pulse, this phase change being controlled by steps 473 to 476. Step 473 causes the ICS to be synchronized with the received light pulse and steps 474, 475 and 476 ensure that the vehicle, before closing the cycle on step 470, will emit with its new phase.

Completed the cycle controlled by the counter XIII, normally the NVE vehicles will already be synchronized with each other, and therefore the "Phase adjustment control" block 430 will be reset on each vehicle at the time the "Not synchronized intermittent light detection" signal is deactivated. If said NVE is eventually not synchronized (for example due to the presence of not-synchronized distant vehicles that are outside the ILPE range of any of the NVE vehicles or, for example, in the case, as much or more infrequently than the NVE above, of a not-synchronized NVE in which vehicles that emit in opposite directions are carriers, in a casual way, "exactly" of the same phase) in said NVE will be used (as in "case 3" that will describe next) the second synchronization strategy. This second synchronization strategy encompasses the algorithm we have called "Synchronization by phase hierarchy", which is applied from step 454, and the algorithm we have called "Pseudorandom hierarchy", which is used by the "Phase adjustment for particular cases" block 432.

Case 3: This is a not-synchronized NVE formed from the conflicting union of two synchronized NVEs. The synchronization of this type of NVE is initiated by the closest vehicles coming from both synchronized NVEs. Since in these vehicles the "Synchronized light detection" signal is active, in all of them the sequence will enter, through steps 440, 441, 442, 443 and 444, the cycle starting at decision point 445. In this cycle the waiting time controlled by counter XIII will reach its normal end ("$t_{13a}$") in all vehicles, since by the way indicated none of them will resign their phase (they will only make small corrections if necessary) and in consequence, as the synchronization is pending, in all vehicles, this block 430 will remain active. When, as in this case, the application of said first strategy does not lead to the synchronization of the NVE, then said vehicles will apply, from step 454, "Synchronization by phase hierarchy" as part of what we have called the second synchronization strategy.

Thus, when one of these vehicles detects the arrival of a not-synchronized light pulse, having its ICS at a high level, it will synchronize its phase with that of the "emitter" vehicle except that the latter vehicle has (within a certain tolerance margin) the same phase as the first. This is in accordance with the description of "Synchronization by phase hierarchy" and is performed by the following steps: 455 and 456 to detect the arrival of a not synchronized light pulse (the positive edge of a not synchronized pulse will fall out of the RCFZ), 457 to discard a light pulse "in phase" with the ICS of the vehicle, 458 to determine if the ICS is at high level and then steps 460 to 463 to control the phase change (performed in the same way as in steps 473 to 476 and 450 to 453).

On the other hand, as long as the vehicle has not changed phase and the counter XIII has not yet reached the value corresponding to the time "$t_{13b}$" (in step 459) the possible sequences are as follows: ... 455, 456, 459, 455, ... which will occur when the vehicle detects a synchronized light pulse coming from, for example, a "possible successor".... 455, 456, 457, 465, 459, 455 ... when the vehicle detects a not-synchronized light pulse "in phase" with its own ICS (in step 465 the "Particular case" flag is activated which will then be used to verify whether the vehicle will require the action of the "Phase adjustment for particular cases" block 432 of FIG. 70 to synchronize with the rest). Finally, the sequence ... 455, 456, 457, 458, 459, 455 ... takes place when the vehicle receives the positive edge of a not-synchronized light pulse outside the RCZ and having its ICS at a low level, which causes the vehicle to retain its phase (high hierarchy).

By relocating again at step 463 we can continue to say that, in a vehicle that has just been "synchronized" by another, the "Particular case" flag will be deactivated in step 464. The sequence, upon arriving at decision point 466, will initiate a wait time within the cycle 466, 467, 466 and then, upon reaching the counter XIII the value "$t_{13c}$" the sequence will return to step 445 through steps 468 and 469. The difference between times "$t_{13c}$" and "$t_{13b}$" is intended to be able to verify whether a vehicle with the "Particular case" flag activated (before the time" $t_{13b}$") continues to receive not synchronized light pulses in phase with their own when the counter XIII has exceeded the value" $t_{13b}$", in which case the "Activate particular cases module" timer will be triggered (see sequence 466, 467, 480, 483, 484, 466). To the time interval between "$t_{13c}$" and "$t_{13b}$", as well as to the interval between "$t_{13b}$" and "$t_{13a}$", may be given a small value but not less than, for example, 4T or 5T.

On the other hand, to assign a value to the time "$t_{13a}$" it is necessary to take into account that in the vehicles that have already synchronized their lights with another or other vehicles of the NVE, have had to change phase or not to get it, the sequence will include again, in all of them, the cycle controlled by the counter XIII beginning at step 445. Focusing attention on vehicles that have changed phase and have to propagate said phase change, we must remember that in a vehicle that has "successors" the system must ignore the not-synchronized pulses of light that the vehicle will receive after changing phase and until such successors have adopted the new phase. Therefore "$t_{13a}$" must be greater than the time "$t_{12}$" which requires the activation of the "Not synchronized intermittent light detection" signal in said successor vehicles (see FIG. 69) so that, upon being activated in said successor vehicles the "Phase adjustment control" block 430, they execute the sequence 440, 441, 442, 477, 478, 479, 450, 451, 452, 453, 445, ... to adhere to the new phase (and propagate it from be necessary). We can now calculate the "extended" value of "$t_9$", which is the time the "Propagator vehicle detection" signal will remain active in a vehicle after it has stopped receiving pulses of light that begin within its DRCFZ (see FIG. 68).

This time should be sufficient for the vehicle to adhere, as a successor, to a phase change occurring in its predecessor. For this reason, the "extended" value of "$t_9$" must be greater than the time that elapses since the "Not synchronized intermittent light detection" signal is activated in a "predecessor" vehicle (at which time the vehicle ceases to emit with phase shift) and until said signal is activated in the successor vehicle, if said "predecessor" vehicle changed phase. Analyzing the "worst case" we see that this time is the sum of the time it takes for the initiating vehicles of a not-synchronized NVE to synchronize with each other plus the time "$t_{12}$" that it takes for the "Not synchronized intermittent light detection" to be activated in the successor vehicles of those that have changed phase. Normally the starting vehicles of a not-synchronized NVE (which is the result of the "conflicting" union of two synchronized NVEs) synchronize their lights in a time less than "$t_{13b}$", but attending to the "worst case" must be added to this time the duration of the timer "Activate particular cases module". Therefore, finally, the "extended" value of "$t_9$" must be greater than the sum of "$t_{13b}$" plus the duration of the timer "Activate particular cases module" plus the time "$t_{12}$". It should be noted, as opposed to the "worst case", that during the propagation of a phase change the time that lapses since a successor of a successor vehicle ceases to receive pulses of light in the DRCFZ and until it is its turn to change phase, is only slightly longer than the activation time of its "Not synchronized intermittent light detection" signal "$t_{12}$", during which said vehicle will also be enabled, as already said, to emit with phase shift.

Regarding the duration of the timer "Activate particular cases module" this could be, for example, of the order of 20T or 30T, values that will be justified later when the operation of the block "Phase adjustment for particular cases" 432, which is activated with said timer, is described. To this block 432 of FIG. 70 also enters the signal "loser" that can be activated in a vehicle, that will call V1, that has the flag "Particular case" in high level. This will occur when it is necessary to indicate that said vehicle V1 is receiving, in addition to not synchronized pulses of light in phase with its own, pulses of light in the DRCFZ (see sequence ... 480, 483, 482, 481 ...). This would mean that another vehicle, which we will call V2, which emits in the same direction as said vehicle V1, and which comes from the same synchronized NVE, has changed phase (by the sequence ... 458, 460, 461, ...), causing one of the successor vehicles of V2, upon starting to emit with phase shift, to activate the "loser" signal in V1. Thus, when the initiating vehicles the conflicting union of two synchronized NVEs have very similar phases and, as a result, only some of said vehicles succeed in synchronizing with each other by the normal path (i.e. by block 430) then, the rest of the vehicles coming from the same NVE as those that have changed phase when synchronizing, should occasionally do the same by the block "Phase adjustment for particular cases" 432, and for that purpose the signal "Loser" is activated in said vehicles.

To complete the description of the flowchart of this block 430, it remains to be said that a vehicle having in step 443 the "Beginner" flag in high level will synchronize its ICS in the same way as an "isolated" vehicle, that is to say with the not-synchronized light pulses that it receives within the cycle controlled from step 470 by counter XIII. Finally, if we look at the sequence 440, 441, 442, 477, 478, 479, 450 ... by which a successor vehicle obtains a new phase, step 477 may seem unnecessary since steps 478 and 479 are sufficient to detect the positive edge of any not-synchronized light pulse. In fact in the vast majority of not-synchronized NVEs in which a phase change has to be propagated, step 477 serves no purpose except in those NVEs in which some vehicles have changed phase using this block 430 and others do so later using the "Phase adjustment for particular cases" block 432. In this "particular case" there may be successors exposed to emissions displaced with respect to the new phase, which are generated, for reasons to be explained later, in the initiating vehicles of said NVE in which said block 432 is acting. In this case, step 477, by giving a higher priority to the pulses of light received by the vehicle in the RCZ than to those received in the DRCZ, causes a successor to ignore said displaced emission when synchronizing.

Next, the block "Phase adjustment and phase selection signals generation" 434 of FIG. 70, the function of which is to produce the signals necessary to modify the ICS phase of the vehicle, is described. The signals entering this block are: "Relocating next pulse emission" from the "Phase adjustment control" block 430, "Special phase adjustment flag" from the "Phase adjustment for particular cases" block 432 and "Interaction delays compensation" from the " Complementary logic and signals" block 435. In this system the "Phase adjustment" and "Phase selection" signals, instead of being directly generated in blocks 430 and 432 which control the synchronization, are generated separately by block 434. This block allows correcting, if desired, a small phase shift that various technological factors could introduce between the ICSs of two vehicles when one of them, when synchronizing, adjusts the phase of its ICS with the arrival of a pulse of light emitted by the other. When a phase change is propagated several times, across a plurality of vehicles, the accumulated phase shift between vehicles that are not interacting with each other directly could become significant. Although said accumulated is not a problem, it can be avoided by correcting the phase shift in each vehicle that adjusts its phase. To do this, the entry "Interaction delays compensation" must be set to high level by the switch 439.

The flowchart corresponding to block 434 is shown in FIG. 72. As long as the vehicle does not have to make changes in its phase the "Relocating next pulse emission" and "Special phase adjustment flag" inputs remain at low level and the sequence 486, 487, 486 maintains said block inactive. When block 434 is activated from block 430, by a positive edge of the "Relocating next pulse emission" signal, the sequence 486, 488, 489, 490, 491, 485, ... will occur if the switch 439 is in position 1 or the sequence 486, 488, 492, 493, 494, 485, ... will take place if said switch is in position 2. When block 434 is activated from block 432, by a positive edge of the "Special phase adjustment flag" signal, the sequence 487, 489, 490, 491, 485... takes place regardless of the position of the switch 439.

Thus, when the block 434 is activated without "delays compensation", it is sufficient to generate a narrow pulse on the "Phase adjustment" output and set the "Phase selection" output to high level, see steps 489, 490, 491, 485, to adjust the phase of the vehicle with the arrival of the light pulse that caused said activation (this can be verified by analyzing the block "Intermittence control signal generation" 390 of FIG. 67 already described for other systems with the aid of FIGS. 20 and 21). The ICS of the vehicle will adopt the waveform shown in FIG. 21 for the signal $Q_n$, which, once the light pulse causing said phase change is detected, will give a first positive edge half-period (T/2) after be reset. When phase adjustment is performed with "delays compensation" the ICS should give said first positive edge a predefined fraction of time before said time T/2 or what is equivalent, give a first negative edge a half period later. The latter is precisely what produces the sequence of steps 492, 493, 494, 485 on the ICS. It should be noted that the aforementioned "time fraction", which we call "delays", corresponds to the small phase shift or delay to correct. In this case the "phase adjustment" output is not activated as a narrow pulse but is held at high level for a time period which is equal to T/2 minus said "delays" time fraction, see steps 492, 493, 494 and 485. During this time the counter/divider 11 of FIG. 20 will remain reset and the signals Qn and $\overline{Qn}$ will remain at low and high level respectively. Then, half a period after that said time period has expired, the signals Qn and $\overline{Qn}$ will switch (for the first time with the new phase) to high and low level respectively. As you can see the signal $\overline{Qn}$ behaves after a phase change just as the ICS must do. For this reason in step 493 the "Phase selection" signal is set to low level thus establishing $\overline{Qn}$ as the ICS of the vehicle.

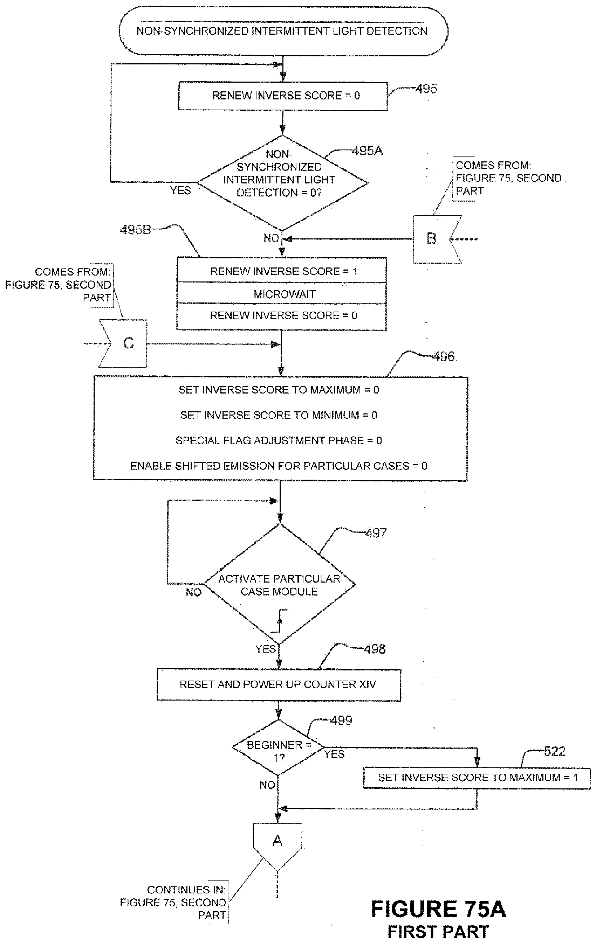

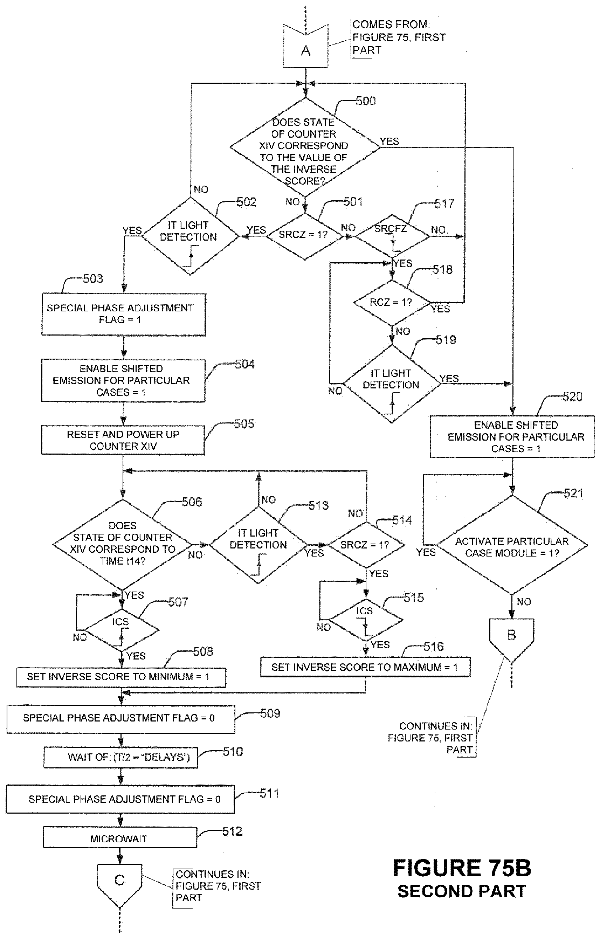

FIG. 75 shows the flowchart of the "Phase adjustment for particular cases" block 432 of FIG. 70. When the "Not synchronized intermittent light detection" signal is set to low level the sequence starts at step 495 by setting the "Renew inverse score" output to low level, and is maintained in said step 495 until said "Not synchronized intermittent light detection" signal is set to high level (see step 495A, 495B, 496, 497 ...). Once this happens, the real activation of said block 432, which occurs when the "Activate particular cases module" timer is triggered from block 430, it becomes feasible, see steps 497, 498... This activation will occur, as has already been said, in those vehicles which could not be synchronized by said block 430, for being part of a very rare NVE in which the vehicles that emit in opposite directions are carriers, in a casual way, of the same phase. These vehicles, with block 432 already activated, will compete with each other to synchronize their lights by applying the "Pseudorandom hierarchy" algorithm (the description of which was included in the "inter-vehicular synchronization procedure").

We return to the description of block 432 in step 495B of FIG. 75A, where the "Renew inverse score" output is activated in the form of a narrow pulse, and in step 496 the rest of the outputs of this block, whose functions will be explained below, are set to low level. Among the signals that enter this block 432 are those that make up the "inverse score", which is a binary number (generated in each vehicle by the "Random inverse score generation" block 433 of FIG. 70) that determines the hierarchy that the vehicle will use to compete with the rest. The smaller the reverse score, the greater the hierarchy conferred on the vehicle within that competition. For this reason when a vehicle has the "loser" flag at high level in step 499, the inverse score will be forced (see step 522) to adopt the maximum foreseen value (remember that the flag "loser" is set to high level in block 430 to indicate to block 432 that the vehicle, conditioned by other vehicles that achieved to synchronize before, must lose the competition and resign its phase).

At step 498 is initiated a waiting time which will be controlled in each vehicle by the XIV counter. The first vehicle whose reverse score is reached by said counter XIV, at decision point 500, will be the winner of the competition and must communicate it to the others. In order to do this, in the step 520 the "Displaced emission enabled for particular cases" signal is activated (as we have already said, a vehicle can transmit information to others by applying to its ILPE a certain phase shift "DISP" to make, for example, that a successor be prepared to propagate a possible phase change when it receives said emission in the DRCFZ or, as in this case, to make a vehicle assume the role of loser of competition when it receives the pulses of light of the winning vehicle in the DRCZ). Then the sequence advances in said winning vehicle to decision point 521 and from there returns to step 495B when the "Activate particular cases module" timer comes to an end.

Vehicles that are interacting directly with the winner and are not synchronized with the winner will be the first to assume that the competition is over. These losing vehicles will detect the positive edge of the light pulses displaced in phase of the winner in the DRCZ, giving rise to the sequence 500, 501, 502, 503, 504, 505,... It should be mentioned that a losing vehicle, given the particular conditions in which this block 432 is activated, could be synchronized with the winner by simply inverting its ICS. However, step 503 produces in the vehicle a "special phase adjustment" by which its ICS is not synchronized (initially) with the ICS of the winning vehicle but with the ILPE shifted in phase of the latter. This is done in order for the losing vehicle to cooperate with the winner by transmitting information to the non-winning vehicles synchronized with said winning vehicle, so that said non-winning vehicles (if any) will quickly abandon competition while retaining the phase of their ICS.

Since at step 504 a losing vehicle is enabled to emit with phase shift and that at step 503 said vehicle has not been "well synchronized" with the phase of the winner, not-winning vehicles synchronized with the winner (if any) will cause in the losing vehicle the emission of phase shifted pulses of light to be received by said not-winning vehicles after the DRCFZ. More precisely, the positive edge of said pulses will be received by these not-winning vehicles between the DRCFZ and the RCZ, see sequence 500, 501, 517, 518, 519,..., and when this happens they will follow the path of the winner leaving the competition without having changed phase (see steps 520 and 521). These vehicles by behaving as the winner of the competition may cause other vehicles not yet synchronized with said winner (if any) to leave the competition and change phase as the other losing vehicles have already done (this will only happen when within the NVE there are vehicles not synchronized with the winner that are not interacting with it directly, for example, to be out of its reach).

We now turn to the description of the sequences that take place in the losing vehicles, from step 505 in which the counter XIV is re-started from zero. In this step 505 a small waiting time controlled by said counter XIV is started in order to verify that there have been no losing vehicles of competition on both sides of the NVE, which could only occur if there had been a tie between not synchronized vehicles, i.e. if there were winners on both sides of said NVE. If so the phase change of said losing vehicles must be canceled out to prevent a phase change, which does not lead to the synchronization of the NVE, could be propagated on both sides of said NVE. By the sequence of steps 506, 513, 514, 506,... a losing vehicle can determine if there is another losing vehicle on the opposite side of the NVE.

Since, if so, each of these vehicles would receive in the DRCZ the positive edges of the pulses of light emitted by the other vehicle because both vehicles would have changed phase and both would be able to emit with phase shift. Therefore, if it is necessary to override said phase change, the sequence 506, 513, 514, 515, 516, 509, 510, 511, 512, 496 will be executed. In contrast when it is not necessary to override a phase change, that is to say when the verification is successfully concluded because on the other side of the NVE there were not vehicles which have changed phase, the sequence 506, 507, 508, 509, 510, 511, 512, 496, ... will be executed in the losing vehicle. As in the latter case the phase change has been confirmed it is necessary to "correctly" synchronize this losing vehicle with the winning vehicle (remember that the losing vehicles were transiently synchronized with the phase shifted ILPE of the winner by means of the steps 501, 502 and 503). This is accomplished as follows: decision point 507 delays the advance of the sequence to the next step until the appearance of a positive edge in the ICS.

Then, at step 509, the "Special phase adjustment flag" signal is set to low level and after a waiting time, represented by step 510, which equals a half period of the ICS minus the value of the phase shift to be corrected ("DISP"), said "Special phase adjustment flag" signal is again set to high level to produce at that instant a phase readjustment in the losing vehicle that coincides with a positive edge of the ICS of the winning vehicle. Similarly, when it is necessary to override a phase change, a losing vehicle can recover the phase it had previously if steps 509, 510 and 511 are executed starting from the negative edge of its ICS (see steps 515 and following). In this case, in which losing vehicles have detected (indirectly) the presence of winning vehicles on both sides of the NVE, step 516 allows to reduce the probability of another tie occurring when all these vehicles have to compete again, since at least those who were losers, adopting the maximum foreseen inverse score, cannot be the causing of a new tie (this assuming that the maximum foreseen inverse score can only be acquired by a vehicle by activating the signal "Set inverse score to max."). It should be noted that the winning vehicles, in order to solve said tie situations, preventively renew their inverse score by step 495B.

We now turn to the sequence 506, 507, 508, 509, 510, 511, 512, 496... that takes place in the losing vehicles when all of them are on the same side of the NVE. It has already been explained how through steps 507, 509, 510 and 511 said losing vehicles synchronize their ICSs with that of the winning vehicle facing them. Then we will see with what object the activation of the "Set inverse score to min." signal was included in step 508 of said sequence: it is obvious that when the competition has a single winning vehicle (or winners not facing each other) all losing vehicles will be on the same side of the NVE and said vehicles, winners and losers, will be synchronized after competing. But the opposite is not true, i.e. that the fact that all the losing vehicles are on one side of the NVE does not guarantee that a tie has not occurred (for example, the competition could have a winning vehicle of each side of the NVE and the rest of the participating vehicles, which will be losers, are all located on the same side in the NVE). Therefore, in the face of the possibility that they happen ties, the vehicles that are forced to change phase adopt, at step 508, the minimum inverse score. So that if the competition had to be repeated said vehicles will be the new winners, thus avoiding the possibility of having to propagate a new phase change.

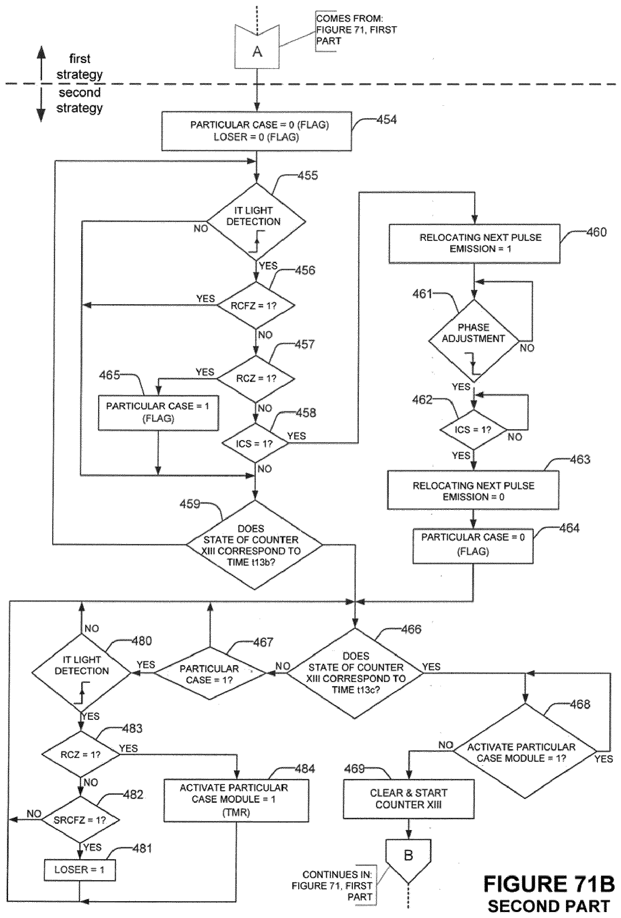

Step 512 represents the activation time given to the signal "Special phase adjustment flag" between steps 511 and 496. As we have just seen the losing vehicles, prepared for a possible repetition of the competition, they return to the step 496 (thus avoiding to renew its inverse score in step 495B). Once the timer "Activate particular cases module" has been extinguished, each vehicle will determine, through the "Phase adjustment control" block 430 of FIG. 70, if it is necessary to repeat the competition, in which case the timer will be triggered again (see step 484 of FIG. 71). The duration of said timer must be longer than the time required for the counter XIV to count from zero to the maximum foreseen value for the inverse score. As for the clock signal which supplies said counter XIV, it is desirable that it has a period equal to or greater than T. Accordingly, if we used a clock signal having period T (such as $\overline{ICS}$) and a maximum inverse score equal to 24, the "Activate particular cases module" timer could have, for example, a duration of 28T or 30T. Thus, using values like the above, the duration of the competition could be around the tenth of a second. Increasing the maximum inverse score decreases the probability of ties, although this increases the average duration of a competition. However, the choice of said maximum inverse score is not critical since neither the occurrence of ties nor the duration of competition is a problem considering that:
If a tie occurs in the competition the reverse score of the participating vehicles is "manipulated" to minimize the possibility of a second tie occurring.

Extending the duration of competition (within reasonable limits) would have no greater effect on drivers' vision, since vehicles not-synchronized with each other participating in said competition will still be far enough because they are initiator vehicles of an NVE.

To complete the description of the "Phase adjustment for particular cases" block we must mention two aspects referring to successor vehicles:

The time "$t_{14}$", used to check if a "losing" vehicle must cancel or confirm a phase change, must be less than the activation time of the "Not synchronized intermittent light detection" signal ("$t_{12}$") -see FIG. 69-. This is so because if a phase change has to be canceled in a vehicle it must be done before its "successors" adhere to it (remember that a successor vehicle, due to the fact of having active the signal "Propagator vehicle detection", adhere to a phase change practically at the moment when the "Not synchronized intermittent light detection" signal activates the "Phase adjustment control" block - see FIGS. 70 and 71).

The time "$t_9$" (which was described in connection with FIG. 68) is the time the "Propagator vehicle detection" signal continues to be active in a vehicle that has stopped receiving pulses of light in the DRCFZ. As it has already been said, this time should be sufficient for the successor vehicle to adhere to a phase change occurring in its predecessor. Therefore, when "$t_9$" was defined for "worst case" the duration of the "Activate particular cases module" timer was included in it, preventing block 432 from having to intervene in the synchronization of an NVE. What was not included in the value of "$t_9$" is the "extra time" that may require the synchronization of said NVE if in the competition there are ties. This is not really necessary since the vehicles making use of said block 432 emit, at some moment, with phase shift causing their successors to receive light pulses in the DRCFZ again.

The velocity sensor 438 included in the "Complementary logic and signals" block of FIG. 70, produces the "Null velocity" signal that enters the "Beginner flag generation" block 431 of the same figure. This signal will be activated when the vehicle reduces its speed below a permissible minimum or stops.

To finalize the detailed description of this system, the values that can be assigned to some time-controls are reviewed below:

"Enable extended protection" timer duration:

During the propagation of a phase change the longer exposure time to the reception of not-synchronized light could occur in the first successor vehicle, provided that it has successors which in turn have successors. A vehicle in such conditions could receive not-synchronized light pulses for a maximum time that can be estimated at the quadruple of "$t_{12}$". This time must be taken into account to set the timer value "enable extended protection" (see FIG. 60). Thus, for the values given as an example, said timer could have a duration of no more than two tenths of a second. However, since depending on the role the vehicle is playing in propagating a phase change it will receive not-synchronized light pulses falling in different zones, the duration of said timer could be reduced to little more than twice the time "$t_{12}$", causing pulses received in the DRCFZ to fall completely within the" normal" VPZ. This can be achieved by reducing the width of the pulses of light emitted displaced by the vehicle (pulses that the vehicle uses to transmit information) and also by modifying the decision points 279 and 280 of the flowchart of the "Vision protection" block of the FIG. 60 as follows:
At decision point 279, not to decide in function of the positive edge of the "IT light detection" signal but in function of the level of said signal. At decision point 280 change the "RCFZ" signal by the "VPZ" signal. This has the additional advantage that when the intensity of said pulses does not justify the use of extended protection these pulses will also go unnoticed for those vehicles receiving them in their DRCFZ. Anyway, since during the propagation of a phase change the time that said driver could be exposed to the intense light is very brief, one could even opt to do without the "extended vision protection". The maximum values for fixing the width of the pulses of light with and without displacement are suggested below.

Reduction of the width of the light pulses emitted displaced:

As already stated in the description of the anti-dazzling method, intermittent pulses of light emitted by synchronized vehicles circulating in opposite directions should be prevented from overlapping. For this, it is necessary that each pulse of light emitted by a vehicle is extinguished before the positive edge of the ICS of another vehicle synchronized with the previous one and that it circulates in the opposite direction with respect to the road. Therefore, the maximum width that these pulses can have is given by the expression: T/2 - width of the RCFZ/2 or, expressed in periods of the output $Q_i$ of the counter/divider 11, by the expression: $2^{n-i}/2 - \Delta$.

However, if it is desired to avoid such overlap even if said synchronized vehicles are emitting pulses of light shifted in phase, it is necessary that the width of said shifted light pulses be reduced to the value $2^{n-i}/2 - \Delta - DISP$, being, as already stated:

$2^{n-i}$: the duration of the period T of the ICS measured at periods of an output Qi of the counter/divider 11 (see FIG.20).
$\Delta$: the tolerance margin already described when defining the CFZ measured in periods of said output $Q_i$ of the counter/divider 11.
DISP: The displacement or phase shift that a vehicle will apply to its ILPE to transmit information to other vehicles, measured in periods of said output $Q_i$ of the counter/divider 11.

Not synchronized intense light detection:

Vehicles involved in propagating a phase change will receive pulses of light outside the VPZ for a time that has been contemplated in the duration of the "Enable extended protection" timer. If these pulses of light exceed the threshold of intense light ("DZT light detection" = 1) the "extended vision protection" will be activated in these vehicles. This makes it unnecessary for the "High beam/low beam automatic control" block 242 of FIG. 56 to act during the propagation of a phase change to reduce the intensity of the vehicle's lights. Therefore, the "Not synchronized intense light detection" signal (see FIG.40), which acts on said high beam/low beam automatic control, should have an activation time ("nT") that is longer than the duration of the "Enable extended protection" timer. However, if when implementing the system it is opted to do without the "extended vision protection" it could also be opted to reduce the time of activation of said "Not synchronized intense light detection" signal.

Intervehicular Synchronized Anti-dazzling System with Rearview Protection

This system is based on the antidazzling method with rearview protection and makes use of the inter-vehicular synchronization procedure. As previously announced, this system will be configured as two subsystems, which we will call the "front subsystem" and "rear subsystem", to treat each end of the vehicle as a separate entity when the front and/or rear part of a vehicle participate in an NVE. FIGS. 86A - 86B show the block diagram of a first version of the "Intervehicular synchronized anti-dazzling system with rearview protection". In FIG. 86A, the front subsystem, represented by the composite block 612, is basically formed by the same blocks that make up the "Intervehicular synchronized anti-dazzling system" described above (see FIG. 67). Accordingly, the same block numbers 390, 391, 394, 395, 397, 398, 399, 399A, 401, 402, 403, 404 of FIG. 67 have been used in said composite block 612 of FIG. 86A to identify those blocks that do not vary from system to system. On the other hand, the blocks of the front subsystem which show some variation with respect to those of the system of FIG. 67 are referred to below:
The "Front received light detection" block 616 of FIG. 86A corresponds to an enlarged version of block 392 of FIG. 67 (and hence of block 65 of FIG. 34). This enlarged version has already been described under the heading "Concepts and Characteristics Common to Anti-dazzling Systems with Rear-view Protection", and is shown in FIG. 76.
The composite block "Temporal analysis of received light" 615 of FIG. 86A is an enlargement of the composite block 393 of FIG. 67 incorporating the "Synchronized visible light detection" block 617 into the front subsystem. Content of this block 617 is equal to the content of the block 394 "Synchronized light detection" already described, and its flowchart corresponds to that shown in FIG. 38, with the proviso that the entry "IT light detection" changes to "IT visible light detection", and that the "Synchronized light detection" output changes to "Synchronized visible light detection". So that said block 617 has as inputs the "IT visible light detection" signal coming from the block 616 and the "RCFZ" signal from the block 391 and as output the "Synchronized visible light detection" signal, output that will remain at high level while the vehicle is receiving by the front pulses of synchronized visible light. The output of said block 617 enters the "Inter-vehicular synchronization" block 614 of the front subsystem. Said block 614 will be described below.
In the composite block 613 of FIG. 86B, which we will call the "rear subsystem", blocks 619, 620, 622, 623, 624, 626 and 628 have the same name and content as the "front subsystem" blocks 390 , 391, 403, 404, 394, 397 and 402, respectively. The contents of the "Rearview protection" block 627 of the rear subsystem are equal to the contents of the "Vision protection" block 399 of the front subsystem. While the "protect rear vision" output of said block 627 is held at high level, the "Rearview protection device" 627A shall prevent or attenuate the light path. The design of this device 627A will be conditioned by the techniques used to implement the rear-view protection, some of which have been mentioned together with the formulation of the anti-dazzling method with rear-view protection.
The contents of the "Rear received light detection" block 621, correspond to that shown schematically in FIG. 77, and described under the heading "Concepts and Characteristics Common to Anti-dazzling Systems with Rear-View Protection". In this version of the system, the "Control of the devices for the retroemission generation" block 629 has the sole function of generating the light emission that the vehicle will use to interact backwards with other vehicles. To this block only enters the signal "Emit light pulse", reason why it is of less complexity than its counterpart, block 401 of the front subsystem. The implementation of said block 629 depends on the techniques to be employed to generate this "retro-emission".

The "Intervehicular synchronization" block 614 of the front subsystem and its homonym 618 of the rear subsystem will be described below as composite blocks: both the contents of said blocks (614 and 618) and the interconnection between them are shown in FIGS. 87A - 87B. This interconnection is carried out by means of a bidirectional interface whose logic diagram has been divided into two parts called "FRONT/BACK interface" and "BACK/FRONT interface" incorporated in said composite blocks 614 and 618 respectively.

It is important to mention that the interaction between the front and rear subsystems, which we will call intra-vehicular interaction, allows among other things, that both ends of the vehicle (Front and Rear) remain, most of the time, synchronized with each other. The composite block 614 of the front subsystem is, the same as the composite block 618 of the rear subsystem, an adaptation of the "Intervehicular synchronization" block 389 of the "intervehicular synchronized anti-dazzling system" already described in relation to FIG. 67. The content of the composite block 614 basically comprises the contents of said block 389 plus the content of said FRONT/BACK interface. The content of the composite block 618 essentially comprises the contents of said block 389 plus the contents of said BACK/FRONT interface. Note that said block 389 of FIG. 67 has already been described and its contents shown in FIG. 70.

Thus, blocks 630, 631, 632, 633, 634 and 635 of FIG. 87A, belonging to the composite block 614 of the front subsystem, have the same function and content as the following blocks of FIG. 70: 430, 431 , 432, 433, 434 and 435 respectively. The rest of the components of said composite block 614 correspond to the FRONT/BACK interface which, given its simplicity, will be described based on the logic scheme formed by the components 640, 641, 642, 643, 644 and 645. The output Q of the FF D 640 will indicate when the two ends of the vehicle are synchronized with each other. Remember that both ends of a vehicle are synchronized if the positive ICS edge of one of these ends falls on the RCFZ of the other end (and vice versa). Accordingly, the ICS corresponding to the rear subsystem feeds the clock input of said FF D 640 and the RCFZ signal of the front subsystem feeds to the data input of said FF D 640, so that at the output Q of said FF D the "Synchronized ends" signal will be set to high level if the RCFZ signal is at high level when said ICS goes to high level. Now, as can be seen in said FIG. 70, the "Synchronized light detection" signal enters directly into the "Phase adjustment control" block 430.

In said block 430, which will be activated when the vehicle has been involved in a not-synchronized NVE, said "Synchronized light detection" signal is used to give the vehicle, when applying the first synchronization strategy, high hierarchy when it comes from a synchronized NVE. Although this same can be applied without changes to both subsystems (front and rear), it has been chosen to extend this idea making that the vehicle have high hierarchy at one end not only when it is receiving "synchronized light" by that end but also when said vehicle, having both ends synchronized with each other, is receiving synchronized light by the opposite end. With this extension, a vehicle having its two ends synchronized and at least one of them involved in a synchronized NVE, maintains the synchronization of said ends when the other end is involved in a not synchronized NVE with an "isolated" vehicle. This is done so that said isolated vehicle is synchronized with the vehicles of said synchronized NVE, thus avoiding the possible propagation of a phase change. This extension has been implemented in the front subsystem by the OR gate 642 and AND gate 641. The front end of the vehicle will have high hierarchy, when applying the first synchronization strategy, when the output of said OR gate 642, which enters the "Phase adjustment control" block 630, is in high level. This will occur when the "synchronized light detection" signal of the front subsystem, which enters one of the inputs of said OR gate 642, is at a high level or when being the "Synchronized ends" signal at high level, which enters one of the inputs of the AND gate 641, the "Synchronized light detection" signal of the rear subsystem be also in high level, which enters the other input of said AND gate 641 whose output is in turn connected to the other input of said OR gate 642.

Taking again as starting point to the FIG.70, we see that in said figure the "Special phase adjustment flag" signal, from the "Phase adjustment for particular cases" block 432, enters directly into the "Phase adjustment and phase selection signals generation" block 434. While this could be implemented without changes for both subsystems (front and rear), it has been decided to make a vehicle also be able to readjust the phase in one of its ends, either at the front end or at the rear end as appropriate, to recover the synchronization of its two ends (intra-vehicular synchronization). For this reason, in the composite block 614 of FIG. 87A the output "Special phase adjustment flag" of block 632 enters the block "Phase adjustment and phase selection signals generation" 634 through the OR gate 645.

In this way, the other input of said OR gate 645 may be activated when it is appropriate to synchronize both ends of the vehicle by adjusting the phase of the front end (it should be mentioned that both inputs of said OR gate 645 will never be active simultaneously since block 632, which can activate one of the inputs of said OR gate 645 will only remain active while the "Not synchronized intermittent light detection" signal is at high level, which enters said block 632 and also to one of the inputs of the OR gate 643. In this way while said signal is at high level the output of OR gate 643, which feeds to the reset input of FF D 644, will remain at high level and therefore output Q of said FF D 644 which is connected to the other input of said OR gate 645 will remain in low level).

The conditions for synchronizing the two ends of the vehicle with each other by adjusting the phase, in this case, of the front end are: that the rear end being involved in a synchronized NVE, that is to say being at high level the "Synchronized light detection" signal coming from the rear subsystem and enters the data input of the FF D 644, it occurs that said front end is not involved in an NVE and obviously that both ends are not synchronized with each other. The first will be fulfilled when the "Synchronized light detection" and "Not synchronized intermittent light detection" signals of the front subsystem entering the OR gate 643 are both at low level and the second is fulfilled when the "Synchronized ends" signal that enters another of the inputs of said OR gate 643 is also in low level. When these conditions are met both ends of the vehicle will be synchronized with each other by adjusting the front end phase at the instant the rear end ICS provides a positive edge to the clock input of said FF D 644. To end the description of the composite block 614 of FIG. 87A we note that the name of the signal entering the "Beginner flag generation" block 631 is "Synchronized visible light detection" rather than "Synchronized light detection" as in FIG. 70, since in this system the "Synchronized intermittent light detection" signal generated in the front subsystem is activated by both visible and not-visible synchronized intermittent light reception. This change is made so that the front end of the vehicle loses the "Beginner" condition only when it has synchronized its lights with that of a vehicle that comes in the opposite direction.

Next, we will describe the composite block 618 of the rear subsystem only pointing out the differences that said block presents with respect to the composite block 614 that we just described for the front subsystem. To begin with, we note that the velocity sensor 638 included in said block 614 is unique, meaning that it has no equivalent in the rear subsystem. The "Synchronized ends" signal is also shared by said blocks 614 and 618, whereby the Flip Flop D 640 included in said block 614 also has no equivalent in block 618. It should be noted that the "Interaction delays compensation" signal generated in the front subsystem by micro switch 639 could also be used as an "Interaction delays compensation" signal for the rear subsystem, although it was chosen to present in FIGS. 87A - 87B to said signals independently generated.

It remains to be understood that the "Beginner flag" is generated in block 618 differently than in block 614, since the beginner flag status of the rear subsystem depends on the state of its homonymous flag in the front subsystem. This is because the vehicle loses its "beginner" condition first by the front and then, as soon as both ends of the vehicle are synchronized with each other, it will lose its beginner condition at the rear end. Once the vehicle loses the "beginner" condition at its rear end, it will only acquire that condition if the beginner signal from the front end is re-activated. Said beginner flag is generated in the rear subsystem by block 647 of FIG. 87B, the contents of which, given their simplicity, have been schematized within the same block 647 and its operation responds to the behavior just described for said flag. On the other hand, in said composite block 618, the components 646, 648, 649, 650, 652, 653, 654, 655, 656, 657, 658 and 659 have the same function and content as the components 630, 632, 633, 634, 636, 637, 639, 641, 642, 643, 644 and 645 of the composite block 614 respectively.

FIGS. 88A - 88B show the block diagram of a second version of the "Intervehicular synchronized anti-dazzling system with rearview protection", which introduces two improvements to the first version of said system. Improvement No. 1 is to prevent the vehicle from activating the vision protection when the vehicle is detecting from the front only pulses of not visible light from the rear part of another vehicle or other vehicles, as would for example in an NVE composed of vehicles that advance in single line. Improvement No. 2 has the purpose of allowing, under certain conditions, a vehicle to be able to emit pulses of visible light backwards, in order to cooperate with the vehicles that circulate in the opposite direction extending the area of the road that these vehicles can illuminate. The conditions for a vehicle to be able to emit pulses of visible light backward using the frequency and phase of the rear ICS are:

Condition No. 1: that the vehicle to emit pulses of visible light backwards faces other vehicles approaching in the opposite direction, so that there are drivers that can benefit from this additional illumination.
Condition No. 2: that the vehicle which is to emit pulses of visible light backwards does not have behind it on the road to not-synchronized vehicles whose drivers could be harmed by the light emitted backwards by the vehicle in front.
Condition No. 3: that the vehicle which is to emit pulses of visible light backwards have both ends synchronized with each other, otherwise the visible light that the vehicle could emit backward would not be really useful for a synchronized vehicle that is approaching in the opposite direction.

From the block diagram of FIGS. 88A - 88B only those blocks differing from those shown in FIGS.86A - 86B will be described. The composite block 612 of FIG. 88A, corresponding to the front subsystem, has the following modifications (with respect to block 612 of FIG. 86A): on the "Vision protection" block 399 of FIG. 88A, it acts, as in FIG. 86A, the "Activate intermittent light" signal, with the difference that it does so through the AND gate 662 when the "Synchronized visible light detection" signal, which also enters said AND gate 662, is at a high level.

The composite block 613 of FIG. 88B, corresponding to the rear subsystem, has the following modifications with respect to block 613 of FIG. 86B: The contents of the "Rear received light detection" block 621 corresponds to that shown schematically in FIG. 15, wherein the light sensor 2 of said FIG. 15 must respond only to visible light if it is desired to prevent vehicles that have already crossed each other on the road from interacting with each other. The "Not synchronized light detection" block 625 (which does not have its equivalent in the rear subsystem of FIG. 86B) has the same content as the front subsystem block 395. The AND gate 660 and the inverter 661 represent another extension present in the rear subsystem of FIG. 88B. The manner in which the described modifications affect the behavior of this system is described below: to implement the improvement No. 1, i.e. to avoid that in the vehicle the vision protection activates when said vehicle is detecting from the front only pulses of not-visible light, in the front subsystem the signals "Synchronized visible light detection" from block 617 and "Activate intermittent light" from block 397, enter the inputs of AND gate 662, which output, when it is at high level, allows the "Protect vision" output to be activated within the VPZ through the "Vision Protection" block 399.

In this way, the vision protection will only be activated when the vehicle is using its intermittent light, but in front of vehicles that are also emitting pulses of visible light. This will prevent the vehicle from activating the vision protection when the vehicle is detecting from the front only pulses of not visible light coming from the rear part of another vehicle or other vehicles, as would be the case, for example, of an NVE composed of vehicles moving forward in single line. Next, the implementation of improvement No. 2 is described, that is to say, that a vehicle can emit backwards pulses of visible light, in order to cooperate with the vehicles that circulate in the opposite direction. The "Synchronized visible light detection" output of block 617 of the front subsystem enters one of the inputs of the AND gate 660 of the rear subsystem, while the "Not synchronized light detection" output of the block 625 enters, inverted by the inverter 661, to another input of said AND gate 660 and the "Synchronized ends" output of block 618 enters the other input of said AND gate 660. In this way the output of said AND gate 660, which we will call "Enable visible light use" and which enters the "Control of the devices for the retroemission generation" block 629, will be set to high level when the vehicle can emit backwards visible light. This is so because the "Synchronized visible light detection" signal in high level indicates that it fulfills said condition No. 1, while the "Not synchronized light detection" signal in low level indicates that condition No. 2 is fulfilled, and the "Synchronized ends" signal in high level indicates that condition No. 3 is met. So that the output of AND gate 660 at high level indicates that all three conditions are met. It should be noted that at block 621 it is convenient to adapt the activation threshold of the "DZT light detection" signal, signal that enters block 625, to ensure that when a vehicle has behind it on the road to not-synchronized vehicles, the "Not synchronized light detection" signal is set to high level before the drivers of said not-synchronized vehicles can be harmed by the visible light emitted backwards by the vehicle ahead.

CONCLUSION

In concluding the detailed description, it should be noted that it would be obvious to those skilled in the art that many variations and modifications can be made to the preferred embodiment without substantially departing from the principles of the present invention. Also, such variations and modifications are intended to be included herein within the scope of the present invention as set forth in the appended claims. Further, in the claims hereafter, the structures, materials, acts and equivalents of all means or step-plus function elements are intended to include any structure, materials or acts for performing their cited functions.

It should be emphasized that the above-described embodiments of the present invention, particularly any "preferred embodiments" are merely possible examples of the implementations, merely set forth for a clear understanding of the principles of the invention. Any variations and modifications may be made to the above-described embodiments of the invention without departing substantially from the spirit of the principles of the invention. All such modifications and variations are intended to be included herein within the scope of the disclosure and present invention and protected by the following claims.

The present invention has been described in sufficient detail with a certain degree of particularity. The utilities thereof are appreciated by those skilled in the art. It is understood to those skilled in the art that the present disclosure of embodiments has been made by way of examples only and that numerous changes in the arrangement and combination of parts may be resorted without departing from the spirit and scope of the invention as claimed. Accordingly, the scope of the present invention is defined by the appended claims rather than the foregoing description of embodiments.

**Claims**

1. a method to avoid the glare that can affect the driver of a vehicle if your eyes are light from the headlights of another or other vehicles that pass through a path in the opposite direction to that vehicle and involved intense next to this is a same night vehicle meeting (EVN), the method comprises:

   (m1) Flash flashing light (EPLI) carried out by the vehicles involved in the EVN on the area of the path that each of them needs to illuminate, in replacement of the conventional continuous lighting causing the headlights of such vehicles on that area of the road, at least at times when such vehicles are involved in an EVN; where the emission of flashing light pulses must be a space between pulses ("$T_{off}$") less than the retention time of the retina of the human eye and duration of the pulses of light ("$T_{on}$") or at most equal to the space between pulses

"$T_{off}$"; where such EPLI is performed with the frequency and the phase of a periodic signal (SCI) which controls the flashing of the emission; where this frequency will have a preset value and where this phase shall be adjustable;

(m2) synchronization of the EPLIs of the EVN (i.e. synchronisation of the EVN) vehicles by adjusting in each vehicle the phase of its EPLI to those of such vehicles that circulate in a same direction with respect to the road have, within a range of default tolerance, a same phase of EPLI and those of such vehicles travelling in opposite with respect to road directions have, within the default tolerance, opposite phases of EPLI (i.e. phases of EPLI outdated 180º);

(m3) protection of the vision of the driver of a vehicle involved in an EVN of light from the headlights of another or other vehicles of the EVN that circulate in the opposite direction to the vehicle's driver on the road; where such protection vision is preventing or significantly attenuating the arrival of this light in the eyes of the driver at regular intervals of time ("$T_p$"), where each of these intervals of time "$T_p$" will have a location and extent within each space between pulses "$T_{off}$", corresponding to the EPLI of vehicle driver, such as saying "$T_p$" include the EPLIs synchronized light pulses received from such vehicles that circulate in the opposite direction to the the driver on the road vehicle.

2. a method to avoid the glare that can affect the driver of a vehicle if your eyes get bright light, either direct or well reflected by mirrors of the vehicle, coming from the headlights of another or other vehicles involved alongside the first in a same vehicle meeting night (EVN), the method comprises:

(m1) Flash flashing light (EPLI) carried out by the vehicles involved in the EVN on the area of the path that each of them needs to illuminate, in replacement of the conventional continuous lighting causing the headlights of such vehicles on that area of the road, at least at times when such vehicles are involved in an EVN ahead; where, in such vehicles, the EPLI should have a space between pulses ("$T_{off}$") less than the retention time of the retina of the human eye and duration of the pulses of light ("$T_{on}$") or at most equal to the space between pulses "$T_{off}$" "; where such EPLI is performed with the frequency and the phase of a periodic signal (SCI) which controls the flashing of the emission; where this frequency will have a preset value and where this phase shall be adjustable;

(m2) synchronization of the EPLIs of the vehicles involved in front in the EVN in each vehicle adjusting the phase of the EPLI to those of such vehicles that circulate in a same direction with respect to the road have, within a margin of default tolerance, a same phase of EPLI and those of such vehicles travelling in opposite with respect to road directions have, within the default tolerance, opposite phases of EPLI (i.e. phases of EPLI outdated 180º);

(m3) protection of the vision of the driver of a vehicle involved in an EVN ahead of light from the headlights of another or other vehicles of the EVN that circulate in the opposite direction to the driver regarding road vehicle; where such protection of the vision is preventing or significantly attenuating the arrival of this light in the eyes of the driver at regular intervals of time ("$T_p$"), where each of these intervals of time "$T_p$" will have a location and spread within each space between pulses '$T_{off}$", corresponding to the EPLI of vehicle driver, such as saying "$T_p$" include the light pulses of the synchronized EPLIs received from these vehicles circulating in contrary to the driver regarding road vehicle;

(m4) protection of the vision of the driver of a vehicle involved in an EVN behind the light from the headlights of another or other vehicles of the EVN circulating behind the vehicle to avoid the glare that light can cause to the reflected in mirrors Mirrors of the vehicle; This protection of vision is attenuating or preventing the arrival of the light reflected in the eyes of the driver at regular intervals of time ("$T_{rp}$"), where each of these intervals of time "$T_{rp}$" will have a location and extension that includes the light pulses of the synchronized EPLIs received from vehicles driven in the same direction and behind the vehicle.

3. the method of claim 1 where the step of synchronization (m2) comprises:

(i) obtaining, by vehicles passing a same road, a phasing signal so that in these vehicles, the signal of the phase adjustment, possible phases of EPLI are reduced to two alternatives, a certain phase and its corresponding inverse; where each of these alternative phases will be pre-allocated to a certain sense of movement with respect to the road;

(ii) obtaining, by such vehicles, of a selection of phase signal, so that the signal of the selection phase, and this signal phase adjustment, each of these vehicles take to the EPLI pre-allocated alternative phase that corresponds to its sense of movement with respect to the road;

and where such signals of selection of phase and phase adjustment shall be obtained by such vehicles from the reception of signals transmitted by transmission external sources to vehicles using a default communication medium; said means of communication is included among those based on electronic, magnetic, optical, acoustic signal transmission/reception or a combination of them.

4. the method of claim 3, where the phasing signal is transmitted such vehicles using one or more sources of omnidirectional transmission and where the value of the signal phase selection will be obtained in each of these vehicles according to the side by e 1 which each of these vehicles receive a signal transmitted by directional transmission sources, distributed along the way, whose emissions the vehicle will be exposed to pass through said road.

5. the method of claim 3, where the phasing signal is transmitted such vehicles using directional transmission sources distributed along the road and where the value of the signal phase selection will be obtained in each of these vehicles and n function on the side by which each of these vehicles receive the signal phase adjustment through the area covered by one of these sources of directional transmission.

6. the method of claim 2 where the step of synchronization (m2) comprises:

(i) obtaining, by vehicles passing a same road, a phasing signal so that in these vehicles, the signal of the phase adjustment, possible phases of EPLI are reduced to two alternatives, a certain phase and its corresponding inverse; where each of these alternative phases will be pre-allocated to a certain sense of movement with respect to the road;
(ii) obtaining, by such vehicles, of a selection of phase signal, so that the signal of the selection phase, and this signal phase adjustment, each of these vehicles take to the EPLI pre-allocated alternative phase that corresponds to its sense of movement with respect to the road;

and where such signals of selection of phase and phase adjustment shall be obtained by such vehicles from the reception of signals transmitted by transmission external sources to vehicles using a default communication medium; said means of communication is included among those based on electronic, magnetic, optical, acoustic signal transmission/reception or a combination of them.

7. the method of claim 6 where the phasing signal is transmitted such vehicles using one or more sources of omnidirectional transmission and where the value of the signal phase selection will be obtained in each of these vehicles according to the side by e1 which each of these vehicles receive a signal transmitted by directional transmission sources, distributed along the way, whose emissions the vehicle will be exposed to pass through said road.

8. the method of claim 6 where the phasing signal is transmitted such vehicles using directional transmission sources distributed along the road and where the value of the signal phase selection will be obtained in each of these vehicles and n function on the side by which each of these vehicles receive the signal phase adjustment through the area covered by one of these sources of directional transmission.

9. the method of claim 3, 4 or 5 in addition, understanding a vehicle involved in an EVN and for some reason does not possess the phase of EPLI corresponding to its sense of movement with respect to the road, the obtaining of such phase through the following steps :

(iii) reception by the front of the vehicle of a synchronization signal containing the phase of EPLI for vehicles driven in the opposite direction; where the synchronization signal is transmitted directionally towards later, using a medium default, by one or more other vehicles involved in the EVN and possessing the phase of EPLI corresponding to its sense of movement with respect to the road;
(iv) obtain the phase contained in the synchronization signal received by such a vehicle, which corresponds to the phase of EPLI of vehicles driven in the opposite direction, so the vehicle develop and adopt the corresponding capacitors as its phase of EPLI.

and where media for the sync signal transmission/reception are included among those based in the transmission/reception of electronic, magnetic, optical, acoustic signals or a combination of them;

10. the method of claim 6, 7 or 8 in addition, understanding a vehicle involved in an EVN and for some reason does not possess the phase of EPLI corresponding to its sense of movement with respect to the road, the obtaining of such phase through the following steps :

(iii) reception by the front or back or both ends of the vehicle of one or more synchronization signals transmitted directionally forward or directionally backwards or directionally forward and backward by other or other vehicles participating of the EVN and possessing the phase of EPLI corresponding to its sense of movement with respect to the road; where the reception by a vehicle of such signals for synchronization by the front, rear or both ends depends on such a vehicle is involved in said EVN in front, rear or both ends respectively; and where the transmission by a vehicle of such signals of forward, backward or forward and reverse synchronization depends on such a vehicle is involved in said EVN in front, rear or both ends respectively; and where the phase contained in the signal transmitted by a vehicle forward synchronization will be the phase of EPLI own such a vehicle; and where, so that EVN in the rear end of a vehicle can transmit phase information at the front end of one or more other vehicles of the EVN to come back, the rear end will back a periodic signal and phase adjustable, equivalent to such EPLI in regards to pass phase information to vehicles coming back; and where the phase contained in transmitted by a vehicle back sync signal will be the inverse of the said vehicle EPLI phase; where the emission back will be controlled by a signal equivalent to the SCI (SCI for the rear end) and will be a broadcast not visible, at least while said EVN is not synchronized; and where to spend such phase information to vehicles coming back will be used media that include those based on the transmission / receipt of electronic, magnetic, optical, acoustic signals or a combination of them.

(iv) obtain the phase contained in signal synchronization received by such a vehicle from the front, which corresponds to the phase of EPLI of vehicles driven in the opposite direction, so the vehicle develop and adopt the corresponding inverse as its phase of EPLI; or removal of the stage in the synchronization signal received by the vehicle behind, which corresponds to the phase of EPLI of vehicles driven in the same direction as the vehicle, this vehicle adopt that same phase as its phase of EPLI; < /B11 >

and where the media for the transmission/reception of these signals for synchronization include those based on electronic, magnetic, optical, acoustic signal transmission/reception or a combination of them.

**11.** the method of claim 1 where the step of synchronization (m2) comprises:

(i) obtaining, by vehicles passing a same road, a signal of phase adjustment so that this signal of phase adjustment possible phases of EPLI of such vehicles are reduced to two alternatives, a certain phase and its corresponding inverse; where each of these alternative phases will not be pre-allocated to a certain sense of movement with respect to the way by which such assignment shall be resolved in each EVN which should be synchronized (i.e. in each not synchronized EVN) and so a vehicle that has not yet participated in any EVN, since he started or restarted its circulation along the way, initially take one of such two alternative stages as its current phase of EPLI; where this signal phase adjustment shall be obtained by such vehicles from the reception of signals transmitted by transmission external sources to vehicles using a default media including those based in the transmission/reception of electronic, magnetic, optical, acoustic signals or a combination thereof;

(ii) Exchange of information between vehicles of a same not synchronized EVN so, processing this information using a default algorithm, such vehicles coordinate which of them will have to change its current phase of EPLI by the opposite phase and which one or which ones they will retain its current phase of EPLI to achieve synchronization of the EVN; where is such information obtained in a vehicle of the EVN by receiving by the front of signals transmitted directionally forward by one or more other vehicles of the EVN; and where the means of communication to be used in the exchange of information between vehicles include those based on electronic, magnetic, optical, acoustic signal transmission/reception or a combination of them.

**12.** the method of claim 2 where the step of synchronization (m2) comprises:

(i) obtaining, by vehicles passing a same road, a signal of phase adjustment so that this signal of phase adjustment possible phases of EPLI of such vehicles are reduced to two alternatives, a certain phase and its corresponding inverse; where each of these alternative phases will not be pre-allocated to a certain sense of movement with respect to the way by which such assignment shall be resolved in each EVN which should be synchronized (i.e. in each not synchronized EVN) and so a vehicle that has not yet participated in any EVN, since he started or restarted its circulation along the way, initially take one of such two alternative stages as its current phase of EPLI; where this signal phase adjustment shall be obtained by such vehicles from the reception of signals transmitted by transmission external sources to vehicles using a default media including those based in the transmission/reception of electronic, magnetic, optical, acoustic signals or a combination thereof;

(ii) Exchange of information between vehicles of a same not synchronized EVN so, processing this information using a default algorithm, such vehicles coordinate which of them will have to change its current phase of EPLI by the corresponding inverse and which of them will retain its current phase of EPLI to achieve synchronization of the EVN; such information will be obtained in a vehicle of the EVN by receiving by the front or back or both ends of the vehicle signals transmitted directionally forward or backward directionally or directionally forward and backward by one or more other vehicles of the EVN; where the reception by a vehicle of such signals by the front, rear or both ends depends on that vehicle is involved in the EVN in front, rear or both ends respectively; and where the transmission by a vehicle of such forward, backward or forward and backward signals depends on that vehicle is involved in the EVN in front, rear or both ends respectively; and where, to enable synchronization even an EVN consisting of vehicles that move all in a sense, every vehicle will have the ability to exchange information with other vehicles at both ends independently as if these ends they were separate entities; and where, so an EVN in the rear end of a vehicle can exchange information in phase with the front end of one or more other vehicles of the EVN to come back, the rear end will back a periodic signal and adjustable phase equivalent to such EPLI in regards to pass phase information to vehicles coming back; where the emission back will be controlled by a signal equivalent to the SCI (SCI for the rear end) and will be a broadcast not visible, at least while said EVN is not synchronized; and where when the EVN is synchronized equivalent to such EPLI signal will be in phase with the EPLI of vehicles of the EVN, which move in the opposite direction; and where this exchange of information will take place using media that include those based on electronic, magnetic, optical, acoustic signal transmission/reception or a combination of them.

13. the method of claim 11 where said default algorithm is based on establishing differences between the EVN unsynchronized vehicles to rank them, so that each one of these vehicles, based on its nest, competing with the rest of such vehicles by make prevail their current phase of EPLI; where the winning vehicle of this competition, which will be the vehicle of senior, starts the synchronization of the EVN imposed the inverse of its current phase of EPLI as EPLI phase for vehicles which emit counterclockwise at winning such a vehicle; and where vehicles already synchronized with the winning vehicle imposed at the same time the inverse of its current phase of EPLI as current phase of EPLI for vehicles of the EVN moving away from such vehicles already synchronized, to complete the synchronization of the EVN.

14. the method of claim 12 where the default algorithm is based on establishing differences between the EVN unsynchronized vehicles to rank those ends of the vehicle involved in the EVN, in each one of these vehicles for that each of these ends of vehicle, based on its nest, competes with the rest of these extremes of vehicle by make prevail their current phase (i.e. its current phase of EPLI or the current phase of the signal equivalent to such EPLI, according to said front end or tra) (sero respectively); where the end of vehicle winner of this competition, that will be the end of vehicle of senior, starts the synchronization of the EVN imposed the inverse of its current phase as current phase for the ends of vehicles of the EVN issued in contrary to the winning end; and where the ends already synchronized with the winning end impose in turn the inverse of its current phase as current phase to the ends of the vehicles of the EVN emitted in opposite direction to these ends already synchronized, to complete the synchronization of the EVN.

15. the method of claim 13 where said default algorithm uses two strategies to rank not synchronized vehicles of the EVN; where in the first of these strategies is the obtaining of such hierarchy determined by the conformation of the EVN; where will the formation of the EVN allow between these vehicles there are different hierarchies in the following cases:

1) when the not synchronized EVN has formed from a synchronized EVN to which one or more vehicles not synchronized with this last EVN vehicles; have joined where the vehicles coming from the synchronized EVN they will be that obtained the higher hierarchy so that they retain their current phase of EPLI to synchronize with the rest of the vehicles of the EVN has not synchronized, to prevent the spread of a phase shift between the vehicles coming from the synchronized EVN;

2) where a vehicle is successor in the propagation of a phase change into a non-synchronized EVN formed as a result of the conflict of two synchronized EVNs union; where the successor vehicle will be which get less hierarchy and It will change its current phase of EPLI by the opposite phase to synchronize with the vehicles that are spreading this phase change;

3) where in saying not synchronized EVN involved one or more vehicles that have stopped receiving signal phasing for one time greater than a preset maximum time; where such vehicles shall be those who obtain the lower hierarchy and they will reset your current stage of EPLI according to the phase with which emit other vehicles of the EVN;

4) where one or more vehicles that still have not integrated any synchronized EVN since they started or resumed their night displacement along the way; where such vehicles have lower hierarchy that is involved in said EVN not synchronized any other vehicle that not synchronized EVN, which is not in this situation or in the situation in case 3); where one or more such vehicles with the lower hierarchy will be that change phase;

and where, when the implementation of this first strategy does not establish hierarchy differences between such unsynchronized vehicles, leading to the synchronization of the EVN, application of the second of these strategies, where these vehicles they will get a second hierarchy that will be independent of the conformation of the EVN, so each of these vehicles can solve if you should or not to change its current phase of EPLI by the opposite phase to carry out the synchronization of the EVN.

16. the method of claim 14 where said default algorithm uses two strategies to rank to those ends of unsynchronized vehicles involved in the EVN; where in the first of these strategies is the obtaining of such hierarchy determined by the conformation of the EVN; where the formation of the EVN will allow these vehicles ends there are different hierarchies in the following cases:

1) when the not synchronized EVN has formed from a synchronized EVN to which one or more vehicles not synchronized with this last EVN vehicles; have joined where the ends of the vehicles coming from the EVN synchronized will be that obtained the higher hierarchy, so that they retain their current phase (i.e. its current phase of EPLI or the current phase of the signal equivalent to such EPLI, according to said front end or rear respectively) to synchronize with the rest of the vehicles of the EVN not synchronized, preventing the spread of a phase shift between the vehicles coming from the synchronized EVN;

2) where a vehicle is successor, through one of its ends, in the propagation of a phase change into a non-synchronized EVN formed as a result of the conflict of two synchronized EVNs union; where said end of the successor vehicle will you get the lower hierarchy and will change its current phase by the opposite phase to synchronize with the vehicle ends that are spreading this phase change;

3) where in saying not synchronized EVN involved one or more vehicles that have stopped receiving signal phase adjustment for one time greater than a preset maximum time; where those ends of such vehicles that are involved in saying not synchronized EVN shall be those who obtain the lower hierarchy and reset its current stage according to the phase with which emit other vehicles of the EVN;

4) where in saying not synchronized EVN involved one or more vehicles that still do not have integrated, since they started or resumed their night shift along the way, no EVN synchronized with vehicles circulate in the opposite direction; where will the ends of the vehicles involved in the not synchronized EVN have lower hierarchy than any other end of vehicle involved in such not synchronized EVN, which is not in this situation or in the situation posed in the case (3); where one or more such ends with the lower hierarchy will be that change phase;

and where, when the implementation of this first strategy does not establish hierarchy differences between such unsynchronized ends of vehicle that will lead to the synchronization of the EVN, application of the second of these strategies where these ends of vehicle will get a second hierarchy that will be independent of the conformation of the EVN, so each of these ends of vehicle can solve if you should or not to change its current phase by the opposite phase to carry out the synchronization of such EVN.

17. the method of claim 15 where such unsynchronized vehicles obtained from the signal phase adjustment, the startup time for the execution of such powers; and where, in applying this first strategy, if the conformation of the not synchronized EVN allowed to establish hierarchy differences between these vehicles, the less hierarchical is a vehicle within such minor EVN will be the time that vehicle, within a timing preset, in changing its current phase of EPLI address emissions not synchronized from other vehicles, said EVN best hierarchical vehicle is the winner of the competition and do not change its phase to synchronize with the rest; and where when the time preset for the application of the first strategy and the application of this second strategy be required for the synchronization of the EVN has elapsed, in such vehicles do not sync start time standby whose duration shall be given by a value generated in each vehicle shaped pseudo-random; where the first vehicle to complete the waiting time will be higher and the first to emit a signal that, to put an end to the competition, will be replicated by all vehicles involved in this competition so they all leave their respective times of waiting next to the vehicle of senior and adjust its current phase of EPLI according to the phase that emits such a vehicle of greater hierarchy that will be winning the competition vehicle.

18. the method of claim 16, where such extremes of unsynchronized vehicles obtained from the signal phase adjustment, the startup time for the execution of such powers; and where, in applying this first strategy, if the conformation of the not synchronized EVN allowed to establish hierarchy differences between these ends of vehicles, the less hierarchical is one end of the vehicle within the said minor EVN will be while said end of vehicle, within a timing pre-set, in changing its current stage front not synchronized emissions from other ends of vehicles, so the end of better hierarchical vehicle of the EVN is the winner of the competition and not change its current phase when you synchronize with the rest; and where when time has elapsed, the preset for the application of the first strategy and of the application of this second strategy be required for the synchronization of the EVN, at these extremes of unsynchronized vehicles are It will initiate a time whose duration shall be given by a value generated at each of these vehicle shaped pseudo-random ends; where the first end of vehicle to complete the waiting time will be the most senior and the first to emit a signal that, to put an end to the competition, will be replicated by all ends of vehicle involved in this competition for all of them abandon their respective waiting times near the end of higher vehicle and adjust its current stage according to the phase with which emits the end of vehicle of senior who will be the winner of the competition.

19. the method of claim 17 where if applying this second strategy had two or more winning vehicles not synchronized between them that competence is repeated with new pseudo for such winning vehicles values and with minimum hierarchy for the other vehicles involved in this competition to minimize the possible occurrence of another draw.

20. the method of claim 18 where if applying this second strategy had two or more unsynchronized winning vehicle ends it each other that competence is repeated with new pseudorandom values for these winning vehicle ends and minimal hierarchy for the rest of the ends of vehicle involved in this competition to minimize the possible occurrence of another draw.

21. the method of claim 15 where such unsynchronized vehicles obtained from the signal phase adjustment, the startup time for the execution of such powers; and where, in applying this first strategy, if the conformation of the not synchronized EVN allowed to establish hierarchy differences between these vehicles, the less hierarchical is a vehicle within such minor EVN will be the time that vehicle, within a timing preset, in changing its current phase of EPLI address emissions not synchronized from other vehicles, said EVN best hierarchical vehicle is the winner of the competition and do not change its phase to synchronize with the rest; and when the time preset for the application of the first strategy and the application of this second strategy be required for the synchronization of the EVN has elapsed, each of these vehicles not synchronized will adopt a EPLI phase and a hierarchy according to the quadrant in which is the current magnetic direction of the vehicle; where, according to a default distribution of phases in each quadrant will be assigned one of such alternative two-step with the only restriction that quadrant opposite assigned opposite alternative phases; and where to two quadrants opposite default assigned high hierarchy and to the two quadrants opposite remaining are assigned low hierarchy; and where, if the default distribution of phases does not lead to the synchronization of the EVN not synchronized with low hierarchy vehicles will invest its current phase of EPLI to achieve synchronization of the EVN.

22. the method of claim 16, where such extremes of vehicle not synchronized obtained from the signal phase adjustment, the startup time for the execution of such powers; and where, when applying this first strategy, if the conformation of the not synchronized EVN allowed to establish hierarchy differences between these extremes of vehicle, the less hierarchical is one end of the vehicle within the said minor EVN will be while said end of vehicle, within a timing pre-set, in changing its current stage front not synchronized emissions from other ends of vehicle, so the end of better hierarchical vehicle of the EVN is the winner of the competition and not change phase to synchronize with the rest; and where when it has elapsed time preset for the application of the first strategy and if necessary the implementation of such a second strategy for the synchronization of the EVN, each of these extremes of vehicle not synchronized adopt a phase and a hierarchy based on the quadrant in which the direction of magnetic vehicle is or depending on the quadrant in which is the magnetic direction opposite to the previous said either front or rear end respectively; where, according to a default distribution of phases in each quadrant will be assigned one of such alternative two-step with the only restriction that quadrant opposite assigned opposite alternative phases; and where to two quadrants opposite default assigned high hierarchy and to the two quadrants opposite remaining are assigned low hierarchy; and where, if the default distribution of phases does not lead to the synchronization of the EVN, those ends of unsynchronized vehicles that have low hierarchy will invest its current phase to achieve the synchronization of the EVN.

23. the method of claim 1 where the step of synchronization (m2) comprises:

(i) generation in a vehicle, which starts or restarts his scroll night along a road, a pseudo-random phase which will be adopted by such a vehicle as its current phase of EPLI;
(ii) Exchange of information between vehicles of a same not synchronized EVN so, processing this information using a default algorithm, such vehicles coordinate which of them will retain its current phase of EPLI and what or which ones will reset your current stage of EPLI to achieve synchronization of the EVN; where is such information obtained in a vehicle of the EVN by receiving by the front of signals transmitted directionally forward by one or more other vehicles of the EVN; and where the means of communication to be used in the exchange of information include those based on the transmission / receipt of electronic, magnetic, optical, acoustic signals or a combination of them.

**24.** the method of claim 2 where the step of synchronization (m2) comprises:

(i) generation in a vehicle, which starts or restarts his scroll night along a road, a pseudo-random phase which will be adopted by such a vehicle as its current phase of EPLI;

(ii) Exchange of information between vehicles of a same not synchronized EVN so, processing this information using a default algorithm, such vehicles coordinate which of them will retain its current phase of EPLI and what or which ones will reset your current stage of EPLI to achieve synchronization of the EVN; such information will be obtained in a vehicle of the EVN by receiving by the front or back or both ends of the vehicle signals transmitted directionally forward or backward directionally or directionally forward and backward by one or more other vehicles of the EVN; where the reception by a vehicle of such signals by the front, rear or both ends depends on that vehicle is involved in the EVN in front, rear or both ends respectively; and where the transmission by a vehicle of such forward, backward or forward and backward signals depends on that vehicle is involved in the EVN in front, rear or both ends respectively; and where, to enable synchronization even an EVN consisting of vehicles that move all in a sense, every vehicle will have the ability to exchange information with other vehicles at both ends independently as if these ends they were separate entities; and where, so an EVN in the rear end of a vehicle can exchange information in phase with the front end of one or more other vehicles of the EVN to come back, the rear end will back a periodic signal and adjustable phase equivalent to the EPLI of a vehicle in regards to pass phase information to vehicles coming back; where the emission back will be controlled by a signal equivalent to the SCI (SCI for the rear end) and will be a broadcast not visible, at least while said EVN is not synchronized; and where when the EVN is synchronized equivalent to such EPLI signal will be in phase with the EPLI of vehicles of the EVN, which move in the opposite direction; and where this exchange of information will take place using media that include those based on electronic, magnetic, optical, acoustic signal transmission/reception or a combination of them.

**25.** Method of claim 23 where said default algorithm is based on establishing differences between the EVN unsynchronized vehicles to rank them, so that each one of these vehicles, based on its nest, compete with others to prevail in its current phase of EPLI; where the winner of the competition, which will be the vehicle of senior, starts the synchronization of the EVN imposed the inverse of its current phase of EPLI as current phase of EPLI for vehicles of the EVN circulating in opposite direction to the vehicle winner; and where vehicles already synchronized with the winning vehicle imposed at the same time the inverse of its current phase of EPLI as current phase of EPLI for vehicles of the EVN circulating in opposition to such vehicles already synchronized to complete the synchronization of the EVN.

**26.** Method claim 24 where said default algorithm is based on establishing differences between the EVN unsynchronized vehicles to rank in each of such vehicles to those ends of the vehicle involved in the EVN, so each of these ends of vehicle, based on its nest, competing with the other ends of vehicle by make prevail their current phase (i.e. its current phase of EPLI or the current phase of the signal equivalent to such EPLI according to said front end or rear) respectively); where the winning end of this competition, that will be the end of vehicle of senior, starts the synchronization of the EVN imposed the inverse of its current stage as the current phase for the ends of vehicles of the EVN emitted in sense contrary to the winning end; and where the ends already synchronized with the winning end impose in turn the inverse of its current phase as current phase to the ends of the vehicles of the EVN emitted in opposite direction to those already synchronized ends to complete the synchronization of the EVN.

**27.** The method of claim 25 where said default algorithm uses two strategies to rank not synchronized of the EVN vehicles; where in the first of these strategies the obtaining of such hierarchy is determined by the formation of the EVN; where the formation of the EVN will allow between these vehicles there are different hierarchies in the following cases:

1) when the not synchronized EVN has formed from a synchronized EVN to which one or more vehicles not synchronized with this last EVN vehicles; have joined where the vehicles coming from the synchronized EVN they will be that obtained the higher hierarchy so that they retain their current phase of EPLI to synchronize with the rest of the vehicles of the EVN has not synchronized, to prevent the spread of a phase shift between the vehicles coming from the synchronized EVN;

2) where a vehicle is successor in the propagation of a phase change into a non-synchronized EVN formed as a result of the conflict of two synchronized EVNs union; where the successor vehicle will be which get less hierarchy and It will adjust its current phase of EPLI to synchronize with the vehicles that are spreading this phase change;

3) when none of the not synchronized EVN vehicles comes from an EVN always synchronized and when the current phases of EPLI of such vehicles be differentiable; where such vehicles between the lower hierarchy will correspond to the first vehicle that, having initiated the implementation of the default algorithm, receive a pulse of light not synchronized;

4) where one or more vehicles that still have not integrated any synchronized EVN since they started or resumed their night displacement along the way; where such vehicles have lower hierarchy that is involved in said EVN not synchronized any other vehicle of this not synchronized EVN, which is not in this situation; where one or more such vehicles with the lower hierarchy will be that change phase;

and where, when the implementation of this first strategy does not establish hierarchy differences between such unsynchronized vehicles, leading to the synchronization of the EVN, application of the second of these strategies, where these vehicles they will be again nested so that each of these vehicles can solve if you should or not to adjust its current phase of EPLI to carry out the synchronization of the EVN.

28. The method of claim 26 where said default algorithm uses two strategies to rank those ends of unsynchronized vehicles involved in the EVN; where in the first of these strategies the obtaining of such hierarchy It is determined by the conformation of the EVN; where the formation of the EVN will allow these vehicles ends there are different hierarchies in the following cases:

1) when the not synchronized EVN has formed from a synchronized EVN to which one or more vehicles not synchronized with this last EVN vehicles; have joined where the ends of vehicles involved in this synchronized EVN will be that obtained the higher hierarchy so that they retain their current phase (i.e. its current phase of EPLI or the current phase of the signal equivalent to such EPLI, according to said front end or rear respectively) to synchronize with the rest of vehicles of the EVN not synchronized, preventing the spread of a phase shift between the vehicles coming from the synchronized EVN;

2) where a vehicle is successor, through one of its ends, in the propagation of a phase change into a non-synchronized EVN formed as a result of the conflict of two synchronized EVNs union; where said end of the successor vehicle will you get the lower hierarchy and will adjust its current phase to synchronize with the vehicle ends that are spreading this phase change;

3) when in the not synchronized EVN are involved only ends of vehicle that does not come from a synchronized EVN, provided the current phases of these extremes of vehicle are differentiable; where among these ends vehicle the lower hierarchy will correspond to the first end which, having started the implementation of the default algorithm, receive a pulse non-synchronized light or a non-synchronized equivalent to such EPLI signal pulse;

4) where in saying not synchronized EVN involved one or more vehicles that still do not have integrated, since they started or resumed their night shift along the way, no EVN synchronized with vehicles circulate in the opposite direction; where will the ends of the vehicles involved in the not synchronized EVN have lower hierarchy than any other end of vehicle involved in such not synchronized EVN, which is not in this situation; where one or more such ends with the lower hierarchy will be that change phase;

and where, when the implementation of this first strategy does not establish hierarchy differences between such unsynchronized ends of vehicle that will lead to the synchronization of the EVN, application of the second of these strategies where these vehicle ends shall be again nested so that each of these ends of vehicle can solve if you should or not to adjust its current phase to carry out the synchronization of the EVN.

29. The method of claim 27 where to apply this first strategy, if the conformation of the not synchronized EVN allowed to establish hierarchy differences between these vehicles, the more hierarchical is a vehicle within such greater EVN will be time that said vehicle will take, within a preset timing and from the moment in that said vehicle has started the implementation of the default algorithm, to readjust its current phase of EPLI front not synchronized emissions from other vehicles; where the reset phase will take place rebooting in low value to the SCI for the car with the arrival of a pulse of light not synchronized; and where such a vehicle will be disabled to change its phase of EPLI again until it has issued at least once with its new phase; and where when after the time preset for the application of the first strategy without the synchronization of the EVN has been achieved, said EVN unsynchronized vehicles which are not carriers of in-phase (i.e., as vehicles which differ in phase between your SCIs allowing to establish hierarchy differences between them) apply a first algorithm of the second strategy to sync, where the lower hierarchy will correspond to the first vehicle having started the execution of the first of the second strategy, receive a not synchronized pulse of light whose positive flank is made present at the time that the vehicle has its SCI in high value; and where that vehicle with the lowest hierarchy resets its current phase of EPLI rebooting in value under the SCI with the pulse of light received positive flank; and where the first algorithm of this second strategy will lead to the synchronization of the EVN provided there in the EVN unsynchronized vehicles which are in-phase (casual) carriers of EPLI.

30. The method of claim 28 where to apply this first strategy, if the conformation of the not synchronized EVN allowed to establish hierarchy differences between these ends of vehicles, the more hierarchical is one end of the vehicle within the said Greater EVN will be the time the end of vehicle, within a preset timing and starting from the moment in the end of vehicle has started the implementation of the default algorithm, in resetting its current stage address emissions not synchronized from other vehicles; where the reset phase for the front end of a vehicle will be held rebooting in low value to the SCI of such extreme front (i.e. the SCI that controls the vehicle EPLI) with the arrival of a pulse of light not synchronized or with the arrival of a pulse not synchronized equivalent to the EPLI signal; and where the reset phase for the rear end of a vehicle will be held rebooting in low value to the SCI of the back end (i.e. the SCI which controls the emission equivalent to the vehicle EPLI) with the arrival of a pulse of light not synchronized; and where one end of the vehicle that has changed phase will be disabled to change phase until it has issued at least once with its new phase; and where when time has elapsed, the preset for the application of the first strategy without the synchronization of the EVN, the unsynchronized said EVN vehicle ends which are not carriers of a same phase has been achieved (i.e. that) be ends of vehicle showing differences in phase between your SCIs allowing to establish hierarchy differences between them) apply a first algorithm of the second strategy to sync, where the lower hierarchy will correspond to the first end of vehicle which, having started the execution of the first of the second strategy, receive a pulse of light that is not synchronized or a non-synchronized pulse signal equivalent to the EPLI, whose positive flank is made present at the time who said end of vehicle please your SCI high value; and where the end of vehicle with the lower hierarchy will reset its current stage rebooting in value under its IBS flank positive that pulse of light received or such equivalent to the received EPLI signal pulse, as the case may be; and where the first algorithm of this second strategy will lead to the synchronization of the EVN provided there in the EVN unsynchronized vehicle ends that are in-phase (casual) carriers.

31. The method of claim 29 where when time has elapsed, the preset for the application of the first algorithm of such second strategy without that has been achieved that EVN, vehicles timing that EVN that are not synchronized carriers of a same phase of EPLI (i.e. vehicles not synchronized that have not yet submitted phase differences between your SCIs applying said first algorithm of the second strategy) apply a second algorithm of the second strategy for synchronize, where such vehicles shall take an alternative hierarchy whose value will be obtained in pseudo form, except for those vehicles that come from a same EVN synchronized to one or more other vehicles that have already changed phase by applying the first algorithm of such second strategy, in which case such vehicles shall adopt minimum hierarchy to compete with the rest; and where each of these vehicles will compete with each other by running a time waiting whose duration will be in inverse relationship with the hierarchy of each vehicle; and where the first vehicle to complete your waiting time will be higher vehicle and the first to emit a signal that, to put an end to the competition, will be replicated by all vehicles involved in this competition so they all leave their respective waiting times and meet its current phase of EPLI according to the phase of EPLI that emits such a vehicle of greater hierarchy that will be winning the competition vehicle.

32. The method of claim 30 where when time has elapsed, the preset for the application of the first algorithm of such second strategy without that has been achieved that EVN synchronization, unsynchronized vehicle ends of the EVN that are carriers of a same phase (i.e. ends of vehicle not synchronized that have not yet submitted phase differences between your SCIs applying said first algorithm of the second strategy) apply a second algorithm of the second strategy for synchronize, where such extremes of vehicle shall take an alternative hierarchy whose value will be obtained in pseudo form, except in those ends of vehicle coming from a same EVN synchronized to one or more other ends of vehicle that already have changed phase when applying the first algorithm of such second strategy, in which case such those vehicle ends shall adopt minimum hierarchy to compete with the rest; and where each of these ends of vehicle will compete with others by running a time of waiting whose duration will be in inverse relationship with the hierarchy of each end of the vehicle; and where the first end of vehicle to complete your waiting time will be the end of higher vehicle and the first to emit a signal that, to put an end to the competition, will be replicated by all ends of vehicle involved in this competition for all they leave their respective waiting times and meet its current stage according to the phase with which issue the end of vehicle of greater hierarchy that will be the end of the competition winning vehicle.

33. A system to avoid the glare of the driver of a vehicle according to the method of claim 1, comprising:

(a) means the vehicle to generate and control the EPLI understanding:

(a1) means to generate such SCI; where the SCI is a signal periodic, a default frequency and phase adjustable;

(a2) means to decide when a vehicle will make use of such EPLI in replacement of the conventional; continuous lighting

(a3) media for each flashing light pulse emissions; where these media (a3) are coupled to these media (a1) and media (a2) to receive this signal SCI and the order of activation of the EPLI respectively;

(a4) means that, in addition to conventional continuous light to light the way, the vehicle can generate such EPLI; where these media (a4) are coupled to these media (a3) and media (a2) for the emission of a pulse of light or the order of activation of the conventional continuous light respectively;

(b) media that provide information to media (a1) to adjust the phase of the SCI for the car to get the synchronization of the EPLI for the car with the EPLIs of other vehicles that make up next to the vehicle a same EVN;

(c) means to generate and check the protection of the vision of the driver of a vehicle involved in an EVN understanding:

(c1) means to generate a signal (ZPV) that stays active during such intervals of time $T_p$ by bliss to obtain signal ZPV, a protection zone of vision within each space between pulses T corresponding to the $EPLI_{off}$ of the vehicle of such conductor, so that this signal ZPV indicates, within each $T_{off}$, where such protection of vision can be activated; where these media (c1) are coupled to these media (a1) to receive information on the SCI;

(c2) media decision to decide when the protection of the vision of the driver of a vehicle must be activated; where these media (c2) are coupled to these media (c1) and media (a2) to receive this signal ZPV and the order of activation of the EPLI respectively; and where these media (c2) generate a signal ("protect vision") which will activate that vision protection in times where such ZPV signal remains active while the media (a2) are indicating to the vehicle using the EPLI;

(c3) means to prevent or attenuate the arrival in the eyes of the driver of such a vehicle of light from the headlights of another or other vehicles of the EVN that circulate in the opposite direction to the vehicle's driver; where these media (c3) can be operated at regular time intervals defined by the ZPV; and where these media (c3) are coupled to these media (c2) to receive the order to activate that vision protection.

34. A system to avoid the glare of the driver of a vehicle according to the method of claim 3, where this system is comprised of components of the system of claim 33 and media (b) to obtain such a synchronization include:

(b1) transmission external media vehicles to transmit signals to vehicles travelling the same road;

(b2) media mounted in the vehicle to receive and process the signals transmitted by such means of transmittal (b1) to obtain the signal phase adjustment and this signal of phase selection; where the signal phase adjustment provides information to the media) A1) that generate such SCI to reduce possible phases of the SCI to a particular phase and its corresponding inverse; and where this signal of phase selection provides information to media (a1) that generate such SCI to select this particular phase or the corresponding complementary phase of the SCI as appropriate.

35. A system to avoid the glare of the driver of a vehicle according to the method of claim 4, where this system comprises 34 claim system components and where the means of transmission (b1) include:

(bla) one or more sources of transmission omnidirectional to transmit this signal phasing;

(b1b) sources of directional transmission located on one side of the road to transmit a signal to the vehicles so that receipt of this signal such vehicles get this signal of selection of phase;

and where the media (b2) mounted on said vehicle include:

(b2a) media reception to receive this signal phasing transmitted by such one or more sources of Omnidirectional transmission (bla);

(b2b) directional reception media mounted in the vehicle in such a way that when the vehicle passes by the area covered by one of these sources of directional transmission (b1b) only receive the signal transmitted by the source of directional transmission if This signal comes from the left with respect to the direction of movement of the vehicle;

(b2c) directional reception media mounted in the vehicle in such a way that when the vehicle passes by the area covered by one of these sources of directional transmission (b1b) only receive the signal transmitted by the source of directional transmission if This signal comes from the right with respect to the direction of movement of the vehicle;
(b2d) means to please this signal of phase selection in a State shortlisted among two possible States when they are directional reception (b2b) media who have received the signal emitted by a source of transmission (b1b), or to such signal of selection phase in other States possible when they are directional reception (b2c) media who have received the signal emitted by one of these sources of transmission (b1b).

36. A system to avoid the glare of the driver of a vehicle according to the method of claim 4, where this system comprises 34 claim system components and where the means of transmission (b1) include:

(bla) one or more sources of transmission omnidirectional to transmit this signal phasing;
(b1b) sources of directional transmission located on one side of the road to transmit such vehicles a first signal the receipt of said first signal such vehicles to obtain this signal of selection of phase;
(b1c) located sources of directional transmission from the opposite side of the road in which are located these sources of directional transmission (b1b) to be able to transmit such vehicles a second signal so that receipt of this second signal such vehicles can also obtain such signal phase selection;

and where the media (b2) mounted on said vehicle include:

(b2a) media reception to receive this signal phasing transmitted by such one or more sources of Omnidirectional transmission (bla);
(b2b) directional reception media mounted in the vehicle in such a way that when the vehicle passes through the coverage area of a source of directional transmission (b1b) or (b1c) only receive the signal transmitted by the source of directional transmission if This signal comes from the left with respect to the direction of movement of the vehicle;
(b2c) directional reception media mounted in the vehicle in such a way that when the vehicle passes through the coverage area of a source of directional transmission (b1b) or (b1c) only receive the signal transmitted by the source of directional transmission if This signal comes from the right with respect to the direction of movement of the vehicle;
(b2d) means to put this signal of phase selection in a State shortlisted among two possible States when they are directional reception (b2b) media who have received the signal emitted by a source of directional transmission (b1b) or When are the means of directional reception (b2c) who have received the signal emitted by a source of directional transmission (b1c), or put this signal of phase selection in another of those possible States when they are receiving media directional (b2b) who have received the signal emitted by a source of transmission directional (blc) or when they are directional reception (b2c) media who have received the signal emitted by a source of directional transmission (b1b).

37. A system to avoid the glare of the driver of a vehicle according to the method of claim 5, where this system comprises 34 claim system components and where the means of transmission (b1) include:
(bla) sources of directional transmission located on one side of the road to transmit such vehicles that signal phasing;
and where the media (b2) mounted on said vehicle include:

(b2a) directional reception media mounted in the vehicle in such a way that when the vehicle passes by the area covered by one of these sources of directional transmission (bla) only receive the signal transmitted by the transmitting source phase adjustment directional if this signal comes from the left with respect to the direction of movement of the vehicle;
(b2b) directional reception media mounted in the vehicle in such a way that when the vehicle passes by the area covered by one of these sources of directional transmission (bla) only receive the signal transmitted by the transmitting source phase adjustment directional if this signal comes from the right with respect to the direction of movement of the vehicle;
(b2c) means to put this signal of phase selection in a State between two possible States when the means of directional reception (b2a) are those who have received the signal phase adjustment transmitted by one of the sources of transmission (b1a), shortlisted or put this signal of phase selection in other possible States when the means of directional reception (b2b) are those who have received the signal phase adjustment transmitted by one of the sources of transmission (bla).

38. A system to avoid the glare of the driver of a vehicle according to the method of claim 5, where this system comprises 34 claim system components and where the means of transmission (b1) include:

(bla) sources of directional transmission located on one side of the road to transmit such vehicles that signal phasing; where the signal phase adjustment will have a period that is a multiple of odd period of the SCI of vehicle;
(b1b) sources of directional transmission located on the side opposite side of the road in which are located these sources of directional transmission (bla) to transmit this signal phase adjustment to such vehicles but deprecated in 180 ° with respect to the signal transmitted by these sources of directional transmission (bla);

and where the media (b2) mounted on said vehicle include:

(b2a) directional reception media mounted in the vehicle in such a way that when the vehicle will pass by the area covered by one of these sources of directional transmission (bla) or (b1b) only receive the signal transmitted by the source phase adjustment of transmission directional if this signal comes from the left with respect to the direction of movement of the vehicle;
(b2b) directional reception media mounted in the vehicle in such a way that when the vehicle will pass by the area covered by one of these sources of directional transmission (bla) or (b1b) only receive the signal transmitted by the source phase adjustment of transmission directional if this signal comes from the right with respect to the direction of movement of the vehicle;
(b2c) means to put this signal of phase selection in a State shortlisted among two possible States when they are directional reception (b2a) media who have received signal phase adjustment transmitted by one of the sources of transmission directional (bla) or (b1b), or put this signal of phase selection in other possible States when they are directional reception (b2b) media who have received the signal phasing transmitted by one of these sources of directional transmission (bla) or (b1b).

**39.** The system of claim 33, 34, 35, 36, 37 or 38 where media (a1) to generate such a signal SCI include:

(ala) an oscillator to generate a frequency signal stable to be used as a frequency signal base from which will be obtained that SCI; where the period of the signal's base frequency must be less than or equal to the maximum allowable for the adjustment of phase error d e the SCI;
(a1b) a frequency divider medium attached to the oscillator (ala) for a plurality of signals of different frequencies submultiples of the frequency of the generated signal square wave by the oscillator (ala); where the signal phase adjustment of input to said Middle frequency divider so that the Middle divider of frequency is reset whenever the signal phase adjustment is activated, placing this plurality of signals on value low; and where a sign belonging to this plurality of signals of the same frequency that the SCI, and the inverse of this signal, will be used to generate such SCI; and where other signs of this plurality of signals of frequencies higher than the frequency of the SCI can be used for certain time zones within each period T of the SCI;
(a1c) means of selection, that enters the signal phase selection, to select the signal of the same frequency as the SCI, or the inverse of this signal, such as the SCI of the vehicle depending on the State of this signal of phase selection.

**40.** The system of claim 33, 34, 35, 36, 37, 38 or 39 where media (a2) include:

(a2a) media analyze the characteristics of the light received by the front of the vehicle;
(a2b) means to decide, depending on the characteristics of the light received by the front of the vehicle, when activated the EPLI said vehicle or conventional continuous light for the car.

**41.** The system of claim 40 where these media (a2a) include:

(a2a1) media for detect the light received by the front of the vehicle and analyse the intensity and changes in the intensity of the light received;
(a2a2) means for generating a signal that remains active to delimit an area of time (ZLCR) within each period T of the SCI of the vehicle; where that area of time ZLCR will have, within the period T, a location and extension that may be considered at the pulses of light received by the front of the vehicle and whose arrival is detected within this time zone ZLCR as belonging to an EPLI synchronized with the SCI of the vehicle (i.e., belonging to an EPLI synchronized with the said vehicle EPLI); where these media (a2a2) are coupled to these media (a1) to receive information on the SCI;
(a2a3) means to determine if light detected by means of detection (a2a1) is flashing light synchronized with the SCI of said vehicle;

and where these media (a2a1) include:

(a2a1a) means of sensing light to detect the light received by the front of the vehicle;

(a2a1b) media, coupled with such means of sensing light (a2ala), to generate a detection signal light ("UC light detection") that will be activated when the light received by such means of sensing light (a2a1a) exceeds a certain intensity; where such intensity corresponds to the minimum light intensity continuous received by the front of the vehicle that will make such a vehicle to enter an EVN;

(a2a1c) media, coupled with such means of sensing light (a2ala), to generate a detection signal light ("light UI detection") that will be activated when the light received by such means of light-sensing (a2a1a) present in a very short time a change of intensity more than a default such that allows to assume that the vehicle has received by the front a pulse of light with one intensity greater than the default; where the default value corresponds to the minimum intensity of flashing light which will cause the vehicle to enter an EVN;

and where these media (a2a3) include:

means to carry out a temporal analysis of signal generated by these means (a2alc) "detection of light UI" in relation to the ZLCR signal, generated by such means (a2a2), to generate a signal detection of light ("synchronized light detection") to indicate if the pulses of light received by the front of the vehicle correspond to an EPLI synchronized with the SCI of the vehicle; where the temporal analysis is based on verified during a predetermined time interval if this signal "light UI detection" is giving positive sides within the time zone bounded by this signal ZLCR with such regularity that allows to assume that These pulses of light received correspond to the EPLI of a vehicle.

42. The system of claim 41 where decision (a2b) media include means to activate a trigger signal flashing light for the car ("activate flashing light") or a conventional continuous light for the car trigger signal (") enable continuous light") depending on the State of these signals"synchronized light detection"and"light UC detection"; where will this signal "activate flashing light" remain active while the active signal "synchronized light detection"; where this signal "activate continuous light" will remain active as long as these signals "synchronized light detection" and "detection of light UC" remain both inactive; and where, in such a vehicle, signal "activate flashing light" will be activated only in transient form (i.e. during brief intervals of predefined duration time) while the light received by the front of the vehicle is turning to the signal "light detection UC"but is not activating this signal"synchronized light detection".

43. The system of claim 41 where decision (a2b) media include means to activate a trigger signal flashing light for the car ("activate flashing light") or a conventional continuous light for the car trigger signal (") enable continuous light") depending on the State of these signals"synchronized light detection"and"light UC detection"; where this signal "activate flashing light" will remain active while active this signal this signal or "synchronized light sensing" "UC light detection"; and where this signal "activate continuous light" will remain active while those signals "synchronized light detection" and "detection of light UC" remain both inactive.

44. The system of claim 33, 34, 35, 36, 37, 38, 39, 40, 41, 42 or 43 where the media (a3) activate a signal to sort the emission of a pulse of light ("emit light pulse") whenever the SCI generated by such means (a1) is activated while the media (a2) are indic ando to the vehicle that makes use of such EPLI.

45. A system to avoid the glare of the driver of a vehicle according to the method of claim 9 where such a system comprised of components of any system of complaints 34, 35, 36, 37, 38, 39, 40, 41, 42, 43 or 44; where the media (b) to permit to obtain such a synchronization include in addition:

(b3) media in the vehicle for the validation of the phase of the SCI of said vehicle, where this phase will be validated while it can be assumed that the vehicle maintains the phase of EPLI pre-allocated your sense of movement with respect to the road;

(b4) media attached to media (b3) to determine, in the particular case that such media (b3) are not validating the SCI phase, if the vehicle is involved in a non-synchronized EVN so so these media (b4) cause the phase reset SCI said providing information to media (a1) to make that said vehicle be taken to the EPLI phase opposite phase contained in the synchronization signal received by the front from one or more other vehicles of the not synchronized EVN.

46. 45 claim system where the media (b3) to validate the phase of such SCI include:

(b3a) media to designated as valid to the phase of the SCI on the basis that the vehicle is getting media (b1) the signal phase adjustment (i.e. validation of the SCI phase adjustment); where these media (b3a) will no longer noted as valid at the current stage of the SCI if a default time period elapses without this vehicle get media (b1) the signal phase adjustment;

(b3b) media to designated as valid to the phase of the SCI while you can assume is that the vehicle has not invested their sense of movement on the road (i.e. validation of phase selection);

and where the media (b4), coupled with media (b3), include:

(b4a) media, coupled with media (b3a), to determine, in the particular case that such media (b3a) are not validating the phase of the SCI, if such a vehicle has been involved in a non-synchronized EVN, so in that case such media (b4a), acting on such phasing signal and the signal of phase selection, provide information to the media (a1) to make the SCI to adopt the opposite phase to the phase contained in such sync signal received by the front from one or more other vehicles of the EVN not Synchron hoisting;

(b4b) media, coupled with media (b3b), to determine, in the particular case that such media (b3b) are not validating the phase of the SCI, if such a vehicle has been involved in a particular type of EVN not synchronized in which the phase of the SCI match within a tolerance default, with the phase of EPLI contained in the signal received by the front timing so that, in that case, such media (b4b), reversing the signal of phase selection, provide information to the media (a1) to make such a vehicle to reverse the phase of its SCI.

47. 46 claim system where the media component (b4a) to determine if the vehicle has been involved in a non-synchronized EVN includes:

(b4a1) means to perform a temporary analysis of the signal "light UI detection", generated by media (a2a1c), in relation to the ZLCR signal, generated by such means (a2a2), to indicate that the vehicle has been involved in an EVN not synchronized when the pulses of light received by the front of the vehicle correspond to an EPLI is not synchronized with the IBS of such a vehicle; where the temporal analysis is based on verified during a predetermined time interval if this signal "light UI detection" is giving flanks positive out of time bounded by this signal ZLCR with such regularity that allows to assume that These light pulses correspond to the vehicle EPLI;

and where the media component (b4b) that determine if the vehicle has been involved in this particular type of EVN not synchronized includes:

(b4b1) means for generating a signal that remains active to delimit an area of time (ZCR) within each time period T of the SCI of the vehicle; where the ZCR time zone will have, within the period T, a location and extension that may be considered to the pulses of light received by the front of the vehicle and detected within this time zone, as belonging to an EPLI which is in phase with the SCI of the vehicle (i.e., belonging to an EPLI which is in phase with the said vehicle EPLI); and where these media (b4b1) are attached to the media (a1) to receive information on the SCI;

(b4b2) means to perform a temporary analysis of the signal "light UI detection" generated by such means (a2a1c) in relation to the ZCR signal generated by these means (b4b1) to indicate that the vehicle has been involved in this particular type of EVN not synchronized if the pulses of light received by the front of the vehicle correspond to an EPLI not synchronized in phase with the SCI of the vehicle; where the temporal analysis is based on verified during a predetermined time interval if this signal "light UI detection" is giving positive sides within the time zone bounded by this signal ZCR with such regularity that allows to assume that These pulses of light corresponding to the EPLI of a vehicle;

and where such synchronization signal that a vehicle receives from one or more other vehicles of the EVN is the own EPLI of such other or other vehicles of the EVN; where phase contained in such sync signal, which is the phase of the EPLI, can be obtained from the signal "light UI detection" generated by these means (a2alc).

48. A system according to the claims of 46 or 47 where these media (b3b) include:
(b3b1) means for sensing the speed of the vehicle to indicate that such a vehicle could have invested its sense of movement on the road when the speed falls below a set minimum value.

49. A system to avoid the glare of the driver of a vehicle according to the method of any of claims 11, 13, 15, 17,19 or 21, where this system is comprised of components of the system of claim 33 and media (b) to obtain such synchronization include:

(b1) one or more sources of transmission external vehicles to transmit this signal phase adjustment to vehicles travelling the same road;

(b2) media reception mounted on the vehicle to get media (b1) the signal phasing; where the signal phase adjustment is provided to the media (a1) that generate such SCI, to reduce possible phases of the SCI to a particular phase and its cor respondent capacitors;

(b3) transmit/receive directional media mounted in the vehicle in such a way that the vehicle can perform by the front that Exchange of information with one or more other vehicles of the EVN not synchronized;

(b4) media mounted in the vehicle to update, based on the information that the vehicle exchanges with one or more other vehicles of the EVN, the value of a signal of selection of phase to make during the synchronization of the EVN media (a1) to select as a stage for the SCI to such particular phase or its corresponding inverse based on the updated value of this signal of phase selection.

50. 49 claim system where the media (a1) to generate such SCI comprise the same media (ala), (a1b) and (a1c) specified for the system of claim 39.

51. The system of 49 or 50 claim where media (a2) comprise the same media (a2a) and (a2b) specified for the system of claim 40; and where the media (a2a) include the same media (a2a1), (a2a2) and (a2a3) specified for the system of claim 41; and where these media (a2a1) include the same media (a2ala) (a2a1b) (a2alc) also specified for the system of claim 41.

52. The system of claim 51 where media (a2b) include the same media described in the claim 42.

53. The system of claim 51 where media (a2b) include the same means described in claim 43.

54. 49, 50, 51, 52 or 53 claim system where media (a3) activate a signal to sort the emission of a pulse of light ("emit light pulse") whenever the SCI generated by these means (a1) is activated while the media (a2) are indicating to the vehicle that hag use of EPLI said.

55. The system of claim 49, 50, 51, 52, 53 or 54 where the media (c2) have also the function to produce a transient (i.e. in the order of some periods T) extension of the length of time this signal "protect vision", to provide for the driver of the vehicle, during the synchronization of an EVN, protection of vision extended beyond the interval established by this signal ZPV; where is such temporary extension triggered with the detection of one or more pulses of light not synchronized that exceed a default intensity (i.e. before the detection of one or more pulses of light that exceed the intensity and be detected outside the ZLCR defined in the claim 41) to start a period of protection of extended vision whose duration can be prolonged, with the detection of new light pulses are not synchronized, provided the length does not exceed a maximum time pre-established, preferably, in the order of a few tenths of a second; and where this vision extended protection period will be followed by another period of major extension in which protection of vision will be restricted only to such ZPV, to minimize the perception by the conductor of the period of protection extended vision.

56. The system of claim 49, 50, 51, 52, 53, 54 or 55 where media (b) to obtain such a synchronization include in addition:

(b5) media mounted in the vehicle to validate the phase of such a vehicle on the basis that the SCI phase is being periodically reset through the activation of signal phasing provided by media (b2) to the media (a1); where media (b5) they will no longer draw the phase of the SCI as valid if the phasing signal ceases to be activated from the media (b2) by a time interval whose duration exceeds a value default;

(b6) media mounted in the vehicle to correct the phase of the SCI in the particular case that the vehicle is involved in a non-synchronized EVN regardless of the phase of the SCI indicated as valid media (b5); where the correction phase will be made by manipulating, based on the information that you exchange the vehicle with one or more other vehicles of the EVN, such phasing signal and the signal phase selection, to make this SCI adopt phase opposite to the stage that have this EV vehicles N coming in the opposite direction.

57. A system such as the claimed in any of the claims 49, 50, 51, 52, 53, 54, 55 and 56 where the media (a) also function as corresponding to the media (b3) to implement the exchange of information between vehicles through manipulation of the light pulses such vehicles exchanged during a non-synchronized EVN; where the media (a3) perform the function to handle the vehicle EPLI, during the not synchronized EVN, so such EPLI is carrier of information to pass on to other vehicles of the EVN not synchronized; and where the pulses of light carriers of information transmitted from other vehicles of the not synchronized EVN are detected by these means (a2a1).

58. The system of claim 57 where, to perform this function to manipulate the vehicle EPLI said media (a3) include in addition:

(a3a) means of introducing, under certain circumstances during the not synchronized EVN, a certain landslide of phase in the EPLI (preferably of 90 °) with respect to the phase of the SCI for the car; where the phase shift allows to a receiver that EPLI vehicle recognize as the redshift of phase information and react to such information according to the situation in which is the receiving vehicle within that EVN (i.e. for example, in the function that the receiver vehicle have their SCI in phase or complementary with the SCI of the transmitter vehicle of such information; on the basis that the vehicle receiver comes or not of a synchronized EVN; on the basis that the vehicle receiver whether or not successor in the propagation of a phase change; etc);

(a3b) means to relocate the next pulse of light emission, to be able to emit a pulse of light isolated at a given time; where the emission of such isolated light pulse can be used by the vehicle to announce one event to another or other vehicles within the EVN (i.e. for example, to announce to other vehicles that completed the exchange of information that precedes the synchronization of the EVN).

59. A system to avoid the glare of the driver of a vehicle according to the method of any of the claims 23, 25, 27, 29 and 31, where this system is comprised of components of the system of claim 33 and media (b) to obtain such synchronization include:

(b1) transmit/receive directional media mounted in the vehicle in such a way that the vehicle can perform by the front that Exchange of information with one or more other vehicles of the EVN not synchronized;
(b2) media mounted in the vehicle to generate, based on the information that the vehicle exchanges with one or more other vehicles of the EVN, signals "phase adjustment" and "selection stage", so that the media (a1) adjust the phase of the SCI of such a vehicle for synchronize the SCI of the vehicle with the rest of the vehicles of the EVN.

60. Claim 59 system where the media (a1) to generate such SCI comprise the same media (ala), (a1b) and (ale) specified for the system of claim 39.

61. The claim 59 or 60 system where media (a2) comprise the same media (a2a) and (a2b) specified for the system of claim 40; and where these media (a2a) include the same media (a2a1), (a2a2) and (a2a3) specified for the system of claim 41; and where these media (a2a1) include the same media (a2a1a) (a2alb) (a2a1c) also specified for the system of claim 41.

62. Claim 61 system where the media (a2b) include the same media described in the claim 42.

63. Claim 61 system where the media (a2b) include the same means described in claim 43.

64. 59, 60, 61, 62 or 63 claim system where media (a3) activate a signal to sort the emission of a pulse of light ("emit light pulse") whenever the SCI generated by these means (a1) is activated while the media (a2) are indicating to the vehicle that hag use of EPLI said.

65. The system of claim 59, 60, 61, 62, 63 or 64 where the media (c2) have also the function to produce a transient (i.e. in the order of some periods T) extension of the length of time this signal "protect vision", to provide for the driver of the vehicle, during the synchronization of an EVN, protection of vision extended beyond the interval established by this signal ZPV; where is such temporary extension triggered with the detection of one or more pulses of light not synchronized that exceed a default intensity (i.e. before the detection of one or more pulses of light that exceed the intensity and be detected outside the ZLCR defined in the claim 41) to start a period of protection of extended vision whose duration can be prolonged, with the detection of new light pulses are not synchronized, provided the length does not exceed a maximum time pre-established, preferably, in the order of a few tenths of a second; and where this vision extended protection period will be followed by another period of major extension in which protection of vision will be restricted only to such ZPV, to minimize the perception by the conductor of the period of protection extended vision.

66. A system such as the claimed in any of the claims 59, 60, 61, 62, 63, 64 and 65 where the media (a) also function as corresponding to the media (b3) to implement the exchange of information between vehicles through the manipulation of the light pulses such vehicles exchanged during a non-synchronized EVN; where the media (a3) perform the function to handle the vehicle EPLI, during the not synchronized EVN, so such EPLI is carrier of information to pass on to other vehicles of the EVN not synchronized; and where the pulses of light carriers of information transmitted from other vehicles of the not synchronized EVN are detected by these means (a2a1).

67. The system of claim 66 where, to perform this function to manipulate the vehicle EPLI said media (a3) include in addition:

(a3a) means to introduce, in certain circumstances during the not synchronized EVN, a certain landslide of phase in the EPLI with respect to the phase of the SCI of said vehicle; where the phase shift allows a receiver that EPLI vehicle recognize as the redshift of phase information and react to such information according to the situation in which is the receiving vehicle within that EVN (i.e. for example, in the function that the receiver vehicle whether or not successor in the propagation of a) change of phase);

(a3b) means to relocate the next pulse of light emission, to be able to emit a pulse of light isolated at a given time; where the emission of the light pulse can be used by the vehicle to announce one event to another or other vehicles within the EVN (i.e. for example, to announce to other vehicles that completed the exchange of information that precedes the synchronization of the EVN).

68. "A system to avoid the glare of the driver of a vehicle according to the method of claim 2, where the front and rear of a vehicle, ends by participating in an EVN shall be treated as separate entities called"Front subsystem" and "Rear subsystem"respectively; where the front "subsystem" comprised of 33 claim system; and where the front subsystem will be able to detect both visible light from the headlights of other vehicles and the type of light used by vehicles to interact back (rear EPLI) to be involved from behind in an EVN; and where said "Rear subsystem", which is a simplification and adaptation of the system of claim 33, covers:

(a') means the vehicle to generate and control the rear EPLI understanding:

(a'1) means for generating an SCI back; where the rear SCI is a signal periodic, a default frequency and phase adjustable;

(a'2) means to decide when a vehicle will make use of the rear; EPLI

(a'3) media for each flashing light pulse emissions; where these media (a'3) are coupled to these media (a'1) and such media (a'2) to receive this signal back SCI and the order of activation of the rear EPLI respectively;

(a'4) means that the vehicle can generate said rear EPLI; where such means (to 4) are coupled to these media (a'3) and such media (a'2) to receive the order of issuance of each pulse of light;

(b') media that provide information to media (a'1), to adjust the phase of the SCI back for the car to get the timing of the EPLI rear of the vehicle with the EPLIs of other vehicles that integrate with the vehicle a same EVN;

(c') means to generate and check the protection of rear vision of the driver of a vehicle involved from behind in an EVN understanding:

(c'1) means for generating a signal (the rear subsystem ZPV) to keep active during such intervals of time "$T_{rp}$" to obtain, through such signal ZPV rear subsystem, a protected area of rear vision within each space between pulses $T_{off}$ corresponding to the EPLI rear vehicle of the driver, so that this signal ZPV rear subsystem indicates, within the $T_{off}$, where such protection of rear vision can be activated; and where these media (c'1) are coupled to these media (a'1) to receive information concerning the rear SCI;

(c'2) media decision to decide when the protection of rear vision of the driver of a vehicle must be activated; where such means (c'2) are coupled to such means (c'1) and such media (a'2) to receive this signal ZPV rear subsystem and the order of activation of the rear EPLI respectively; and where these media (c'2) generate a signal ("protect rear vision") which will activate this protection of rear vision in times where such rear subsystem ZPV signal remains active while media (a'2) are indicating to the vehicle using the EPLI rear;

(c'3) means to prevent or attenuate the arrival in the eyes of the driver of such a vehicle of light from the headlights of another or other vehicles of the EVN circulating behind the vehicle from the driver; where such means (c'3) may be operated to regular time intervals defined by the rear subsystem ZPV; and where these media (c'3) are coupled to such means (c'2) to receive the order to activate that protection of rear vision.

69. A system to avoid the glare of the driver of a vehicle where front and rear ends of the vehicle, to participate in an EVN, will be treated as separate entities called "Subsystem front" and "Rear subsystem" respectively; where the "front subsystem" will be able to detect both visible light from the headlights of other vehicles and the type of light used by vehicles to interact back (rear EPLI) to be involved from behind in an EVN; where the front subsystem includes one systems claims 34 67; and where the rear "subsystem" is a simplification and adaptation of the front subsystem that includes:

(a') means the vehicle to generate and control the rear EPLI understanding:

(a'1) means for generating an SCI back; where the rear SCI is a signal periodic, a default frequency and phase adjustable;

(a'2) means to decide when a vehicle will make use of the rear; EPLI

(a'3) media for each flashing light pulse emissions; where these media (a'3) are coupled to these media (a'1) and such media (a'2) to receive this signal back SCI and the order of activation of the rear EPLI respectively;

(a'4) means that the vehicle can generate said rear EPLI; where such means (to 4) are coupled to these media (a'3) and such media (a'2) to receive the order of issuance of each pulse of light;

(b') media that provide information to media (a'1), to adjust the phase of the SCI back for the car to get the timing of the EPLI rear of the vehicle with the EPLIs of other vehicles that integrate with the vehicle a same EVN;

(c') means to generate and check the protection of rear vision of the driver of a vehicle involved in an EVN behind understanding:

(c'1) means for generating a signal (the rear subsystem ZPV) keep you active during such intervals of time $T_{rp}$ to obtain, through such signal ZPV rear subsystem, a protected area of rear vision within each space between Pulse $T_{off}$ corresponding to the rear EPLI of driver vehicle, so that this signal ZPV rear subsystem indicates, within the $T_{off}$, where such protection of rear vision can be activated; where such means (c'1) are coupled to these media (a'1) to receive information concerning the rear SCI;

(c'2) media decision to decide when the protection of rear vision of the driver of a vehicle must be activated; where such means (c'2) are coupled to such means (c'1) and such media (a'2) to receive this signal ZPV rear subsystem and the order of activation of the rear EPLI respectively; and where these media (c'2) generate a signal ("protect rear vision") which will activate this protection of rear vision in times where such rear subsystem ZPV signal remains active while media (a'2) are indicating to the vehicle using the EPLI rear;

(c'3) means to prevent or attenuate the arrival in the eyes of the driver of such a vehicle of light from the headlights of another or other vehicles of the EVN circulating behind the vehicle from the driver; where such means (c'3) may be operated to regular time intervals defined by the rear subsystem ZPV; and where these media (c'3) are coupled to such means (c'2) to receive the order to activate the protection of rear vision;

and where the full system will respond to one of the methods of the claims 6, 7, 8, 10, 12, 14, 16, 18, 20, 22, 24, 26, 28, 30 or 32 accordingly.

70. A "hybrid" system to avoid the glare of the driver of a vehicle able to be configured, either manually or by autoconfigurado, according to the infrastructure that provides the way to respond to any of the 10, 20, 22 or 32 methods or their more simple versions.

71. The system of any claims 68, 69 or 70 where the vehicle has means to emit pulses of visible light, backwards, using frequency and the phase of the SCI back, in order to cooperate with vehicles travelling in the opposite direction extending the area of the path that these vehicles can illuminate; where such pulses of visible light backward emission will be used when:

I. the vehicle that will emit pulses of light visible to the rear have opposite to other vehicles already synchronized approaching in the opposite direction, so that there are drivers who may be benefited with this additional; lightingII. vehicle that will emit pulses of visible light backwards without behind him on the road to unsynchronized vehicles whose drivers may be prejudiced by the light emitted backwards by the vehicle front.

FIGURE 1

FIGURE 2

FIGURE 3

**FIGURE 4**

**FIGURE 5**

**A, C, and E:** Intermittent light pulse emissions of vehicles V1, V2, and V3, respectively.

**B, D, and F:** Vision protection corresponding to vehicles V1, V2, and V3, respectively.

## FIGURE 6

rear vision protection
time Trp

Rear vision protection
of vehicle V1

Ton    Toff

Intermittent light pulse
emission of vehicle V2

**FIG. 7B**

V1

V2

**FIG. 7A**

**A, C, and F:** Intermittent light pulse emissions of vehicles V1, V2, and V3, respectively.

**B, D, and G:** Vision protection corresponding to vehicles V1, V2, and V3, respectively.

**E:** Rear vision protection corresponding to vehicle V2

## FIGURE 8

FIG. 9A

FIG. 9B

180°

FIG. 9C

**FIGURE 9A-B-C**

"Route
signal A"

V1

"Route signal B"

V2

**FIGURE 10**

FIGURES 11 A - D

FIGURES 12 A - C

FIG. 13A

FIG. 13B

FIG. 13C

FIG. 13D

**FIG. 13E**

**FIG. 13F**

**FIG. 13G**

**FIG. 13H**

phase distribution A          phase distribution B

**FIGURE 14**

**FIGURE 15**

C1

D1 R1

**FIGURE 16**

Waveform of the
output of light
sensing module 1
(when light
sensor 2
is receiving
intermittent light
and continuous
light
simultaneously)

T

> Vit + h

DC
component

Waveform of the
output of filter 7

Waveform of the
output of
comparator 5

Vdc

**FIGURE 17**

**FIGURE 18**

**A and C**: Waveforms of the intermittency control signal of vehicles V1 and V2, respectively.

**B and D**: Waveforms of the intermittent light pulse emission of vehicles V1 and V2, respectively.

**FIGURE 19**

**FIGURE 20**

**FIGURE 21**

**FIGURE 22**

**FIGURES 23A - G**

| Signal taken from counter/divider 11 (of n stages) as a time base | Number of intervals of time in one period T | Outputs to be used in the time measurement |
|---|---|---|
| Clock | $2^{n+1}$ | Qn, Qn-1, ... ,Q2, Q1, Q0 |
| Q0 | $2^{n}$ | Qn, Qn-1, ... ,Q2, Q1 |
| Q1 | $2^{n-1}$ | Qn, Qn-1, ... ,Q2 |
| . . . . | . . . . | . . . . |
| Qi | $2^{n-i-1}$ | Qn, Qn-1, ... ,Qi+1 |

## FIGURE 24

| Signal taken from counter/divider 11 (of n stages) as a time base | Number of intervals of time in one period T | Outputs to be used in the time measurement |
|---|---|---|
| Clock | $2^{n+1}$ | Qn, Qn-1, ... ,Q2, Q1, Q0 |
| Q0 | $2^{n}$ | Qn, Qn-1, ... ,Q2, Q1 |
| Q1 | $2^{n-1}$ | Qn, Qn-1, ... ,Q2 |
| . . . . | . . . . | . . . . |
| Qi | $2^{n-i-1}$ | SCI, Qn-1, ... ,Qi+1 |

## FIGURE 25

FIGURE 26

FIGURE 27

**FIGURE 28**

**FIGURE 29**

**FIGURE 30**

**FIGURE 31**

**FIGURE 32**

**FIGURE 33**

FIGURE 34

EP 3 753 766 A1

**FIGURE 35**

**FIGURE 36**

FIGURE 37

POWER UP RESET

69

SYNCHRONIZED LIGHT DETECTION = 0

EXTEND TIME t1 = 0

70

RESET AND STOP COUNTER II

RESET AND POWER UP COUNTER I

71

DOES STATE OF COUNTER I CORRESPOND TO TIME t1?

YES

NO

72

DOES STATE OF COUNTER II CORRESPOND TO TIME t2?

YES

NO

73

EXTEND TIME t1 = 1

SYNCHRONIZED LIGHT DETECTION = 1

74

75

NO

RCFZ = 1

YES

76

NO

IT LIGHT DETECTION

YES

77

ENABLE COUNTING COUNTER II

**FIGURE 38**

**FIGURE 39**

FIGURE 40

FIGURE 41

**FIGURE 42**

**FIGURE 43**

# FIGURE 44

EP 3 753 766 A1

FIGURE 45

**FIGURE 46**

# FIGURE 47

# FIGURE 48

POWER UP RESET

EMIT LIGHT PULSE = 0
(Flip - Flop)                    174

RESET COUNTER IV                 175

ACTIVATE
INTERMITTENT          NO
LIGHT = 1?                       176

YES                              177

ICS = 1?            NO

YES

EMIT LIGHT PULSE = 1
(Flip - Flop)                    178

POWER UP COUNTER IV              179

IS STATE OF
COUNTER IV EQUAL TO    NO
LIGHT PULSE
WIDTH?                           180

YES

## FIGURE 49

VALUE CORRESPONDING TO
LIGHT PULSE WIDTH

LOGIC
COMPARATOR          184

Qi

181

POWER UP
RESET

Clock
COUNTER IV
Reset

183

R

ICS          C          Q

EMIT LIGHT PULSE

182

ACTIVATE
INTERMITTENT LIGHT    D

S

## FIGURE 50

**FIGURE 51**

**FIGURE 52**

FIGURE 53

FIGURE 54

**FIGURE 55**

FIGURE 56

**FIGURE 57**

**FIGURE 58**

ACTIVATE INTERMITTENT LIGHT

NON-SYNCHRONIZED INTERMITTENT LIGHT DETECTION = 0

RESET AND STOP COUNTER XII
(RESET INPUT = 1)

EXTEND T11 = 0

258

ACTIVATE
INTERMITTENT
LIGHT = 1?

NO

259

YES

RESET AND POWER UP COUNTER X
(RESET INPUT =⎍)

260

261

DOES STATE
OF COUNTER XI
CORRESPOND
TO TIME $t_{11}$?

YES

NO

262

DOES STATE
OF COUNTER XII
CORRESPOND
TO TIME $t_{12}$?

YES

NO

268

NON-SYNCHRONIZED INTERMITTENT
LIGHT DETECTION = 1

EXTEND T11 = 1

263

IT LIGHT
DETECTION

NO

YES

264

RCZ = 1?

YES

265

SRCZ = 1?

NO

NO

YES

266

ENABLE COUNTER XII TO COUNT
(RESET INPUT = 0)

267

NON-SYNCHRONIZED LIGHT PULSE DETECTION = 1
(SMALL RETRIGGERABLE 2T OR 3T TIMER)

# FIGURE 59

**FIGURE 60**

**FIGURE 61**

**FIGURE 62**

**FIGURE 63**

POWER UP RESET

318

BEGINNER = 1

319

MINIMUM
OR ZERO SPEED = 1?

YES

NO

320

SYNCHRONIZED
LIGHT DETECTION = 1?

NO

YES

321

BEGINNER = 0

FIGURE 64

**FIGURE 65A**
**FIRST PART**

**FIGURE 65B**
**SECOND PART**

**FIGURE 65C**
THIRD PART

NON-SYNCHRONIZED INTERMITTENT LIGHT DETECTION

RELOCATING NEXT PULSE EMISSION = 0
INVERT PHASE SELECTION = 0
ENABLE SHIFTED EMISSION = 0
RENEW INVERSE SCORE = 0
SET INVERSE SCORE TO MINIMUM = 0
SET INVERSE SCORE TO MAXIMUM = 0

—322

COMES FROM:
FIGURE 65A,
SECOND PART

D → 1

322A

NON-SYNCHRONIZED
INTERMITTENT LIGHT
DETECTION = 0?
YES

NO

323

PROPAGATING
VEHICLE
DETECTION = 1?
YES

NO

351

ENABLE SHIFTED
EMISSION = 0

324

BEGINNER = 1?
YES

NO

356

ENABLE SHIFTED EMISSION = 1

1 → NO

325

RENEW INVERSE
SCORE = 1

352

IT LIGHT
DETECTION
NO

357

NO    ICS

YES

326

START
SIGNAL
NO

YES

353

SRCZ = 1?
YES

358    YES

SET INVERSE SCORE TO MINIMUM = 1

327

RENEW INVERSE
SCORE = 0

RESET AND POWER UP
COUNTER XIII

NO

354

DOES STATE
OF COUNTER XIII
CORRESPOND
TO TIME t13?
NO

INVERT PHASE SELECTION = 1
MICROWAIT
INVERT PHASE SELECTION = 0
SET INVERSE SCORE TO MINIMUM = 0

359

328

355

INVERT PHASE
SELECTION = 1

MICROWAIT

INVERT PHASE
SELECTION = 0

YES

E

COMES FROM:
FIGURE 65A,
THIRD PART

SYNCHRONIZED
LIGHT DETECTION = 1?
NO

329    YES

ENABLE SHIFTED EMISSION = 1

A

CONTINUES IN:
FIGURE 65A,
SECOND PART

B

CONTINUES IN:
FIGURE 65A,
SECOND PART

**FIGURE 65D**
**FIRST PART**

A — COMES FROM: FIGURE 65A, FIRST PART

COMES FROM: FIGURE 65A, FIRST PART — B

330 — DOES STATE OF COUNTER XIII CORRESPOND TO TIME t13?

NO

YES

first strategy

second strategy

331 — ENABLE SHIFTED EMISSION = 1

332A — RESET COUNTER XIV

333A — ICS = 1?

YES

NO

334A — POWER UP COUNTER XIV

334B — STOP COUNTER XIV

335 — DOES STATE OF COUNTER XIV CORRESPOND TO THE VALUE OF THE INVERSE SCORE?

YES — 337 — RCFZ = 1?

YES — 336 — RCZ = 1?

NO

NO

YES

NO

338 — IT LIGHT DETECTION

NO

YES

339 — RELOCATING NEXT PULSE EMISSION = 1 / MICROWAIT / RELOCATING NEXT PULSE EMISSION = 0

349 — RELOCATING NEXT PULSE EMISSION = 1 / MICROWAIT / RELOCATING NEXT PULSE EMISSION = 0

340 — RESET AND POWER UP COUNTER XIII

350 — ENABLE SHIFTED EMISSION = 1    1

C — CONTINUES IN: FIGURE 65, THIRD PART

D — CONTINUES IN: FIGURE 65, FIRST PART

**FIGURE 65E**
SECOND PART

163

COMES FROM:
FIGURE 65A,
FIRST PART

C

341 — DOES STATE OF COUNTER XIII CORRESPOND TO TIME t13a?

YES

NO →

342 — IT LIGHT DETECTION

NO

YES

343 — SRCZ = 1?

NO →

347 — SRCFZ = 1?

NO

YES

YES

344 —

| INVERT PHASE SELECTION = 1 |
| MICROWAIT |
| INVERT PHASE SELECTION = 0 |

345 — ENABLE SHIFTED EMISSION = 1?

NO →

345A — SYNCHRONIZED LIGHT DETECTION = 1?

NO

YES

YES

348 —

| SET INVERSE SCORE TO MAXIMUM = 1 |
| MICROWAIT |
| SET INVERSE SCORE TO MAXIMUM = 0 |

345B —

| TRIGGER EXTENDED PROTECTION TMRS = 1 |
| MICROWAIT |
| TRIGGER EXTENDED PROTECTION TMRS = 0 |

CONTINUES IN:
FIGURE 65A,
FIRST PART

E

346 —

| ENABLE SHIFTED EMISSION = 1 |

**FIGURE 65F**
**THIRD PART**

FIGURE 66
FIRST PART

FIGURE 66

SECOND PART

FIGURE 67

**FIGURE 68**

FIGURE 69

FIGURE 70

**FIGURE 71A**
**FIRST PART**

**FIGURE 71B**
**SECOND PART**

**FIGURE 72**

ICS of
V1

ICS of
V2

ICS of
V3

ICS of
V4

RCFZ

RCFZ

RCFZ

FIGURE 73 B

FIGURA 73

V1

V2

V3

V4

FIGURE 73 A

In this phase layout, neither
V1 nor V2 needs to correct its
phase.

# FIGURE 74 A

In this phase layout, neither
V1 nor V2 needs to correct its
phase.

# FIGURE 74 B

EP 3 753 766 A1

ICS of
V1

≤ Δ

ICS of
V2

ICS of
V3

Δ

ICS of
V4

In this phase layout, neither
V1 nor V2 needs to correct its
phase.

**FIGURE 74 C**

ICS of
V1

ICS of
V2

> Δ

ICS of
V3

≤ Δ

ICS of
V4

It is sufficient for V2 to adjust its
phase with V3 or V4.

**FIGURE 74 D**

176

It is sufficient for V2 to adjust its
phase with V3 or V4.

**FIGURE 74 E**

NON-SYNCHRONIZED INTERMITTENT LIGHT DETECTION

RENEW INVERSE SCORE = 0 —495

NON-SYNCHRONIZED INTERMITTENT LIGHT DETECTION = 0? —495A

YES

NO

COMES FROM: FIGURE 75, SECOND PART

B

495B

COMES FROM: FIGURE 75, SECOND PART

RENEW INVERSE SCORE = 1

MICROWAIT

RENEW INVERSE SCORE = 0

C

SET INVERSE SCORE TO MAXIMUM = 0

SET INVERSE SCORE TO MINIMUM = 0

SPECIAL FLAG ADJUSTMENT PHASE = 0

ENABLE SHIFTED EMISSION FOR PARTICULAR CASES = 0

—496

ACTIVATE PARTICULAR CASE MODULE —497

NO

YES

RESET AND POWER UP COUNTER XIV —498

BEGINNER = 1? —499

YES

SET INVERSE SCORE TO MAXIMUM = 1 —522

NO

A

CONTINUES IN: FIGURE 75, SECOND PART

**FIGURE 75A**
**FIRST PART**

COMES FROM:
FIGURE 75, FIRST
PART

A

500

DOES STATE
OF COUNTER
XIV CORRESPOND
TO THE VALUE OF
THE INVERSE
SCORE?

YES

NO

NO

502

IT LIGHT
DETECTION

YES

501

SRCZ = 1?

NO

517

SRCFZ

NO

YES

YES

YES

518

RCZ = 1?

YES

503

SPECIAL PHASE ADJUSTMENT
FLAG = 1

NO

519

IT LIGHT
DETECTION

YES

NO

504

ENABLE SHIFTED
EMISSION FOR PARTICULAR
CASES = 1

520

ENABLE SHIFTED
EMISSION FOR PARTICULAR
CASES = 1

505

RESET AND POWER UP
COUNTER XIV

506

DOES
STATE OF COUNTER
XIV CORRESPOND TO
TIME t14?

NO

513

IT LIGHT
DETECTION

NO

NO

514

SRCZ = 1?

YES

YES

521

ACTIVATE PARTICULAR
CASE MODULE = 1?

YES

YES

507

ICS

NO

YES

515

ICS

NO

YES

NO

508

SET INVERSE SCORE TO MINIMUM = 1

516

SET INVERSE SCORE TO MAXIMUM = 1

509

SPECIAL PHASE ADJUSTMENT FLAG = 0

510

WAIT OF: (T/2 – "DELAYS")

511

SPECIAL PHASE ADJUSTMENT FLAG = 0

512

MICROWAIT

NO

B

CONTINUES IN:
FIGURE 75, FIRST
PART

C

CONTINUES IN:
FIGURE 75, FIRST
PART

**FIGURE 75B**
**SECOND PART**

<table>
<tr><td colspan="2" align="center">**INTERNATIONAL SEARCH REPORT**</td><td>International application No.<br>PCT/IB2017/054350</td></tr>
</table>

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
B60J, B60Q, B60R

Documentation searched other than minimum documentation to the extent that such documents are included in the fields searched

Electronic data base consulted during the international search (name of data base and, where practicable, search terms used)

EPODOC, INVENES

C. DOCUMENTS CONSIDERED TO BE RELEVANT

| Category* | Citation of document, with indication, where appropriate, of the relevant passages | Relevant to claim No. |
|---|---|---|
| A | WO 2016093720 A1 (SAVU ION ET AL.) 16/06/2016, the whole document. | 1-71 |
| A | US 2012127313 A1 (EHLGEN TOBIAS) 24/05/2012, the whole document. | 1-71 |
| A | US 2003198271 A1 (MATVEEV OLEG) 23/10/2003, claims 1-24; figures. | 1-71 |
| A | US 2009010494 A1 (BECHTEL JON H ET AL.) 08/01/2009, paragraphs [0083 - 0309]; figures. | 1-71 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search<br>28/11/2017 | Date of mailing of the international search report<br>**(01/12/2017)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>P. Pérez Fernández<br><br><br>Telephone No. 91 3495496 |

Form PCT/ISA/210 (second sheet) (January 2015)

## INTERNATIONAL SEARCH REPORT

International application No.

PCT/IB2017/054350

## CLASSIFICATION OF SUBJECT MATTER

*B60J3/02* (2006.01)
*B60Q1/14* (2006.01)
*B60R1/08* (2006.01)

Form PCT/ISA/210 (extra sheet) (January 2015)

## INTERNATIONAL SEARCH REPORT

Information on patent family members

| International application No. |
| --- |
| PCT/IB2017/054350 |

| Patent document cited in the search report | Publication date | Patent family member(s) | Publication date |
| --- | --- | --- | --- |
| WO2016093720 A1 | 16.06.2016 | RO130558 A0 | 30.09.2015 |
| US2012127313 A1 | 24.05.2012 | KR20120030064 A | 27.03.2012 |
| | | CN102448771 A | 09.05.2012 |
| | | CN102448771B B | 25.11.2015 |
| | | DE102009026571 A1 | 02.12.2010 |
| | | EP2435275 A1 | 04.04.2012 |
| | | EP2435275 B1 | 16.01.2013 |
| | | WO2010136380 A1 | 02.12.2010 |
| US2003198271 A1 | 23.10.2003 | WO2004106112 A1 | 09.12.2004 |
| | | US2003193981 A1 | 16.10.2003 |
| | | US7045783 B2 | 16.05.2006 |
| | | US2003193980 A1 | 16.10.2003 |
| | | US7280674 B2 | 09.10.2007 |
| | | US2002191388 A1 | 19.12.2002 |
| US2009010494 A1 | 08.01.2009 | KR20010024013 A | 26.03.2001 |
| | | KR100511801B B1 | 05.09.2005 |
| | | KR20010005899 A | 15.01.2001 |
| | | KR100493581B B1 | 08.06.2005 |
| | | US2012123638 A1 | 17.05.2012 |
| | | US2012116632 A1 | 10.05.2012 |
| | | AT533665T T | 15.12.2011 |
| | | EP2420408 A1 | 22.02.2012 |
| | | EP2420408 B1 | 08.05.2013 |
| | | KR20030047879 A | 18.06.2003 |
| | | KR100666454B B1 | 09.01.2007 |
| | | US8120652 B2 | 21.02.2012 |
| | | US5990469 A | 23.11.1999 |
| | | US2008129206 A1 | 05.06.2008 |
| | | US7825600 B2 | 02.11.2010 |
| | | US2008044062 A1 | 21.02.2008 |
| | | US7613327 B2 | 03.11.2009 |
| | | US2002005472 A1 | 17.01.2002 |
| | | US6653614 B2 | 25.11.2003 |
| | | US5837994 A | 17.11.1998 |
| | | US5837994 C1 | 16.10.2001 |
| | | US6587573 B1 | 01.07.2003 |
| | | US2004069931 A1 | 15.04.2004 |
| | | US6919548 B2 | 19.07.2005 |
| | | US6611610 B1 | 26.08.2003 |
| | | US6469739 B1 | 22.10.2002 |
| | | US2003138132 A1 | 24.07.2003 |
| | | US6947577 B2 | 20.09.2005 |
| | | US2003138131 A1 | 24.07.2003 |
| | | US6728393 B2 | 27.04.2004 |
| | | US2003123706 A1 | 03.07.2003 |
| | | US6947576 B2 | 20.09.2005 |
| | | US2003123705 A1 | 03.07.2003 |

Form PCT/ISA/210 (patent family annex) (January 2015)

## INTERNATIONAL SEARCH REPORT

Information on patent family members

| International application No. |
| --- |
| PCT/IB2017/054350 |

| Patent document cited in the search report | Publication date | Patent family member(s) | Publication date |
| --- | --- | --- | --- |
| | | US6928180 B2 | 09.08.2005 |
| | | US2006091813 A1 | 04.05.2006 |
| | | US2003058346 A1 | 27.03.2003 |
| | | US7432967 B2 | 07.10.2008 |
| | | US2006177098 A1 | 10.08.2006 |
| | | US7653215 B2 | 26.01.2010 |
| | | US2006018512 A1 | 26.01.2006 |
| | | US2006018511 A1 | 26.01.2006 |
| | | US2005242740 A1 | 03.11.2005 |
| | | US6255639 B1 | 03.07.2001 |
| | | WO9914943 A1 | 25.03.1999 |
| | | WO9843850 A1 | 08.10.1998 |
| | | WO0170538 A2 | 27.09.2001 |
| | | WO0170538 A3 | 13.12.2001 |
| | | MXPA02009052 A | 09.09.2004 |
| | | KR20060107466 A | 13.10.2006 |
| | | KR100710837B B1 | 24.04.2007 |
| | | KR20060028735 A | 31.03.2006 |
| | | KR100693312B B1 | 14.03.2007 |
| | | JP2007045407 A | 22.02.2007 |
| | | JP2006020283 A | 19.01.2006 |
| | | JP2004189229 A | 08.07.2004 |
| | | JP4108631B B2 | 25.06.2008 |
| | | JP2004500279 A | 08.01.2004 |
| | | JP4034565B B2 | 16.01.2008 |
| | | JP2001517035 A | 02.10.2001 |
| | | JP2001519744 A | 23.10.2001 |
| | | JP3568210B B2 | 22.09.2004 |
| | | ES2167879T T3 | 16.05.2002 |
| | | ES2213076T T3 | 16.08.2004 |
| | | EP1016268 A1 | 05.07.2000 |
| | | EP1016268 B1 | 04.12.2002 |
| | | EP0971829 A1 | 19.01.2000 |
| | | EP0971829 B1 | 14.11.2001 |
| | | EP1282916 A2 | 12.02.2003 |
| | | EP1282916 A4 | 21.10.2009 |
| | | EP1129902 A2 | 05.09.2001 |
| | | EP1129902 A3 | 19.09.2001 |
| | | DE69820682T T2 | 09.12.2004 |
| | | DE69809950T T2 | 17.07.2003 |
| | | DE69802511T T2 | 23.05.2002 |
| | | DE29825026U U1 | 01.07.2004 |
| | | CN1270736 A | 18.10.2000 |
| | | CN1192601C C | 09.03.2005 |
| | | CA2452068 A1 | 25.03.1999 |
| | | CA2452068 C | 14.09.2004 |
| | | CA2402406 A1 | 27.09.2001 |
| | | CA2402406 C | 22.12.2009 |
| | | CA2354093 A1 | 08.10.1998 |

Form PCT/ISA/210 (patent family annex) (January 2015)

## INTERNATIONAL SEARCH REPORT

Information on patent family members

International application No.

PCT/IB2017/054350

| Patent document cited in the search report | Publication date | Patent family member(s) | Publication date |
|---|---|---|---|
| | | CA2354093 C | 26.09.2006 |
| | | CA2301087 A1 | 25.03.1999 |
| | | CA2301087 C | 23.03.2004 |
| | | CA2284496 A1 | 08.10.1998 |
| | | CA2284496 C | 29.01.2002 |
| | | AU2001247611B B2 | 02.12.2004 |
| | | AU9481298 A | 05.04.1999 |
| | | AU6777098 A | 22.10.1998 |
| | | AU4761101 A | 03.10.2001 |
| | | AT229249T T | 15.12.2002 |
| | | AT208719T T | 15.11.2001 |
| | | AT256576T T | 15.01.2004 |

Form PCT/ISA/210 (patent family annex) (January 2015)